# EUROPEAN PATENT APPLICATION

(11) **EP 4 706 910 A1**
(43) Date of publication of application: **11.03.2026**
(21) Application number: 23935746.0
(22) Date of filing: 01.05.2023
(51) Int. Cl.: B25J 13/08, G06T 7/70

(54) **CONTROL SYSTEM, ROBOT SYSTEM, CONTROL METHOD, AND COMPUTER PROGRAM**

(71) Applicant: NIKON CORPORATION, Tokyo 140-8601 (JP)
(72) Inventor: MIMURA, Kohei, Tokyo 140-8601 (JP)
(74) Representative: Hoffmann Eitle
(86) International application number: PCT/JP2023/017026
(87) International publication number: WO 2024/228231

(57) **Abstract**

A control system generates a control signal for controlling a robot, the robot moves a process apparatus and an imaging apparatus that are attached to the robot, the control system comprises a control apparatus that generates and outputs the control signal, and the control system performs: a first movement processing for controlling the robot to move the process apparatus without using image data; and a second movement processing for generating the control signal for controlling the robot to move the process apparatus based on a calculated result of a position and a pose of the target object, which is calculated based on the image data generated by the imaging apparatus imaging the target object after the first movement processing.

## Description

### Technical Field

The present invention relates to a technical field of a control system, a robot system, a control method, and a computer program that are configured to generate a control signal for controlling a robot, for example.

### Background Art

A Patent literature 1 discloses one example of a control apparatus that controls a robot to which a process apparatus such as an end effector or the like is attached. This control apparatus is required to control the robot to efficiently move the process apparatus.

### Citation List

### Patent Literature

Patent Literature 1: US2013/0230235A1

### Summary of Invention

A first aspect provides a control system that generates a control signal for controlling a robot, wherein a process apparatus, which performs a process on a target object, and an imaging apparatus, which generates image data of at least the target object by imaging the target object, are attached to the robot, the robot moves the process apparatus and the imaging apparatus, the control system includes a control apparatus that generates and outputs the control signal, the control apparatus performs a second movement processing after a first movement processing, the first movement processing includes a processing for controlling the robot to move the process apparatus without using the image data, and the second movement processing includes a processing for generating and outputting the control signal for controlling the robot to move the process apparatus based on a calculated result of a position and a pose of the target object, which is calculated based on the image data generated by the imaging apparatus imaging the target object after the first movement processing.

A second aspect provides a control system that generates the control signal for controlling a robot, wherein a process apparatus, which performs a process on a target object, and an imaging apparatus, which generates image data of at least the target object by imaging the target object, are attached to the robot, the robot moves the process apparatus and the imaging apparatus, the control system includes a second control apparatus that performs a second movement processing for generating and outputting the control signal for controlling the robot to move the process apparatus based on a calculated result of a position and a pose of the target object, which is calculated based on the image data generated by the imaging apparatus imaging the target object after a first control apparatus performs a first movement processing for controlling the robot to move the process apparatus in accordance with movement instruction information, and the second control apparatus is a control apparatus that is different from the first control apparatus.

A third aspect provides a robot system including the control system provided by the first or second aspect; and the robot.

A fourth aspect provides a control method that generates a control signal for controlling a robot, wherein a process apparatus, which performs a process on a target object, and an imaging apparatus, which outputs image data of at least the target object by imaging the target object, are attached to the robot, the robot moves the process apparatus and the imaging apparatus, the control method includes performing a second movement processing after a first movement processing, the first movement processing includes a processing for controlling the robot to move the process apparatus without using the image data, and the second movement processing includes a processing for generating and outputting the control signal for controlling the robot to move the process apparatus based on a calculated result of a position and a pose of the target object, which is calculated based on the image data generated by the imaging apparatus imaging the target object after the first movement processing.

A fifth aspect provides a control method that generates the control signal for controlling a robot, wherein a process apparatus, which performs a process on a target object, and an imaging apparatus, which outputs image data of at least the target object by imaging the target object, are attached to the robot, the robot moves the process apparatus and the imaging apparatus, the control method includes performing, by using a second control apparatus that is different from a first control apparatus, a second movement processing for generating and outputting the control signal for controlling the robot to move the process apparatus based on a calculated result of a position and a pose of the target object, which is calculated based on the image data generated by the imaging apparatus imaging the target object after the first control apparatus performs a first movement processing for controlling the robot to move the process apparatus in accordance with movement instruction information.

A sixth aspect provides a computer program that allows a computer to execute the control method provided by the fourth or fifth aspect.

An operation and another advantage of the present invention will be apparent from an example embodiment described below.

### Brief Description of Drawings

[FIG. 1] FIG. 1 is a block diagram that illustrates a configuration of a robot system in a present example embodiment.
[FIG. 2] FIG. 2 is a side view that illustrates an exterior appearance of a robot in the present example embodiment.
[FIG. 3] Each of FIG. 3(a) to FIG. 3(d) is cross-sectional view that illustrates a first example of an operation of the robot controlled by a robot control processing including a rough movement processing and a fine movement processing.
[FIG. 4] Each of FIG. 4(a) to FIG. 4(d) is cross-sectional view that illustrates a second example of an operation of the robot controlled by the robot control processing including the rough movement processing and the fine movement processing.
[FIG. 5] Each of FIG. 5(a) to FIG. 5(d) is cross-sectional view that illustrates a third example of an operation of the robot controlled by the robot control processing including the rough movement processing and the fine movement processing.
[FIG. 6] Each of FIG. 6(a) to FIG. 6(c) is cross-sectional view that illustrates the third example of an operation of the robot controlled by the robot control processing including the rough movement processing and the fine movement processing.
[FIG. 7] FIG. 7 is a block diagram that illustrates a configuration of a control apparatus in the present example embodiment.
[FIG. 8] FIG. 8 is a block diagram that illustrates a configuration of a robot control apparatus in the present example embodiment.
[FIG. 9] FIG. 9 is a flowchart that illustrates a flow of the robot control processing.
[FIG. 10] FIG. 10 is a flowchart that illustrates a flow of the fine movement processing.
[FIG. 11] FIG. 11 schematically illustrates a matching processing.
[FIG. 12] FIG. 12 is a flowchart that illustrates a flow of the robot control processing in a first modified example.
[FIG. 13] FIG. 13 illustrates a first example of the robot control processing that alternately repeats the rough movement processing and the fine movement processing.
[FIG. 14] FIG. 14 illustrates a second example of the robot control processing that alternately repeats the rough movement processing and the fine movement processing.
[FIG. 15] FIG. 15 illustrates edge model data.
[FIG. 16] FIG. 16 illustrates model data indicating an object model and an end effector model.
[FIG. 17] FIG. 17 illustrates an image in which a plurality of target objects detected by the matching processing are captured, together with the model data indicating the object model and the end effector model that are aligned.
[FIG. 18] FIG. 18 is a flowchart that illustrates a flow of the robot control processing in a fifth modified example.
[FIG. 19] FIG. 19 is a flowchart that illustrates a flow of the robot control processing in a sixth modified example.
[FIG. 20] FIG. 20 is a flowchart that illustrates a flow of the robot control processing in a seventh modified example.
[FIG. 21] FIG. 21 is a side view that illustrates an exterior appearance of the robot in the seventh modified example.
[FIG. 22] FIG. 22 is a flowchart that illustrates a flow of the fine movement processing in an eighth modified example.

### Description of Example embodiments

Next, with reference to drawings, an example embodiment of a control system, a robot system, a control method, and a computer program will be described. In the below described description, the example embodiment of the control system, the robot system, the control method, and the computer program will be described by using a robot system SYS to which the example embodiment of the control system, the robot system, the control method, and the computer program is adapted.

### (1) Configuration of Robot System SYS

Firstly, a configuration of the robot system SYS will be described.

### (1-1) Entire Configuration of Robot System SYS

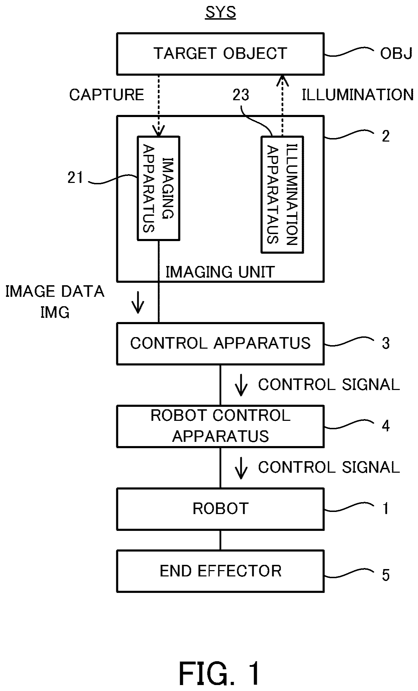

Firstly, with reference to FIG.1, an entire configuration of the robot system SYS will be described. FIG. 1 is a block diagram that illustrates the entire configuration of the robot system SYS.

As illustrated in FIG. 1, the robot system SYS includes: a robot 1; an imaging unit 2, a control apparatus 3, a robot control apparatus 4, and an end effector 5.

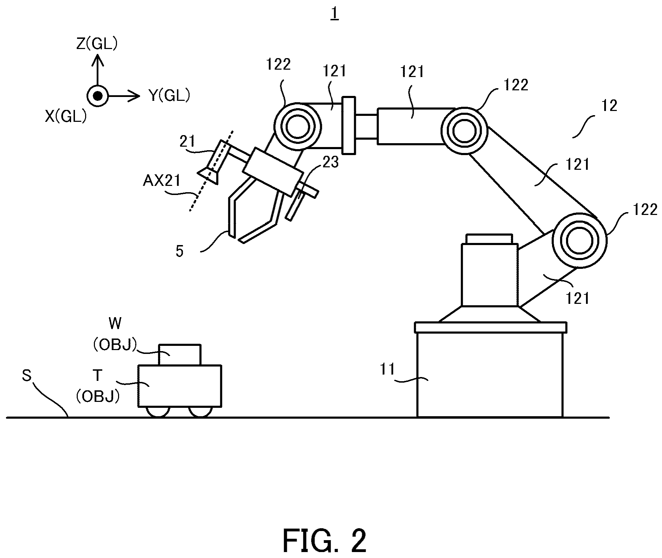

The robot 1 is an apparatus that is configured to perform a predetermined process on a target object OBJ. One example of the robot 1 is illustrated in FIG. 2. FIG. 2 is a side view that illustrates an exterior appearance of the robot 1. As illustrated in FIG. 2, the robot 1 includes a base 11 and a robot arm 12, for example. Note that the robot 1 may include the robot control apparatus 4 described above. Namely, an apparatus including the base 11, the robot arm 12, and the robot control apparatus 4 may be referred to as the robot 1.

The base 11 is a member that is a foundation of the robot 1. The base 11 is placed on a support surface S such as a floor surface. The base 11 may be fixed to the support surface S. Alternatively, the base 11 may be movable relative to the support surface S. As one example, the base 11 may be configured to be self-propelled on the support surface S. In this case, the base 11 may be mounted on an Automatic Guided Vehicle (AGV). In a case where the base 11 is mounted on the Automatic Guided Vehicle, the Automatic Guided Vehicle may be regarded as a part of the robot 1. Alternatively, the Automatic Guided Vehicle (AGV) may be used as the base 11. Note that FIG. 2 illustrates an example in which the base 11 is fixed to the support surface S.

The robot arm 12 is attached to the base 11. The robot arm 12 is an apparatus in which a plurality of links 121 are connected through a joint 122. An actuator is built in the joint 122. The link 121 may be rotatable around an axis defined by the joint 122 by the actuator built in the joint 122. Note that at least one link 121 may be extendable and retractable along a direction along which the link 121 extends. Note that an apparatus including the base 11 and an apparatus in which the plurality of links 121 are connected through the joint 122 may be referred to as the robot arm 12.

The end effector 5 is attached to the robot arm 12. Namely, the end effector 5 is attached to the robot 1. In an example illustrated in FIG. 2, the end effector 5 is attached to an end of the robot arm 12. The end effector 5 is movable by a movement of the robot arm 12. Namely, the robot arm 12 moves the end effector 5. Namely, the robot 1 moves the end effector 5.

The end effector 5 is an apparatus that performs the predetermined process on the target object OBJ. The end effector 5 that performs the predetermined process on the target object OBJ may be referred to as a process apparatus.

For example, the end effector 5 may perform a holding process for holding the target object OBJ as one example of the predetermined process.. In this case, the end effector 5 may be considered to perform the holding process on the target object OBJ that should be held by the end effector 5. The end effector 5 that is configured to perform the holding process may be referred to as a holding apparatus.

Note that holding the target object OBJ may include gripping the target object OBJ as one example. For example, holding the target object OBJ may include gripping the target object OBJ by using a hand gripper that is one example of the end effector 5 and that will be described later. Holding the target object OBJ may include sucking the target object OBJ. For example, holding the target object OBJ may include sucking (vacuum sucking) the target object OBJ by using a vacuum gripper that is one example of the end effector 5 and that will be described later. For example, holding the target object OBJ may include sucking the target object OBJ by using a magnetic suction gripper that is one example of the end effector 5 and that will be described later.

For example, the end effector 5 may perform a releasing process (in other words, a releasing operation) for releasing (in other words, letting off) the held target object OBJ as one example of the predetermined process. In this case, the end effector 5 may be considered to perform the releasing process on the target object OBJ held by the end effector 5. The end effector 5 that is configured to perform the releasing process may be referred to as a releasing apparatus.

The hand gripper is one example of the end effector 5 that is configured to perform the holding process and the releasing process. The hand gripper is an end effector 5 that is configured to hold the target object OBJ by physically clamping the target object OBJ using a plurality of (for example, two, three, or four) finger members or claw members. The vacuum gripper is another example of the end effector 5 that is configured to perform the holding process and the releasing process. The vacuum gripper is an end effector 5 that is configured to hold the target object OBJ by vacuum sucking the target object OBJ. FIG. 2 illustrates an example in which the end effector 5 is the hand gripper.

The robot 1 may perform a placing process (in other words, a placing operation) for placing the target object OBJ at a desired position by using the end effector 5 that is configured to perform the holding process and the releasing process. For example, the robot 1 may hold a first target object OBJ by using the end effector 5, and then perform the placing process for placing the first target object OBJ held by the end effector 5 at a desired position of a second target object OBJ that is different from the first target object OBJ. In this case, the end effector 5 may be considered to perform the releasing process on the second target object OBJ on which the end effector 5 should place the first target object OBJ. Similarly, the end effector 5 may be considered to perform the releasing process on the first target object OBJ that the end effector 5 should release.

The robot 1 may perform, as one specific example of the placing process (in other words, the placing operation), an embedding process (in other words, an embedding operation) for embedding the first target object OBJ into the second target object OBJ that is different from the first target object OBJ by using the end effector 5 that is configured to perform the holding process and the releasing process. For example, the robot 1 may hold the first target object OBJ by using the end effector 5, and then perform the embedding process for embedding the first target object OBJ held by the end effector 5 into the second target object OBJ that is different from the first target object OBJ. In this case, the end effector 5 may be considered to perform the releasing process on the second target object OBJ into which the end effector 5 should embed the first target object OBJ. Similarly, the end effector 5 may be considered to perform the releasing process on the first target object OBJ that the end effector 5 should release.

The embedding process may include a process for embedding (in other words, inserting) the first target object OBJ into a hole formed in the second target object OBJ (namely, inserting it). For example, the robot 1 may hold the first target object OBJ by using the end effector 5, and then perform the embedding process for embedding (namely, inserting) the first target object OBJ held by the end effector 5 into the hole formed in the second target object OBJ. In this case, the end effector 5 may be considered to perform the releasing process on the second target object OBJ into which the end effector 5 should embed (namely, should insert) the first target object OBJ. Similarly, the end effector 5 may be considered to perform the releasing process on the first target object OBJ that the end effector 5 should release.

The robot 1 may perform, as one specific example of the placing process (in other words, the placing operation), a pasting process (in other words, a pasting operation) for pasting the first target object OBJ to the second target object OBJ that is different from the first target object OBJ by using the end effector 5 that is configured to perform the holding process and the releasing process. For example, the robot 1 may hold the first target object OBJ by using end effector 5, and then perform the pasting process for pasting the first target object OBJ held by end effector 5 to the second target object OBJ that is different from the first target object OBJ. In this case, the end effector 5 may be considered to perform the releasing process on the second target object OBJ to which the end effector 5 should paste the first target object OBJ. Similarly, the end effector 5 may be considered to perform the releasing process on the first target object OBJ that the end effector 5 should release.

The robot 1 may perform, as one specific example of the placing process (in other words, the placing operation), a bonding process (in other words, a bonding operation) for bonding the first target object OBJ to the second target object OBJ that is different from the first target object OBJ by using the end effector 5 that is configured to perform the holding process and the releasing process. For example, the robot 1 may hold the first target object OBJ by using the end effector 5, and then perform the bonding process for bonding the first target object OBJ held by end effector 5 to the second target object OBJ that is different from the first target object OBJ. In this case, the end effector 5 may be considered to perform the releasing process on the second target object OBJ to which the end effector 5 should bond the first target object OBJ. Similarly, the end effector 5 may be considered to perform the releasing process on the first target object OBJ that the end effector 5 should release.

The robot 1 may perform, as one specific example of the placing process (in other words, the placing operation), a welding process (in other words, a welding operation) for welding the first target object OBJ to the second target object OBJ that is different from the first target object OBJ by using the end effector 5 that is configured to perform the holding process and the releasing process. For example, the robot 1 may hold the first target object OBJ by using the end effector 5, and then perform the welding process for welding the first target object OBJ held by end effector 5 to the second target object OBJ that is different from the first target object OBJ. In this case, the end effector 5 may be considered to perform the releasing process on the second target object OBJ to which the end effector 5 should weld the first target object OBJ. Similarly, the end effector 5 may be considered to perform the releasing process on the first target object OBJ that the end effector 5 should release.

The robot 1 may perform, as one specific example of the placing process (in other words, the placing operation), a screw fastening process (in other words, a screw fastening operation) for fastening the first target object OBJ configured to serve as a screw to a screw hole formed in the second target object OBJ that is different from the first target object OBJ by using the end effector 5 that is configured to perform the holding process and the releasing process. For example, the robot 1 may hold the first target object OBJ by using the end effector 5, and then perform the screw fastening process for fastening the first target object OBJ held by end effector 5 to the second target object OBJ that is different from the first target object OBJ. In this case, the end effector 5 may be considered to perform the releasing process on the second target object OBJ to which the end effector 5 should fasten the first target object OBJ. Similarly, the end effector 5 may be considered to perform the releasing process on the first target object OBJ that the end effector 5 should release.

For example, the end effector 5 may perform the predetermined process on each of a plurality of target objects OBJ. Namely, the end effector 5 may perform the predetermined process on the plurality of target objects OBJ in sequence. In this case, the robot 1 may move the end effector 5 to a first position at which the end effector 5 can perform the predetermined process on the first target object OBJ, and the end effector 5 may perform the predetermined process on the first target object OBJ after the end effector 5 moves to the first position. Then, the robot 1 may move the end effector 5 to a second position at which the end effector 5 can perform the predetermined process on the second target object OBJ that is different from the first target object OBJ, and the end effector 5 may perform the predetermined process on the second target object OBJ after the end effector 5 moves to the second position.

For example, the end effector 5 may perform the predetermined process on each of a plurality of parts of a single target object OBJ. Namely, the end effector 5 may perform the predetermined process on the plurality of parts of the single target object OBJ in sequence. In this case, the robot 1 may move the end effector 5 to a third position at which the end effector 5 can perform the predetermined process on the a part of the target object OBJ, and the end effector 5 may perform the predetermined process on the first part of the target object OBJ after the end effector 5 moves to the third position. Then, the robot 1 may move the end effector 5 to a fourth position at which the end effector 5 can perform the predetermined process on a second part of target object OBJ, and the end effector 5 may perform the predetermined process on the second part of target object OBJ after end effector 5 moves to the fourth position.

The robot 1 may repeat, as one example of an operation for performing the predetermined process on each of the plurality of parts of the single target object OBJ, the embedding process for embedding the first target object OBJ to each hole on the second target object OBJ in which a plurality of holes are formed. Note that a part of the target object OBJ on which the end effector 5 performs the predetermined process may be referred to as a target part or a target member. For example, each part (each member) of the second target object OBJ in which each hole is formed may be referred to as a target part or a target member. Note that each component may be referred to as a target portion or a target member in a case where the target object OBJ includes a plurality of components. In a case where the target object OBJ includes a plurality of members, each member may be regarded as a target portion or a target member.

The target object OBJ on which the end effector 5 performs the predetermined process may include a workpiece W, as illustrated in FIG. 2. The workpiece W may include a component or a member that is used to manufacture a desired product, for example. The workpiece W may include a component or a member that is processed to manufacture the desired product, for example. The workpiece W may include a component or a member that is transported to manufacture the desired product, for example. The workpiece W may include a component or a member that moves due to a transportation for manufacturing the desired product, for example. The workpiece W may include a component or a member that moves to manufacture the desired product, for example.

The target object OBJ on which the end effector 5 performs the predetermined processing may include a placing apparatus T on which the workpiece W is placed, as illustrated in FIG. 2. A pallet is one example of the placing apparatus T. The placing apparatus T may be placed on the support surface S. The placing apparatus T may be fixed to the support surface S. Alternatively, at least a part of the placing apparatus T may be movable relative to the support surface S. As a first example, the placing apparatus T may be configured to be self-propelled on the support surface S. The placing apparatus T that is configured to be self-propelled may be referred to as an Automatic Guided Vehicle (AGV). As a second example, the placing apparatus T may be a belt conveyor. In this case, a belt that is a part of the belt conveyor and on which the workpiece W is placed may move relative to the support surface S. As a third example, the placing apparatus T may be configured to fly above the support surface S. Namely, the placing apparatus T may be configured to move relative to the support surface S by flying above the support surface S. In this case, the placing apparatus T may be called an unmanned aerial vehicle. As a fourth example, the placing apparatus T may be another robot arm that is different from the robot arm 12 and to which an end effector configured to hold the workpiece W is attached. In this case, the end effector attached to the another robot arm may move relative to the support surface S. Note that FIG. 2 illustrates an example in which the placing apparatus T is configured to self-propulsion on the support surface S. In a case where at least a part of the placing apparatus T is movable relative to the support surface S, the workpiece W placed on the placing apparatus T also moves relative to the support surface S due to the movement of the placing apparatus T. Therefore, the placing apparatus T may serve as a movement apparatus that moves the workpiece W. The placing apparatus T may serve as a transport apparatus that transports the workpiece W. The transport apparatus may be an apparatus that moves the workpiece W. Note that the transport apparatus may be referred to as a movement apparatus.

Note that a first placing apparatus T that corresponds to the pallet on which the workpiece W is placed may be placed on a second placing apparatus T that is movable relative to the support surface S in a case where at least a part of the placing apparatus T is movable relative to the support surface S. In this case, an apparatus including the first placing apparatus T and the second placing apparatus T may be referred to as the placing apparatus T.

However, the target object OBJ may not include the placing apparatus T. For example, the workpiece W may be placed on the support surface S.

In a case where the target object OBJ includes the workpiece W and the placing apparatus T, the above-described holding process may include a process for holding the workpiece W placed on the stationary or moving placing apparatus T. The above-described holding process may include a process for holding the workpiece W placed on the support surface S. The above-described releasing process may include a process for releasing the workpiece W held by the end effector 5 in order to place the workpiece W held by the end effector 5 at a desired position on the stationary or moving placing apparatus T. The above-described releasing process may include a process for releasing the workpiece W held by the end effector 5 in order to place the workpiece W held by the end effector 5 at a desired position on the support surface S. The above-described releasing process may include a process for releasing a first workpiece W held by the end effector 5 in order to embed the first workpiece W held by the end effector 5 into a second workpiece W placed on the stationary or moving placing apparatus T. The above-described releasing process may include a process for releasing the first workpiece W held by the end effector 5 in order to embed the first workpiece W held by the end effector 5 into the second workpiece W placed on the support surface S. The above-described releasing process may include a process for releasing the first workpiece W held by the end effector 5 in order to embed (namely, insert) the first workpiece W held by the end effector 5 into a hole formed in the second workpiece W placed on the stationary or moving placing apparatus T. The above-described releasing process may include a process for releasing the first workpiece W held by the end effector 5 in order to embed (namely, insert) the first workpiece W held by the end effector 5 into a hole formed in the second workpiece W placed on the support surface S.

Note that FIG. 2 illustrates an example in which the robot 1 is the robot arm 12 (namely, a vertically articulated robot). However, the robot 1 may be a robot that is different from the vertically articulated of robot. For example, the robot 1 may be a SCARA robot (namely, a horizontally articulated robot). For example, the robot 1 may be a parallel link robot. For example, the robot 1 may be a dual-armed robot including two robot arms 12. For example, the robot 1 may be a Cartesian robot. For example, the robot 1 may be a cylindrical robot. The robot 1 may be referred to as a movable apparatus. The movable apparatus may include at least one of an Automatic Guided Vehicle and an unmanned aerial vehicle in addition to the robot 1. For example, the robot 1 may be mounted on at least one of the Automatic Guided Vehicle and the unmanned aerial vehicle.

Again in FIG. 1, the imaging unit 2 images the target object OBJ. In order to image the target object OBJ, the imaging unit 2 includes an imaging apparatus 21 and a illumination apparatus 23.

The imaging apparatus 21 is a camera that is configured to images the target object OBJ. For example, the imaging apparatus 21 may image the target object OBJ under the control of the control apparatus 3. The imaging apparatus 21 generates image data IMG by imaging the target object OBJ. Namely, the imaging apparatus 21 generates the image data IMG that is an imaged result of the target object OBJ. The image data IMG generated by the imaging apparatus 21 is output from the imaging apparatus 21 to the control apparatus 3. As a result, the control apparatus 3 acquires the image data IMG acquired by the imaging apparatus 21 imaging the target object OBJ. In the present example embodiment, the imaging apparatus 21 is a monocular camera. Specifically, the imaging apparatus 21 is configured to image the target object OBJ by using the monocular camera (in other words, an imaging element). However, as described in detail in a modified example later, the imaging apparatus 21 is not limited to the monocular camera.

The imaging apparatus 21 may image the entire target object OBJ. Alternatively, the imaging apparatus 21 may image a part of the target object OBJ. Namely, the imaging apparatus 21 may image a part of the target object OBJ and may not image another part of the target object OBJ.

The imaging apparatus 21 may image a single target object OBJ. Namely, the single target object OBJ may be captured in the image indicated by the image data IMG. Alternatively, the imaging apparatus 21 may image a plurality of target objects OBJ. Namely, the plurality of target objects OBJ may be captured in the image indicated by the image data IMG. In this case, as described in detail later, the control apparatus 3 may determine (in other words, select) one target object OBJ of the plurality of target objects OBJ imaged by the imaging apparatus 21 as the target object OBJ on which the end effector 5 actually performs the predetermined process. Note that one target object OBJ, on which the end effector 5 actually performs the predetermined process, of the plurality of target objects OBJ imaged by the imaging apparatus 21 may be referred to as a process performed object.

The plurality of target objects OBJ imaged by the imaging apparatus 21 may be positioned so that at least two of the plurality of target objects OBJ overlap at least partially. As one example, in a case where the target object OBJ is the workpiece W corresponding to the component used to manufacture the desired product, the plurality of workpieces W (namely, the plurality of components) may be positioned so that at least two of the plurality of workpieces W overlap at least partially. In this case, the robot 1 may perform a bin picking for picking the workpiece W one by one from the plurality of workpieces W positioned in a disordered manner.

The imaging unit 2 is attached to the robot arm 12, as with the end effector 5. Namely, the imaging apparatus 21 and the illumination apparatus 23 are attached to the robot arm 12. For example, as illustrated in FIG. 2, the imaging apparatus 21 and the illumination apparatus 23 may be attached to an end of the robot arm 12, as with the end effector 5. In this case, the imaging apparatus 21 and the illumination apparatus 23 are movable by the movement of the robot arm 12. Namely, the robot arm 12 moves the imaging apparatus 21 and the illumination apparatus 23.

The imaging apparatus 21 may image the target object OBJ in a period during which the target object OBJ and the imaging apparatus 21 are being relatively displaced. Note that the state in which the imaging apparatus 21 and the target object OBJ are relatively displaced may mean a state in which the relative positional relationship between the imaging apparatus 21 and the target object OBJ is changing. The state in which the imaging apparatus 21 and the target object OBJ are relatively displaced may mean a state in which the imaging apparatus 21 and the target object OBJ are relatively moving. For example, the state in which the imaging apparatus 21 and the target object OBJ are relatively displaced may include a state in which the target object OBJ is moving with respect to the imaging apparatus 21. For example, the state in which the imaging apparatus 21 and the target object OBJ are relatively displaced may include a state in which the imaging apparatus 21 is moving with respect to the target object OBJ. In this case, the imaging apparatus 21 may not stop in order to image the target object OBJ, and therefore, the robot system SYS can efficiently perform the predetermined process on the target object OBJ by using the end effector 5.

Alternatively, the imaging apparatus 21 may image the target object OBJ in a period during which the imaging apparatus 21 and the target object OBJ are not being relatively displaced. Note that a state in which the imaging apparatus 21 and the target object OBJ are not being relatively displaced may mean a state in which the relative positional relationship between the imaging apparatus 21 and the target object OBJ is not changed. The state in which the imaging apparatus 21 and the target object OBJ are not being relatively displaced may mean a state in which the imaging apparatus 21 and the target object OBJ are not relatively moving. The state in which the imaging apparatus 21 and the target object OBJ are not being relatively displaced may mean a state in which the imaging apparatus 21 and the target object OBJ stop. The state in which the imaging apparatus 21 and the target object OBJ are not being relatively displaced may mean a state in which the imaging apparatus 21 and the target object OBJ are moving toward the same movement direction at the same movement speed.

The illumination apparatus 23 is an apparatus that is configured to irradiate the target object OBJ with illumination light. For example, the illumination apparatus 23 may irradiate the target object OBJ with the illumination light under the control of the control apparatus 3. Especially, the illumination apparatus 23 is an apparatus that is configured to illuminate the target object OBJ with the illumination light by irradiating the target object OBJ with the illumination light. The illumination light may be light whose intensity distribution is uniform. Note that the illumination light may be light whose intensity distribution is non-uniform. In this case, the imaging apparatus 21 may image the target object OBJ that is illuminated with the illumination light. However, the illumination apparatus 23 may not irradiate the target object OBJ with the illumination light. In this case, the imaging unit 2 (the robot system SYS) may not include the illumination apparatus 23.

The control apparatus 3 performs a robot control processing. The robot control apparatus 4 also performs the robot control processing. Namely, the control apparatus 3 performs the robot control processing in cooperation with the robot control apparatus 4. The robot control apparatus 4 performs the robot control processing in cooperation with the control apparatus 3. In this manner, in the present example embodiment, the control apparatus 3 and the robot control apparatus 4, which are control apparatuses different from each other, perform the robot control processing while cooperating with each other.

However, the control apparatus 3 and the robot control apparatus 4 may be integrated. Namely, a control apparatus that is configured to serve as the control apparatus 3 and is also configured to serve as the robot control apparatus 4 may perform the robot control processing.

The robot control processing may include a processing for generating a control signals for controlling the robot 1. Namely, the robot control processing may include the processing for generating the control signals for controlling the operation of the robot 1. Note that the control signal for controlling the robot 1 may be referred to as a robot control signal. The robot control processing may include a processing for generating a control signal for controlling the end effector 5 attached to the robot 1. Namely, the robot control processing may include the processing for generating the control signal for controlling the operation of the end effector 5 attached to the robot 1. Note that the control signal for controlling the end effector 5 may be referred to as an end effector control signal.

The control signal for controlling the robot 1 may include a signal for controlling the robot arm 12. For example, as described above, the robot arm 12 moves the end effector 5. In this case, the control signal may include a signal for controlling the robot arm 12 so that the end effector 5 is positioned at a desired position. The control signal may include a signal for controlling the robot arm 12 so that the end effector 5 moves to a desired position. The control signal may include a signal for controlling the robot arm 12 so that a positional relationship between the end effector 5 and the target object OBJ becomes a desired positional relationship.

In a case where the end effector 5 performs the holding process for holding the target object OBJ, the control signal may include a signal for controlling the robot arm 12 so that the end effector 5 moves toward (namely, approaches) a holding position at which the end effector 5 can hold the target object OBJ. Namely, the control signal may include a signal for controlling the robot arm 12 so that the end effector 5 is positioned at the holding position. Furthermore, the control signal may include a signal for controlling the end effector 5 so that the end effector 5 positioned at the holding position described above holds the target object OBJ.

In a case where the end effector performs the releasing process for releasing the held target object OBJ, the control signal may include a signal for controlling the robot arm 12 so that the end effector 5 moves toward (namely, approaches) a releasing position at which the target object OBJ held by the end effector 5 should be released. Namely, the control signal may include a signal for controlling the robot arm 12 so that the end effector 5 is positioned at the releasing position. Furthermore, the control signal may include a signal for controlling the end effector 5 so that the target object OBJ held by the end effector 5 positioned at the releasing position described above is released.

The control signal may include a signal that is usable as it is to control the operation of robot 1. Specifically, the control signal may include a driving signal (a robot driving signal) that is allowed to be input to the robot 1 to control the operation of robot 1. The control signal may include a driving signal (a robot driving signals) that is allowed to be input to the robot 1 to control a driving amount of the robot 1. For example, the control signal may include a driving signal for driving the actuator built in the joint 122 of the robot arm 12. For example, the control signal may include a driving signal for controlling a driving amount of the actuator built in the joint 122 of the robot arm 12.

The control signal may include a signal that is usable as it is to control the operation of end effector 5. Specifically, the control signal may include a driving signal (ab end effector driving signal) that is allowed to be input to the end effector 5 to control the operation of the end effector 5. The control signal may include a driving signal (an end effector driving signal) that is allowed to be input to the end effector 5 to control driving amount of the end effector 5. For example, the control signal may include a driving signal for driving an actuators that moves the hand clipper constituting the end effector 5. For example, the control signal may include a driving signal for controlling a driving amount of the actuator that move the hand clipper constituting the end effector 5. For example, the control signal may include a driving signal for driving a vacuum apparatus of the vacuum clipper constituting the end effector 5. For example, the control signal may include a driving signal for controlling a driving amount of the vacuum apparatus of the vacuum clipper constituting the end effector 5.

The control signal may include a signal that is usable to generate the above-described driving signal that is allowed to be input to the robot 1 to control the operation of robot 1. For example, the control signal may include a signal that is usable to generate the driving signal for the actuator built in the joint 122 of the robot arm 12.

The control signal may include a signal that is usable to generate the above-described driving signal that is allowed to be input to the end effector 5 to control the operation of the end effector 5. For example, the control signal may include a signal that is usable to generate the driving signal for the actuator that moves the hand clipper constituting the end effector 5. For example, the control signal may include a signal that is usable to generate the driving signal for the vacuum apparatus of the vacuum clipper constituting the end effector 5.

The control apparatus 3 may generate the control signal by performing the robot control processing. In a case where the control apparatus 3 generates the control signal, the control signal generated by the control apparatus 3 may be input to the robot control apparatus 4 from the control apparatus 3. Namely, the control apparatus 3 may output the control signal generated by the control apparatus 3 to the robot control apparatus 4.

In a case where the control apparatus 3 generates, as the control signal, the signal that is usable as it is to control the operation of the robot 1 (namely, the driving signal that is allowed to be input to the robot 1 to control the operation of the robot 1), the robot control apparatus 4 may control the operation of the robot 1 by using the control signal generated by the control apparatus 3 as it is. Specifically, the robot control apparatus 4 may control the operation of the robot 1 by outputting the control signal generated by the control apparatus 3 to the robot 1 as the driving signal that is allowed to be input to the robot 1 to control the operation of the robot 1.

In a case where the control apparatus 3 generates, as the control signal, the signal that is usable as it is to control the operation of the end effector 5 (namely, the driving signal that is allowed to be input to the end effector 5 to control the operation of the end effector 5), the robot control apparatus 4 may control the operation of the end effector 5 by using the control signal generated by the control apparatus 3 as it is. Specifically, the robot control apparatus 4 may control the operation of the end effector 5 by outputting the control signal generated by the control apparatus 3 to the end effector 5 as the driving signal that is allowed to be input to the end effector 5 to control the operation of the end effector 5. Note that outputting the control signal to the end effector 5 may include at least one of outputting the control signal directly to the end effector 5 and outputting the control signal indirectly to the end effector 5 through the robot 1.

In a case where the control apparatus 3 generates, as the control signal, the signal that is usable to generate the driving signal, which is allowed to be input to the robot 1 to control the operation of the robot 1, the robot control apparatus 4 may generate, as the control signal, the driving signal that is allowed to be input to the robot 1 to control the operation of the robot 1 based on the control signal generated by the control apparatus 3. Then, the robot control apparatus 4 may control the operation of the robot 1 by outputting the control signal generated by the robot control apparatus 4 to the robot 1.

In a case where the control apparatus 3 generates, as the control signal, the signal that is usable to generate the driving signal, which is allowed to be input to the end effector 5 to control the operation of the end effector 5, the robot control apparatus 4 may generate, as the control signal, the driving signal that is allowed to be input to the end effector 5 to control the operation of the end effector 5 based on the control signal generated by the control apparatus 3. Then, the robot control apparatus 4 may control the operation of the end effector 5 by outputting the control signal generated by the robot control apparatus 4 to the end effector 5.

Alternatively, in a case where the control apparatus 3 generates the control signal, the control signal generated by the control apparatus 3 may be input to the robot 1 or the end effector 5 not through the robot control apparatus 4. For example, in a case where the control apparatus 3 generates, as the control signal, the signal that is usable as it is to control the operation of the robot 1 (namely, the driving signal that is allowed to be input to the robot 1 to control the operation of the robot 1), the control apparatus 3 may input the control signal generated by the control apparatus 3 to the robot 1 not through the robot control apparatus 4. For example, in a case where the control apparatus 3 generates, as the control signal, the signal that is usable as it is to control the operation of the end effector 5 (namely, the driving signal that is allowed to be input to the end effector 5 to control the operation of the end effector 5), the control apparatus 3 may input the control signal generated by the control apparatus 3 to the end effector 5 not through the robot control apparatus 4.

In addition to or instead of the control apparatus 3, the robot control apparatus 4 may generate the control signal by performing the robot control processing. For example, the robot control apparatus 4 may generate, as the control signal, the driving signal that is allowed to be input to the robot 1 to control the operation of the robot 1. Then, the robot control apparatus 4 may control the operation of the robot 1 by outputting the control signal generated by the robot control apparatus 4 to the robot 1. For example, the robot control apparatus 4 may generate, as the control signal, the driving signal that is allowed to be input to the end effector 5 to control the operation of the end effector 5. Then, the robot control apparatus 4 may control the operation of the end effector 5 by outputting the control signal generated by the robot control apparatus 4 to the end effector 5.

Especially in the present example embodiment, the control apparatus 3 performs a fine movement processing as at least a part of the robot control processing. Furthermore, the robot control apparatus 4 performs a rough movement processing as at least a part of the robot control processing. However, in addition to or instead of the control apparatus 3, the robot control apparatus 4 may perform the fine movement processing as at least a part of the robot control processing. In this case, the robot control apparatus 4 may perform both the rough movement processing and the fine movement processing, and the robot system SYS may not include the control apparatus 3. Similarly, in addition to or instead of the robot control apparatus 4, the control apparatus 3 may perform the rough movement processing as at least a part of the robot control processing. In this case, the control apparatus 3 may perform both the rough movement processing and the fine movement processing. Note that the robot system SYS may not include the robot control apparatus 4 in a case where the control apparatus 3 that performs both the rough movement processing and the fine movement processing generates, as the control signal, the signal that is usable as it is to control the operation of the robot 1. In the below-described description, an example in which the control apparatus 3 performs the fine movement processing and the robot control apparatus 4 performs the rough movement processing will be described.

Both the fine movement processing and the rough movement processing are processing for moving the end effector 5. Specifically, both the fine movement processing and the rough movement processing are processing for controlling the robot 1 to move the end effector 5. Namely, both the fine movement processing and the rough movement processing are processing for generating the control signal for controlling the robot 1 to move the end effector 5, and outputting the generated signal.

As described above, the moved end effector 5 performs the predetermined process on the target object OBJ. In this case, both the fine movement processing and the rough movement processing may be regarded as processing (movement processing) on the target object OBJ on which the end effector 5 performs the predetermined process. Namely, both the fine movement processing and the rough movement processing may be regarded as processing performed on the target object OBJ on which the end effector 5 performs the predetermined process. Specifically, both the fine movement processing and the rough movement processing may be regarded as processing for moving the end effector 5 relative to the target object OBJ. For example, both the fine movement processing and the rough movement processing may be regarded as processing for moving the end effector 5 so that the end effector 5 approaches the target object OBJ. Namely, both the fine movement processing and the rough movement processing may be regarded as processing for controlling the robot 1 so that the end effector 5 approaches the target object OBJ by moving the end effector 5.

As a first example, as described above, the end effector 5 may perform the holding process, which is one example of the predetermined process, on the target object OBJ in order to hold the target object OBJ. In this case, both the fine movement processing and the rough movement processing may be regarded as processing on the target object OBJ that should be held by the end effector 5. Specifically, both the fine movement processing and the rough movement processing may be regarded as processing for moving the end effector 5 relative to the target object OBJ that should be held by the end effector 5. For example, both the fine movement processing and the rough movement processing may be regarded as processing for controlling the robot 1 so that the end effector 5 approaches the target object OBJ that should be held by the end effector 5 by moving the end effector 5.

As a second example, as described above, the end effector 5 may perform the releasing process, which is one example of the predetermined process, in order to release the held first target object OBJ. For example, as described above, the end effector 5 may perform the releasing process, which is one example of the predetermined process, on the second target object OBJ to which the first target object OBJ should be released, in order to place the first target object OBJ held by the end effector 5 at the desired position of the second target object OBJ. For example, as described above, the end effector 5 may perform the releasing process, which is the example of the predetermined process, on the second target object OBJ to which the first target object OBJ held by the end effector 5 should be released, in order to embed the first target object OBJ held by the end effector 5 into the second target object OBJ. For example, as described above, the end effector 5 may perform the releasing process, which is one example of the predetermined process, on the second target object OBJ to which the held first target object OBJ should be released, in order to embed (namely, insert) the held first target object OBJ into the hole formed in the second target object OBJ. In this case, both the fine movement processing and the rough movement processing may be regarded as processing on the second target object OBJ to which the end effector 5 should release the first target object OBJ. Specifically, both the fine movement processing and the rough movement processing may be regarded as processing for moving the end effector 5 holding the first target object OBJ relative to the second target object OBJ to which the end effector 5 should release the first target object OBJ. For example, both the fine movement processing and the rough movement processing may be regarded as processing for controlling the robot 1 so that the end effector 5 approaches the second target object OBJ to which the end effector 5 should release the first target object OBJ by moving end effector 5.

At least one of the fine movement processing and the rough movement processing may be performed on the moving target object OBJ. For example, in a case where the workpiece W that is one example of the target object OBJ is placed on the placing apparatus T that is configured to serve as the transport apparatus for transporting the workpiece W as described above, at least one of the fine movement processing and the rough movement processing may be performed on the workpiece W being moved by the transport apparatus. For example, in a case where the placing apparatus T that is one example of the target object OBJ is movable as described above, at least one of the fine movement processing and the rough movement processing may be performed on the moving placing apparatus T. However, at least one of the fine movement processing and the rough movement processing may be performed on a stationary target object OBJ.

The fine movement processing and the rough movement processing are different from each other in that a method for controlling the robot 1 to move the end effector 5 by the fine movement processing is different from a method for controlling the robot 1 to move the end effector 5 by the rough movement processing. Note that a difference between the fine movement processing and the rough movement processing will be described in detail later in describing a flow of the robot control processing is described, however, the difference will be briefly described here.

The fine movement processing includes a processing for controlling the robot 1 to move the end effector 5 based on a calculated result of at least one of a position and a pose of the target object OBJ based on the image data IMG generated by the imaging apparatus 21. Namely, the fine movement processing includes a processing for generating the control signal for controlling the robot 1 to move the end effector 5 based on the calculated result of at least one of the position and the pose of the target object OBJ based on the image data IMG generated by the imaging apparatus 21, and outputting (for example, outputting to the robot 1 or the robot control apparatus 4) the generated control signal.

As one example, the fine movement processing may include a processing for acquiring the image data IMG generated by the imaging apparatus 21 from the imaging apparatus 21. Note that a processing for generating the image data by the imaging apparatus 21 imaging the target object OBJ may be included, because the imaging apparatus 21 generates the image data IMG in order to generate the control signal. Note that the fine movement processing may be performed in parallel with the processing for generating the image data by the imaging apparatus 21 imaging the target object OBJ, because the imaging apparatus 21 generates the image data IMG in order to generate the control signal. In this case, the fine movement processing may be considered to include the processing for generating the image data by the imaging apparatus 21 imaging the target object OBJ. The fine movement processing may include a processing for calculating at least one of the position and the pose of the target object OBJ based on the image data IMG generated by the imaging apparatus 21. The fine movement processing may include a processing for generating the control signal for controlling the robot 1 to move the end effector 5 based on the calculated result of at least one of the position and the pose of the target object OBJ. The fine movement processing may include a processing for outputting (for example, outputting to the robot 1 or the robot control apparatus 4) the generated control signal.

On the other hand, the rough movement processing includes a processing for controlling the robot 1 to move the end effector 5 without using the image data IMG generated by the imaging apparatus 21. The rough movement processing includes a processing for controlling the robot 1 to move the end effector 5 without using the calculated result of at least one of the position and the pose of the target object OBJ based on the image data IMG. Namely, the rough movement processing includes a processing for generating the control signal for controlling the robot 1 to move the end effector 5 without using the image data IMG generated by the imaging apparatus 21, and outputting (for example, outputting to the robot 1) the generated control signal. The rough movement processing includes a processing for generating the control signal for controlling the robot 1 to move the end effector 5 without using the calculated result of at least one of the position and the pose of the target object OBJ based on the image data IMG, and outputting (for example, outputting to the robot 1) the generated control signal.

However, the control signal used by the rough movement processing may be generated in advance before the rough movement processing is performed. In this case, the rough movement processing may not include the processing for generating the control signal for controlling the robot 1 to move the end effector 5. The rough movement processing may include the process of outputting (for example, generating) the control signal generated in advance before the rough movement processing is started. Moreover, in a case where the rough movement processing is performed a plurality of times, the control signal used by at least one rough movement processing of the plurality of rough movement processing may be generated in advance.

In the present example embodiment, the control apparatus 3 starts the fine movement processing after the rough movement processing. Namely, the control apparatus 3 performs the fine movement processing after the rough movement processing. In this case, the control apparatus 3 may generate the control signal for controlling the robot 1 to move the end effector 5 based on the calculated result of at least one of the position and the pose of the target object OBJ based on the image data IMG, which is generated by the imaging apparatus 21 imaging the target object OBJ after the rough movement processing.

Specifically, the control apparatus 3 may start the fine movement processing after the robot control apparatus 4 starts the rough movement processing. Namely, the control apparatus 3 may perform the fine movement processing after the robot control apparatus 4 starts the rough movement processing. Conversely, the robot control apparatus 4 may start the rough movement processing before the control apparatus 3 starts the fine movement processing. Namely, the robot control apparatus 4 may perform the rough movement processing before the control apparatus 3 starts the fine movement processing. In this case, the control apparatus 3 may generate the control signal for controlling the robot 1 to move the end effector 5 based on the calculated result of at least one of the position and the pose of the target object OBJ based on the image data IMG, which is generated by the imaging apparatus 21 after the robot control apparatus 4 starts the rough movement processing.

As one example, the control apparatus 3 starts the fine movement processing after the robot control apparatus 4 performs the rough movement processing. Namely, the control apparatus 3 performs the fine movement processing after the robot control apparatus 4 performs the rough movement processing. In other words, the control apparatus 3 starts the fine movement processing after the robot control apparatus 4 has completed (namely, finished) the rough movement processing. Namely, the control apparatus 3 performs the fine movement processing after the robot control apparatus 4 has completed (namely, finished) the rough movement processing. In this case, the control apparatus 3 generates the control signal for controlling the robot 1 to move the end effector 5 based on the calculated result of at least one of the position and the pose of the target object OBJ based on the image data IMG, which is generated by the imaging apparatus 21 imaging the target object OBJ after the robot control apparatus 4 performs the rough movement processing. In other words, the control apparatus 3 generates the control signal for controlling the robot 1 to move the end effector 5 based on the calculated result of at least one of the position and the pose of the target object OBJ based on the image data IMG, which is generated by the imaging apparatus 21 after the robot control apparatus 4 has completed (namely, finished) the rough movement processing.

However, as described later in a first modified example, the control apparatus 3 may start the fine movement processing before the robot control apparatus 4 completes (namely, finishes) the rough movement processing. Namely, the control apparatus 3 may perform at least a part of the fine movement processing before the robot control apparatus 4 completes (namely, finishes) the rough movement processing.

The rough movement processing, which is performed before the fine movement processing, may include a processing for moving the end effector 5 (namely, a processing for controlling the robot 1 to move the end effector 5, the same applies in the below-described description) so that the end effector 5 approaches the target object until a distance between the end effector 5 and the target object OBJ becomes a first distance. On the other hand, the fine movement processing, which is performed after the rough movement processing, may include a processing for moving the end effector 5 so that the end effector 5 approaches the target object until the distance between the end effector 5 and the target object OBJ becomes a second distance that is shorter than the first distance. Namely, the fine movement processing may include a processing for moving the end effector 5 so that the end effector 5, which has approached the target object OBJ by the rough movement processing, approaches the target object OBJ more.

For example, the fine movement processing may include a processing for moving the end effector 5 to a target process position TPP at which the end effector 5 should be positioned when the end effector 5 performs the predetermined process on the target object OBJ. On the other hand, the rough movement processing may include a processing for moving the end effector 5 to a target movement position TMP that is different from the target process position TPP. The rough movement processing may include a processing for moving the end effector 5 to the target movement position TMP that is distant from the target process position TPP. Note that a distance from the target object OBJ to the target process position TPP is shorter than a distance from the target object OBJ to the target movement position TMP.

As a first example, as described above, the end effector 5 may perform the holding process, which is one example of the predetermined process, on the target object OBJ in order to hold the target object OBJ. In this case, the fine movement processing may include the processing for moving the end effector 5 to be positioned at the target process position TPP at which the end effector 5 should be positioned when the end effector 5 holds the target object OBJ. Note that the target process position TPP may be referred to as a target holding position in a case where the holding process is performed. On the other hand, the rough movement processing may include the processing for moving the end effector 5 so that the end effector 5 is positioned at the target movement position TMP that is different from the target process position TPP.

As a second example, as described above, the end effector 5 may perform the releasing process, which is one example of the predetermined process, in order to release the held target object OBJ. In this case, the fine movement processing may include the processing for moving the end effector 5 to be positioned at the target process position TPP at which the end effector 5 should be positioned when the end effector 5 releases the target object OBJ. Note that the target process position TPP may be referred to as a target releasing position in a case where the releasing process is performed. On the other hand, the rough movement processing may include the processing for moving the end effector 5 so that the end effector 5 is positioned at the target movement position TMP that is different from the target process position TPP.

In a case where the rough movement processing is started before the fine movement processing is started, the robot control apparatus 4 may approximately (roughly) adjust the position of the end effector 5 relative to the target object OBJ by performing the rough movement processing. On the other hand, in a case where the fine movement processing is started after the rough movement processing is started, the control apparatus 3 may finely (more accurately) adjust the position of the end effector 5 with respect to the target object OBJ by performing the fine movement processing. In this case, a movement distance of the end effector 5 by the rough movement processing may be longer than a movement distance of the end effector 5 by the fine movement processing. The movement distance of the end effector 5 by the fine movement processing may be shorter than the movement distance of the end effector 5 by the rough movement processing. A movement speed of the end effector 5 by the rough movement processing may be faster than a movement speed of the end effector 5 by the fine movement processing. The movement speed of the end effector 5 by the fine movement processing may be slower than the movement speed of the end effector 5 by the rough movement processing. Note that the movement speed of the end effector 5 here may mean a maximum movement speed, may mean an average movement speed, or may mean other movement speed.

In this way, in the present example embodiment, the robot system SYS performs the robot control processing by using the control apparatus 3 and the robot control apparatus 4. Therefore, an apparatus including the control apparatus 3 and the robot control apparatus 4 may be referred to as a control system that performs the robot control processing. However, an apparatus that includes the control apparatus 3 but does not include the robot control apparatus 4 may be referred to as the control system that performs the robot control processing. An apparatus that includes the robot control apparatus 4 but does not include the control apparatus 3 may be referred to as the control system that performs the robot control processing. Furthermore, an apparatus that includes the imaging unit 2 and at least one of the control apparatus 3 and the robot control apparatus 4 may be referred to as the control system that performs the robot control processing, because the imaging unit 2 (especially, the imaging apparatus 21) is used for the fine movement processing as described above. An apparatus that includes the imaging unit 2 and at least one of the control apparatus 3 and the robot control apparatus 4 may be referred to as an imaging system.

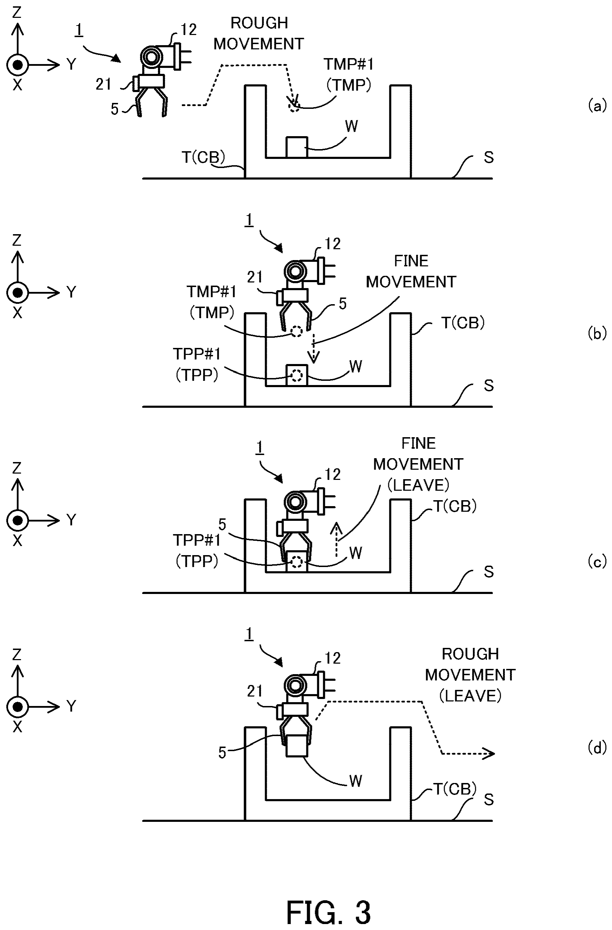

Here, with reference to FIG. 3 to FIG. 6, one example of the operation of the robot 1 controlled by the robot control processing including the rough movement processing and the fine movement processing will be described. Specifically, one example of the movement of the end effector 5 by the robot control processing including the rough movement processing and the fine movement processing will be described.

Each of FIG. 3(a) to FIG. 3(d) illustrates a first example of the operation of the robot 1 controlled by the robot control processing including the rough movement processing and the fine movement processing. Specifically, each of FIG. 3(a) to FIG. 3(d) illustrates one example of the operation of the robot 1 for holding (namely, picking up) the workpiece W, which is contained in a container box CB that is one example of the placing apparatus T, by using end effector 5. Namely, each of FIG. 3(a) to FIG. 3(d) illustrates one example of the operation of the robot 1 in a case where the end effector 5 performs the holding process.

FIG. 3(a) to FIG. 3(d) illustrates an example in which a single workpiece W is contained in the container box CB. However, a plurality of workpieces W may be contained in the container box CB. In this case, the plurality of workpieces W may be contained in the container box CB in a regular manner. For example, the plurality of workpieces W may be positioned at regular positions in the container box CB. For example, the plurality of workpieces W may be positioned at predetermined regular positions in the container box CB. The plurality of workpieces W having regular poses may be positioned in the container box CB. Alternatively, the plurality of workpieces W may be contained in the container box CB in an irregular manner. For example, the plurality of workpieces W may be positioned at irregular positions in the container box CB. The plurality of workpieces W having irregular poses may be positioned in the container box CB. Note that the container box CB may be referred to as a container.

Note that a state in which the plurality of workpieces W are contained in the container box CB in the irregular manner may be considered to be equivalent to a state in which the plurality of workpieces W are contained in the container box CB in a random manner or an arbitrary manner. In a case where the plurality of workpieces W are contained in the container box CB in the irregular manner, an orientation of a first workpiece W of the plurality of workpieces W may be different from an orientation of a second workpiece W, which is different from the first workpiece W, of the plurality of workpieces W. In a case where the plurality of workpieces W are contained in the container box CB in the irregular manner, a pose of the first workpiece W may be different from a pose of the second workpiece W. In a case where the plurality of workpieces W are contained in the container box CB in the irregular manner, a third workpiece W, which is different from the first workpiece W, and the first workpiece W may overlap but a fourth workpiece W, which is different from the second workpiece W, and the second workpiece may not overlap. In a case where the plurality of workpieces W are contained in the container box CB in the irregular manner, the third workpiece W and the first workpiece W may overlap, the fourth workpiece W and the second workpiece W may overlap, and a size of an area at which the first workpiece W and the third workpiece W overlap may be different from a size of an area at which the second workpiece W and the fourth workpiece W overlap.

In this case, as illustrated in FIG. 3(a), the robot control apparatus 4 may first perform the rough movement processing. Specifically, the robot control apparatus 4 may perform the rough movement processing for moving the end effector 5 so that the end effector 5 is positioned at a target movement position TMP#1. In the example illustrated in FIG. 3(a), a position directly above the workpiece W is used as the target movement position TMP#1.

Note that the position of the end effector 5 may mean any position that is determined with respect to the end effector 5 in the present example embodiment. A tool center point of the end effector 5 is one example of the position of the end effector 5. The tool center point of the end effector 5 may mean a point at which the end effector 5 contacts the target object OBJ (for example, the workpiece W). In a case where the end effector 5 is the hand clipper as described above, the tool center point may mean a point in a space between tips of the plurality of claw members of the hand gripper. In a case where the end effector 5 is the vacuum gripper as described above, the tool center point may mean a point in a space between a plurality of suction ports that are formed on the vacuum gripper and each of which is configured to suck gas. The tool center point may be set by a user of the robot system SYS. Alternatively, the tool center point may be set in advance for each end effector 5. Note that the tool center point is not limited to the point at which the end effector 5 contacts the target object OBJ, but may be any point on the end effector 5. Alternatively, the position of the end effector 5 may mean a position that is determined based on a global coordinate system described later. Alternatively, the position of the end effector 5 may mean a position that is determined based on a robot coordinate system described later.

After the end effector 5 is positioned at the target movement position TMP#1, the control apparatus 3 may perform the fine movement processing as illustrated in FIG. 3(b). Specifically, the control apparatus 3 may perform the fine movement processing for moving the end effector 5 so that the end effector 5 is positioned at a target process position TPP#1. The target process position TPP#1 is the target process position TPP at which the end effector 5 should be positioned when the end effector 5 holds the workpiece W.

After the end effector 5 is positioned at the target process position TPP#1, the control apparatus 3 (alternatively, the robot control apparatus 4) may generate the control signal for controlling the end effector 5 so that the end effector 5 holds the workpiece W, and output the generated control signal to the end effector 5. As a result, as illustrated in FIG. 3(c), the end effector 5 holds the workpiece W under the control of the control apparatus 3 (alternatively, under the control of the robot control apparatus 4).

Then, alternatively, the robot control apparatus 4 may perform the rough movement processing so that the end effector 5, which has hold the workpiece W, leaves. In other words, the robot control apparatus 4 may perform leaving the end effector 5, which has hold the workpiece W, as the rough movement processing. As one example, the robot control apparatus 4 may perform the rough movement processing so that the end effector 5 moves from the target process position TPP#1 to the target movement position TMP#1 along the a movement path that is the same as a movement path along which the end effector 5 has moved from the target movement position TMP#1 to the target process position TPP#1. Then, as illustrated in FIG. 3(d), the robot control apparatus 4 may perform the rough movement processing so that the end effector 5, which has hold the workpiece W, leaves as necessary.

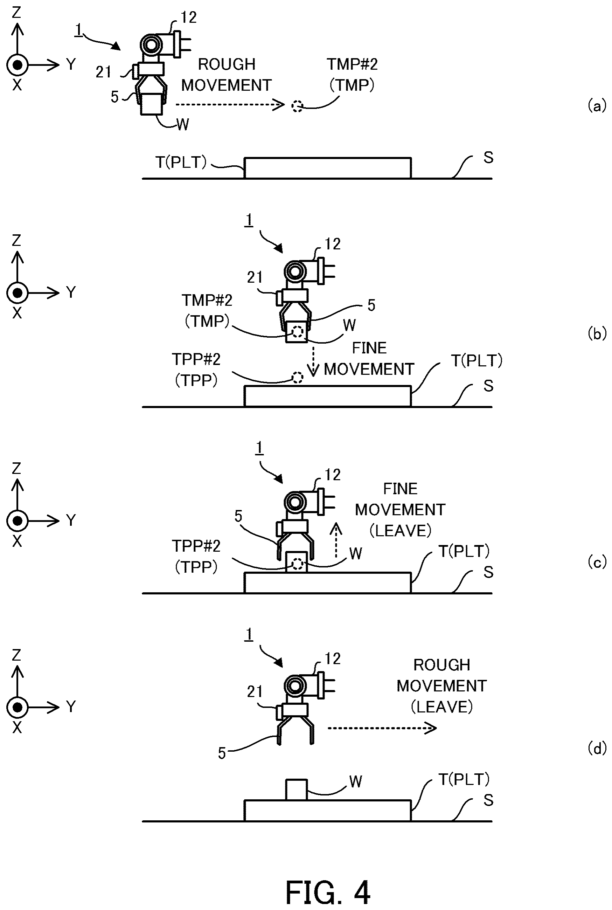

Next, each of FIG. 4(a) to FIG. 4(d) illustrates a second example of the operation of the robot 1 controlled by the robot control processing including the rough movement processing and the fine movement processing. Specifically, each of FIG. 4(a) to FIG. 4(d) illustrates one example of the operation of the robot 1 that releases the workpiece W held by end effector 5 so that the workpiece W held by end effector 5 is placed on a pallet PLT that is one example of the placing apparatus T. Namely, each of FIG. 4(a) to FIG. 4(d) illustrates one example of the operation of the robot 1 in a case where the end effector 5 performs the releasing process.

In this case, as illustrated in FIG. 4(a), the robot control apparatus 4 may first perform the rough movement processing. Specifically, the robot control apparatus 4 may perform the rough movement processing for moving the end effector 5 so that the end effector 5 is positioned at a target movement position TMP#2. In the example illustrated in FIG. 4(a), a position directly above the pallet PLT is used as the target movement position TMP#2.

After the end effector 5 is positioned at the target movement position TMP#2, the control apparatus 3 may perform the fine movement processing as illustrated in FIG. 4(b). Specifically, the control apparatus 3 may perform the fine movement processing for moving the end effector 5 so that the end effector 5 is positioned at a target process position TPP#2. The target process position TPP#2 is the target process position TPP at which the end effector 5 should be positioned when the end effector 5 releases the workpiece W. Note that the target process position TPP#2 may move in accordance with a movement of the pallet PLT#2 in a case where the pallet PLT moves as described above.

After the end effector 5 is positioned at the target process position TPP#2, the control apparatus 3 (alternatively, the robot control apparatus 4) may generate the control signal for controlling the end effector 5 so that the end effector 5 releases the workpiece W, and output the generated control signal to the end effector 5. As a result, as illustrated in FIG. 4(c), the end effector 5 releases the workpiece W under the control of the control apparatus 3 (alternatively, under the control of the robot control apparatus 4).

Then, as illustrated in FIG. 4(c), the control apparatus 3 may perform the fine movement processing so that the end effector 5, which has released the workpiece W, leaves if necessary. Alternatively, the robot control apparatus 4 may perform the rough movement processing so that the end effector 5, which has released the workpiece W, leaves. In other words, the robot control apparatus 4 may perform leaving the end effector 5, which has released the workpiece W, as the rough movement processing. As one example, the robot control apparatus 4 may perform the rough movement processing so that the end effector 5 moves from the target process position TPP#2 to the target movement position TMP#2 along a movement path that is the same as a movement path along which the end effector 5 has moved from the target movement position TMP#2 to the target process position TPP#2. Then, as illustrated in FIG. 4(d), the robot control apparatus 4 may perform the rough movement processing so that the end effector 5, which has released the workpiece W, leaves as necessary.

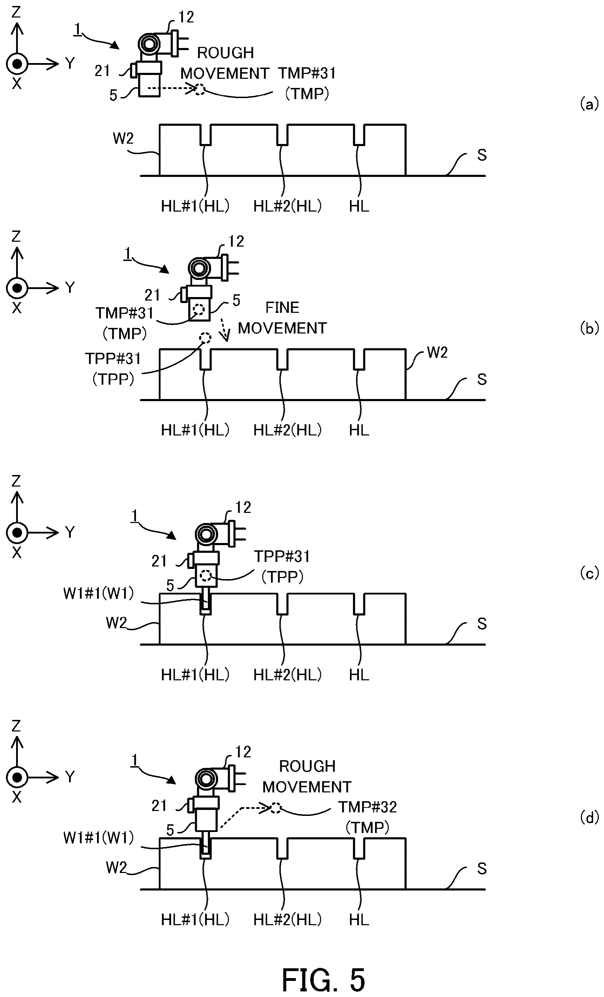

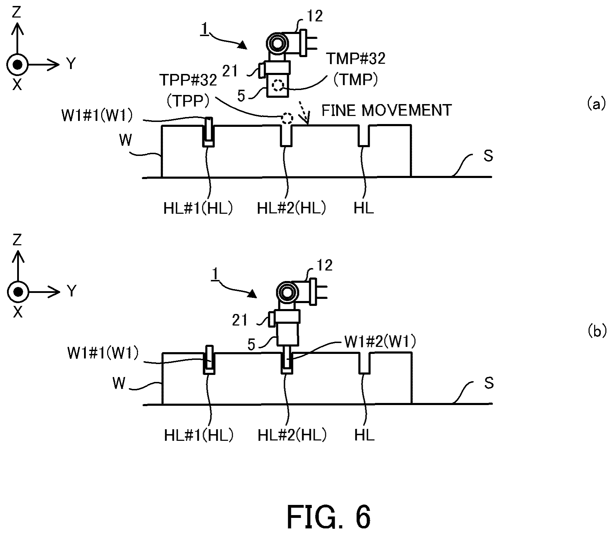

Next, each of FIG. 5(a) to FIG. 5(d) and FIG. 6(a) to FIG. 6(b) illustrates a third example of the operation of the robot 1 controlled by the robot control processing including the rough movement processing and the fine movement processing. Specifically, each of FIG. 5(a) to FIG. 5(d) and FIG. 6(a) to FIG. 6(b) illustrates one example of the operation of the robot 1 by which the end effector 5 releases a plurality of first workpieces W1 in sequence so that the end effector 5, which contains the plurality of rod-shaped first workpieces W1 internally, embeds (inserts) the plurality of first workpieces W1 into a plurality of holes HL formed in a second workpiece W2. Namely, each of illustrates one example of the operation of the robot 1 in a case where the end effector 5 performs the releasing process.

In the examples illustrated in FIG. 5(a) to FIG. 5(d) and FIG. 6(a) to FIG. 6(b), the end effector 5 performs the releasing process on each of the plurality of holes HL formed in the second workpiece W2. Specifically, the second workpiece W2 includes a plurality of target parts (process target parts) in each of which the hole HL is formed, and the end effector 5 performs the releasing process on each of the plurality of target parts of the second workpiece W2 in each of which the hole HL is formed. Note that the target object OBJ may include a plurality of target parts on which the end effector 5 performs the predetermined process, and the end effector 5 may perform the predetermined process on the plurality of target parts in sequence, not only in a case where the first workpiece W1 is embedded into the hole HL formed in the second workpiece W2. Note that the target part (the process target part) may be referred to as a target member (a process target member).

Note that the operation of the robot 1 that releases the plurality of first workpieces W1 contained in the end effector 5 in sequence to embed (insert) the plurality of first workpieces W1 including a first workpiece W1#1 and a second workpiece W1#2 into the plurality of holes HL including a hole HL#1 and a hole HL#2, respectively, in a case where plurality of holes HL including a hole HL#1 and a hole HL#2 are formed in the second workpiece W2 as illustrated in FIG. 5(a) to FIG. 5(d) and FIG. 6(a) to FIG. 6(b) will be described in the below-described description.

In this case, as illustrated in FIG. 5(a), the robot control apparatus 4 may first perform the rough movement processing. Specifically, the robot control apparatus 4 may perform the rough movement processing for moving the end effector 5 so that the end effector 5 is positioned at a target movement position TMP#31. In the example illustrated in FIG. 5(a), a position near a position directly above hole HL#1 is used as the target movement position TMP#31. However, the target movement position TMP#31 may be the position directly above hole HL#1 or any other position.

After the end effector 5 is positioned at the target movement position TMP#31, the control apparatus 3 may perform the fine movement processing as illustrated in FIG. 5(b). Specifically, the control apparatus 3 may perform the fine movement processing for moving the end effector 5 so that the end effector 5 is positioned at a target process position TPP#31. The target process position TPP#31 is the target process position TPP at which the end effector 5 should be positioned when the end effector 5 releases the first workpiece W1#1 in order to embed the first workpiece W1#1 into the hole HL#1.

After the end effector 5 is positioned at the target process position TPP#31, the control apparatus 3 (alternatively, the robot control apparatus 4) may generate the control signal for controlling the end effector 5 so that the end effector 5 releases the first workpiece W1#1, and output the generated control signal to the end effector 5. As a result, as illustrated in FIG. 5(c), the end effector 5 releases the first workpiece W1#1 under the control of the control apparatus 3 (alternatively, under the control of the robot control apparatus 4). As a result, as illustrated in FIG. 5(c), the first workpiece W1#1 released by the end effector 5 is embedded (inserted) into the hole HL#1.

Then, as illustrated in FIG. 5(d), the robot control apparatus 4 may perform the rough movement processing again. Specifically, the robot control apparatus 4 may perform the rough movement processing for moving the end effector 5 so that the end effector 5 is positioned at a target movement position TMP#32. In the example illustrated in FIG. 5(d), a position near a position directly above hole HL#2 is used as the target movement position TMP#32. However, the target movement position TMP#31 may be the position directly above hole HL#1 or any other position.

After the end effector 5 is positioned at the target movement position TMP#32, the control apparatus 3 may perform the fine movement processing again as illustrated in FIG. 6(a). Specifically, the control apparatus 3 may perform the fine movement processing to move the end effector 5 so that the end effector 5 is positioned at a target process position TPP#32. The target process position TPP#32 is the target process position TPP at which the end effector 5 should be positioned when the end effector 5 releases the first workpiece W1#2 in order to embed the first workpiece W1#2 into the hole HL#2.

After the end effector 5 is positioned at the target process position TPP#32, the control apparatus 3 (alternatively, the robot control apparatus 4) may generate the control signal for controlling the end effector 5 so that the end effector 5 releases the first workpiece W1#2, and output the generated control signal to the end effector 5. As a result, as illustrated in FIG. 6(b), the end effector 5 releases the first workpiece W1#2 under the control of the control apparatus 3 (alternatively, under the control of the robot control apparatus 4). As a result, as illustrated in FIG. 6(b), the first workpiece W1#2 released by the end effector 5 is embedded (inserted) into the hole HL#2.

Then, the control apparatus 3 and the robot control apparatus 4 repeat the same operation. As a result, the plurality of first workpieces W1 are inserted into the plurality of holes HL formed in the second workpiece W2, respectively.

### (1-2) Configuration of Control Apparatus 3

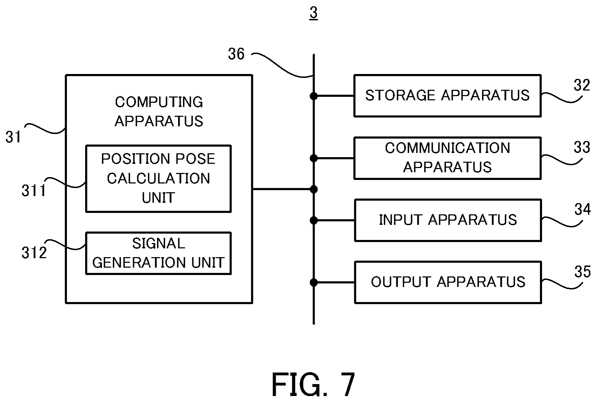

Next, with reference to FIG. 7, a configuration of the control apparatus 3 will be described. FIG. 7 is a block diagram that illustrates the configuration of the control apparatus 3.

As illustrated in FIG. 7, the control apparatus 3 includes a computing apparatus 31, a storage apparatus 32, and a communication apparatus 33. Furthermore, the control apparatus 3 may include an input apparatus 34 and a output apparatus 35. However, the control apparatus 3 may not include at least one of the input apparatus 34 and the output apparatus 35. The computing apparatus 31, the storage apparatus 32, the communication apparatus 33, the input apparatus 34, and the output apparatus 35 may be connected through a data bus 36.

The computing apparatus 31 may include at least one of a CPU (Central Processing Unit), a GPU (Graphic Processing Unit), and a FPGA (Field Programmable Gate Array), for example. The computing apparatus 31 reads a computer program. For example, the computing apparatus 31 may read the computer program recorded in the storage apparatus 32. For example, the computing apparatus 31 may read the computer program recorded in a non-transitory computerreadable recording medium by using a non-illustrated recording medium reading apparatus of the control apparatus 3. The computing apparatus 31 may acquire (namely, download or read) the computer program from a non-illustrated apparatus external to the control apparatus 3 through the communication apparatus 33 (alternatively, other communication apparatus). The computing apparatus 31 executes the read computer program. As a result, a logical functional block for performing a processing that should be performed by the control apparatus 3 (for example, the above-described robot control processing including the fine movement processing) is implemented in the computing apparatus 31. Namely, the computing apparatus 31 is configured to serve as a controller for implementing the logical functional block for performing the processing that should be performed by the control apparatus 3.

An arithmetic model that is buildable by machine learning may be implemented in the computing apparatus 31 by the computing apparatus 31 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The computing apparatus 31 may perform the robot control processing by using the arithmetic model. Namely, an operation for performing the robot control processing may include an operation for performing the robot control processing by using the arithmetic model. Note that the arithmetic model that has been built by off-line machine learning using training data may be implemented in the computing apparatus 31. Moreover, the arithmetic model implemented in the computing apparatus 31 may be updated by online machine learning on the computing apparatus 31. Alternatively, the computing apparatus 31 may perform the robot control processing by using the arithmetic model implemented in an apparatus external to the computing apparatus 31 (namely, an apparatus external to the control apparatus 3), in addition to or instead of the arithmetic model implemented in the computing apparatus 31.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the computing apparatus 31. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the computing apparatus 31 by means of the computing apparatus 31 (namely, a computer) executing the computer program, may be realized by a hardware such as a predetermined gate array (a FPGA (Field Programmable Gate Array), an ASIC (Application Specific Integrated Circuit) of the computing apparatus 31, or may be realized in a form in which the logical process block and a partial hardware module that realizes a partial element of the hardware are combined.

FIG. 7 illustrates an example of a logical functional block implemented in the computing apparatus 31 to perform the robot control processing. As illustrated in FIG. 7, a position pose calculation unit 311 and a signal generation unit 312 are implemented in the computing apparatus 31. The position pose calculation unit 311 may calculate at least one of the position and the pose of the target object OBJ based on the image data IMG. The signal generation unit 312 may generate the control signal for controlling the robot 1 based on at least one of the position and the pose of the target object OBJ calculated by the position pose calculation unit 311.

The storage apparatus 32 is configured to store desired data. For example, the storage apparatus 32 may temporarily store the computer program that is executed by the computing apparatus 31. The storage apparatus 32 may temporarily store data temporarily used by the computing apparatus 31 in a case where the computing apparatus 31 executes the computer program. The storage apparatus 32 may store data stored for a long term by the control apparatus 3. The storage apparatus 32 may include at least one of a RAM (Random Access Memory, a ROM (Read Only Memory), a hard disk apparatus, a magneto-optical disc, a SSD (Solid State Drive), and a disk array apparatus. Namely, the storage apparatus 32 may include a non-transitory recording medium.

The communication apparatus 33 is configured to communicate with each of the imaging unit 2 and the robot control apparatus 4 through a no-illustrated communication network. Alternatively, the communication apparatus 33 may be configured to communicate with other apparatus that is different from the imaging unit 2 and the robot control apparatus 4, in addition to or instead of at least one of the imaging unit 2 and the robot control apparatus 4, through a non-illustrated communication network. In the present example embodiment, the communication apparatus 33 may receive (namely, acquire) the image data IMG and IMG from the imaging unit 2. Furthermore, the communication apparatus 33 may transmit (namely, output) the control signal generated by the signal generation unit 312 to the robot control apparatus 4. Furthermore, in a case where the control apparatus 3 generates the signal that is usable as it is to control the operation of the robot 1, the communication apparatus 33 may transmit (namely, output) the control signal generated by the signal generating unit 312 to the robot 1. Note that the communication apparatus 33 that outputs the control signal to the robot 1 or the robot control apparatus 4 may be referred to as an output unit.

The input apparatus 34 is an apparatus that is configured to receive an input of information from an outside of the control apparatus 3 to the control apparatus 3. For example, the input apparatus 34 may include an operating apparatus (for example, at least one of a keyboard, a mouse, and a touch panel) that is operable by a user of the control apparatus 3. For example, the input apparatus 34 may include a recording medium reading apparatus that is configured to read information recorded as data on a recording medium that is attachable to the control apparatus 3.

Note that information is allowed to be input to the control apparatus 3 as data from the apparatus external to the control apparatus 3 through the communication apparatus 33. In this case, the communication apparatus 33 may serve as an input apparatus that receives an input of information to the control apparatus 3 from outside of the control apparatus 3.

The output apparatus 35 is an apparatus that outputs information to the outside of the control apparatus 3. For example, the output apparatus 35 may output the information as an image. Namely, the output apparatus 35 may include a display apparatus (a so-called display) that is configured to display an image. For example, the output apparatus 35 may output the information as audio. Namely, the output apparatus 35 may include an audio apparatus (so-called a speaker) that is configured output the audio. For example, the output apparatus 35 may output the information on a paper. Namely, the output apparatus 35 may include a printing apparatus (so-called a printer) that is configured to print desired information on the paper. For example, the output apparatus 35 may output the information as data on a recording medium that is attachable to the control apparatus 3.

Note that the control apparatus 3 is allowed to output the information as the data to the apparatus external to the control apparatus 3 through the communication apparatus 33. In this case, the communication apparatus 33 may serve as an output apparatus that outputs the information to the apparatus external to the control apparatus 3.

### (1-3) Configuration of Robot Control Apparatus 4

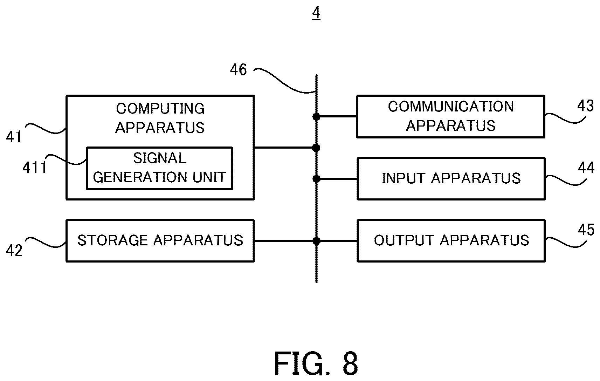

Next, with reference to FIG. 8, a configuration of the robot control apparatus 4 will be described. FIG. 8 is a block diagram that illustrates the configuration of the robot control apparatus 4.

As illustrated in FIG. 8, the robot control apparatus 4 includes a computing apparatus 41, a storage apparatus 42, and a communication apparatus 43. Furthermore, the robot control apparatus 4 may include an input apparatus 44 and a output apparatus 45. However, the robot control apparatus 4 may not include at least one of the input apparatus 44 and the output apparatus 45. The computing apparatus 41, the storage apparatus 42, the communication apparatus 43, the input apparatus 44, and the output apparatus 45 may be connected through a data bus 46

The computing apparatus 41 may include at least one of a CPU (Central Processing Unit), a GPU (Graphic Processing Unit), and a FPGA (Field Programmable Gate Array), for example. The computing apparatus 41 reads a computer program. For example, the computing apparatus 41 may read the computer program recorded in the storage apparatus 42. For example, the computing apparatus 41 may read the computer program recorded in a non-transitory computerreadable recording medium by using a non-illustrated recording medium reading apparatus of the robot control apparatus 4. The computing apparatus 41 may acquire (namely, download or read) the computer program from a non-illustrated apparatus external to the robot control apparatus 4 through the communication apparatus 43 (alternatively, other communication apparatus). The computing apparatus 41 executes the read computer program. As a result, a logical functional block for performing a processing that should be performed by the robot control apparatus 4 (for example, the above-described robot control processing including the rough movement processing) is implemented in the computing apparatus 41. Namely, the computing apparatus 41 is configured to serve as a controller for implementing the logical functional block for performing the processing that should be performed by the robot control apparatus 4.

An arithmetic model that is buildable by machine learning may be implemented in the computing apparatus 41 by the computing apparatus 41 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The computing apparatus 41 may perform the robot control processing by using the arithmetic model. Namely, an operation for performing the robot control processing may include an operation for performing the robot control processing by using the arithmetic model. Note that the arithmetic model that has been built by off-line machine learning using training data may be implemented in the computing apparatus 41. Moreover, the arithmetic model implemented in the computing apparatus 41 may be updated by online machine learning on the computing apparatus 41. Alternatively, the computing apparatus 41 may perform the robot control processing by using the arithmetic model implemented in an apparatus external to the computing apparatus 41 (namely, an apparatus external to the robot control apparatus 4), in addition to or instead of the arithmetic model implemented in the computing apparatus 41.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the computing apparatus 41. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the computing apparatus 41 by means of the computing apparatus 41 (namely, a computer) executing the computer program, may be realized by a hardware such as a predetermined gate array (a FPGA (Field Programmable Gate Array), an ASIC (Application Specific Integrated Circuit) of the computing apparatus 41, or may be realized in a form in which the logical process block and a partial hardware module that realizes a partial element of the hardware are combined.

FIG. 8 illustrates an example of a logical functional block implemented in the computing apparatus 41 to perform the robot control processing. As illustrated in FIG. 8, a signal generation unit 411 is implemented in the computing apparatus 41. The signal generation unit 411 may generate the control signal for controlling the robot 1 without using the image data IMG generated by the imaging apparatus 21.

The storage apparatus 42 is configured to store desired data. For example, the storage apparatus 42 may temporarily store the computer program that is executed by the computing apparatus 41. The storage apparatus 42 may temporarily store data temporarily used by the computing apparatus 41 in a case where the computing apparatus 41 executes the computer program. The storage apparatus 42 may store data stored for a long term by the robot control apparatus 4. The storage apparatus 42 may include at least one of a RAM (Random Access Memory, a ROM (Read Only Memory), a hard disk apparatus, a magneto-optical disc, a SSD (Solid State Drive), and a disk array apparatus. Namely, the storage apparatus 42 may include a non-transitory recording medium.

The communication apparatus 43 is configured to communicate with each of the robot 1 and the control apparatus 3 through a no-illustrated communication network. Alternatively, the communication apparatus 43 may be configured to communicate with other apparatus that is different from the robot 1 and the control apparatus 3, in addition to or instead of at least one of the robot 1 and the control apparatus 3, through a non-illustrated communication network. In the present example embodiment, the communication apparatus 43 may receive (namely, acquire) the control signal generated by the control apparatus 3 from the control apparatus 3. Furthermore, the communication apparatus 43 may transmit (namely, output) the control signal generated by the signal generation unit 411 (for example, at least one of the robot driving signal and the end effector driving signal) to the robot 1. Note that the communication apparatus 43 that outputs the control signal to the robot 1 may be referred to as an output unit.

The input apparatus 44 is an apparatus that is configured to receive an input of information from an outside of the robot control apparatus 4 to the robot control apparatus 4. For example, the input apparatus 44 may include an operating apparatus (for example, at least one of a keyboard, a mouse, and a touch panel) that is operable by a user of the robot control apparatus 4. For example, the input apparatus 44 may include a recording medium reading apparatus that is configured to read information recorded as data on a recording medium that is attachable to the robot control apparatus 4.

Note that information is allowed to be input to the robot control apparatus 4 as data from the apparatus external to the robot control apparatus 4 through the communication apparatus 43. In this case, the communication apparatus 43 may serve as an input apparatus that receives an input of information to the robot control apparatus 4 from outside of the robot control apparatus 4.

The output apparatus 45 is an apparatus that outputs information to the outside of the robot control apparatus 4. For example, the output apparatus 45 may output the information as an image. Namely, the output apparatus 45 may include a display apparatus (a so-called display) that is configured to display an image. For example, the output apparatus 45 may output the information as audio. Namely, the output apparatus 45 may include an audio apparatus (so-called a speaker) that is configured output the audio. For example, the output apparatus 45 may output the information on a paper. Namely, the output apparatus 45 may include a printing apparatus (so-called a printer) that is configured to print desired information on the paper. For example, the output apparatus 45 may output the information as data on a recording medium that is attachable to the robot control apparatus 4.

Note that the robot control apparatus 4 is allowed to output the information as the data to the apparatus external to the robot control apparatus 4 through the communication apparatus 43. In this case, the communication apparatus 43 may serve as an output apparatus that outputs the information to the apparatus external to the robot control apparatus 4.

### (2) Robot Control Processing

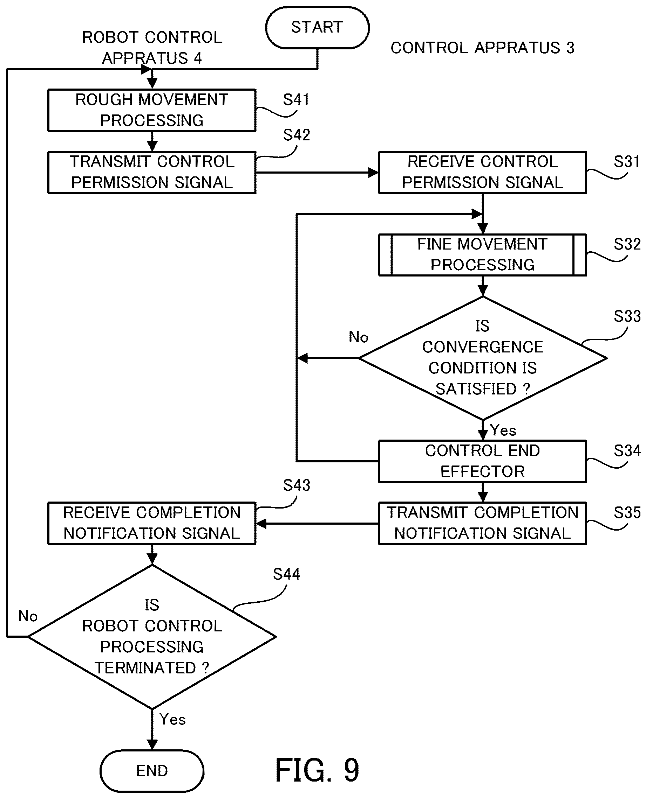

Next, with reference to FIG. 9, the robot control processing will be described. FIG. 9 is a flowchart that illustrates the flow of the robot control processing.

Note that the rough movement processing is performed first and then fine movement processing is performed to control the robot 1 as described above. Therefore, in the below-described description, the rough movement processing will be described first, and then the fine movement processing will be described.

### (2-1) Rough Movement Processing

As illustrated in FIG. 9, first, the robot control apparatus 4 performs the rough movement processing (a step S41). Specifically, as described above, the rough movement processing includes the processing for moving the end effector 5 without using the image data IMG. Therefore, the signal generation unit 411 of the robot control apparatus 4 generates the control signal (especially the robot driving signal that is allowed to be input to the robot 1 to control the movement of the robot 1) without using the image data IMG, and outputs the generated control signal to the robot 1. However, in a case where the control signal that is used by the rough movement processing is generated in advance before the rough movement processing is performed as described above, the signal generation unit 411 may not generate the control signal. The signal generation unit 411 may output the control signal, which is generated in advance before the rough movement processing is started, to the robot 1. As a result, the robot 1 moves the end effector 5 in a movement aspect based on the control signal. Note that the control signal used by at least one rough movement processing of the plurality of rough movement processing may be generated in advance in a case where the rough movement processing is performed a plurality of times.

In the present example embodiment, the rough movement processing may include a processing for controlling the robot 1 to move the end effector 5 in accordance with movement instruction information without using the image data IMG. The movement instruction information includes information that instructs the movement aspect of the end effector 5. In this case, the signal generation unit 411 generates the control signal (especially, the robot driving signal that is allowed to be input to the robot 1 to control the operation of the robot 1) for controlling the robot 1 to move the end effector 5 in accordance with the movement instruction information, and outputs the generated control signal to the robot 1. As a result, the end effector 5 moves in the movement aspect indicated by the movement instruction information.

The movement aspect of the end effector 5 by the rough movement processing may be specified by a computer program executed by the robot control apparatus 4 to perform the rough movement processing. In this case, the movement instruction information may be considered to be included in at least a part of the computer program executed by the robot control apparatus 4 to perform the rough movement processing. For example, the movement instruction information may be considered to be included in a partial program part (program information), in which the movement aspect of the end effector 5 is described, of the computer program executed by the robot control apparatus 4 to perform the rough movement processing.

The movement aspect of the end effector 5 by the rough movement processing may include a position (the target movement position TMP illustrated in FIG. 3 and the like) to which the end effector 5 should move by the rough movement processing. In this case, the movement instruction information may include the target movement position TMP (see FIG. 3 and the like) to which the end effector 5 should move by the rough movement processing. Namely, the movement instruction information may include information specifying the target movement position TMP. In a case where the movement instruction information is included in the computer program as described above, the information specifying the target movement position TMP may be considered to be included in a partial program part (program information), in which the target movement position TMP is described, of the computer program.

The movement aspect of the end effector 5 by the rough movement processing may include a target movement distance that is a distance by which the end effector 5 should move by the rough movement processing. In this case, the movement instruction information may include the target movement distance by which the end effector 5 should move by the rough movement processing. Namely, the movement instruction information may include information specifying the target movement distance. In a case where the movement instruction information is included in the computer program as described above, the information specifying the target movement distance may be considered to be included in a partial program part (program information), in which the target movement distance is described, of the computer program.

The movement aspect of the end effector 5 by the rough movement processing may include a target movement direction that is a direction toward which the end effector 5 should move by the rough movement processing. In this case, the movement instruction information may include the target movement direction by which the end effector 5 should move by the rough movement processing. Namely, the movement instruction information may include information specifying the target movement direction. In a case where the movement instruction information is included in the computer program as described above, the information specifying the target movement direction may be considered to be included in a partial program part (program information), in which the target movement direction is described, of the computer program.

The movement aspect of the end effector 5 by the rough movement processing may include a target movement pose that is a pose of the end effector 5 that has completed the movement by the rough movement processing. In this case, the movement instruction information may include the target movement pose by which the end effector 5 should move by the rough movement processing. Namely, the movement instruction information may include information specifying the target movement pose. In a case where the movement instruction information is included in the computer program as described above, the information specifying the target movement pose may be considered to be included in a partial program part (program information), in which the target movement pose is described, of the computer program.

The movement instruction information may be set by the user of the robot system SYS. Namely, the movement instruction information may be input to the robot control apparatus 4 by the user of the robot system SYS. In other words, the movement instruction information may be set by the user of the robot system SYS inputting the movement instruction information.

However, an information setting apparatus, which is configured to automatically set the movement instruction information, may automatically set the movement instruction information. Namely, the information setting apparatus may automatically set the movement instruction information, in addition to or instead of the user setting the movement instruction information. For example, the robot control apparatus 4 (especially, the computing apparatus 41) that is configured to serve as the information setting apparatus may automatically set the movement instruction information. For example, the information setting apparatus that is different from the robot control apparatus 4 may automatically set the movement instruction information. Note that the information setting apparatus may set the movement instruction information by using an arithmetic model that is configured to output the movement instruction information. The arithmetic model that is configured to output the movement instruction information may include a rule-based arithmetic model. The arithmetic model that is configured to output the movement instruction information may include an arithmetic model that is allowed to be learned by a machine learning (what we call, an artificial intelligence).

The user may set the movement instruction information by directly setting the movement instruction information. For example, the robot control apparatus 4 may display a GUI (Graphical User Interface), which is operable by the user to set the movement instruction information, by using the output apparatus 35 that is configured to serve as the display apparatus, and the user may set movement instruction information on the GUI displayed by the output apparatus 35. The GUI may include at least one of a GUI that is operable by the user to set the target movement position TMP, a GUI that is operable by the user to set the target movement distance, a GUI that is operable by the user to set the target movement direction, and a GUI that is operable by the user to set the target movement pose. In this case, the movement instruction information directly set by the user may be reflected in the computer program executed by the robot control apparatus 4 to perform the rough movement processing. For example, the movement instruction information directly set by the user may be reflected in a registry in which information related to a setting of the computer program executed by the robot control apparatus 4 to perform the rough movement processing is stored.

Alternatively, the user may indirectly set the movement instruction information by generating at least a part of the computer program that is executed by the robot control apparatus 4 to perform the rough movement processing, in addition to directly setting the movement instruction information. For example, the user may indirectly set the movement instruction information by generating the computer program that is executed by the robot control apparatus 4 to perform the rough movement processing and that reflects the movement instruction information which the user wants to set.

Alternatively, the user may set the movement instruction information by a robot teaching. For example, the user may set the movement instruction information by performing the robot teaching, which actually moves the robot 1 in the movement aspect in which the robot 1 should move by the rough movement processing, by using a teaching pendant. For example, the user may set the movement instruction information by performing an offline teaching without using the robot 1.

Since the fine movement processing using the image data IMG is performed after the rough movement processing is performed as described above, it is desirable that the target object OBJ, on which the end effector 5 should perform the predetermined process, be included in an imaging field of view of the imaging apparatus 21 at a timing at which the rough movement processing is completed. Therefore, the movement instruction information may be set so as to satisfy a condition that "the target object OBJ, on which the end effector 5 should perform the predetermined process, is included in the imaging field of view of the imaging apparatus 21 at the timing at which the rough movement processing is completed". For example, the target movement position TMP indicated by the movement instruction information may be set so as to satisfy a condition that "the target object OBJ is included in the imaging field of view of the imaging apparatus 21 that moves together with the end effector 5 in a case where the end effector 5 has moved to the target movement position TMP". For example, the target movement distance indicated by the movement instruction information may be set so as to satisfy a condition that "the target object OBJ is included in the imaging field of view of the imaging apparatus 21 that moves together with the end effector 5 in a case where the end effector 5 has moved by the target movement distance". For example, the target movement direction indicated by the movement instruction information may be set so as to satisfy a condition that "the target object OBJ is included in the imaging field of view of the imaging apparatus 21 that moves together with the end effector 5 in a case where the end effector 5 has moved toward the target movement direction". For example, the target movement pose indicated by the movement instruction information may be set so as to satisfy a condition that "the target object OBJ is included in the imaging field of view of the imaging apparatus 21 that moves together with the end effector 5 in a case where the pose of the end effector 5 is the same as the target movement pose".

In a case where the target object OBJ, on which the end effector 5 should perform the predetermined process, is moved by the transport apparatus that is configured to transporting the target object OBJ as described above, the movement instruction information may be set based on a transport aspect of the target object OBJ. For example, as described above, the rough movement processing may include the processing for moving the end effector 5 so that the end effector 5 approaches the target object OBJ . In this case, it is likely that the movement aspect for moving the end effector 5 to approach the target object OBJ in a situation where the target object OBJ is not moved (is not transported) is different from the movement aspect for moving the end effector 5 so that end effector 5 approaches the target object OBJ in a situation where the target object OBJ is moved (is transported). Similarly, it is likely that the movement aspect for moving the end effector 5 to approach the target object OBJ in a situation where the target object OBJ is moved in a first transport aspect is different from the movement aspect for moving the end effector 5 to approach the target object OBJ in a situation where the target object OBJ is moved (is transported) in a second transport aspect that is different from the first transport aspect. Therefore, the movement instruction information may be set based on the transport aspect of the target object OBJ so that the end effector 5 properly approaches the target object OBJ that is transported in any movement aspect (for example, so that the end effector 5 is positioned at the target movement position TMP that is determined with respect to the target object OBJ transported in any transport aspect as described above). As a result, regardless of the movement aspect of the target object OBJ, the robot control apparatus 4 can move the end effector 5 so that the end effector 5 properly approaches the target object OBJ by performing the rough movement processing. Note that the transport aspect of the target object OBJ by the transport apparatus may be referred to as a movement aspect of the target object OBJ.

The transport aspect may include a transport speed. In this case, the movement instruction information may be set based on the transport speed of the target object OBJ so that the end effector 5 properly approaches the target object OBJ transported at any transport speed (for example, the end effector 5 is positioned at the target movement position TMP that is determined with respect to the target object OBJ transported at any transport speed as described above). As one example, in a case where the transport speed of the target object OBJ is a first transport speed, the movement instruction information may be set so that the end effector 5 moves at a first movement speed. As another example, in a case where the transport speed of the target object OBJ is a second transport speed that is different from the first transport speed, the movement instruction information may be set so that the end effector 5 moves at a second movement speed that is different from the first movement speed. For example, in a case where the transport speed of the target object OBJ is the second transport speed that is faster than the first transport speed, the movement instruction information may be set so that the end effector 5 moves at the second movement speed that is faster than the first movement speed. For example, in a case where the transport speed of the target object OBJ is the second transport speed that is slower than the first transport speed, the movement instruction information may be set so that the end effector 5 moves at the second movement speed that is slower than the first movement speed. Note that the transport speed may be referred to as a movement speed of the target object OBJ. Namely, the transport aspect may include the movement speed.

The transport aspect may include a transport direction. In this case, the movement instruction information may be set based on the transport direction of the target object OBJ so that the end effector 5 properly approaches the target object OBJ transported toward any transport direction (for example, the end effector 5 is positioned at the target movement position TMP that is determined with respect to the target object OBJ transported toward any transport direction as described above). As one example, in a case where the transport direction of the target object OBJ is a first transport direction, the movement instruction information may be set so that the end effector 5 moves toward a first movement direction. As another example, in a case where the transport speed of the target object OBJ is a second transport direction that is different from the first transport direction, the movement instruction information may be set so that the end effector 5 moves toward a second movement direction that is different from the first movement direction. For example, the movement instruction information may be set so that the end effector 5 moves toward a movement direction including a directional component that is along the transport direction of the target object OBJ. For example, the movement instruction information may be set so that the end effector 5 moves toward a movement direction that is the same as the transport direction of the target object OBJ. For example, the movement instruction information may be set so that the end effector 5 moves toward a movement direction that obliquely intersects the transport direction of the target object OBJ. Note that the transport direction may be referred to as a movement direction of the target object OBJ. Namely, the transport aspect may include the movement direction.

In a case where the end effector 5 performs the predetermined process on the plurality of different target objects OBJ in sequence, the movement instruction information may be set based on a positional relationship (for example, a relative positional relationship) between at least two of the plurality of different target objects OBJ. As one example, in a case where the end effector 5 performs the predetermined process on a first target object OBJ and a second target object OBJ that is different from the second target object OBJ in sequence, the movement instruction information may be set based on the positional relationship between the first and second target objects OBJ. For example, the movement instruction information may be set so that the end effector 5 moves from the first target object OBJ toward the second target object OBJ by the rough movement operation that is performed after the end effector 5 performs the predetermined process on the first target object OBJ. For example, the movement instruction information may be set so that the end effector 5 moves toward a direction including a directional component connecting the first target object OBJ and the second target object OBJ by the rough movement operation that is performed after the end effector 5 performs the predetermined process on the first target object OBJ. For example, the movement instruction information may be set so that the end effector 5 moves at a movement speed based on a relative speed of the second target object OBJ relative to the first target object OBJ by the rough movement operation that is performed after the end effector 5 performs the predetermined process on the first target object OBJ. For example, the movement instruction information may be set so that the end effector 5 moves at a movement speed that allows it to move from the first target object OBJ to the second target object OBJ within a desired time by the rough movement operation that is performed after the end effector 5 performs the predetermined process on the first target object OBJ. For example, the movement instruction information may be set so that the end effector 5 moves by a distance based on a distance between the first target object OBJ and the second target object OBJ by the rough movement operation that is performed after the end effector 5 performs the predetermined process on the first target object OBJ. As a result, the robot control apparatus 4 can move the end effector 5 so that the end effector 5 approaches the plurality of target objects OBJ in sequence by performing the rough movement processing.

In a case where the end effector 5 performs the predetermined process on the plurality of different target parts (the plurality of different target members) of the target object OBJ in sequence as described above with reference to FIG. 5 to FIG. 6, the movement instruction information may be set based on a positional relationship (for example, a relative positional relationship) between at least two of the plurality of different target parts. As one example, in a case where the end effector 5 performs the predetermined process on a first target part (for example, the target part in which the hole HL#1 illustrated in FIG. 5(a) is formed) and a second target part (for example, the target part in which the hole HL#2 illustrated in FIG. 5(a) is formed) that is different from the first target part in sequence, the movement instruction information may be set based on the positional relationship between the first and second target parts. For example, the movement instruction information may be set so that the end effector 5 moves from the first target part toward the second target part by the rough movement operation that is performed after the end effector 5 performs the predetermined process on the first target part. For example, the movement instruction information may be set so that the end effector 5 moves toward a direction including a directional component connecting the first target part and the second target part by the rough movement operation that is performed after the end effector 5 performs the predetermined process on the first target part. For example, the movement instruction information may be set so that the end effector 5 moves at a movement speed that allows it to move from the first target part to the second target part within a desired time by the rough movement operation that is performed after the end effector 5 performs the predetermined process on the first target part. For example, the movement instruction information may be set so that the end effector 5 moves by a distance based on a distance between the first target part and the second target part by the rough movement operation that is performed after the end effector 5 performs the predetermined process on the first target part. As a result, the robot control apparatus 4 can move the end effector 5 so that the end effector 5 approaches the plurality of target parts in sequence by performing the rough movement processing.

The user (alternatively, the information setting apparatus described above, the same applies in this paragraph) may set the movement instruction information in advance. Specifically, the user may set the movement instruction information in advance before the robot control apparatus 4 starts the rough movement processing. In this case, the rough movement processing may be regarded as a processing for controlling the robot 1 based on the movement instruction information set in advance. For example, the rough movement processing may be regarded as a processing for controlling the robot 1 based on the computer program that is set (generated) in advance.

However, the user (alternatively, the information setting apparatus described above, the same applies in this paragraph) may set the movement instruction information after the robot control apparatus 4 starts the rough movement processing. Namely, the user may set (in other words, update or change) the movement instruction information indicating the movement aspect of the end effector 5 by the rough movement processing in real time after the robot control apparatus 4 starts the rough movement processing. For example, the user may acquire information related to the position of the target object OBJ in a period during which the rough movement processing is performed, and set the movement instruction information based on the acquired information. As one example, in a case where the workpiece W, which is one example of the target object OBJ, is placed on the placing apparatus T that is configured to serve as the transport apparatus for transporting (moving) the workpiece W, the user may acquire information related to the position of the workpiece W moving (transported) on the placing apparatus T from a position detection apparatus (for example, an encoder) of the placing apparatus T, and set the movement instruction information based on the acquired information.

In a case where the movement instruction information is set in advance, the movement instruction information may be fixed in a period during which the rough movement processing is performed. Namely, the movement instruction information may not be changed in a period during which the rough movement processing is performed. For example, in a case where the target movement position TMP indicated by the movement instruction information is set in advance, the target movement position TMP may be fixed to the position, which is set in advance, in a period during which the rough movement processing is performed. For example, in a case where the target movement distance indicated by the movement instruction information is set in advance, the target movement distance may be fixed to the distance, which is set in advance, in a period during which the rough movement processing is performed. For example, in a case where the target movement direction indicated by the movement instruction information is set in advance, the target movement direction may be fixed to the direction, which is set in advance, in a period during which the rough movement processing is performed. For example, in a case where the target movement pose indicated by the movement instruction information is set in advance, the target movement pose may be fixed to the pose, which is set in advance, in a period during which the rough movement processing is performed. However, even in a case where the movement instruction information is set in advance, the movement instruction information may be changed in a period during which the rough movement processing is performed.

### (2-2) Transmission of Control Permission Signal

The robot control apparatus 4 transmits a control permission signal to the control apparatus 3 at a desired timing after the rough movement processing is started (a step S42). For example, the robot control apparatus 4 transmits the control permission signal to the control apparatus 3 after the rough movement processing is completed (the step S42). Namely, the robot control apparatus 4 transmits the control permission signal to the control apparatus 3 after the end effector 5 finishes moving by the rough movement processing. However, the robot control apparatus 4 may transmit the control permission signal to the control apparatus 3 before the rough movement processing is completed. The robot control apparatus 4 transmits the control permission signal to the control apparatus 3 before the end effector 5 finishes moving by the rough movement processing (the step S42).

After the robot control apparatus 4 transmits the control permission signal to the control apparatus 3, the control apparatus 3 receives the control permission signal transmitted from the robot control apparatus 4. The control apparatus 3, which has received the control permission signal, starts the fine movement processing (a step S32). Namely, the control apparatus 3 starts the fine movement processing after the control apparatus 3 receives the control permission signal (the step S32). In other words, the control apparatus 3 moves the end effector 5 by performing the fine movement processing after the control apparatus 3 receives the control permission signal (the step S32). On the other hand, the control apparatus 3, which has not received the control permission signal, does not start the fine movement processing. Namely, the control apparatus 3 does not start the fine movement processing before the control apparatus 3 receives the control permission signal. In other words, the control apparatus 3 does not move the end effector 5 by performing the fine movement processing before the control apparatus 3 receives the control permission signal.

Therefore, the control permission signal may be regarded as a signal by which the robot control apparatus 4 permits the control apparatus 3 to control the robot 1 so as to move the end effector 5 by performing the fine movement processing. In this case, the robot control apparatus 4 may transmit the control permission signal to the control apparatus 3 at a desired timing at which the robot control apparatus 4 may permit the control apparatus 3 to control the robot 1 so as to move the end effector 5 by performing the fine movement processing.

After the control apparatus 3 receives the control permission signal, the control apparatus 3 transmits the control signal generated by the control apparatus 3 to the robot control apparatus 4 in order to control the robot 1 to move the end effector 5 by the fine movement processing. Then, the robot control apparatus 4 controls the robot 1 to move the end effector 5 based on the control signal generated by the control apparatus 3. As a result, after the control apparatus 3 receives the control permission signal, the control signal generated by the control apparatus 3 is actually reflected in the control of the robot 1. In this case, the control apparatus 3 may be considered to control the robot 1 through the robot control apparatus 4. Alternatively, the control apparatus 3 may transmit the control signal generated by the control apparatus 3 to the robot 1 not through the robot control apparatus 4 in order to control the robot 1 to move the end effector 5 by the fine movement processing. As a result, even in a case where the control apparatus 3 transmits the control signal to the robot 1, the control signal generated by the control apparatus 3 is actually reflected in the control of the robot 1 after the control apparatus 3 receives the control permission signal. In this case, the control apparatus 3 may be considered to control the robot 1 not through the robot control apparatus 4. On the other hand, the control apparatus 3 may not generate the control signal before the control apparatus 3 receives the control permission signal. Alternatively, the control apparatus 3 may generate the control signal but may not transmit the control signal generated by the control apparatus 3 to the robot control apparatus 4 before the control apparatus 3 receives the control permission signal. Alternatively, the control apparatus 3 may transmit the control signal generated by the control apparatus 3 to the robot control apparatus 4 but the robot control apparatus 4 may control the robot 1 by using the control signal generated by the robot control apparatus 4 without using the control signal generated by the control apparatus 3 before the control apparatus 3 receives the control permission signal (especially before the robot control apparatus 4 transmits the control permission signal). Alternatively, the control apparatus 3 may transmit the control signal generated by the control apparatus 3 to the robot 1 but the robot 1 may not use the control signal generated by the control apparatus 3 before the control apparatus 3 receives the control permission signal (especially before the robot control apparatus 4 transmits the control permission signal). Namely, the control signal generated by the control apparatus 3 may not be actually reflected in the control of the robot 1 before the control apparatus 3 receives the control permission signal. In this case, the control permission signal may be regarded as a signal by which the robot control apparatus 4 permits the control apparatus 3 to actually reflect the control signal generated by the control apparatus 3 in the control of the robot 1.

After the control apparatus 3 receives the control permission signal, the control signal generated by the control apparatus 3 is actually reflected in the control of the robot 1, so the computer program executed by the robot control apparatus 4 to perform the rough movement processing may be stopped at least partially. In this case, the robot 1 operates to move the end effector 5 under the control of the control apparatus 3. Namely, the control apparatus 3 may be considered to have a control authority of the robot 1 after the control apparatus 3 receives the control permission signal. On the other hand, the robot control apparatus 4 controls the robot 1 by executing the computer program to perform the rough movement processing before the control apparatus 3 receives the control permission signal. In this case, the robot 1 operates to move the end effector 5 under the control of the robot control apparatus 4. Namely, the robot control apparatus 4 may be considered to have the control right of the robot 1 before the control apparatus 3 receives the control permission signal. In this case, the control permission signal may be regarded as a signal that transfers the control authority of the robot 1 from the robot control apparatus 4 to the control apparatus 3.

After the control apparatus 3 receives the control permission signal, the control apparatus 3 may perform the fine movement processing without receiving the signal transmitted from the robot control apparatus 4. Namely, after the control apparatus 3 receives the control permission signal, the control apparatus 3 may perform the fine movement processing even in a case where the control apparatus 3 does not receive the signal transmitted from the robot control apparatus 4. After the control apparatus 3 receives the control permission signal, the control apparatus 3 may perform the fine movement processing even in a case where the signal is not transmitted from the robot control apparatus 4 to the control apparatus 3. This is because the control apparatus 3 can be considered to have the control authority of the robot 1 after the control apparatus 3 receives the control permission signal.

Note that the robot control apparatus 4 does not perform the rough movement processing in a period during which the control apparatus 3 has the control authority of the robot 1 (namely, the fine movement processing is performed). Namely, the robot control apparatus 4 does not perform the rough movement processing in the period during which the control apparatus 3 performs the fine movement processing. However, the robot control apparatus 4 may perform at least a part of the rough movement processing even in the period during which the control apparatus 3 has the control authority of the robot 1 (namely, the fine movement processing is performed). Namely, the robot control apparatus 4 may perform at least a part of the rough movement processing even in the period during which the control apparatus 3 performs the fine movement processing. Similarity, the control apparatus 3 does not perform the fine movement processing in a period during which the robot control apparatus 4 has the control authority of the robot 1 (namely, the rough movement processing is performed). Namely, the control apparatus 3 does not perform the fine movement processing in the period during which the robot control apparatus 4 performs the rough movement processing. However, the control apparatus 3 may perform at least a part of the fine movement processing even in the period during which the robot control apparatus 4 has the control authority of the robot 1 (namely, the rough movement processing is performed). Namely, the control apparatus 3 may perform at least a part the fine movement processing even in the period during which the robot control apparatus 4 performs the rough movement processing. Namely, at least a part of the rough movement processing and at least a part of the fine movement processing may be performed in parallel. Note that an example in which at least a part of the rough movement processing and at least a part of the fine movement processing are performed in parallel will be described in the first modified example described below.

In a case where the control signal generated by the control apparatus 3 that performs the fine movement processing is input to the robot control apparatus 4 as described above, the robot control apparatus 4 may continue a processing for generating the driving signal, which is the control signal and which is allowed to be input to the robot 1 or the end effector 5 to control the operation of the robot 1 or the end effector 5, based on the control signal generated by the control apparatus 3, and outputting the control signal generated by the robot control apparatus 4 to the robot 1 or the end effector 5. Namely, even in a case where the computer program executed by the robot control apparatus 4 to perform the rough movement processing is stopped, the robot control apparatus 4 may continue a processing for converting the control signal generated by the control apparatus 3 to the control signal (the driving signal) that is allowed to be input to the robot 1 or the end effector 5, and outputting the converted control signal to the robot 1 or the end effector 5. However, in a case where the control signal generated by the control apparatus 3 is input to the robot 1 or the end effector 5 not through the robot control apparatus 4, the robot control apparatus 4 may stop the processing for converting the control signal generated by the control apparatus 3 to the control signal (the driving signal) that is allowed to be input to the robot 1 or the end effector 5, and outputting the converted control signal to the robot 1 or the end effector 5.

### (2-3) Fine Movement Processing

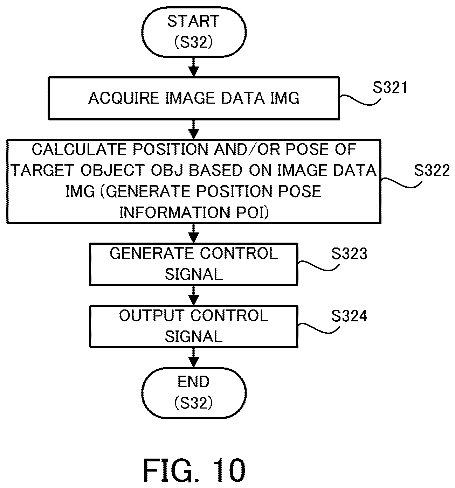

Next, with reference to FIG. 10, the fine movement processing performed after the control apparatus 3 receives the control permission signal at the step S32 in FIG. 9 will be described. FIG. 10 is a flowchart that illustrates a flow of the fine movement processing.

Note that t an example in which the fine movement processing is started after the rough movement processing is completed will be described in the below-described description. However, as described in the first modified example later, the fine movement processing may be started after the rough movement processing is started and before the rough movement processing is completed. Namely, the control apparatus 3 may perform at least a part of the fine movement processing illustrated in FIG. 10 in at least a part of a period during which the rough movement processing is performed.

As illustrated in FIG. 10, the position pose calculation unit 311 of the control apparatus 3 acquires the image data IMG from the imaging apparatus 21 by using the communication apparatus 33 (a step S321). Specifically, the imaging apparatus 21 images the target object OBJ at a predetermined imaging rate. For example, the imaging apparatus 21 may image the target object OBJ at the imaging rate, at which the target object OBJ is imaged tens of times to hundreds of times (as one example, 500 times) per second. As a result, the imaging apparatus 21 generates the image data IMG in a cycle based on the predetermined imaging rate. For example, the imaging apparatus 21 may generate tens to hundreds of (as one example, 500) image data IMG per second. The control apparatus 3 acquires the image data IMG each time the imaging apparatus 21 generates the image data IMG. Namely, the control apparatus 3 may acquire tens to hundreds of (as one example, 500) image data IMG per second.

In a case where the fine movement processing is started after the rough movement processing is completed as described above, the imaging apparatus 21 may image the target object OBJ after the rough movement processing is completed. As a result, the position pose calculation unit 311 acquires image data IMG generated by the imaging apparatus 21 imaging the target object OBJ after the rough movement processing is completed.

The imaging apparatus 21 may image another object that is different from the target object OBJ, in addition to the target object OBJ on which the end effector 5 performs the predetermined process. For example, in a case where both of the target object OBJ and another object are included in an imaging range (a field of view) of the imaging apparatus 21, the imaging apparatus 21 may image both the target object OBJ and another object. As a result, the imaging apparatus 21 may generate the image data IMG_2D indicating an image in which both the target object OBJ and another object are captured. Note that another object that is different from the target object OBJ is referred to as a non-target object, because another objects is not a target on which the robot 1 performs the predetermined process. At least one of at least a part of the end effector 5, at least a part of the robot arm 12, and at least one surrounding object that is positioned around the robot 1 is one example of the non-target object. However, the imaging apparatus 21 may image the target object OBJ but may not image the non-target object. Namely, the imaging apparatus 21 may generate the image data IMG indicating an image in which the target object OBJ is captured but the non-target object is not captured. In both cases, the imaging apparatus 21 generates the image data IMG indicating an image in which at least the target object OBJ is captured. Namely, the imaging apparatus 21 generates the image data IMG including the image data of at least the target object OBJ.

Each time the position pose calculation unit 311 acquires the image data IMG at the step S321, the position pose calculation unit 311 calculates at least one of the position and the pose of the target object OBJ based on the image data IMG acquired at the step S321 (a step S322). As a result, the position pose calculation unit 311 generates position pose information POI indicating at least one of the position and the pose of the target object OBJ (the step S322).

At the step S322, the position pose calculation unit 311 calculates at least one of the position and pose of the target object OBJ in the global coordinate system. Namely, the position pose calculation unit 311 generates the position pose information POI indicating at least one of the position and the pose of the target object OBJ in the global coordinate system.

The global coordinate system is a coordinate system that is a base for the robot system SYS. Specifically, the global coordinate system is a coordinate system that is used to control the robot 1. Therefore, the robot coordinate system may be used as the global coordinate system. The robot coordinate system may be a three-dimensional coordinate system that is determined with respect to the robot 1. The robot coordinate system is a three-dimensional coordinate system set on the base 11 of the robot 1, for example. Namely, the robot coordinate system is a three-dimensional coordinate system set on the base 11 that does not move even in a case where the robot 1 moves (namely, the robot arm 12 moves). However, the robot coordinate system may be a three-dimensional coordinate system that is different from the three-dimensional coordinate system set on the base 11 of the robot 1. For example, the robot coordinate system may be a three-dimensional coordinate system set at the end (namely, a tip) of the robot arm 12. For example, the robot coordinate system may be a three-dimensional coordinate system set on the end effector 5 attached to the robot arm 12. For example, the robot coordinate system may be a three-dimensional coordinate system set at the tool center point of the end effector 5 attached to the robot arm 12. Alternatively, a coordinate system that is different from the robot coordinate system may be used as the global coordinate system. Note that the global coordinate system is not limited to the robot coordinate system, but may be a three-dimensional coordinate system whose origin is set at a fixed reference point. The fixed reference point may be positioned in a space (for example, a factory) in which the robot 1 is positioned.

Each of the control apparatus 3 and the robot control apparatus 4 may control the robot 1 so that the end effector 5 is positioned at a desired position in the global coordinate system. The global coordinate system is a coordinate system that is defined by an X-axis, a Y-axis, and a Z-axis that are orthogonal to one another. The X-axis may be an axis along a horizontal plane. The Y-axis may be an axis along the horizontal plane. The Z-axis may be an axis perpendicular to the horizontal plane. The Z-axis may be an axis extending along a direction of gravity. Note that the X-axis, the Y-axis, and the Z-axis illustrated in FIG. 2 may be the X-axis, the Y-axis, and the Z-axis, respectively. Note that an origin of the global coordinate system may not be an origin of the X-axis, the Y-axis, and the Z-axis illustrated in FIG. 2.

The position pose calculation unit 311 may calculate, as the position of the target object OBJ in the global coordinate system, at least one of a position Tx of the target object OBJ in the X-axis direction parallel to the X-axis, a position Ty of the target object OBJ in the Y-axis direction parallel to the Y-axis, a position Tz of the target object OBJ in the Z-axis direction parallel to the Z-axis. The position pose calculation unit 311 may calculate, as the pose of the target object OBJ in the global coordinate system, at least one of a rotational amount Rx of the target object OBJ around the X-axis, a rotational amount Ry of the target object OBJ around the Y-axis, and a rotational amount Rz of the target object OBJ around the Z-axis. This is because the rotational amount Rx of the target object OBJ around the X-axis, the rotational amount Ry of the target object OBJ around the Y-axis, and the rotational amount Rz of the target object OBJ around the Z-axis are equivalent to a parameter representing the pose of the target object OBJ around the X-axis, a parameter representing the pose of the target object OBJ around the Y-axis, and a parameter representing the pose of the target object OBJ around the Z-axis, respectively. Therefore, in the below-described description, the rotational amount Rx of the target object OBJ around the X-axis, the rotational amount Ry of the target object OBJ around the Y-axis, and the rotational amount Rz of the target object OBJ around the Z-axis are referred to as the pose RX of the target object OBJ around the X-axis, the pose RY of the target object OBJ around the Y-axis, and the pose Rz of the target object OBJ around the Z-axis, respectively.

Note that the pose Rx of the target object OBJ around the X-axis, the pose Ry of the target object OBJ around the Y-axis, and the pose Rz of the target object OBJ around the Z-axis may be considered to represent a position of the target object OBJ in a rotational direction around the X-axis, a position of the target object OBJ in a rotational direction around the Y-axis, and a position of the target object OBJ in a rotational direction around the Z-axis, respectively. Namely, each of the pose Rx of the target object OBJ around the X-axis, the pose Ry of the target object OBJ around the Y-axis, and the pose Rz of the target object OBJ around the Z-axis may be regarded as a parameter representing the position of the target object OBJ.

In this way, the position pose calculation unit 311 may calculates at least one of the position Tx, the position Ty, the position Tz, the pose Rx, the pose Ry, and the pose Rz, as at least one of the position and the pose of the target object OBJ in the global coordinate system, at the step S322 in FIG. 10.

In the present example embodiment, the position pose calculation unit 311 may calculate the position and the pose of the target object OBJ by performing a matching processing using the image data IMG acquired at the step S321. Specifically, the position pose calculation unit 311 may calculate the position and the pose of the target object OBJ by performing the matching processing using the image data IMG and model data MDL. The model data MDL is data indicating an object model OBM that is a model of the target object OBJ. The object model OBM is a two-dimensional model and includes a two-dimensional image, for example. In this case, the model data MDL is data indicating the object model OBM that is the two-dimensional model having a two-dimensional shape that is a reference for the target object OBJ. The model data MDL may be two-dimensional image data indicating the two-dimensional model of the target object OBJ, which is generated by virtually projecting a CAD model (alternatively, any three-dimensional model) of the target object OBJ from a plurality of different directions on virtual planes that are mutually orthogonal to each other, respectively, for example. Alternatively, the model data MDL may be image data indicating the two-dimensional image generated by imaging the actual target object OBJ in advance. Note that the actual target object OBJ measured in advance for generating the model data MDL may be a standard or good target object OBJ.

However, as described in a third modified example described later, model data indicating a model of at least a part of an edge of the target object OBJ may be used as the model data MDL.

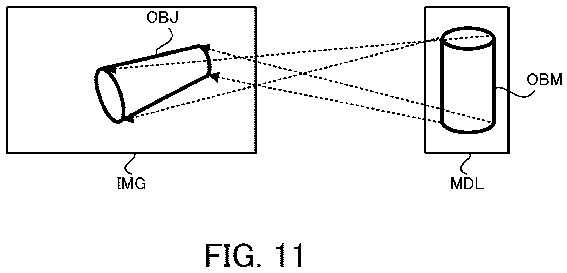

The position pose calculation unit 311 may perform, on the image indicated by the image data IMG, the matching processing (in other words, a 2D matching processing, and a template matching processing) using the object model OBM indicated by the model data MDL as a template, as illustrated in FIG. 11. Specifically, the position pose calculation unit 311 may perform, as the matching processing, an object detection processing for detecting the target object OBJ indicated by the object model OBM in the image indicated by the image data IMG. In other words, the position pose calculation unit 311 may perform, as the matching processing, the object detection processing for detecting the target object OBJ in the image indicated by the image data IMG by detecting a similar image part that is similar to the object model OBM in the image indicated by the image data IMG. Note that the matching processing (in this case, the object detection processing) itself may be the same as an existing matching processing. For example, the position pose calculation unit 311 may perform the matching processing by using a well-known method such as a SIFT (Scale-Invariant Feature Transform) or a SURF (Speed-Upped Robust Feature).

In order to perform matching processing, the position pose calculation unit 311 may perform at least one of a translation, a scaling and / or a rotation of the object model OBM in an imaging coordinate system, which is a coordinate system of the imaging apparatus 21 that generates the image data IMG, so that a feature part of the object model OBM indicated by the model data MDL is closer to (typically, matches) the feature part of the entire target object OBJ captured in the image indicated by the image data IMG. Namely, the position pose calculation unit 311 may change a positional relationship between a coordinate system of the model data MDL and the imaging coordinate system so that the feature part of the object model OBM indicated by the model data MDL is closer to (typically, matches) the feature part of the entire target object OBJ captured in the image indicated by the image data IMG. As a result, the position pose calculation unit 311 may determine a positional relationship between the coordinate system of the model data MDL and the imaging coordinate system. Then, the position pose calculation unit 311 may calculate at least one of the position and the pose of the target object OBJ in the imaging coordinate system from at least one of the position and the pose of the target object OBJ in the coordinate system of the model data MDL based on the positional relationship between the coordinate system of the model data MDL and the imaging coordinate system. Then, the position pose calculation unit 311 may calculate at least one of the position and the pose of the target object OBJ in the global coordinate system from at least one of the position and the pose of the target object OBJ in the imaging coordinate system by using a transformation matrix for transforming a three-dimensional coordinate in one of the global coordinate system and the imaging coordinate system to a three-dimensional coordinate in the other one of the global coordinate system and the imaging coordinate system.

In making the feature part of the entire object model OBM be closer to the feature part of the entire target object OBJ captured in the image indicated by the image data IMG, the position pose calculation unit 311 may calculate a matching similarity that is a degree of similarity between the object model OBM and the image indicated by the image data IMG (especially, an image part to which the object model OBM is aligned). The position pose calculation unit 311 may perform at least one of the translation, the scaling and / or the rotation of the object model OBM so that the matching similarly is maximum. As a result, the image part of the image indicated by the image data IMG to which the is aligned in a situation where the matching similarity is maximum is detected as a similar image part that is similar to the object model OBM in the image indicated by the image data IMG. Namely, the target object OBJ indicated by the similar image part is detected. Note that the matching similarity may be considered to be equivalent to a degree of correlation that indicates a correlation between the object model OBM and the image indicated by the image data IMG. The matching similarity may be regarded as a parameter that is calculated as a detected result of the target object OBJ. Namely, the matching similarity may be regarded as information related to the detected result of the target object OBJ. Note that it can be said that the degree of correlation is an index that indicates a correlation between the object model OBM and the target object OBJ captured in the image indicated by the image data IMG. Note that the matching similarity may be referred to as a matching score.

In a case where the matching processing detects the target object OBJ whose calculated matching similarity is higher than a predetermined matching determination threshold value that is used for the matching processing, the position pose calculation unit 311 may select this target object OBJ as one target object OBJ on which the end effector 5 should actually perform the predetermined process. On the other hand, in a case where the matching processing detects the target object OBJ whose calculated matching similarity is lower than the matching determination threshold value, the position pose calculation unit 311 may not select this target object OBJ as one target object OBJ on which the end effector 5 should actually perform the predetermined process. Note that the matching determination threshold value is a threshold value that is used to detect the target object OBJ from the image indicated by the image data IMG by the matching processing.

As described above, there is a possibility that the imaging apparatus 21 images the plurality of target objects OBJ. In this case, there is a possibility that the plurality of target objects OBJ are captured in the image indicated by the image data IMG generated by the imaging apparatus 21. In this case, the position pose calculation unit 311 may select, as process target object on which the end effector 5 should actually perform the predetermined process, one target object OBJ of the plurality of target objects OBJ captured in the image indicated by the image data IMG. In other words, the position pose calculation unit 311 may select, as the process target object, one target object OBJ of the plurality of target objects OBJ captured in the image indicated by the image data IMG. For example, the position pose calculation unit 311 may select, as the process target object, one target object OBJ of the target objects OBJ whose matching similarity is higher than the matching threshold value and is the highest.

Note that the control apparatus 3 may move the imaging apparatus 21 in a case where the target object OBJ whose matching similarity is lower than the matching determination threshold value is not detected by the matching processing. A state in which "the target object OBJ whose matching similarity is lower than the matching determination threshold value is not detected by the matching processing" may include a state in which the matching similarity of one target object OBJ detected by the matching processing is lower than the matching determination threshold value. The state in which "the target object OBJ whose matching similarity is lower than the matching determination threshold value is not detected by the matching processing" may include a state in which the matching similarities of all of the plurality of target objects O detected by the matching processing are lower than the matching determination threshold value. Then, the imaging apparatus 21 may image the target object OBJ again. In this case, the imaging apparatus 21 may image the target object OBJ from a position, which is different from a position of the imaging apparatus 21 before the imaging apparatus 21 moves. The imaging apparatus 21 may image the target object OBJ in an pose, which is different from a pose of the imaging apparatus 21 before the imaging apparatus 21 moves. Then, the control apparatus 3 may select the process target object by performing the processing from the step S321 to the step S322 again. In this case, an imaged aspect of the target object OBJ captured in the image indicated by the image data IMG changes due to the movement of the imaging apparatus 21. Therefore, even in a case where the target object OBJ whose matching similarity is lower than the matching determination threshold value has not been detected (namely, even in a case where the process target object cannot be selected) by the matching processing before the imaging apparatus 21 moves, there is a possibility that the target object OBJ whose matching similarity is lower than the matching determination threshold value is detected (namely, the process target object can be selected) by the matching processing after the imaging apparatus 21 moves.

Note that a method for calculating at least one of the position and the pose of the target object OBJ is not limited to the matching processing using the image data IMG described above. The position pose calculation unit 311 may calculate at least one of the position and the pose of the target object OBJ by using another known method for calculating at least one of the position and the pose of the target object OBJ using the image data IMG (namely, a part of image data IMG). The method for calculating at least one of the position and the pose of the target object OBJ may be a known method for calculating at least one of the position and the pose of the target object OBJ based on the image data IMG (namely, a part of the image data IMG) without using the model data MDL, or a well-known method for calculating at least one of the position and the pose of the target object OBJ using data different from the model data MDL and the image data IMG (namely, a part of the image data IMG). For example, the method for calculating at least one of the position and the pose of the target object OBJ may be a method for calculating at least one of the position and the pose of the target object OBJ based on the image data IMG (namely, a part of the image data IMG) by a machine learning or a deep learning. In this case, an inference model for outputting at least one of the position and the pose of the target object OBJ in a case where ethe image data IMG (namely, a part of image data IMG) is input thereto may be generated in advance by the machine learning or the deep learning. The position pose calculation unit 311 may calculate at least one of the position and the pose of the target object OBJ by inputting the image data IMG (namely, a part of the image data IMG) to this inference model. This inference model may be stored in the position pose calculation unit 311. Note that the position pose calculation unit 311 may read out this inference model stored in the storage apparatus 32.

Again in FIG. 10, the signal generation unit 312 generates the control signal by using the position pose information POI generated at the step S322 (a step S323).

At the step S323, the signal generation unit 312 may generate the control signal so that the positional relationship between the end effector 5 and the target object OBJ becomes a predetermined target positional relationship. Namely, the signal generation unit 312 may generate the control signal for controlling the robot 1 so that the positional relationship between the end effector 5 and the target object OBJ becomes the predetermined target positional relationship.

The predetermined target positional relationship may include a positional relationship in which the end effector 5 is positioned at the target process position TPP at which the end effector 5 should be positioned when the end effector 5 performs the predetermined process on the target object OBJ. In this case, the signal generation unit 312 may generate the control signal so that the end effector 5 is positioned at the target process position TPP that is determined with respect to the target object OBJ. For example, the signal generation unit 312 may generate the control signal for controlling the robot 1 so that the end effector 5 is positioned at the target process position TPP that is determined with respect to the target object OBJ.

Specifically, the signal generation unit 312 recognizes at least one of the position and the pose of the target object OBJ in the global coordinate system based on the position pose information POI generated at the step S322. Furthermore, the signal generation unit 312 recognizes the target process position TPP, which is determined with respect to the target object OBJ, based on work information described later (alternatively, an input from the user for specifying the target process position TPP). Namely, the signal generation unit 312 recognizes the target process position TPP in a coordinate system that is determined with respect to the target object OBJ. In this case, the signal generation unit 312 may calculate the target process position TPP_G in the global coordinate system based on at least one of the position and the pose of the target object OBJ in the global coordinate system and the target process position TPP that is determined with respect to the target object OBJ. Namely, the signal generation unit 312 may convert the target process position TPP in the coordinate system that is determined with respect to the target object OBJ to the target process position TPP_G in the global coordinate system. Note that both the target process position TPP in the coordinate system that is determined with respect to on the target object OBJ and the target process position TPP_G in the global coordinate system indicate the position at which the end effector 5 should be positioned when the end effector 5 performs the predetermined process on the target object OBJ (namely, the target process position in a broad sense). Then, the signal generation unit 312 may generate the control signal to control robot 1 so that end effector 5 is positioned at the target process position TPP_G in the global coordinate system.

A state in which "end effector 5 is positioned at the target process position TPP" may include a state in which "the position of end effector 5 (for example, the position of the tool center point) is completely the same as the target process position TPP". The state in which "the end effector 5 is positioned at the target process position TPP" may include a state in which "the position of the end effector 5 is not completely the same as the target process position TPP, but a difference between the position of the end effector 5 and the target process position TPP is small enough to be equal to or lower than an allowable upper limit threshold value related to the position of the end effector 5".

Note that the predetermined target positional relationship may be set by the user. The target process position TPP that determines the predetermined target positional relationship may be set by the user. The allowable upper limit threshold value that determines the predetermined target positional relationship (namely, the allowable upper limit value related to the position of the end effector 5) may be set by the user. Alternatively, the predetermined target positional relationship may be set automatically by the control apparatus 3. The target process position TPP that determines the predetermined target positional relationship may be automatically set by the control apparatus 3. The allowable upper limit threshold value for determining the predetermined target positional relationship (namely, the allowable upper limit value for the position of the end effector 5) may be automatically set by the control apparatus 3.

At the step S323, the signal generation unit 312 may generate the control signal so that a postural relationship between the end effector 5 and the target object OBJ becomes a predetermined target postural relationship. Namely, the signal generation unit 312 may generate the control signal for controlling the robot 1 so that the postural relationship between the end effector 5 and the target object OBJ becomes the predetermined target postural relationship.

The predetermined target postural relationship may include a postural relationship in which the end effector 5 takes a target process pose that should be taken by the end effector 5 when the end effector 5 performs the predetermined process on the target object OBJ. In this case, the signal generation unit 312 may generate the control signal so that the end effector 5 takes the target process pose that is determined with respect to the target object OBJ. For example, the signal generation unit 312 may generate the control signal for controlling the robot 1 so that the end effector 5 takes the target process pose that is determined with respect to the target object OBJ.

Specifically, the signal generation unit 312 recognizes at least one of the position and the pose of the target object OBJ in the global coordinate system based on the position pose information POI generated at the step S322. Furthermore, the signal generation unit 312 recognizes the target process pose, which is determined with respect to the target object OBJ, based on the work information described later (alternatively, an input from the user for specifying the target process pose). Namely, the signal generation unit 312 recognizes the target process pose in the coordinate system that is determined with respect to the target object OBJ. In this case, the signal generation unit 312 may calculate the target process pose in the global coordinate system based on at least one of the position and the pose of the target object OBJ in the global coordinate system and the target process pose that is determined with respect to the target object OBJ. Namely, the signal generation unit 312 may convert the target process pose in the coordinate system that is determined with respect to the target object OBJ to the target process pose in the global coordinate system. Note that both the target process pose in the coordinate system that is determined with respect to on the target object OBJ and the target process pose in the global coordinate system indicate the pose that should be taken by the end effector 5 when the end effector 5 performs the predetermined process on the target object OBJ (namely, the target process pose in a broad sense). Then, the signal generation unit 312 may generate the control signal to control robot 1 so that end effector 5 takes the target process pose in the global coordinate system.

A state in which "end effector 5 takes the target process pose" may include a state in which "the pose of end effector 5 (for example, the pose of the tool center point) is completely the same as the target process pose". The state in which "the end effector 5 takes the target process pose" may include a state in which "the pose of the end effector 5 is not completely the same as the target process pose, but a difference between the pose of the end effector 5 and the target process pose is small enough to be equal to or lower than an allowable upper limit value related to the pose of the end effector 5".

Note that the predetermined target postural relationship may be set by the user. The target process pose that determines the predetermined target postural relationship may be set by the user. The allowable upper limit threshold value that determines the predetermined target postural relationship (namely, the allowable upper limit value related to the pose of the end effector 5) may be set by the user. Alternatively, the predetermined target postural relationship may be set automatically by the control apparatus 3. The target process pose that determines the predetermined target postural relationship may be automatically set by the control apparatus 3. The allowable upper limit threshold value for determining the predetermined target postural relationship (namely, the allowable upper limit value for the pose of the end effector 5) may be automatically set by the control apparatus 3.

At the step S323, the signal generation unit 312 may generate the control signal to perform a feedback control of the robot 1 by using the position pose information POI generated at the step S322. For example, the signal generation unit 312 may generate the control signal to perform the feedback control including a P (Proportional) control by using the position pose information POI. For example, the signal generation unit 312 may generate the control signal to perform the feedback control including a PI (Proportional Integral) control by using the position pose information POI. For example, signal generation unit 312 may generate the control signal to the perform feedback control including PID (Proportional Integral Derivative) control by using the position pose information POI.

In a case where the signal generation unit 312 performs the feedback control by using the position pose information POI in this manner, the fine movement processing may be regarded as a processing based on a closed loop control. The closed loop control may be at least one of the P control, the PI control, and the PID control described above. On the other hand, the rough movement processing that moves the end effector 5 in accordance with the movement instruction information included in the computer program may be regarded as a processing based on an open loop control. Namely, the fine movement processing and the rough movement processing may be different in that the loop control methods are different from each other.

Moreover, as described above, the control apparatus 3 needs to calculate the position pose information POI in order to perform the fine movement processing. On the other hand, the robot control apparatus 4 may not calculate the position pose information POI in order to perform the rough movement processing. Therefore, a computational cost of the fine movement processing, which includes the processing for calculating the position pose information POI, is higher than a computational cost of the rough movement processing, which may not include the processing for calculating the position pose information POI. In other words, the computational cost of the rough movement processing, which does not include the processing for calculating the position pose information POI, is lower than the computational cost of the fine movement processing, which includes the processing for calculating the position pose information POI. Therefore, the fine movement processing and the rough movement processing may be different in that the required computational costs are different from each other.

After generating the control signal, the signal generation unit 312 outputs the control signal generated at the step S323 (a step S324). For example, the signal generation unit 312 may output the control signal generated at the step S323 to the robot control apparatus 4. For example, the signal generation unit 312 may output the control signal generated at the step S323 to the robot 1. As a result, the robot 1 moves the end effector 5 in accordance with the control signal generated by the signal generation unit 312.

Again in FIG. 9, then, the signal generation unit 312 determines whether or not a predetermined convergence condition is satisfied (a step S33). The predetermined convergence condition may include a position convergence condition that the positional relationship between the end effector 5 and the target object OBJ becomes the predetermined target positional relationship. A condition that the end effector 5 is positioned at the target process position TPP that is determined with respect to the target object OBJ is one example of the position convergence condition. The predetermined convergence conditions may include a pose convergence condition that the postural relationship between the end effector 5 and the target object OBJ becomes the predetermined target postural relationship, in addition to or instead of the position convergence condition. A condition that the end effector 5 takes the target process pose that is determined with respect to the target object OBJ is one example of the pose convergence condition.

The signal generation unit 312 may determine that the predetermined convergence condition is satisfied in a case where both the position convergence condition and the pose convergence condition are satisfied. The signal generation unit 312 may determine that the predetermined convergence condition is not satisfied in a case where at least one of the position convergence condition and the pose convergence condition is not satisfied. However, the signal generation unit 312 may determine that the predetermined convergence condition is satisfied in a case where at least one of the position convergence condition and the pose convergence condition is satisfied.

In a case where it is determined as a result of the determination at the step S33 that the predetermined convergence condition is not satisfied (the step S33: No), the control apparatus 3 performs the fine movement processing again (the step S32). Specifically, the control apparatus 3 acquires the image data IMG again (the step S321 in FIG. 10), calculates at least one of the position and the pose of the target object OBJ again (the step S322 in FIG. 10), generates the control signal again (the step S323 in FIG. 10), and outputs the control signal again (the step S324 in FIG. 10). Namely, the control apparatus 3 may repeat the fine movement processing a plurality of times until the predetermined convergence condition is satisfied. However, in a case where the predetermined convergence condition is satisfied at a timing at which the fine movement processing has been performed once, the control apparatus 3 may not repeat the fine movement processing a plurality of times.

The robot 1 moves the end effector 5 each time the control apparatus 3 performs the fine movement processing, because the control apparatus 3 outputs the control signal each time the control apparatus 3 performs the fine movement processing. Therefore, the robot 1 gradually moves the end effector 5 in accordance with the control signal that is generated (updated) as appropriate by the fine movement processing performed the plurality of times. Namely, the positional relationship between the end effector 5 and the target object OBJ gradually changes each time the control apparatus 3 performs the fine movement processing. In this case, the signal generation unit 312 may generate (in this case, update) the control signal so that the positional relationship between the end effector 5 and the target object OBJ is gradually closer to the predetermined target positional relationship. The signal generation unit 312 may generate (in this case, update) the control signal so that the postural relationship between the end effector 5 and the target object OBJ is gradually closer to the predetermined target postural relationship. As a result, a possibility that the predetermined convergence condition is satisfied gradually increases by performing the fine movement processing the plurality of times.

More specifically, it is more likely that a calculation accuracy of at least one of the position and the pose of the target object OBJ is higher as a distance between the imaging apparatus 21 and the target object OBJ is shorter, a ratio of the target object OBJ (a ratio of an area in which the target object OBJ is captured) to the imaging field of view of the imaging apparatus 21 becomes larger. Namely, the calculation accuracy of at least one of the position and the pose of the target object OBJ is higher as the imaging apparatus 21 is closer to the target object OBJ. In this case, in a case where the robot 1 moves in accordance with the control signal generated based on at least one of the position and the pose of the target object OBJ calculated at a first timing, the imaging apparatus 21 is closer to the target object OBJ. Therefore, the control apparatus 3 can calculate at least one of the position and the pose of the target object OBJ with higher accuracy at a second timing that is after the first timing. As a result, in a case where the robot 1 moves in accordance with the control signal generated based on at least one of the position and the pose of the target object OBJ calculated at the second timing, the end effector 5 approaches the target object OBJ more accurately. Namely, the end effector 5 approaches the target process position TPP more accurately. Conversely, even though the robot 1 continues to move in accordance with the control signal generated based on at least one of the position and the pose of the target object OBJ calculated in a state where the distance between the imaging apparatus 21 and the target object OBJ is not so short, there is a possibility that the end effector 5 cannot approach the target object OBJ sufficiently. Namely, there is a possibility that the end effector 5 cannot approach (in other words, cannot reach) the target process position TPP sufficiently. Therefore, in the present example embodiment, the control apparatus 3 repeats the fine movement processing, thereby improving the calculation accuracy of at least one of the position and the pose of the target object OBJ, and as a result, the end effector 5 can accurately reach target process position TPP.

Furthermore, in a case where the target object OBJ is transported by the transport apparatus, the target object OBJ moves in a period during which the robot 1 moves. Therefore, if the fine movement processing is not repeated, the robot 1 cannot move the end effector 5 so as to approach the target object OBJ after the movement although the robot 1 can move the end effector 5 so as to approach the target object OBJ before the movement. However, in the present example embodiment, since the control apparatus 3 repeats the fine movement processing, the calculated result of at least one of the position and the pose of the moving target object OBJ is updated sequentially. Namely, the control apparatus 3 can accurately calculate at least one of the current position and the current pose of the moving target object OBJ. Therefore, the robot 1 can move the end effector 5 so as to approach the target object OBJ after movement in accordance with the control signal generated based on at least one of the current position and the current pose of the moving target object OBJ.

The control apparatus 3 may repeat the fine movement processing at a cycle that is based on the imaging rate of the imaging apparatus 21. For example, in a case where the imaging apparatus 21 images the target object OBJ N (wherein, N is a variable number representing an integer number that is equal to or larger than 1) times (for example, 200 times) per second, the control apparatus 3 may repeat the fine movement processing N times per second. Namely, the cycle at which the control apparatus 3 repeats the fine movement processing may be the same as the cycle at which the imaging apparatus 21 images the target object OBJ. However, the cycle at which the control apparatus 3 repeats the fine movement processing may be different from the cycle at which the imaging apparatus 21 images the target object OBJ. For example, in a case where the imaging apparatus 21 images the target object OBJ N times (for example, 200 times) per second, the control apparatus 3 may repeat the fine movement processing M (wherein, M is a variable number representing an integer number that is equal to or larger than 1 and that is different from N) times (for example, 100 times) per second.

Note that the robot 1 moves the end effector 5 each time the control apparatus 3 performs the fine movement processing, and therefore, the imaging apparatus 21, which moves together with the end effector 5, also moves each time the control apparatus 3 performs the fine movement processing. In this case, the control apparatus 3 may change an imaging condition of the imaging apparatus 21 each time the control apparatus 3 performs the fine movement processing. For example, the control apparatus 3 may change the imaging condition so that the imaging apparatus 21 moved by the fine movement processing can properly image the target object OBJ. At least one of an exposure time and an intensity of the illumination light is one example of the imaging condition.

The control apparatus 3 may perform a predetermined image processing on the image indicated by the image data IMG acquired from the imaging apparatus 21. In this case, the control apparatus 3 may change a condition of the image processing (it is referred to as an "image processing condition" in the below described description) each time the control apparatus 3 performs the fine movement processing. The image processing may include a gamma correction processing. In this case, the image processing condition may include a gamma correction processing condition related to the gamma correction processing. The gamma correction processing condition may include at least one of a condition related to whether or not the gamma correction processing should be performed and a condition related to a gamma values used in the gamma correction processing. The image processing may include a HDR (High Dynamic Range) processing. In this case, the image processing condition may include a HDR processing condition related to the HDR processing. The HDR processing condition may include at least one of a condition related to whether or not the HDR processing should be performed and a condition related to the number of images synthesized in the HDR processing. The image processing may include a de-noise processing. In this case, the image processing condition may include a de-noise processing condition related to the de-noise processing. The de-noise processing condition may include at least one of a condition related to whether or not the de-noise processing should be performed, a condition related to a type of a filter used in the de-noise processing, a condition related to a combination of at least two filters used in the de-noise processing, and a condition related to a parameter of the filter used in the de-noise processing.

The control apparatus 3 may perform the fine movement processing so that the imaging apparatus 21 can image the target object OBJ from different imaging positions and / or from different imaging directions by moving the imaging apparatus 21 (namely, moving the end effector 5) while maintaining the distance between the end effector 5 and the target object OBJ. As one example, in a case where an obstacle that is different from the target object OBJ exists between the imaging apparatus 21 and the target object OBJ, there is a possibility that a part of the target object OBJ is positioned in a blind spot of the imaging apparatus 21, and therefore, there is a possibility that the imaging apparatus 21 cannot image the target object OBJ properly. Note that the surrounding object (namely, the object positioned around the robot 1) described above is one example of the obstacle. In this case, in a case where a presence of the obstacle is identified based on a result of the fine movement processing (especially ,the matching processing) performed previously, the control apparatus 3 may generate the control signal for controlling the robot 1 so as to reduce an influence of the obstacle on the imaging by the imaging apparatus 21 by moving the imaging apparatus 21 (for example, changing the pose of the imaging apparatus 21) so as to avoid the obstacle while maintaining the distance between the end effector 5 and the target object OBJ. Alternatively, in a case where the obstacle exists between the imaging apparatus 21 and the target object OBJ, the imaging apparatus 21 images the obstacle in addition to the target object OBJ. In this case, the control apparatus 3 may calculate at least one of a position and a pose of the obstacle in addition to at least one of the position and the pose of the target object OBJ. Then, the control apparatus 3 may generate, based on a calculated result of at least one of the position and the pose of the obstacle, the control signal for controlling the robot 1 so as to reduce an influence of the obstacle on the imaging by the imaging apparatus 21 by moving the imaging apparatus 21 (for example, changing the pose of the imaging apparatus 21) so as to avoid the obstacle while maintaining the distance between the end effector 5 and the target object OBJ. Alternatively, the control apparatus 3 may generate the control signal for controlling the robot 1 so as to reduce an influence of the obstacle on the imaging by the imaging apparatus 21 by moving the imaging apparatus 21 so as to avoid the obstacle while allowing the distance between the end effector 5 and the target object OBJ to be changed. For example, the control apparatus 3 may generate the control signal for controlling the robot 1 so as to reduce an influence of the obstacle on the imaging by the imaging apparatus 21 by moving the imaging apparatus 21 so as to avoid the obstacle while allowing the distance between the end effector 5 and the target object OBJ to increase. the control apparatus 3 may generate the control signal for controlling the robot 1 so as to reduce an influence of the obstacle on the imaging by the imaging apparatus 21 by moving the imaging apparatus 21 so as to avoid the obstacle while allowing the distance between the end effector 5 and the target object OBJ to decrease. As a result, the calculation accuracy of the position and the pose of the target object OBJ is improved, and the control apparatus 3 can accurately move the end effector 5 so that the end effector 5 approaches the target object OBJ.

In a case where it is determined that the predetermined convergence condition is satisfied, the control apparatus 3 may not receive the signal (for example, the control permission signal) from the robot control apparatus 4 in order to perform the fine movement processing again. Namely, even in a case where the control apparatus 3 does not receive the signal from the robot control apparatus 4, the control apparatus 3 may perform the fine movement processing again. Even in a case where the control apparatus 3 does not receive the signal from the robot control apparatus 4, the control apparatus 3 may repeat the fine movement processing the plurality of times. In other words, even in a case where the robot control apparatus 4 does not transmit the signal to the control apparatus 3, the control apparatus 3 may perform the fine movement processing again. Even in a case where the robot control apparatus 4 does not transmit the signal to the control apparatus 3, the control apparatus 3 may repeat the fine movement processing the plurality of times.

On the other hand, in a case where it is determined as a result of the determination at the step S33 that the predetermined convergence condition is satisfied (the step S33: Yes), the control apparatus 3 may not perform the fine movement processing.

Here, since the fine movement processing is performed after the rough movement processing is performed, the end effector 5, which has approached the target object OBJ by the rough movement processing, further approaches the target object OBJ by the fine movement processing. Therefore, a difference between the target process position TPP, at which the end effector 5 should be positioned when the end effector 5 performs the predetermined process on the target object OBJ, and the position of the end effector 5 at a timing at which the fine movement processing is completed is smaller than a difference between the target process position TPP and the position of the end effector 5 at a timing at which the rough movement processing is completed, for example. Namely, a distance between the target process position TPP and the position of the end effector 5 at the timing at which the fine movement processing is completed is shorter than a distance between the target process position TPP and the position of the end effector 5 at the timing at which the rough movement processing is completed, for example. Therefore, the fine movement processing may be considered to include a processing for generating the control signal for controlling robot 1 so that the difference between the target process position TPP and the position of the end effector 5 at the timing at which the fine movement processing is completed is smaller than the difference between the target process position TPP and the position of the end effector 5 at the timing at which the rough movement processing is completed. The fine movement processing may be considered to include a processing for generating the control signal for controlling robot 1 so that the distance between the target process position TPP and the position of the end effector 5 at the timing at which the fine movement processing is completed is smaller than the distance between the target process position TPP and the position of the end effector 5 at the timing at which the rough movement processing is completed.

Furthermore, since the fine movement processing is performed after the rough movement processing is performed, a difference between the target process pose, which should be taken by the end effector 5 when the end effector 5 performs the predetermined process on the target object OBJ, and the pose of the end effector 5 at the timing at which the fine movement processing is completed is smaller than a difference between the target process pose and the pose of the end effector 5 at the timing at which the rough movement processing is completed, for example. Therefore, the fine movement processing may be considered to include a processing for generating the control signal for controlling robot 1 so that the difference between the target process pose and the pose of the end effector 5 at the timing at which the fine movement processing is completed is smaller than the difference between the target process pose and the pose of the end effector 5 at the timing at which the rough movement processing is completed.

In a case where the convergence condition includes the position convergence condition described above, a difference between the predetermined target positional relationship and the positional relationship between the end effector 5 and the target object OBJ at the timing at which the fine movement processing is completed is smaller than a difference between the predetermined target positional relationship and the positional relationship between the end effector 5 and the target object OBJ at the timing at which the rough movement processing is completed. Therefore, the fine movement processing may be considered to include a processing for generating the control signal for controlling the robot 1 so that the difference between the predetermined target positional relationship and the positional relationship between the end effector 5 and the target object OBJ at the timing at which the fine movement processing is completed is smaller than the difference between the predetermined target positional relationship and the positional relationship between the end effector 5 and the target object OBJ at the timing at which the rough movement processing is completed.

In a case where the convergence condition includes the pose convergence condition described above, a difference between the predetermined target postural relationship and the postural relationship between the end effector 5 and the target object OBJ at the timing at which the fine movement processing is completed is smaller than a difference between the predetermined target postural relationship and the postural relationship between the end effector 5 and the target object OBJ at the timing at which the rough movement processing is completed. Therefore, the fine movement processing may be considered to include a processing for generating the control signal for controlling the robot 1 so that the difference between the predetermined target postural relationship and the postural relationship between the end effector 5 and the target object OBJ at the timing at which the fine movement processing is completed is smaller than the difference between the predetermined target postural relationship and the postural relationship between the end effector 5 and the target object OBJ at the timing at which the rough movement processing is completed.

After it is determined that the convergence condition is satisfied (the step S33: Yes), the signal generation unit 312 of the control apparatus 3 controls the end effector 5 to perform the predetermined process on the target object OBJ (a step S34). Specifically, the signal generation unit 312 generates the control signal for controlling the end effector 5 to perform the predetermined process on the target object OBJ, and outputs the generated control signal to the robot control apparatus 4 or the end effector 5. As a result, the end effector 5 performs the predetermined process on the target object OBJ.

Alternatively, in addition to or instead of the signal generation unit 312 of the control apparatus 3, the signal generation unit 411 of the robot control apparatus 4 may control the end effector 5 to perform the predetermined process on the target object OBJ (the step S34). Specifically, the signal generation unit 411 may generate the control signal for controlling the end effector 5 to perform the predetermined process on the target object OBJ, and output the generated control signal to the end effector 5. As a result, the end effector 5 performs the predetermined process on the target object OBJ.

Even in a process period during which the end effector 5 performs the predetermined process on the target object OBJ, the control apparatus 3 may perform the fine movement processing as necessary. Specifically, the control apparatus 3 may calculate at least one of the position and the pose of the target object OBJ based on the image data IMG generated by the imaging apparatus 21 in the process period. Then, the control apparatus 3 may generate the control signal based on at least one of the position and the pose of the target object OBJ. For example, the control apparatus 3 may generate the control signal so that the positional relationship between the end effector 5 and the target object OBJ is maintained ate the predetermined target positional relationship. For example, the control apparatus 3 may generate the control signal so that the postural relationship between the end effector 5 and the target object OBJ is maintained at the predetermined target postural relationship.

Especially, even in a case where the target object OBJ moves in the process period, the control apparatus 3 may perform the fine movement processing even in the process period. In this case, the end effector 5 can perform the predetermined process on the target object OBJ while following the moving target object OBJ. Namely, even though the target object OBJ moves in the process period, the end effector 5 can perform the predetermined process on the target object OBJ in the same manner as in a case where the target object OBJ is stationary in the process period.

Note that a state of the end effector 5 may be set to an ON state in which the control signal (especially, the end effector driving signal) is allowed to be input in a period during which the fine movement processing is performed, because the end effector 5 is controlled to perform the predetermined process on the target object OBJ after the fine movement processing is performed. The ON state may mean a state in which the end effector 5 is allowed to perform the predetermined process without requiring any processing other than a processing for inputting the control signal (especially, the end effector driving signal) to the end effector 5 in a case where the control signal (especially, the end effector driving signal) is input to the end effector 5. On the other hand, the state of the end effector 5 may not be set to the ON state in a period during which the rough movement processing is performed, because the fine movement processing is performed without controlling the end effector 5 after rough movement processing is performed. For example, the state of the end effector 5 may be set to an OFF state in which the control signal (especially, the end effector driving signal) cannot be input. The OFF state may mean a state in which the end effector 5 cannot perform the predetermined process unless a processing (for example, an activation processing) other than the processing for inputting the control signal (especially, the end effector driving signal) is performed in a case where the control signal (especially, the end effector driving signal) is input to the end effector 5. As a result, it is possible to reduce a standby power consumption of the end effector 5.

The control apparatus 3 may further perform the fine movement processing as necessary after the end effector 5 has performed the predetermined process on the target object OBJ. For example, in the case where the fine movement processing for leaving the end effector 5 is performed after the end effector 5 has performed the predetermined process on the target object OBJ as described with reference to FIG. 3(c) and so on, the control apparatus 3 may perform the fine movement processing for leaving the end effector 5 after the end effector 5 has performed the predetermined process on the target object OBJ. However, the control apparatus 3 may not perform the fine movement processing after the end effector 5 has performed the predetermined process on the target object OBJ.

In a case where the control apparatus 3 performs the fine movement processing again after the end effector 5 has performed the predetermined process on the target object OBJ, the control apparatus 3 may control the end effector 5 again so that the end effector 5 performs the predetermined process on the target object OBJ. Namely, the control apparatus 3 may alternately repeat an operation for performing the fine movement processing until the convergence condition is satisfied and an operation for controlling the end effector 5 after the convergence condition is satisfied. As one example, an example in which the robot 1 uses the end effector 5 to perform a series of processing by which the workpiece W is held and then the held workpiece W is released on the placing apparatus T will be described. In this case, the control apparatus 3 may perform the fine movement processing for the workpiece W that should be held by the end effector 5 until the convergence condition for the workpiece W is satisfied. Then, the control apparatus 3 may control the end effector 5 to hold the workpiece W. Then, the control apparatus 3 may perform the fine movement processing for the placing apparatus T to which the end effector 5 should release the workpiece W until the convergence condition for the placing apparatus T is satisfied. Then, the control apparatus 3 may control the end effector 5 to release the held workpiece W on the placing apparatus T.

### (2-4) Transmission of Completion Notification Signal

The control apparatus 3 transmits a completion notification signal to the robot control apparatus 4 at a desired timing after controlling the end effector 5 to perform the predetermined process on the target object OBJ (a step S35). For example, the control apparatus 3 transmits the completion notification signal to the robot control apparatus 4 after controlling the end effector 5 to perform the predetermined process on the target object OBJ and after determining that the fine movement processing may not be performed (the step S35). Namely, the control apparatus 3 transmits the completion notification signal to the robot control apparatus 4 after controlling the end effector 5 to perform the predetermined process on the target object OBJ and after completing the fine movement processing (the step S35). In this case, the completion notification signal may be regarded as a signal that notifies the robot control apparatus 4 that the control apparatus 3 has completed the fine movement processing. Alternatively, the completion notification signal may be regarded as a signal that notifies the robot control apparatus 4 that the control apparatus 3 has completed the control of the end effector 5 for performing the predetermined process on the target object OBJ.

Note that the control apparatus 3 may transmit the completion notification signal to the robot control apparatus 4 at a desired timing before the robot control apparatus 4 controls the end effector 5 to perform the predetermined process on the target object OBJ in a case where the signal generation unit 411 of the robot control apparatus 4 controls the end effector 5 at the step S34 as described above. The control apparatus 3 may transmit the completion notification signal to the robot control apparatus 4 after completing the fine movement processing (for example, after determining that the convergence condition is satisfied at the step S33).

After the control apparatus 3 transmits the completion notification signal to the robot control apparatus 4, the robot control apparatus 4 receives the completion notification signal transmitted from the control apparatus 3 (a step S43). The robot control apparatus 4, which has received the completion notification signal, may start the rough movement processing. Namely, the robot control apparatus 4 may start the rough movement processing after the robot control apparatus 4 receives the completion notification signal. In other words, the robot control apparatus 4 may move the end effector 5 by performing the rough movement processing after the robot control apparatus 4 receives the completion notification signal. On the other hand, the robot control apparatus 4, which has not received the completion notification signal, does not start the rough movement processing. Namely, the robot control apparatus 4 does not start the rough movement processing before the robot control apparatus 4 receives the completion notification signal. In other words, the robot control apparatus 4 does not move the end effector 5 by performing the rough movement processing before the robot control apparatus 4 receives the completion notification signal.

On the other hand, after the control apparatus 3 transmits the completion notification signal to the robot control apparatus 4, the control apparatus 3 does not perform the fine movement processing. Especially, the control apparatus 3 may be restricted (for example, prohibited, the same applies in the below described) from moving the end effector 5 (the imaging apparatus 21) by performing the fine movement processing. For example, the control apparatus 3 may be restricted from acquiring the image data IMG from the imaging apparatus 21. Note that the imaging apparatus 21 may be restricted from imaging the target object OBJ in a case where the control apparatus 3 is restricted from acquiring the image data IMG from the imaging apparatus 21. For example, the control apparatus 3 may be restricted from calculating the position and the pose of the target object OBJ based on the image data IMG. For example, the control apparatus 3 may be restricted from generating the control signal. For example, the control apparatus 3 may be restricted from outputting the control signal to the robot control apparatus 4 and the robot 1 even though it is permitted to generate the control signal. For example, the robot control apparatus 4 and the robot 1 may restrict an acceptance of the control signal output from the control apparatus 3 even though the control apparatus 3 is permitted to generate and output the control signal.

Therefore, after the control apparatus 3 transmits the completion notification signal to the robot control apparatus 4, the robot control apparatus 4 may be considered to have the control authority of the robot 1. In this case, the completion notification signal may be regarded a signal that transfers (in this case, returns) the control authority of the robot 1 from the control apparatus 3 to the robot control apparatus 4.

However, even in a case where the robot control apparatus 4 has received the completion notification signal, there is a possibility that the robot control apparatus 4 may not need to further perform the rough movement processing. For example, in a case where the robot system SYS has performed the predetermined process on all of the plurality of target objects OBJ by using the end effector 5, there is a possibility that the robot control apparatus 4 may not need to further perform the rough movement processing. For example, in a case where the robot system SYS has performed the predetermined process on all of the target parts of the target object OBJ by using the end effector 5, there is a possibility that the robot control apparatus 4 may not need to further perform the rough movement processing. Therefore, the robot control apparatus 4 may determine whether or not the robot control processing should be terminated after the robot control apparatus 4 receives the completion notification signal (a step S44).

In a case where it is determined as a result of the determination at the step S44 that the robot control processing should be terminated (step S44: Yes), the robot control apparatus 4 may not perform the rough movement processing again. In this case, the control apparatus 3 and the robot control apparatus 4 may terminate the robot control processing.

On the other hand, in a case where it is determined at the step S44 that the robot control processing should not be terminated (the step S44: No), the robot control apparatus 4 may perform the rough movement processing again (the step S41). Then, the control apparatus 3 may perform the fine movement processing (the step S32). Namely, the robot system SYS may alternately repeat the rough movement processing and the fine movement processing.

### (2-5) Robot Control Processing Alternately Repeating Rough Movement Processing and Fine Movement Processing

### (2-5-1) First Example of Robot Control Processing Alternately Repeating Rough Movement Processing and Fine Movement Processing

The robot control processing that is performed in a case where the end effector 5 performs the predetermined process on the plurality of target parts (for example, the parts in which the holes HL illustrated in FIG. 5 and FIG. 6 are formed) of the target object OBJ in sequence is a first example of the robot control processing that alternately repeats the rough movement processing and the fine movement processing. As one example, the robot control processing that is performed in a case where the end effector 5 performs the predetermined process on a first target part (for example, a part in which the hole HL#1 illustrated in FIG. 5 and FIG. 6 is formed) of the target object OBJ and a second target part (for example, a part in which the hole HL#2 illustrated in FIG. 5 and FIG. 6 is formed) of the target object OBJ that is different from the first target part in sequence will be described. However, the below-described robot control processing that alternately repeats the rough movement processing and the fine movement processing as many times as the number of target parts may be performed even in a case where the end effector 5 performs the predetermined process on three or more target parts of the target object OBJ in sequence.

In this case, the robot control apparatus 4 may first perform the rough movement processing for the first target part (the step S41 in FIG. 9). For example, the robot control apparatus 4 may generate and output the control signal for controlling the robot 1 so that the end effector 5 approaches the first target part. As a result, the end effector 5 moves under the control of the robot control apparatus 4.

After the rough movement processing for the first target part, the robot control apparatus 4 transmits the control permission signal to the control apparatus 3 (the step S42 in FIG. 9), and the control apparatus 3 receives the control permission signal from the robot control apparatus 4 (the step S31 in FIG. 9). Then, the control apparatus 3 may perform the fine movement processing for the first target part (the step S32 in FIG. 9). For example, the control apparatus 3 may acquire the image data IMG, which is generated by the imaging apparatus 21 imaging the target object OBJ (especially, the first target part) after the rough movement processing for the first target part. Then, the control apparatus 3 may calculate at least one of the position and the pose of the target object OBJ (especially, at least one of the position and the pose of the first target part of the target object OBJ) based on the acquired image data IMG. Then, the control apparatus 3 may generate and output the control signal for controlling the robot 1 to move the end effector 5 based on the calculated result of at least one of the position and the pose of the first target part. As a result, the end effector 5 moves under the control of the control apparatus 3.

The control apparatus 3 may perform the fine movement processing for the first target part until the predetermined convergence condition described above is satisfied (the step S33 in FIG. 9). Namely, the control apparatus 3 may repeat the fine movement processing for the first target part until the predetermined convergence condition described above is satisfied. Especially, the control apparatus 3 may repeat the fine movement processing for the first target part until the predetermined convergence condition described above is satisfied in a period from a timing at which the rough movement processing for the first target part is completed to a timing at which the rough movement processing for the second target part is started.

As one example, the control apparatus 3 may perform the fine movement processing for the first target part until the position convergence condition that a positional relationship between the end effector 5 and the first target part becomes a first target positional relationship is satisfied. A positional relationship in which the end effector 5 is positioned at a first target process position TPP at which the end effector 5 should be positioned when the end effector 5 performs the predetermined process on the first target part is one example of the first target positional relationship. As another example, the control apparatus 3 may perform the fine movement processing for the first target part until the pose convergence condition that a postural relationship between the end effector 5 and the first target part becomes a first target postural relationship is satisfied. A positional relationship in which the end effector 5 takes a first target process pose that should be taken by the end effector 5 when the end effector 5 performs the predetermined process on the first target part is one example of the first target postural relationship.

In a case where the convergence condition is satisfied (the step S33 in FIG. 9: Yes), the control apparatus 3 terminates the fine movement processing for the first target part. In this case, the control apparatus 3 controls the end effector 5 to perform the predetermined process on the first target part (the step S34 in FIG. 9).

Then, the control apparatus 3 transmits the completion notification signal to the robot control apparatus 4 (the step S35 in FIG. 9), and the robot control apparatus 4 receives the completion notification signal transmitted from the control apparatus 3 (the step S43 in FIG. 9). Then, the robot control apparatus 4 may perform the rough movement processing for the second target part (the step S41 in FIG. 9). For example, the robot control apparatus 4 may generate and output the control signal for controlling the robot 1 so that the end effector 5 approaches the second target part from the first target part. As a result, the end effector 5 moves under the control of the robot control apparatus 4.

Note that the control apparatus 3 may perform the rough movement processing, in addition to or instead of the robot control apparatus 4, as described above. Therefore, the control apparatus 3 may perform the rough movement processing for the second target part after the fine movement processing for the first target part. In this case, the control apparatus 3 may not receive the signal from the robot control apparatus 4 in order to perform the rough movement processing for the second target part. Namely, even in a case where the control apparatus 3 does not receive the signal from the robot control apparatus 4, the control apparatus 3 may perform the rough movement processing for the second target part. In other words, even in a case where the robot control apparatus 4 does not transmit the signal to the control apparatus 3, the control apparatus 3 may perform the rough movement processing for the second target part. The control apparatus 3 may start the rough movement processing for the second target part without transmitting the completion notification signal to the robot control apparatus 4 at the step S35 of FIG. 9. In this case, a time required to perform the rough movement processing for the second target part is reduced, compared to a case where the control apparatus 3 needs to receive the signal from the robot control apparatus 4 in order to perform the rough movement processing for the second target part. This is because the control apparatus 3 may not wait for the start of rough movement processing for the second target part until it receives the signal from the robot control apparatus 4.

However, in a case where the control apparatus 3 performs the rough movement processing for the second target part, the robot control apparatus 4 transmits the control permission signal to the control apparatus 3 (the step S42 in FIG. 9) and the control apparatus 3 receives the control permission signal from the robot control apparatus 4 (the step S31 in FIG. 9) before the control apparatus 3 performs the rough movement processing for the second target part. Then, the control apparatus 3 may start the rough movement processing for the second target part.

Note that the control apparatus 3 may perform the rough movement processing for the first target part in addition to or instead of the rough movement processing for the second target part. Note that the operation of the control apparatus 3 that performs the rough movement processing for the first target part may be the same as the operation of the control apparatus 3 that performs the rough movement processing for the second target part, and therefore, a detailed description thereof is omitted to avoid a redundant description.

After the rough movement processing for the second target part, the robot control apparatus 4 transmits the control permission signal to the control apparatus 3 (the step S42 in FIG. 9), and the control apparatus 3 receives the control permission signal from the robot control apparatus 4 (the step S31 in FIG. 9). Then, the control apparatus 3 may perform the fine movement processing for the second target part (the step S32 in FIG. 9). For example, the control apparatus 3 may acquire the image data IMG, which is generated by the imaging apparatus 21 imaging the target object OBJ (especially, the second target part) after the rough movement processing for the second target part. Then, the control apparatus 3 may calculate at least one of the position and the pose of the target object OBJ (especially, at least one of the position and the pose of the second target part of the target object OBJ) based on the acquired image data IMG. Then, the control apparatus 3 may generate and output the control signal for controlling the robot 1 to move the end effector 5 based on the calculated result of at least one of the position and the pose of the second target part. As a result, the end effector 5 moves under the control of the control apparatus 3.

The control apparatus 3 may perform the fine movement processing for the second target part until the predetermined convergence condition described above is satisfied (the step S33 in FIG. 9). Namely, the control apparatus 3 may repeat the fine movement processing for the second target part until the predetermined convergence condition described above is satisfied.

As one example, the control apparatus 3 may perform the fine movement processing for the second target part until the position convergence condition that a positional relationship between the end effector 5 and the second target part becomes a second target positional relationship is satisfied. A positional relationship in which the end effector 5 is positioned at a second target process position TPP at which the end effector 5 should be positioned when the end effector 5 performs the predetermined process on the second target part is one example of the second target positional relationship. As another example, the control apparatus 3 may perform the fine movement processing for the second target part until the pose convergence condition that a postural relationship between the end effector 5 and the second target part becomes a second target postural relationship is satisfied. A positional relationship in which the end effector 5 takes a second target process pose that should be taken by the end effector 5 when the end effector 5 performs the predetermined process on the second target part is one example of the second target postural relationship.

Note that the second target positional relationship may be the same as or may be different from the first target positional relationship described above. The second target process position TPP may be the same as or may be different from the first target process position TPP described above. The second target postural relationship may be the same as or may be different from the first target postural relationship described above. The second target process pose may be the same as or may be different from the first target process pose described above.

In a case where the convergence condition is satisfied (the step S33 in FIG. 9: Yes), the control apparatus 3 terminates the fine movement processing for the second target part. In this case, the control apparatus 3 controls the end effector 5 to perform the predetermined process on the second target part (the step S34 in FIG. 9). Then, the control apparatus 3 transmits the completion notification signal to the robot control apparatus 4 (the step S35 in FIG. 9), and the robot control apparatus 4 receives the completion notification signal sent from the control apparatus 3 (the step S43 in FIG. 9).

### (2-5-2) Second Example of Robot Control Processing Alternately Repeating Rough Movement Processing and Fine Movement Processing

The robot control processing that is performed in a case where the end effector 5 performs the predetermined process on the plurality of target objects OBJ in sequence is a second example of the robot control processing that alternately repeats the rough movement processing and the fine movement processing. As one example, the robot control processing that is performed in a case where the end effector 5 performs the predetermined process on a first target object OBJ and a second target object OBJ that is different from the first target object OBJ in sequence will be described. However, the below-described robot control processing that alternately repeats the rough movement processing and the fine movement processing as many times as the number of target objects OBJ may be performed even in a case where the end effector 5 performs the predetermined process on three or more target objects OBJ in sequence.

In this case, the robot control apparatus 4 may first perform the rough movement processing for the first target object OBJ (the step S41 in FIG. 9). For example, the robot control apparatus 4 may generate and output the control signal for controlling the robot 1 so that the end effector 5 approaches the first target object OBJ. As a result, the end effector 5 moves under the control of the robot control apparatus 4.

After the rough movement processing for the first target object OBJ, the robot control apparatus 4 transmits the control permission signal to the control apparatus 3 (the step S42 in FIG. 9), and the control apparatus 3 receives the control permission signal from the robot control apparatus 4 (the step S31 in FIG. 9). Then, the control apparatus 3 may perform the fine movement processing for the first target object OBJ (the step S32 in FIG. 9). For example, the control apparatus 3 may acquire the image data IMG, which is generated by the imaging apparatus 21 imaging the first target object OBJ after the rough movement processing for the first target object OBJ. Then, the control apparatus 3 may calculate at least one of the position and the pose of the first target object OBJ based on the acquired image data IMG. Then, the control apparatus 3 may generate and output the control signal for controlling the robot 1 to move the end effector 5 based on the calculated result of at least one of the position and the pose of the first target object OBJ. As a result, the end effector 5 moves under the control of the control apparatus 3.

The control apparatus 3 may perform the fine movement processing for the first target object OBJ until the predetermined convergence condition described above is satisfied (the step S33 in FIG. 9). Namely, the control apparatus 3 may repeat the fine movement processing for the first target object OBJ until the predetermined convergence condition described above is satisfied. Especially, the control apparatus 3 may repeat the fine movement processing for the first target object OBJ until the predetermined convergence condition described above is satisfied in a period from a timing at which the rough movement processing for the first target object OBJ is completed to a timing at which the rough movement processing for the second target part is started.

As one example, the control apparatus 3 may perform the fine movement processing for the first target object OBJ until the position convergence condition that a positional relationship between the end effector 5 and the first target object OBJ becomes a third target positional relationship is satisfied. A positional relationship in which the end effector 5 is positioned at a third target process position TPP at which the end effector 5 should be positioned when the end effector 5 performs the predetermined process on the first target object OBJ is one example of the third target positional relationship. As another example, the control apparatus 3 may perform the fine movement processing for the first target object OBJ until the pose convergence condition that a postural relationship between the end effector 5 and the first target object OBJ becomes a third target postural relationship is satisfied. A positional relationship in which the end effector 5 takes a third target process pose that should be taken by the end effector 5 when the end effector 5 performs the predetermined process on the first target object OBJ is one example of the third target postural relationship.

Note that the third target positional relationship may be the same as or may be different from at least one of the first and second target positional relationships described above. The third target process position TPP may be the same as or may be different from at least one of the first and second target process positions TPP described above. The third target postural relationship may be the same as or may be different from at least one of the first and second target postural relationships described above. The third target process pose may be the same as or may be different from at least one of the first and second target process poses described above.

In a case where the convergence condition is satisfied (the step S33 in FIG. 9: Yes), the control apparatus 3 terminates the fine movement processing for the first target object OBJ. In this case, the control apparatus 3 controls the end effector 5 to perform the predetermined process on the first target object OBJ (the step S34 in FIG. 9).

Then, the control apparatus 3 transmits the completion notification signal to the robot control apparatus 4 (the step S35 in FIG. 9), and the robot control apparatus 4 receives the completion notification signal transmitted from the control apparatus 3 (the step S43 in FIG. 9). Then, the robot control apparatus 4 may perform the rough movement processing for the second target object (the step S41 in FIG. 9). For example, the robot control apparatus 4 may generate and output the control signal for controlling the robot 1 so that the end effector 5 approaches the second target object OBJ from the first target object OBJ. As a result, the end effector 5 moves under the control of the robot control apparatus 4.

Note that the control apparatus 3 may perform the rough movement processing, in addition to or instead of the robot control apparatus 4, as described above. Therefore, the control apparatus 3 may perform the rough movement processing for the second target object OBJ after the fine movement processing for the first target object OBJ. In this case, the control apparatus 3 may not receive the signal from the robot control apparatus 4 in order to perform the rough movement processing for the second target object OBJ. Namely, even in a case where the control apparatus 3 does not receive the signal from the robot control apparatus 4, the control apparatus 3 may perform the rough movement processing for the second target object OBJ. In other words, even in a case where the robot control apparatus 4 does not transmit the signal to the control apparatus 3, the control apparatus 3 may perform the rough movement processing for the second target object OBJ. The control apparatus 3 may start the rough movement processing for the second target object OBJ without transmitting the completion notification signal to the robot control apparatus 4 at the step S35 of FIG. 9. In this case, a time required to perform the rough movement processing for the second target object OBJ is reduced, compared to a case where the control apparatus 3 needs to receive the signal from the robot control apparatus 4 in order to perform the rough movement processing for the second target object OBJ. This is because the control apparatus 3 may not wait for the start of rough movement processing for the second target object OBJ until it receives the signal from the robot control apparatus 4.

However, in a case where the control apparatus 3 performs the rough movement processing for the second target object OBJ, the robot control apparatus 4 transmits the control permission signal to the control apparatus 3 (the step S42 in FIG. 9) and the control apparatus 3 receives the control permission signal from the robot control apparatus 4 (the step S31 in FIG. 9) before the control apparatus 3 performs the rough movement processing for the second target object OBJ. Then, the control apparatus 3 may start the rough movement processing for the second target object OBJ.

Note that the control apparatus 3 may perform the rough movement processing for the first target object OBJ in addition to or instead of the rough movement processing for the second target object OBJ. Note that the operation of the control apparatus 3 that performs the rough movement processing for the first target object OBJ may be the same as the operation of the control apparatus 3 that performs the rough movement processing for the second target object OBJ, and therefore, a detailed description thereof is omitted to avoid a redundant description.

After the rough movement processing for the second target object OBJ, the robot control apparatus 4 transmits the control permission signal to the control apparatus 3 (the step S42 in FIG. 9), and the control apparatus 3 receives the control permission signal from the robot control apparatus 4 (the step S31 in FIG. 9). Then, the control apparatus 3 may perform the fine movement processing for the second target object OBJ (the step S32 in FIG. 9). For example, the control apparatus 3 may acquire the image data IMG, which is generated by the imaging apparatus 21 imaging the target object OBJ (especially, the second target object OBJ) after the rough movement processing for the second target object OBJ. Then, the control apparatus 3 may calculate at least one of the position and the pose of the second target object OBJ based on the acquired image data IMG. Then, the control apparatus 3 may generate and output the control signal for controlling the robot 1 to move the end effector 5 based on the calculated result of at least one of the position and the pose of the second target object OBJ. As a result, the end effector 5 moves under the control of the control apparatus 3.

The control apparatus 3 may perform the fine movement processing for the second target object OBJ until the predetermined convergence condition described above is satisfied (the step S33 in FIG. 9). Namely, the control apparatus 3 may repeat the fine movement processing for the second target object OBJ until the predetermined convergence condition described above is satisfied.

As one example, the control apparatus 3 may perform the fine movement processing for the second target object OBJ until the position convergence condition that a positional relationship between the end effector 5 and the second target object OBJ becomes a fourth target positional relationship is satisfied. A positional relationship in which the end effector 5 is positioned at a fourth target process position TPP at which the end effector 5 should be positioned when the end effector 5 performs the predetermined process on the second target object OBJ is one example of the fourth target positional relationship. As another example, the control apparatus 3 may perform the fine movement processing for the second target object OBJ until the pose convergence condition that a postural relationship between the end effector 5 and the second target object OBJ becomes a fourth target postural relationship is satisfied. A positional relationship in which the end effector 5 takes a fourth target process pose that should be taken by the end effector 5 when the end effector 5 performs the predetermined process on the second target object OBJ is one example of the fourth target postural relationship.

Note that the fourth target positional relationship may be the same as or may be different at least one of the first to third target positional relationships described above. The fourth target process position TPP may be the same as or may be different at least one of the first to third target process positions TPP described above. The fourth target postural relationship may be the same as or may be different at least one of the first to third target postural relationships described above. The fourth target process pose may be the same as or may be different at least one of the first to third target process poses described above.

In a case where the convergence condition is satisfied (the step S33 in FIG. 9: Yes), the control apparatus 3 terminates the fine movement processing for the second target object OBJ. In this case, the control apparatus 3 controls the end effector 5 to perform the predetermined process on the second target object OBJ (the step S34 in FIG. 9). Then, the control apparatus 3 transmits the completion notification signal to the robot control apparatus 4 (the step S35 in FIG. 9), and the robot control apparatus 4 receives the completion notification signal sent from the control apparatus 3 (the step S43 in FIG. 9).

### (3) Technical Effect

As described above, in the present example embodiment, the robot system SYS is configured to perform the robot control processing including the rough movement processing and the fine movement processing. As a result, compared to a case where the robot control processing including only the rough movement processing or only the fine movement processing is performed, the robot system SYS can move the end effector 5 efficiently and with high accuracy.

Specifically, the rough movement processing is the processing for moving the end effector 5 roughly without using the image data IMG, as described above. Therefore, the robot control processing including only the rough movement processing may not include a processing for calculating at least one of the position and the pose of the target object OBJ based on the image data IMG. Therefore, according to the robot control processing including only the rough movement processing, a time required to move the end effector 5 is reduced, however, there is a possibility that a difference between the position of the end effector 5 and the target process position TPP described above is larger than an allowable amount. Similarly, there is a possibility that a difference between the pose of the end effector 5 and the target process pose described above is larger than an allowable amount. On the other hand, the fine movement processing is the processing for moving the end effector 5 more accurately by using the calculated result of at least one of the position and the pose of the target object OBJ based on the image data IMG, as described above. However, the time required to move the end effector 5 using only the fine movement processing is longer than the time required to move the end effector 5 using only the rough movement processing, because it is necessary to calculate at least one of the position and the pose of the target object OBJ based on the image data IMG. Therefore, according to the robot control processing including only the fine movement processing, the difference between the position of the end effector 5 and the target process position TPP described above is small enough to be smaller than the allowable amount and the difference between the pose of the end effector 5 and the target process pose is small enough to be smaller than the allowable amount, however, the time required to move the end effector 5 increases. However, in the present example embodiment, the robot system SYS moves the end effector 5 roughly by performing the rough movement processing, and then moves the end effector 5 more accurately by performing the fine movement processing. Therefore, the time required to move the end effector 5 is reduced, compared to a case where the robot control processing including only the fine movement processing is performed. Namely, the robot system SYS can move the end effector 5 efficiently. Furthermore, the robot system SYS can move the end effector 5 with high accuracy, compared to a case where the robot control processing including only the rough movement processing is performed.

Furthermore, as described above, in the present example embodiment, the control apparatus 3 may repeat the fine movement processing the plurality of times. In this case, the end effector 5 (the imaging apparatus 21) is closer to the target object OBJ each time the fine movement processing is repeated, so the calculation accuracy of at least one of the position and the pose of the target object OBJ gradually increases as described above. As a result, a movement accuracy of the end effector 5, which moves in accordance with the control signal that is generated based on the calculated result of at least one of the position and the pose of the target object OBJ, also increases. The robot system SYS can move the end effector 5 with high accuracy, compared to a case where the fine movement processing is performed only once in a period from a timing at which the control permission signal is received and a timing at which the completion notification signal is transmitted. Namely, the robot system SYS can move the end effector 5 with high accuracy to accurately reach target process position TPP.

Especially in the present example embodiment, the control permission signal is transmitted from the robot control apparatus 4 to the control apparatus 3 after the rough movement processing. Then, the control apparatus 3 starts the fine movement processing. Namely, the control authority of the robot 1 is transferred from the robot control apparatus 4 to the control apparatus 3 by transmitting the control permission signal from the robot control apparatus 4 to the control apparatus 3. In this case, the control apparatus 3 can perform the fine movement processing without receiving any signal from the robot control apparatus. Especially, the control apparatus 3 can perform the fine movement processing the plurality of times without receiving any signal from the robot control apparatus 4. In other words, the control apparatus 3 can perform the fine movement processing even in a case where it does not receive any signal from the robot control apparatus 4. Especially, the control apparatus 3 can perform the fine movement processing the plurality of times even in a case where it does not receive any signal from the robot control apparatus 4. For example, the control apparatus 3 can repeat the fine movement processing even in a case where it does not receive any signal (for example, the control permission signal) for each fine movement processing. Therefore, a time required to perform the fine movement processing is reduced, compared to a comparative example in which the control apparatus 3 does not generate the control signal based on the calculated result of at least one of the position and the pose of the target object OBJ by the control apparatus 3 but the robot control apparatus 4 generates the control signal based on the calculated result of at least one of the position and the pose of the target object OBJ by the control apparatus 3 and moves the end effector 5 based on the generated control signal. Namely, the time required to perform the fine movement processing is reduced, compared to the comparative example in which a part of the fine movement processing is performed by the control apparatus 3 and another part of the fine movement processing is performed by the robot control apparatus 4. Especially, the time required to perform the fine movement processing the plurality of times is reduced. The reason will be described as follows.

In the comparative example in which the control apparatus 3 does not generate the control signal based on the calculated result of at least one of the position and the pose of the target object OBJ by the control apparatus 3 but the robot control apparatus 4 generates the control signal based on the calculated result of at least one of the position and the pose of the target object OBJ by the control apparatus 3 and moves the end effector 5 based on the generated control signal, it is preferable to perform a processing for moving the end effector 5 by the robot control apparatus 4 and a processing for calculating at least one of the position and the pose of the target object OBJ by the control apparatus 3 in synchronization with each other. Therefore, it is desirable that the control apparatus 3, which has calculated at least one of the position and the pose of the target object OBJ, is not allowed to calculate at least one of the position and the pose of the target object OBJ again unless it receives a signal transmitted from the robot control apparatus 4 to the control apparatus 3 as a substantial synchronization signal. A signal for notifying the control apparatus 3 that the robot control apparatus 4 has moved the end effector 5 based on the calculated result of at least one of the position and the pose of the target object OBJ by the control apparatus 3 is one example of the signal transmitted from the robot control apparatus 4 to the control apparatus 3. Therefore, the control apparatus 3 needs to wait without performing the processing for calculating at least one of the position and the pose of the target object OBJ again after calculating at least one of the position and the pose of the target object OBJ once unless it receives the signal transmitted from the robot control apparatus 4 to the control apparatus 3. However, in the present example embodiment, the same control apparatus 3 performs both the processing for calculating at least one of the position and the pose of the target object OBJ and the processing for moving the end effector 5 based on the calculated result of at least one of the position and the pose of the target object OBJ (specifically, the processing for generating the control signal based on the calculated result of at least one of the position and the pose of the target object OBJ). Therefore, in the present example embodiment, the control apparatus 3 can perform the processing for calculating at least one of the position and the pose of the target object OBJ and the processing for moving the end effector 5 based on the calculated result of at least one of the position and the pose of the target object OBJ (specifically, the processing for generating the control signal based on the calculated result of at least one of the position and the pose of the target object OBJ) in synchronization even in a case where the control apparatus 3 does not receive the signal transmitted from the robot control apparatus 4 to the control apparatus 3. Therefore, in the present example embodiment, the time required to perform the fine movement processing (especially, the time required to perform the fine movement processing the plurality of times) is reduced, because the control apparatus 3 may not wait until it receives the signal transmitted from the robot control apparatus 4 to the control apparatus 3.

An effect of reducing the time required to perform the fine movement processing the plurality of times is larger as the number of times that the fine movement processing is performed increases. For example, in a case where the number of times that the fine movement is repeated is N (wherein, N is an integer number that is equal to or larger than 2) and the time required for the control apparatus 3 to receive the signal transmitted from the robot control apparatus 4 to the control apparatus 3 after the control apparatus 3 has transmitted the calculated result of at least one of the position and the pose of the target object OBJ to the robot control apparatus 4 in the comparative example (namely, the time during which the control apparatus 3 waits) is T, the time required to perform the fine movement processing N times in the present embodiment is shorter by T × N than the time required to perform the fine movement processes N times in the comparative example. Therefore, the effect of reducing the time required to perform the fine movement processing the plurality of times is larger as the number of times that the fine movement processing is performed increases.

Moreover, in the present example embodiment, the control apparatus 3 may perform the rough movement processing after performing the fine movement processing as described above in a case where the rough movement processing and the fine movement processing are performed alternately. For example, as described in the first example of the robot control processing that alternately repeats the rough movement processing and the fine movement processing, the control apparatus 3 may perform the rough movement processing for the second part of the target object OBJ after performing the fine movement processing for the first part of the target object OBJ. For example, as described in the second example of the robot control processing that alternately repeats the rough movement processing and the fine movement processing, the control apparatus 3 may perform the rough movement processing for the second target object OBJ after performing the fine movement processing for the first target object OBJ. In this case, especially, the time required to perform the rough movement processing for the second target part or the second target object is reduced. This is because the control apparatus 3 can start the rough movement processing for the second target part or the second target object OBJ after performing the fine movement processing for the first target part or the first target object OBJ even in a case where it does not receive the signal transmitted from the robot control apparatus 4 to the control apparatus 3.

In this way, the robot system SYS in the present example embodiment can efficiently move the end effector 5 in that it can reduce the time required to perform at least one of the rough movement processing and the fine movement processing.

### (4) Modified Example

Next, a modified example of the robot system SYS will be described.

### (4-1) First Modified Example

### (4-1-1) Preparatory Processing

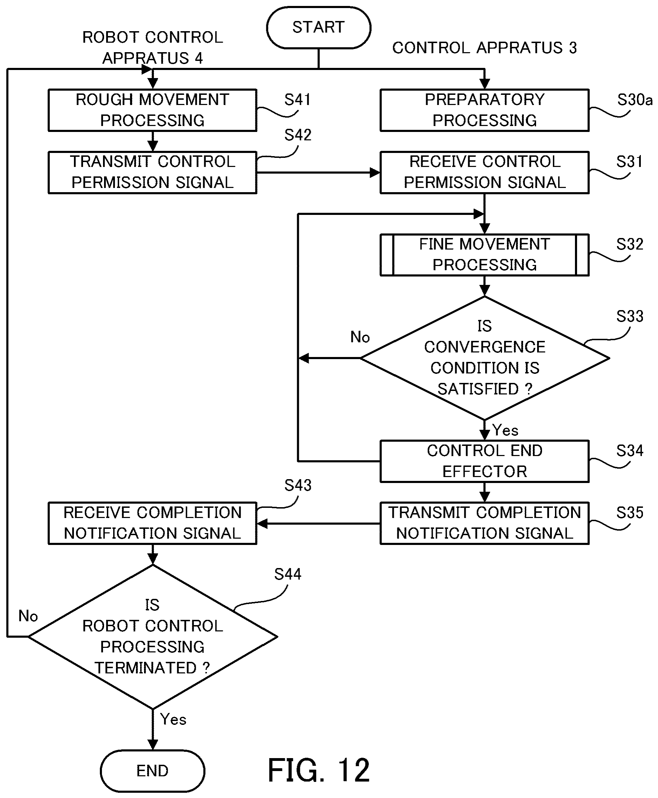

As illustrated in FIG. 12 that illustrates a flow of the robot control processing in a first modified example, in the first modified example, the control apparatus 3 may perform a preparatory processing for performing the fine movement processing before the robot control apparatus 4 completes (namely, terminates) the rough movement processing (a step S30a). Specifically, the control apparatus 3 may perform the preparatory processing in a period during which the robot control apparatus 4 performs the rough movement processing (the step S30a). The control apparatus 3 may perform the preparatory processing before the control apparatus 3 receives the control permission signal from the robot control apparatus 4 (the step S30a). The control apparatus 3 may perform the preparatory processing before the control apparatus 3 starts the fine movement processing (the step S30a).

The preparatory processing may include a pre-processing that is performed to start the fine movement processing. Especially, the preparatory processing may include the pre-processing, which is allowed to be performed in advance by the control apparatus 3 even in a case where the control apparatus 3 does not receive the control permission signal from the robot control apparatus 4, so that the control apparatus 3 can start the fine movement processing after receiving the control permission signal.

In a case where the control apparatus 3 performs the preparatory processing before the robot control apparatus 4 completes the rough movement processing, a time required for the control apparatus 3 to starts the fine movement processing after the robot control apparatus 4 completes the rough movement processing (in other words, a time required for the control apparatus 3 to complete the fine movement processing) is reduced, compared to a case where the control apparatus 3 does not perform the preparatory processing before the robot control apparatus 4 completes the rough movement processing.

### (4-1-1-1) First Example of Preparatory Processing

The preparation processing may include a processing for reading the work information, which is information that is used to perform the fine movement processing. Namely, the preparation processing may include the processing for reading the work information, which is information that is usable to perform the fine movement processing.

The work information may include target object information that is information related to the target object OBJ on which the end effector 5 perform the predetermined process. The target object information may include information related to a type of the target object OBJ.

The work information may include surrounding object information that is information related to the surrounding object positioned around the target object OBJ on which the end effector 5 performs the predetermined process. The surrounding object information may include information related to at least one of a position of the surrounding object, a pose of the surrounding object, a shape of the surrounding object, and a size of the surrounding object. The surrounding object information may be used to generate the control signal for controlling the robot 1 to move the end effector 5 while avoiding an interference with between the end effector 5 and the surrounding object indicated by the surrounding object information.

The work information may include matching information that is used for the matching processing for detecting the target object OBJ. The matching information may include at least one of information related to the model data MDL, information related to the matching determination threshold value, and information related to the convergence condition. Namely, the matching information may include at least one of information specifying the model data MDL, information specifying the matching determination threshold value, and information specifying the convergence condition. The information related to the convergence condition may include at least one of information specifying the target positional relationship, information specifying the target postural relationship, information specifying the target process position TPP, information specifying the target process pose, the upper limit threshold value for determining the target positional relationship (namely, the upper limit value related to the position of the end effector 5), and the upper limit threshold value for determining the target postural relationship (namely, the upper limit value related to the pose of the end effector 5).

The work information may include imaging condition information that is information related to the imaging condition of the imaging apparatus 21. Namely, the work information may include the imaging condition information that is information specifying the imaging condition of the imaging apparatus 21. The imaging condition information may include at least one of information related to the exposure time and information related to the intensity of the illumination light. Namely, the imaging condition information may include at least one of information specifying the exposure time and information specifying the intensity of the illumination light.

In a case where the control apparatus 3 performs the predetermined image processing on the image indicated by the image data IMG acquired from the imaging apparatus 21 as described above, the work information may include image processing condition information that is information related to the image processing condition. Namely, the work information may include the image processing condition information that is information specifying the image processing condition. The image processing condition may include at least one of information related to the gamma correction processing condition, information related to the HDR processing condition, and information related to the de-noise processing condition. Namely, the image processing condition may include at least one of information specifying the gamma correction processing condition, information specifying the HDR processing condition, and information specifying the de-noise processing condition.

The control apparatus 3 may read the work information from the storage apparatus 32 of the control apparatus 3. The control apparatus 3 may read the work information from a recording medium that is attachable to or built in the control apparatus 3. The control apparatus 3 may read (in this case, may download) the work information from an apparatus (not illustrated) external to the control apparatus 3.

In a case where the preparatory processing includes a processing for reading the work information, the control apparatus 3 reads the work information before the robot control apparatus 4 completes the rough movement processing as described above. Here, a certain amount of time is required to read the work information. Therefore, in a case where the control apparatus 3 completes reading the work information before the robot control apparatus 4 completes the rough movement processing, the control apparatus 3 may not read the work information after the robot control apparatus 4 completes the rough movement processing. Alternatively, even in a case where the control apparatus 3 does not complete reading the work information before the robot control apparatus 4 completes the rough movement processing, an information amount of the work information, which should be read by the control apparatus 3 after the robot control apparatus 4 completes the rough movement processing, is reduced, compared to a case where the work information is not read before the robot control apparatus 4 completes the rough movement processing. Therefore, the time required for the control apparatus 3 to starts the fine movement processing after the robot control apparatus 4 completes the rough movement processing (in other words, the time required for the control apparatus 3 to complete the fine movement processing) is reduced.

### (4-1-1-2) Second Example of Preparatory Processing

In a case where an automatic exposure processing (AE: Auto Exposure) for adjusting an exposure condition of the imaging apparatus 21 is allowed to be performed, the preparatory processing may include a processing for starting the automatic exposure processing related to an automatic exposure function. The preparatory processing may include a processing for adjusting the exposure condition in advance by starting the automatic exposure processing. At least one of an aperture value and a shutter speed is one example of the exposure condition.

In a case where the preparatory processing includes the processing for starting the automatic exposure processing as described above, the control apparatus 3 starts the automatic exposure processing before the robot control apparatus 4 completes the rough movement processing. Here, a certain amount of time is required to complete the adjustment of the exposure condition after starting the automatic exposure processing. Therefore, in a case where the control apparatus 3 starts the automatic exposure processing and completes the adjustment of the exposure condition before the robot control apparatus 4 completes the rough movement processing, the control apparatus 3 may not start the automatic exposure processing and adjust the exposure condition after the robot control apparatus 4 completes the rough movement processing. Alternatively, even in a case where the control apparatus 3 does not start the automatic exposure processing and completed the adjustment of the exposure condition before the robot control apparatus 4 completes the rough movement processing, a time required to complete the adjustment of the exposure condition after the robot control apparatus 4 completes the rough movement processing is reduced, compared to a case where the automatic exposure processing is not started before the robot control apparatus 4 completes the rough movement processing. As a result, a time during which the control apparatus 3 waits until the adjustment of the exposure condition is completed after the robot control apparatus 4 completes the rough movement processing is reduced. Therefore, the time required for the control apparatus 3 to starts the fine movement processing by using the imaging apparatus 21 in which the adjustment of the exposure apparatus has been completed after the robot control apparatus 4 completes the rough movement processing (in other words, the time required for the control apparatus 3 to complete the fine movement processing) is reduced.

### (4-1-1-3) Third Example of Preparatory Processing

The preparatory processing may include a processing for controlling the illumination apparatus 23 to start irradiating the target object OBJ with the illumination light. Namely, the preparatory processing may include a processing for controlling the illumination apparatus 23 to start emitting the illumination light.

In a case where the preparatory processing includes the processing for controlling the illumination apparatus 23 as described above, the illumination apparatus 23 starts emitting the illumination light before the robot control apparatus 4 completes the rough movement processing. Here, a certain time is required until the intensity of the illumination light is stable (specifically, until the intensity of the illumination light is constant) after the illumination apparatus 23 starts emitting the illumination light. Therefore, in a case where the intensity of the illumination light is stable before the robot control apparatus 4 completes the rough movement processing, the control apparatus 3 may not wait until the intensity of the illumination light is stable. Alternatively, even in a case where the intensity of the illumination light is not stable before the robot control apparatus 4 completes the rough movement processing, the time required for the intensity of the illumination light to be stable after the robot control apparatus 4 completes the rough movement processing is reduced, compared to a case where the illumination apparatus 23 is not controlled before the robot control apparatus 4 completes the rough movement processing. As a result, a time required for the control apparatus 3 to wait until the intensity of the illumination light is stable after the robot control apparatus 4 completes the rough movement processing is reduced. Therefore, the time required for the control apparatus 3 to start the fine movement processing by using the illumination apparatus 23, which can emit the illumination light whose intensity is stable, after the robot control apparatus 4 completes the rough movement processing (in other words, the time required for the control apparatus 3 to complete the fine movement processing) is reduced.

### (4-1-1-4) Othe Example of Timing for Performing Preparatory Processing

The control apparatus 3 may perform the preparatory processing after the robot control apparatus 4 completes the rough movement processing and before the control apparatus 3 receives the control permission signal transmitted from the robot control apparatus 4. Even in this case, the time required to start the fine movement processing after receiving the control permission signal is reduced, compared to a case where the control apparatus 3 does not perform the preparatory processing before the control apparatus 3 receives the control permission signal.

Moreover, even in a case where the control apparatus 3 performs both the rough movement processing and the fine movement processing, the control apparatus 3 may perform the preparatory processing before the control apparatus 3 completes the rough movement processing. Even in this case, the time required to start the fine movement processing after the control apparatus 3 completes the rough movement processing is reduced, compared to a case where the control apparatus 3 does not perform the preparatory processing before the control apparatus 3 completes the rough movement processing.

Moreover, even in a case where the robot control apparatus 4 does not perform the rough movement processing, the control apparatus 3 may perform the preparatory processing before starting the fine movement processing. Namely, in a case where the control apparatus 3 starts the fine movement processing without performing the rough movement processing by the robot control apparatus 4, the control apparatus 3 may perform the preparatory processing before starting the fine movement processing. Even in this case, the time required to start the fine movement processing after the control apparatus 3 completes the fine movement processing, compared to a case where the control apparatus 3 does not perform the preparatory processing before the control apparatus 3 starts the fine movement processing.

### (4-1-2) Pre-Performance of at least a part of Fine Movement Processing

The control apparatus 3 may perform at least a part of the fine movement processing in advance, in addition to or instead of performing the preparatory processing, before the robot control apparatus 4 completes (namely, terminates) the rough movement processing. The control apparatus 3 may perform at least a part of the fine movement processing in advance, in addition to or instead of performing the preparatory processing, before the control apparatus 3 receives the control permission signal from the robot control apparatus 4. The control apparatus 3 may perform at least a part of the fine movement processing in advance, in addition to or instead of performing the preparatory processing, in a period during which the robot control apparatus 4 performs the rough movement processing. Namely, at least a part of the rough movement processing and at least a part of the fine movement processing may be performed in parallel. As a result, the time required to complete a series of robot control processing including the rough movement processing and the fine movement processing is reduced, compared to a case where the control apparatus 3 does not perform the fine movement processing before the robot control apparatus 4 completes the rough movement processing.

As a first example, the control apparatus 3 may perform, as at least a part of the fine movement processing, the processing for acquiring image data IMG, which is generated by the imaging apparatus 21, from the imaging apparatus 21 before the robot control apparatus 4 completes the rough movement processing. Note that the image data IMG may be regarded as information that is used to move the end effector 5 by the fine movement processing. In this case, the control apparatus 3 may be considered to perform, as at least a part of the fine movement processing, the processing for acquiring the image data IMG, which is generated by the imaging apparatus 21 before the robot control apparatus 4 completes the rough movement processing, from the imaging apparatus 21.

Note that the control apparatus 3 may perform, as at least a part of the fine movement processing, the processing for generating the image data by the imaging apparatus 21 imaging the target object OBJ as at least a part of the fine movement processing before the robot control apparatus 4 completes the rough movement processing in a case where the fine movement processing includes the processing for generating the image data by the imaging apparatus 21 imaging the target object OBJ as described above. Namely, the imaging apparatus 21 may perform, as at least a part of the fine movement processing, the processing for generating the image data by imaging the target object OBJ before the robot control apparatus 4 completes the rough movement processing.

As a second example, the control apparatus 3 may perform, as at least a part of the fine movement processing, the processing for calculating at least one of the position and the pose of the target object OBJ based on the image data IMG before the robot control apparatus 4 completes the rough movement processing. Especially, the control apparatus 3 may perform the processing for calculating at least one of the position and the pose of the target object OBJ based on the image data IMG, which is generated by the imaging apparatus 21 imaging the target object OBJ before the robot control apparatus 4 completes the rough movement processing. Note that the calculated result of at least one of the position and the pose of the target object OBJ may be regarded as information that is used to move the end effector 5 by the fine movement processing. In this case, the control apparatus 3 may be considered to perform, as at least a part of the fine movement processing, a processing for acquiring the calculated result of at least one of the position and the pose of the target object OBJ by calculating at least one of the position and the pose of the target object OBJ before the robot control apparatus 4 completes the rough movement processing.

Here, even before the robot control apparatus 4 completes the rough movement processing, the shorter a time difference between an imaging time at which the imaging apparatus 21 images the target object OBJ and a rough movement completion time at which the robot control apparatus 4 completes the rough movement processing is, the smaller a difference between the position of the target object OBJ at the imaging time and the position of the target object OBJ at the rough movement completion time is. Namely, the closer the imaging time is to the rough movement processing, the smaller the difference between the position of the target object OBJ at the imaging time and the position of the target object OBJ at the rough movement completion time is. Similarly, a difference between the pose of the target object OBJ at the imaging time and the pose of the target object OBJ at the rough movement completion time is smaller. Therefore, even in a case where at least one of the position and the pose of the target object OBJ is calculated before the robot control apparatus 4 completes the rough movement processing, the calculated result of at least one of the position and the pose of the target object OBJ, which is calculated before the robot control apparatus 4 completes the rough movement processing, may be considered to indicate at least one of the position and the pose of the target object OBJ at the rough movement completion time with a certain accuracy in a case where the time difference between the imaging time and the rough movement completion time is shorter than a predetermined time threshold value. Therefore, in a case where the time difference between the imaging time and the rough movement completion time is shorter than the predetermined time threshold value, the control apparatus 3 may calculate at least one of the position and the pose of the target object OBJ based on the image data IMG, which is generated by the imaging apparatus 21 imaging the target object OBJ before the robot control apparatus 4 completes the rough movement processing. For the same reason, in a case where the time difference between the imaging time and the rough movement completion time is shorter than the predetermined time threshold value, the control apparatus 3 may acquire the image data IMG from the imaging apparatus 21 before the robot control apparatus 4 completes the rough movement processing. Moreover, in a case where the time difference between the imaging time and the rough movement completion time is shorter than the predetermined time threshold value, the imaging apparatus 21 may image the target object OBJ to generate the image data IMG at the imaging time, whose time difference relative to the rough movement completion time is shorter than the predetermined time threshold value, before the robot control apparatus 4 completes the rough movement processing.

Moreover, in a case where the target object OBJ is stationary, the position and the pose of the target object OBJ at the imaging time should be the same as the position and the pose of the target object OBJ at the rough movement completion time, respectively. Therefore, in a case where the target object OBJ is stationary, the control apparatus 3 may calculate at least one of the position and the pose of the target object OBJ based on the image data IMG, which is generated by the imaging apparatus 21 imaging the target object OBJ before the robot control apparatus 4 completes the rough movement processing.

Alternatively, in a case where a distance by which the target object OBJ moves in a period from a timing at which the imaging apparatus 21 images the target object OBJ and a timing at which the rough movement processing is completed is shorter than a predetermined distance threshold value, the calculated result of at least one of the position and the pose of the target object OBJ, which is calculated before the robot control apparatus 4 completes the rough movement processing, may be considered to indicate at least one of the position and the pose of the target object OBJ at the rough movement completion time with a certain accuracy. Therefore, in a case where the distance by which the target object OBJ moves in the period from the timing at which the imaging apparatus 21 images the target object OBJ and the timing at which the rough movement processing is completed is shorter than the predetermined distance threshold value, the control apparatus 3 may calculate at least one of the position and the pose of the target object OBJ based on the image data IMG, which is generated by the imaging apparatus 21 imaging the target object OBJ before the robot control apparatus 4 completes the rough movement processing.

As a third example, the control apparatus 3 may perform the processing for generating the control signal, which is for controlling the robot 1 to move the end effector 5 after the rough movement processing is completed, based on the calculated result of at least one of the position and the pose of the target object OBJ before the robot control apparatus 4 completes the rough movement processing, for example.

Note that the calculated result of at least one of the position and the pose of the target object OBJ, which is calculated before the robot control apparatus 4 completes the rough movement processing, may be considered to indicate at least one of the position and the pose of the target object OBJ at the rough movement completion time with a certain accuracy in a case where the time difference between the imaging time and the rough movement completion time is shorter than the predetermined time threshold value, as described above. In this case, the control apparatus 3 may perform the processing for generating the control signal, which is for controlling the robot 1 to move the end effector 5 after the rough movement processing is completed, before the robot control apparatus 4 completes the rough movement processing, in a case where the time difference between the imaging time and the rough movement completion time is shorter than the predetermined time threshold value.

The control apparatus 3 may output the control signal, which is generated by the control apparatus 3 before the robot control apparatus 4 completes the rough movement processing, to the robot 1 or the robot control apparatus 4 after the robot control apparatus 4 completes the rough movement processing. In this case, the robot 1 may move the end effector 5 based on the control signal, which is generated by the control apparatus 3 before the robot control apparatus 4 completes the rough movement processing, after the robot control apparatus 4 completes the rough movement processing.

Alternatively, the control apparatus 3 may output the control signal, which is generated by the control apparatus 3 before the robot control apparatus 4 completes the rough movement processing, to the robot 1 or the robot control apparatus 4 before the robot control apparatus 4 completes the rough movement processing. In this case, the robot 1 may move the end effector 5 based on the control signal, which is generated by the control apparatus 3 before the robot control apparatus 4 completes the rough movement processing, before the robot control apparatus 4 completes the rough movement processing. Namely, the control apparatus 3 may move the end effector 5 by performing the fine movement processing in a period during which the robot control apparatus 4 moves the end effector 5 by performing the rough movement processing.

However, there is a possibility that the processing for actually moving the end effector 5 by the robot control apparatus 4 performing the rough movement processing conflicts with the processing for actually moving the end effector 5 by the control apparatus 3 performing the fine movement processing. In this case, the control apparatus 3 may output the control signal, which is generated by the control apparatus 3 before the robot control apparatus 4 completes the rough movement processing, to the robot 1 or the robot control apparatus 4 after the robot control apparatus 4 completes the rough movement processing and before the control apparatus 3 receives the control permission signal transmitted from the robot control apparatus 4. In this case, the robot 1 may move the end effector 5 based on the control signal, which is generated by the control apparatus 3 before the robot control apparatus 4 completes the rough movement processing, after the robot control apparatus 4 completes the rough movement processing and before the control apparatus 3 receives the control permission signal transmitted from the robot control apparatus 4. As a result, there is no possibility that the processing for actually moving the end effector 5 by the robot control apparatus 4 performing the rough movement processing conflicts with the processing for actually moving the end effector 5 by the control apparatus 3 performing the fine movement processing.

Note that the control apparatus 3 may perform at least a part of the fine movement processing after the robot control apparatus 4 completes the rough movement processing and before receiving the control permission signal transmitted from the robot control apparatus 4. Even in this case, the time required to complete a series of robot control processing including the rough movement processing and the fine movement processing is reduced, compared to the case where the control apparatus 3 does not perform the fine movement processing before the control apparatus 3 receives the control permission signal.

In addition, even before the robot control apparatus 4 completes the rough movement processing, the robot control apparatus 4 may transmit the control permission signal to the control apparatus 3 in a case where the rough movement processing will be completed within a certain time. In this case, even before the robot control apparatus 4 completes the rough movement processing, the control apparatus 3 may receive the control permission signal. As a result, the control apparatus 3 may perform at least a part of the fine movement processing in response to a reception of the control permission signal. Even in this case, the control apparatus 3 can start the fine movement processing at an earlier timing, compared to a case where the robot control apparatus 4 does not transmit the control permission signal to the control apparatus 3 before the robot control apparatus 4 completes the rough movement processing (namely, the control apparatus 3 does not receive the control permission signal before the robot control apparatus 4 completes the rough movement processing). As a result, the time required to complete a series of robot control processing including the rough movement processing and the fine movement processing is reduced.

Moreover, even in a case where the control apparatus 3 performs both the rough movement processing and the fine movement processing, the control apparatus 3 may perform at least a part of the fine movement processing before the control apparatus 3 completes the rough movement processing. Even in this case, the time required to complete a series of robot control processes including the rough movement processing and the fine movement processing is reduced, compared to a case where the control apparatus 3 does not perform the fine movement processing before the control apparatus 3 completes the rough movement processing.

### (4-2) Second Modified Example

In a second modified example, the control apparatus 3 may generate the control signal that is used for the fine movement processing performed after the rough movement processing based on the control signal generated by the fine movement processing performed before the rough movement processing in a case where the robot control processing that alternately repeats the rough movement processing and the fine movement processing is performed As described above. In the below-described description, an example of a generation method of the control signal in the second modified example will be described while referring to an example of the robot control processing that alternately repeats the rough movement processing and the fine movement processing.

### (4-2-1) First Example of Generation Method of Control Signal in Second Modified Example

The robot control processing that is performed in a case where the end effector 5 performs the predetermined process on the plurality of target parts of the target object OBJ in sequence as described above is a first example of the robot control processing that alternately repeats the rough movement processing and the fine movement processing. For example, the robot control processing that is performed in a case where the end effector 5 performs the predetermined process on a first target part (for example, the target part in which the hole HL#1 illustrated in FIG. 5 and FIG. 6 is formed) of the target object OBJ and a second target part (for example, the target part in which the hole HL#2 illustrated in FIG. 5 and FIG. 6 is formed) of the target object OBJ that is different from the first target part in sequence is the first example of the robot control processing that alternately repeats the rough movement processing and the fine movement processing.

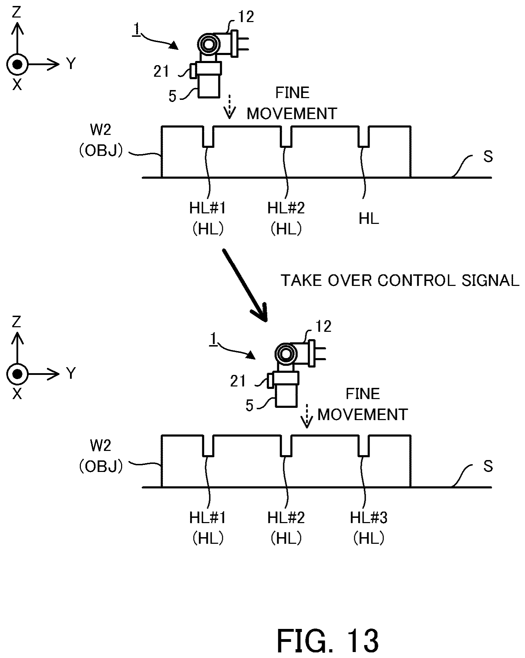

In the below-described description, the first example of the generation method of the control signal in the second modified example will be described by using the first example of the robot control processing that is performed in a case where the end effector 5 performs the predetermined process on a first target part TP#1 (specifically, the part in which the hole HL#1 is formed) of the target object OBJ (a workpiece W2) and a second target part TP#2 (specifically, the part in which the hole HL#2 is formed) of the target object OBJ that is different from the first target part TP#1 in sequence as illustrated in FIG. 13.

In this case, as already described above, the robot control apparatus 4 performs the rough movement processing for the first target part TP#1, then, the control apparatus 3 performs the fine movement processing for the first target part TP#1 as illustrated in a first upper part in FIG. 13, then the robot control apparatus 4 performs the rough movement processing for the second target part TP#2, and then the control apparatus 3 performs the fine movement processing for the second target part TP#2 as illustrated in a second upper part in FIG. 13. In this case, in the second modified example, the control apparatus 3 may generate the control signal, which is used in the fine movement processing for the second target part TP#2, based on the control signal generated by the fine movement processing for the first target part TP#1. Namely, the control apparatus 3 may perform a processing for generating a control signal based on the control signal generated by the fine movement processing for the first target part TP#1 as at least a part of the fine movement processing for the second target part TP#2. The fine movement processing for the second target part TP#2 may include the processing for generating the control signal based on the control signal generated by the fine movement processing for the first target part TP#1.

Specifically, the control apparatus 3 performs the fine movement processing for the first target part TP#1 in a first period from a timing at which the rough movement processing for the first target part TP#1 is completed to a timing at which the rough movement processing for the second target part TP#2 is started. Furthermore, the control apparatus 3 performs the fine movement processing for the second target part TP#2 in a second period after the rough movement processing for the second target part TP#2 is completed. In this case, the control apparatus 3 may generate the control signal in the second period based on the control signal generated in the first period. The control apparatus 3 may generate the control signal, which is used to control the robot 1 in the second period, based on the control signal generated in the first period.

Especially, the control apparatus 3 may generate the control signal, which is generated first in the second period, based on the control signal generated last in the first period. For example, an example in which the control apparatus 3 generates N1 (wherein, N1 is a variable number representing an integer that is equal to or larger than 2) control signals in the first period by repeating the fine movement processing for the first target part TP#1 N1 times, and generates N2 (wherein, N2 is a variable number representing an integer that is equal to or larger than 2) control signals in the second period by repeating the fine movement processing for the second target part TP#2 N2 times will be described. Note that the N1 control signals generated in the first period are referred to as a control signal #1[1] to a control signal #1[N1], respectively, in the below-described description. The control signal #1[i] (wherein i is a variable number representing an integer that is equal to or larger than 1 and that is equal to or smaller than N1) represents the control signal generated by the i-th fine movement processing performed on the first target part TP#1. Similarly, N2 control signals generated in the second period are referred to as a control signal #2[1] to a control signal #2[N2], respectively, in the below-described description. The control signal #2[j] (wherein j is a variable number representing an integer that is equal to or larger than 1 and that is equal to or smaller than N2) represents the control signal generated by the j-th fine movement processing performed on the second target part TP#2. In this case, the control apparatus 3 may generate the control signal #2[1] based on the control signal #1[N1].

In a case where the control signal #2[1] is generated based on the control signal #1[N1] in this manner, a time required to satisfy the convergence condition after the fine movement processing for the second target part TP#2 is started is reduced, compared to a case where the control signal #2[1] is generated without using the control signal #1[N1]. The reason for this will be described here. First, the control signal #1[N1] is the latest control signal that has been generated at a timing at which it is determined that the convergence condition is satisfied in the first period during which the fine movement processing for the first target part TP#1 is performed. Therefore, it can be said that generating the control signal #2[1] based on the control signal #1[N1] is substantially equivalent to reflecting, in the control signal #2[1], a controlled state (for example, a motion) of the robot 1 at the timing at which it is determined that the convergence condition is satisfied. As a result, in a case where robot 1 is controlled by using the control signal #2[1] generated based on the control signal #1[N1], a motion that is necessary to satisfy the convergence condition is reflected in the robot 1. As a result, in a case where the robot 1 is controlled by using the control signal #2[1] generated based on the control signal #1[N1], the time required to satisfy the convergence condition is reduced, compared to a case where the robot 1 is controlled by using the control signal #2[1] generated without using the control signal #1[N1].

An effect of reducing the time required to satisfy the convergence condition is especially pronounced in a case where the target object OBJ moves. The reason for this will be described here. The control signal #1[N1] is the latest control signal that has been generated at the timing at which it is determined that the convergence condition is satisfied in the first period during which the fine movement processing for the first target part TP#1 that moves due to the movement of the target object OBJ is performed. Therefore, it can be said that generating the control signal #2[1] based on the control signal #1[N1] is substantially equivalent to reflecting, in the control signal #2[1], the controlled state (for example, the motion) of the robot 1 for making the end effector follow the moving target object OBJ. Namely, it can be said that generating the control signal #2[1] based on the control signal #1[N1] is substantially equivalent to reflecting, in the control signal #2[1], the controlled state (for example, the motion) of the robot 1 and a movement aspect of the target object OBJ at the timing at which it is determined that the convergence condition is satisfied. As a result, in a case where the robot 1 is controlled by using the control signal #2[1] generated based on the control signal #1[N1], a motion that is necessary for the end effector 5 to follow the moving target object OBJ is reflected in the robot 1. As a result, in a case where the robot 1 is controlled by using the control signal #2[1] generated based on the control signal #1[N1], a time required for the end effector 5 to follow the target object OBJ is reduced, and as a result, the time required to satisfy the convergence condition is satisfied is reduced, compared to a case where the robot 1 is controlled by using the control signal #2[1] generated without using the control signal #1[N1].

The control apparatus 3 may generate the control signal #2[j], which is used to control the robot 1 in the j-th fine movement processing, by adding a correction term, which is based on a difference component U that indicates a difference between the actual position of the end effector 5 and the target process position and that indicates a difference between the actual pose of the end effector 5 and the target process pose, to the control signal #2[j-1] generated by the (j-1)-th fine movement processing. Note that the correction term may include a term that is calculated based on the difference component U and a proportional gain Kp in a case where the fine movement processing is the processing that includes the feedback control including the P control, the PI control, or the PID control as described above. The correction term may include a term that is calculated based on the difference component U and an integral gain Kdi in a case where the fine movement processing is the processing that includes the feedback control including the PI control or the PID control as described above. The correction term may include a term that is calculated based on the difference component U and a derivative gain Kd in a case where the fine movement processing is the processing that includes the feedback control including the PID control as described above. Here, in a case where j = 1, the control signal #2[0], which is used to generate the control signal #2[1], is not actually generated by the fine movement processing. In this case, the control apparatus 3 may use a default initial signal, which is set in advance as an initial value of the control signal #2[j] as the control signal #2[0]. In this case, the control apparatus 3 may generate the control signal #2[1] by using the control signal #1[N1] as the control signal #2[0] (namely, as the initial signal). Namely, generating the control signal #2[1] based on the control signal #1[N1] may include generating the control signal #2[1] by using the control signal #1[N1] as the control signal #2[0] that is the initial signal.

Note that the control apparatus 3 generates the control signal #2[1], which is generated first in the second period, based on the control signal #1[N1] generated last in the first period in the above-described description. However, the control apparatus 3 may generate the control signal #2[j] at any second time in the second period based on the control signal #1[i] generated at any first time in the first period. The control apparatus 3 may generate the control signal #2[j], which is used to control the robot 1 at any second time in the second period, based on the control signal #1[i] generated at any first time in the first period. For example, the control apparatus 3 may generate the control signal #2[j] by using the control signal #1[i] as the control signal #2[j-1] to which the correction term is added to generate the control signal #2[j]. Even in this case, the motion of the robot 1 by the fine movement processing for the first target part TP#1 is reflected in the control signal #2[j] that is used to control the robot 1 by the fine movement processing for the second target part TP#2. In a case where the target object OBJ moves, the movement aspect of the first target part TP#1 (namely, the movement aspect of the target object OBJ) and the motion of the robot 1 are reflected in the control signal #2[j] that is used to control the robot 1 by the fine movement processing for the second target part TP#2. Therefore, the time required to satisfy the convergence condition is reduced, compared to a case where the robot 1 is controlled by using control signal #2[j] generated without using the control signal #1[i].

However, it is more likely that the motion of the robot 1 that is necessary to satisfy the convergence condition by the fine movement processing for the first target part TP#1 is reflected in the control signal #2[j] as a timing at which the control signal #1[i] is generated is closer to an end of the first period (namely, the variable number i is larger). Therefore, the control apparatus 3 may generate the control signal #2[j] based on the control signal #1[i] satisfying a condition that the motion of the robot 1 that is necessary to satisfy the convergence condition by the fine movement processing for the first target part TP#1 is properly reflected in the control signal #2[j]. As one example, the control apparatus 3 may generate the control signal #2[j] based on the control signal #1[N1-1]. As another example, the control apparatus 3 may generate the control signal #2[j] based on the control signal #1[N1-2].

Furthermore, the time required to satisfy the convergence condition after starting the fine movement processing for the second target part TP#2 is shorter as a timing at which the control signal #2[j] is generated is closer to a start of the second period (namely, the variable number j is smaller). This is because a timing at which the motion of the robot 1, which is necessary to satisfy the convergence condition by the fine movement processing for the first target part TP#1, is reflected in the control signal #2[j] is earlier the timing at which the control signal #2[j] is generated is closer to the start of the second period. Therefore, the control apparatus 3 may generate, based on the control signal #1[i], the control signal #2[j] satisfying a condition that the time required satisfy the convergence condition after starting the fine movement processing for the second target part TP#2 is short to some extent. As one example, the control apparatus 3 may generate the control signal #2[2] based on the control signal #1[i]. As another example, the control apparatus 3 may generate the control signal #2[3] based on the control signal #1[i].

Moreover, in the above-described description, the control apparatus 3 generates the control signal #2[j] in the second period based on the single control signal #1[i] generated in the first period. However, the control apparatus 3 may generate the control signal #2[j] in the second period based on a plurality of control signal #1[i] generated in the first period. For example, the control apparatus 3 may generate the control signal #2[j] in the second period based on an average value of the plurality of control signal #1[i] generated in the first period.

Note that the control apparatus 3 may generate the control signal, which is used in the fine movement processing for the second target part TP#2, based on the control signal generated by the fine movement processing for the first target part TP#1, even in a case where the robot control apparatus 4 does not perform the rough movement processing. For example, even in a case where the control apparatus 3 performs the fine movement processing for the first target part TP#1 and then the control apparatus 3 performs the fine movement processing for the second target part TP#2 while the robot control apparatus 4 does not perform the rough movement processing for the second target part TP#2, the control apparatus 3 may generate the control signal, which is used in the fine movement processing for the second target part TP#2, based on the control signal generated by the fine movement processing for the first target part TP#1.

### (4-2-2) Second Example of Generation Method of Control Signal in Second Modified Example

The robot control processing that is performed in the case where the end effector 5 performs the predetermined process on the plurality of target objects OBJ in sequence as described above is a second example of the robot control processing that alternately repeats the rough movement processing and the fine movement processing. For example, the robot control processing that is performed in a case where the end effector 5 performs the predetermined process on a first target object OBJ and a second target object OBJ that is different from the first target object OBJ in sequence will be described as the second example of the robot control processing that alternately repeats the rough movement processing and the fine movement processing.

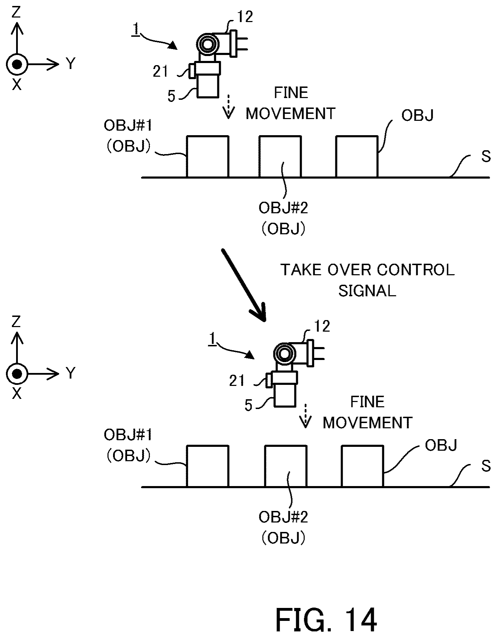

In the below-described description, the second example of the generation method of the control signal in the second modified example will be described by using the second example of the robot control processing that is performed in a case where the end effector 5 performs the predetermined process on a first target object OBJ#1 and a second target OBJ#2 that is different from the first target object OBJ#1 in sequence as illustrated in FIG. 14.

In this case, as already described above, the robot control apparatus 4 performs the rough movement processing for the first target object#1, then, the control apparatus 3 performs the fine movement processing for the first target object#1 as illustrated in a first upper part in FIG. 14, then the robot control apparatus 4 performs the rough movement processing for the second target object OBJ#2, and then the control apparatus 3 performs the fine movement processing for the second target object OBJ#2 as illustrated in a second upper part in FIG. 14. In this case, in the second modified example, the control apparatus 3 may generate the control signal, which is used in the fine movement processing for the second target object OBJ#2, based on the control signal generated by the fine movement processing for the first target object#1. Namely, the control apparatus 3 may perform a processing for generating a control signal based on the control signal generated by the fine movement processing for the first target object#1 as at least a part of the fine movement processing for the second target object OBJ#2. The fine movement processing for the second target object OBJ#2 may include the processing for generating the control signal based on the control signal generated by the fine movement processing for the first target object#1.

Specifically, the control apparatus 3 performs the fine movement processing for the first target object#1 in a third period from a timing at which the rough movement processing for the first target object#1 is completed to a timing at which the rough movement processing for the second target object OBJ#2 is started. Furthermore, the control apparatus 3 performs the fine movement processing for the second target object OBJ#2 in a fourth period after the rough movement processing for the second target object OBJ#2 is completed. In this case, the control apparatus 3 may generate the control signal in the fourth period based on the control signal generated in the third period. The control apparatus 3 may generate the control signal, which is used to control the robot 1 in the fourth period, based on the control signal generated in the third period.

Especially, the control apparatus 3 may generate the control signal, which is generated first in the fourth period, based on the control signal generated last in the third period. For example, an example in which the control apparatus 3 generates N3 (wherein, N3 is a variable number representing an integer that is equal to or larger than 2) control signals in the third period by repeating the fine movement processing for the first target object#1 N3 times, and generates N4 (wherein, N4 is a variable number representing an integer that is equal to or larger than 2) control signals in the fourth period by repeating the fine movement processing for the second target object OBJ#2 N4 times will be described. Note that the N3 control signals generated in the third period are referred to as a control signal #3[1] to a control signal #3[N3], respectively, in the below-described description. The control signal #3[m] (wherein m is a variable number representing an integer that is equal to or larger than 1 and that is equal to or smaller than N3) represents the control signal generated by the m-th fine movement processing performed on the first target object#1. Similarly, N4 control signals generated in the fourth period are referred to as a control signal #4[1] to a control signal #4[N4], respectively, in the below-described description. The control signal #4[n] (wherein n is a variable number representing an integer that is equal to or larger than 1 and that is equal to or smaller than N4) represents the control signal generated by the n-th fine movement processing performed on the second target object OBJ#2. In this case, the control apparatus 3 may generate the control signal #4[1] based on the control signal #3[N3].

In a case where the control signal #4[1] is generated based on the control signal #3[N3] in this manner, a time required to satisfy the convergence condition after the fine movement processing for the second target object OBJ#2 is started is reduced, compared to a case where the control signal #4[1] is generated without using the control signal #3[N3]. The reason for this will be described here. First, the control signal #3[N3] is the latest control signal that has been generated at a timing at which it is determined that the convergence condition is satisfied in the third period during which the fine movement processing for the first target object#1 is performed. Therefore, it can be said that generating the control signal #4[1] based on the control signal #3[N3] is substantially equivalent to reflecting, in the control signal #2[1], a controlled state (for example, a motion) of the robot 1 at the timing at which it is determined that the convergence condition is satisfied. As a result, in a case where robot 1 is controlled by using the control signal #4[1] generated based on the control signal #3[N3], a motion that is necessary to satisfy the convergence condition is reflected in the robot 1. As a result, in a case where the robot 1 is controlled by using the control signal #4[1] generated based on the control signal #3[N3], the time required to satisfy the convergence condition is reduced, compared to a case where the robot 1 is controlled by using the control signal #4[1] generated without using the control signal #3[N3].

An effect of reducing the time required to satisfy the convergence condition is especially pronounced in a case where the first target object OBJ#1 and the target object OBJ#2 move. Especially, the effect of reducing the time required to satisfy the convergence condition is especially pronounced in a case where the first target object OBJ#1 and the target object OBJ#2 move in the same movement aspect. The reason for this will be described here. The control signal #3[N3] is the latest control signal that has been generated at the timing at which it is determined that the convergence condition is satisfied in the third period during which the fine movement processing for the moving first target object#1 is performed. Therefore, it can be said that generating the control signal #4[1] based on the control signal #3[N3] is substantially equivalent to reflecting, in the control signal #4[1], the controlled state (for example, the motion) of the robot 1 for making the end effector follow the moving first target object OBJ#1. Namely, it can be said that generating the control signal #4[1] based on the control signal #3[N3] is substantially equivalent to reflecting, in the control signal #4[1], the controlled state (for example, the motion) of the robot 1 and a movement aspect of the first target object OBJ#1 at the timing at which it is determined that the convergence condition is satisfied. Especially, in a case where the first target object OBJ#1 and the target object OBJ#2 move in the same movement aspect, it can be said that generating the control signal #4[1] based on the control signal #3[N3] is substantially equivalent to reflecting, in the control signal #4[1], the controlled state (for example, the motion) of the robot 1 and a movement aspect of the second target object OBJ#2 at the timing at which it is determined that the convergence condition is satisfied. As a result, in a case where the robot 1 is controlled by using the control signal #4[1] generated based on the control signal #3[N3], a motion that is necessary for the end effector 5 to follow the moving second target object OBJ#2 is reflected in the robot 1. As a result, in a case where the robot 1 is controlled by using the control signal #4[1] generated based on the control signal #3[N3], a time required for the end effector 5 to follow the second target object OBJ#2 is reduced, and as a result, the time required to satisfy the convergence condition is satisfied is reduced, compared to a case where the robot 1 is controlled by using the control signal #4[1] generated without using the control signal #3[N3].

The control apparatus 3 may generate the control signal #4[n], which is used to control the robot 1 in the n-th fine movement processing, by adding a correction term, which is based on a difference component U that indicates a difference between the actual position of the end effector 5 and the target process position and that indicates a difference between the actual pose of the end effector 5 and the target process pose, to the control signal #4[n-1] generated by the (n-1)-th fine movement processing. Note that the correction term may include a term that is calculated based on the difference component U and the proportional gain Kp in a case where the fine movement processing is the processing that includes the feedback control including the P control, the PI control, or the PID control as described above. The correction term may include a term that is calculated based on the difference component U and the integral gain Kdi in a case where the fine movement processing is the processing that includes the feedback control including the PI control or the PID control as described above. The correction term may include a term that is calculated based on the difference component U and the derivative gain Kd in a case where the fine movement processing is the processing that includes the feedback control including the PID control as described above. Here, in a case where n = 1, the control signal #4[0], which is used to generate the control signal #4[1], is not actually generated by the fine movement processing. In this case, the control apparatus 3 may use a default initial signal, which is set in advance as an initial value of the control signal #4[n] as the control signal #4[0]. In this case, the control apparatus 3 may generate the control signal #4[1] by using the control signal #3[N3] as the control signal #4[0] (namely, as the initial signal). Namely, generating the control signal #4[1] based on the control signal #3 [N3] may include generating the control signal #4[1] by using the control signal #3[N3] as the control signal #4[0] that is the initial signal.

Note that the control apparatus 3 generates the control signal #4[1], which is generated first in the fourth period, based on the control signal #3[N3] generated last in the third period in the above-described description. However, the control apparatus 3 may generate the control signal #4[n] at any fourth time in the fourth period based on the control signal #3[m] generated at any third time in the third period. The control apparatus 3 may generate the control signal #4[n], which is used to control the robot 1 at any fourth time in the fourth period, based on the control signal #3[m] generated at any third time in the third period. For example, the control apparatus 3 may generate the control signal #4[n] by using the control signal #3[m] as the control signal #4[n-1] to which the correction term is added to generate the control signal #4[n]. Even in this case, the motion of the robot 1 by the fine movement processing for the first target object OBJ#1 is reflected in the control signal #4[n] that is used to control the robot 1 by the fine movement processing for the second target object OBJ#2. Therefore, the time required to satisfy the convergence condition is reduced, compared to a case where the robot 1 is controlled by using control signal #4[n] generated without using the control signal #3[m].

However, it is more likely that the motion of the robot 1 that is necessary to satisfy the convergence condition by the fine movement processing for the first target object OBJ#1 is reflected in the control signal #4[n] as a timing at which the control signal #3[m] is generated is closer to an end of the third period (namely, the variable number m is larger). Therefore, the control apparatus 3 may generate the control signal #4[n] based on the control signal #3[m] satisfying a condition that the motion of the robot 1 that is necessary to satisfy the convergence condition by the fine movement processing for the first target object OBJ#1 is properly reflected in the control signal #4[n]. As one example, the control apparatus 3 may generate the control signal #4[n] based on the control signal #3[N3-1]. As another example, the control apparatus 3 may generate the control signal #4[n] based on the control signal #3[N3-2].

Furthermore, the time required to satisfy the convergence condition after starting the fine movement processing for the second target object OBJ#2 is shorter as a timing at which the control signal #4[n] is generated is closer to a start of the fourth period (namely, the variable number n is smaller). This is because a timing at which the motion of the robot 1, which is necessary to satisfy the convergence condition by the fine movement processing for the first target object OBJ#1 is reflected in the control signal #4[n] is earlier the timing at which the control signal #4[n] is generated is closer to the start of the fourth period. Therefore, the control apparatus 3 may generate, based on the control signal #3[m], the control signal #4[n] satisfying a condition that the time required satisfy the convergence condition after starting the fine movement processing for the second target object OBJ#2 is short to some extent. As one example, the control apparatus 3 may generate the control signal #4[2] based on the control signal #3[m]. As another example, the control apparatus 3 may generate the control signal #4[3] based on the control signal #3[m].

Moreover, in the above-described description, the control apparatus 3 generates the control signal #4[n] in the fourth period based on the single control signal #3[m] generated in the third period. However, the control apparatus 3 may generate the control signal #4[n] in the fourth period based on a plurality of control signal #3[m] generated in the third period. For example, the control apparatus 3 may generate the control signal #4[n] in the fourth period based on an average value of the plurality of control signal #3[m] generated in the third period.

Note that the control apparatus 3 may generate the control signal, which is used in the fine movement processing for the second target object OBJ#2, based on the control signal generated by the fine movement processing for the first target object OBJ#1, even in a case where the robot control apparatus 4 does not perform the rough movement processing. For example, even in a case where the control apparatus 3 performs the fine movement processing for the first target object OBJ#1 and then the control apparatus 3 performs the fine movement processing for the second target object OBJ#2 while the robot control apparatus 4 does not perform the rough movement processing for the second target object OBJ#2, the control apparatus 3 may generate the control signal, which is used in the fine movement processing for the second target object OBJ#2, based on the control signal generated by the fine movement processing for the first target object OBJ#1.

### (4-3) Third Modified Example

In a third modified example, the control apparatus 3 may use edge model data EMD as the model data MDL in order to perform the above-described matching processing to calculate the position and the pose of the target object OBJ. The edge model data EMD is model data of an edge model EM that is usable for the matching processing, as with the object model OBM. The edge model EM is a model of at least a part of an edge of the target object OBJ. The edge model EM is a model that indicates at least a part of the edge of the target object OBJ. The edge model EM is a model that represents at least a part of the edge of the target object OBJ. The edge model EM may be a model that indicates at least a part of the edge of the target object OBJ but does not indicate a part of the target object OBJ other than the edge. Note that the edge model EM may be a model of at least a part of a contour of the target object OBJ. The edge model EM may be a model that indicates at least a part of the contour of the target object OBJ.

Even in a case where the edge model data EMD is used, the control apparatus 3 (especially, the position pose calculation unit 311) may calculate at least one of the position and the pose of the target object OBJ by performing the matching processing using the image data IMG and the edge model data EMD at the step S322 in FIG. 10. Namely, the control apparatus 3 (especially, the position pose calculation unit 311) may perform, on the image indicated by the image data IMG, the matching processing (in other words, the 2D matching processing, and the template matching processing) using the edge model EM indicated by the edge model data EMD as the template. Note that the matching processing using the image data IMG and the edge model data EMD may be the same as the matching processing using the image data IMG and the model data MDL described above, except that the edge model data EMD is used instead of the model data MDL. Therefore, a detailed description of the matching processing using the image data IMG and the edge model data EMD is omitted.

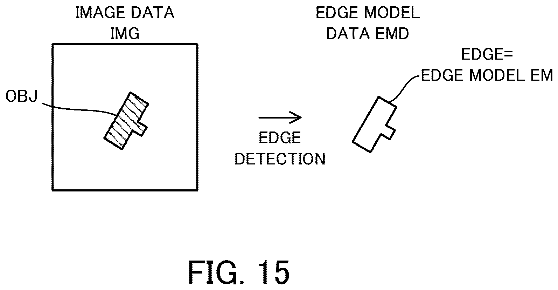

The edge model data EMD may be generated by a method described below. First, the imaging apparatus 21 (alternatively, an imaging apparatus that is different from the imaging apparatus 21, the same applies in this paragraph) may image the target object OBJ in advance before the fine movement processing is started. Here, the target object OBJ imaged in advance may be a standard or good target object OBJ. As a result, as illustrated in FIG. 15, the imaging apparatus 21 generates the image data IMG indicating the image in which the target object OBJ is captured. Then, as illustrated in FIG. 15, the control apparatus 3 (alternatively, a model generation apparatus that is different from the control apparatus 3, the same applies in this paragraph) may detect (in other words, extract) the edge of the target object OBJ captured in the image data IMG. For example, the control apparatus 3 may detect, as the edge of the target object OBJ, a set of pixels, at which a changed amount of a pixel value (for example, a brightness value) is larger than a predetermined edge threshold value, of plurality of pixels constituting the image indicated by the image data IMG. Then, as illustrated in FIG. 15, the control apparatus 3 may generate the edge model data EMD by generating a model of the extracted edges as the edge model EM. Namely, the control apparatus 3 may generate the edge model data EMD indicating the extracted edge.

Alternatively, the imaging apparatus 21 (alternatively, an imaging apparatus that is different from the imaging apparatus 21, the same applies in this paragraph) may image a sample object whose shape is the same as that of the target object OBJ in addition to or instead of the target object OBJ in advance before the fine movement processing is started. As a result, as illustrated in FIG. 15, the imaging apparatus 21 generates the image data IMG indicating the image in which the sample object is captured. Then, as illustrated in FIG. 15, the control apparatus 3 (alternatively, a model generation apparatus that is different from the control apparatus 3, the same applies in this paragraph) may detect (in other words, extract) an edge of the sample object captured in the image data IMG. For example, the control apparatus 3 may detect, as the edge of the sample object, a set of pixels, at which a changed amount of a pixel value (for example, a brightness value) is larger than a predetermined edge threshold value, of plurality of pixels constituting the image indicated by the image data IMG. Then, as illustrated in FIG. 15, the control apparatus 3 may generate the edge model data EMD by generating a model of the extracted edges as the edge model EM. Namely, the control apparatus 3 may generate the edge model data EMD indicating the extracted edge.

Alternatively, the control apparatus 3 (alternatively, a model generation apparatus that is different from the control apparatus 3, the same applies in this paragraph) may detect an edge of a two-dimensional model of the target object OBJ, which is generated by virtually projecting the CAD model (alternatively, any three-dimensional model) of the target object OBJ from a certain direction onto a virtual plane orthogonal to that direction, and generate the edge model data EMD indicating the detected edge.

Here, the edge model EM selectively indicate the edges of the target object OBJ, while the object model OBM indicates the edge of the target object OBJ in addition to or instead of the part of the target object OBJ other than the edge. Therefore, a data size of the edge model data EMD indicating the edge model EM is smaller than a data size of the model data MDL indicating the object model OBM. Therefore, in a case where the matching processing using the edge model data EMD (namely, the model data MDL indicating the edge model EM) is performed, a time required to complete the matching processing is shorter, compared to a case where the matching processing using the model data MDL indicating the above-described object model OBM is performed. On the other hand, in a case where the matching processing using the model data MDL indicating the object model OBM described above is performed, a detection accuracy of the target object OBJ (namely, the calculation accuracy of at least one of the position and the pose of the target object OBJ) is higher, compared to a case where the matching processing using edge model data EMD (namely, the model data MDL indicating the edge model EM) is performed.

The control apparatus 3 (alternatively, a model generation apparatus that is different from the control apparatus 3, the same applies in this paragraph) may generate the edge model data EMD indicating all edge detected (extracted) from the image data.

Alternatively, the control apparatus 3 may generate the edge model data EMD selectively indicating a part of the edge detected (extracted) from the image data. For example, the control apparatus 3 may select, from the edge detected from the image data, at least a part of the edge that is effectively usable to detect the target object OBJ by the matching processing, and generate the edge model data EMD indicating the selected edge. As one example, the control apparatus 3 may select, from the edge detected from the image data, at least a part of the edge whose contrast is high and easy to be recognized, and generate the edge model data EMD indicating the selected edge. As another example, the control apparatus 3 may select, from the edge detected from the image data, at least a part of the edge that is in focus, and generate the edge model data EMD indicating the selected edge. As another example, the control apparatus 3 may select, from the edge detected from the image data, at least a part of the edge specified by the user, and generate the edge model data EMD indicating the selected edges In a case where the edge model data EMD selectively indicating a part of the detected (extracted) edge in this manner is used for the matching processing, the control apparatus 3 can detect the target object OBJ with high accuracy by performing the fine movement processing (especially, matching processing), compared to a case where the edge model data EMD indicating all of the detected (extracted) edge is used for the matching processing. This is because the target object OBJ is detected by using at least a part of the edge that is effectively usable to detect the target object OBJ by the matching processing. In other words, this is because the target object OBJ is detected without using at least other part of edge that may not effectively be usable to detect the target object OBJ by the matching processing. As a result, it is less likely that the control apparatus 3 mistakenly detects an object, which should not be detected as the target object OBJ, as the target object OBJ by performing the fine movement processing (especially, the matching processing).

Note that the control apparatus 3 may use the edge model data EMD as the model data MDL in order to perform the above-described matching processing to calculate the position and the pose of the target object OBJ even in a case where the robot control apparatus 4 does not perform the rough movement processing. Namely, in a case where the control apparatus 3 starts the fine movement processing while the robot control apparatus 4 does not perform the rough movement processing, the control apparatus 3 may use the edge model data EMD as the model data MDL in order to perform the matching processing to calculate the position and the pose of the target object OBJ.

### (4-4) Fourth Modified Example

In a fourth modified example, the control apparatus 3 (especially, the position pose calculation unit 311) may calculate not only at least one of the position and the pose of the target object OBJ but also at least one of a position and a pose of the end effector 5 by performing the matching processing at the step S322 in FIG. 10. Namely, the control apparatus 3 may generate the position pose information POI indicating not only at least one of the position and the pose of the target object OBJ and at least one of the position and the pose of the end effector 5.

The control apparatus 3 may calculate, as the position of the end effector 5, at least one of a position of the end effector 5 in the X-axis direction parallel to the X-axis in the global coordinate system, a position of the end effector 5 in the Y-axis direction parallel to the Y-axis in the global coordinate system, a position of the end effector 5 in the Z-axis direction parallel to the Z-axis in the global coordinate system. The control apparatus 3 may calculate, as the pose of the end effector 5, at least one of a rotational amount (a pose) of the end effector 5 around the X-axis in the global coordinate system, a rotational amount (a pose) of the end effector 5 around the Y-axis in the global coordinate system, and a rotational amount (a pose) of the end effector 5 around the Z-axis in the global coordinate system.

In a case where at least one of the position and the pose of the end effector 5 is calculated in addition to at least one of the position and the pose of the target object OBJ, the imaging apparatus 21 may image the end effector 5 in addition to the target object OBJ. Namely, not only the target object OBJ but also the end effector 5 may be included in the imaging field of view of the imaging apparatus 21. For example, not only the target object OBJ but also the end effector 5 may be included in the imaging field of view of the imaging apparatus 21 at a timing at which the rough movement processing is completed.

In a case where at least one of the position and the pose of the end effector 5 is calculated in addition to at least one of the position and the pose of the target object OBJ, the control apparatus 3(especially, the signal generation unit 312) may generate the control signal by using the position pose information POI that includes the calculated result of at least one of the position and the pose of the target object OBJ and the calculated result of at least one of the position and the pose of the end effector 5 at the step S323 in FIG. 10. For example, the control apparatus 3 may generate the control signal so that the positional relationship between the end effector 5 whose position is indicated by the position pose information POI and the target object OBJ whose position is indicated by the position pose information POI becomes the predetermined target positional relationship. For example, the control apparatus 3 may generate control signal so that the postural relationship between the end effector 5 whose pose is indicated by the position pose information POI and the target object OBJ whose pose is indicated by the position pose information POI becomes the predetermined target postural relationship.

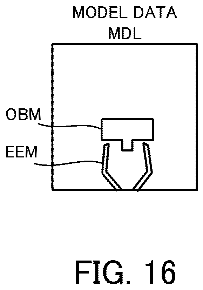

In order to calculate at least one of the position and the pose of the end effector 5, the control apparatus 3 may use the model data MDL indicating an end effector model EEM in addition to the object model OBM (alternatively, the edge model EM described in the third modified example) as illustrated in FIG. 16. Namely, the model data MDL that is used for the fine movement processing (especially, the matching processing) in the fourth modified example may indicate the end effector model EEM in addition to the object model OBM (alternatively, the edge model EM described in the third modified example). Note that the end effector model EEM may be referred to as an apparatus model in a case where the end effector 5 is referred to as the process apparatus as described above.

The end effector model EEM is a model of the end effector 5. The end effector model EEM is a two-dimensional model and includes a two-dimensional image, for example. In this case, the model data MDL is data indicating the end effector model EEM that is the two-dimensional model having a two-dimensional shape that is a reference for the end effector 5. The end effector model EEM may be the two-dimensional model (the two-dimensional image) of the end effector 5, which is generated by virtually projecting a CAD model (alternatively, any three-dimensional model) of the end effector 5 from a plurality of different directions on virtual planes that are mutually orthogonal to each other, respectively, for example. Alternatively, the end effector model EEM may be the two-dimensional image generated by imaging the actual end effector 5 in advance. Note that the actual end effector 5 measured in advance for generating the end effector model EEM may be a standard or good end effector 5.

Alternatively, the end effector model EEM may be a model of at least a part of an edge of the end effector 5, as with the end effector model EEM that is the model of the edge of the target object OBJ described in the third modified example. The end effector model EEM may be a model that indicates at least a part of the edge of the end effector 5. The end effector model EEM may be a model that represents at least a part of the edge of the end effector 5. The end effector model EEM may be a model that indicates at least a part of the edge of the end effector 5 but does not indicate a part of the end effector 5 other than the edge. Note that the end effector model EEM may be a model of at least a part of a contour of the end effector 5. The end effector model EEM may be a model that indicates at least a part of the contour of the end effector 5.

Note that a method for generating the end effector model EEM, which is the model of the edge of the end effector 5, may be the same as a method for generating the edge model EM, which is the model of the edge of the target object OBJ described in the third modified example. Namely, the method for generating the model data MDL indicating the end effector model EEM may be the same as the method for generating the edge model data EMD indicating the edge model EM described in the third modified example. Therefore, a detailed description of the method for generating the model data MDL indicating the end effector model EEM is omitted to avoid a redundant description.

Note that the model data MDL may indicate the end effector model EEM and the object model OBM that indicates the part of the target object OBJ other than the edge in addition to or instead of the edge of the target object OBJ in a case where the model data MDL indicates the end effector model EEM indicating a part of the end effector 5 other than the edge in addition to or instead of the edge of the end effector 5. In this case, the matching processing may be performed by using the model data MDL that indicates the end effector model EEM, which indicates the part of the end effector 5 other than the edge in addition to or instead of the edge of the end effector 5, and the object model OBM, which indicates the part of the target object OBJ other than the edge in addition to or instead of the edge of the target object OBJ.

Alternatively, in a case where the model data MDL indicates the end effector model EEM that indicates the edge of the end effector 5 but does not indicate the part of the end effector 5 other than the edge, the model data MDL may indicate the end effector model EEM and the edge model EM that indicates the edge of the target object OBJ but does not indicate the part of the target object OBJ other than the edge. In this case, the matching processing may be performed by using the model data MDL indicating the end effector model EEM, which is the edge model, and the edge model EM.

The model data MDL may indicate the object model OBM (alternatively, the edge model EM, the same applies in the fourth modified example below) and the end effector model EEM that are aligned with each other, as illustrated in FIG. 16. In this case, the model data MDL may include information related to a positional relationship between the object model OBM and the end effector model EEM. The model data MDL may include information related to a postural relationship between the object model OBM and the end effector model EEM in addition to or instead of the information related to the positional relationship between the object model OBM and the end effector model EEM.

In a case where the object model OBM and the end effector model EEM indicated by the model data MDL are aligned with each other, the control apparatus 3 may perform, as at least a part of the fine movement processing, the processing for generating the control signal so that a difference between the positional relationship between the target object OBJ and the end effector 5 and the positional relationship between the object model OBM and the end effector model EEM, which are aligned with each other, is equal to or smaller than a predetermined allowable upper limit threshold value. Namely, the control apparatus 3 may move the end effector 5 so that the difference between the positional relationship between the target object OBJ and the end effector 5 and the positional relationship between the object model OBM and the end effector model EEM, which are aligned with each other, is equal to or smaller than the predetermined allowable upper limit threshold value by performing the fine movement processing.

Specifically, the control apparatus 3 may calculate the position of each of the target object OBJ and the end effector 5 by performing the matching processing using the model data MDL as a part of the fine movement processing. Then, the control apparatus 3 may calculate the positional relationship between the target object OBJ and the end effector 5 based on the calculated result of the position of each of the target object OBJ and the end effector 5 as a part of the fine movement processing. Then, the control apparatus 3 may move the end effector 5 so that the difference between the calculated result of the positional relationship between the target object OBJ and the end effector 5 and the positional relationship between the object model OBM and the end effector model EEM indicated by the model data MDL is equal to or smaller the allowable upper limit threshold value as a part of the fine movement processing. Then, the control apparatus 3 may repeat the fine movement processing as necessary until the difference between the calculated result of the positional relationship between the target object OBJ and the end effector 5 and the positional relationship between the object model OBM and the end effector model EEM indicated by the model data MDL is equal to or smaller the allowable upper limit threshold value.

Note that the predetermined allowable upper limit threshold value may be zero. In this case, a state in which "the difference between the positional relationship between the target object OBJ and the end effector 5 and the positional relationship between the object model OBM and the end effector model EEM is equal to or smaller than the predetermined allowable upper limit threshold value" may include a state where "the positional relationship between the target object OBJ and the end effector 5 is completely the same as the positional relationship between the object model OBM and the end effector model EEM". The predetermined allowable upper limit threshold value may be larger than zero. In this case, the state in which "the difference between the positional relationship between the target object OBJ and the end effector 5 and the positional relationship between the object model OBM and the end effector model EEM is equal to or smaller than the predetermined allowable upper limit threshold value" may include not only the state in which "the positional relationship between the target object OBJ and the end effector 5 is completely the same as the positional relationship between the object model OBM and the end effector model EEM" but also a state in which "the positional relationship between the target object OBJ and the end effector 5 is not completely the same as the positional relationship between the object model OBM and the end effector model EEM, but the difference between the positional relationship between the target object OBJ and the end effector 5 and the positional relationship between the object model OBM and the end effector model EEM is small enough to be equal to or smaller the predetermined allowable upper limit threshold value. In this case, the state in which "the difference between the positional relationship between the target object OBJ and the end effector 5 and the positional relationship between the object model OBM and the end effector model EEM is equal to or smaller than the predetermined allowable upper limit threshold value" may be considered to include a state in which "the difference between the positional relationship between the target object OBJ and the end effector 5 is substantially the same as the positional relationship between the object model OBM and the end effector model EEM".

In a case where the control apparatus 3 generates the control signal so that the difference between the positional relationship between the target object OBJ and the end effector 5 and the positional relationship between the object model OBM and the end effector model EEM, which are aligned with each other, is equal to or smaller than the allowable upper limit threshold value, the object model OBM and the end effector model EEM indicated by the model data MDL may be aligned with each other so that the positional relationship between the object model OBM and the end effector model EEM is the same as the target positional relationship described above. Namely, the object model OBM and the end effector model EEM indicated by the model data MDL may be aligned with each other so that the positional relationship between the object model OBM and the end effector model EEM is the same as the positional relationship between the target object OBJ and the end effector 5 that should be realized by the fine movement processing.

In a case where the object model OBM and the end effector model EEM indicated by the model data MDL are aligned with each other, the control apparatus 3 may perform, as at least a part of the fine movement processing, the processing for generating the control signal so that a difference between the postural relationship between the target object OBJ and the end effector 5 and the postural relationship between the object model OBM and the end effector model EEM, which are aligned with each other, is equal to or smaller than a predetermined allowable upper limit threshold value. Namely, the control apparatus 3 may move the end effector 5 so that the difference between the postural relationship between the target object OBJ and the end effector 5 and the postural relationship between the object model OBM and the end effector model EEM, which are aligned with each other, is equal to or smaller than the predetermined allowable upper limit threshold value by performing the fine movement processing.

Specifically, the control apparatus 3 may calculate the pose of each of the target object OBJ and the end effector 5 by performing the matching processing using the model data MDL as a part of the fine movement processing. Then, the control apparatus 3 may calculate the postural relationship between the target object OBJ and the end effector 5 based on the calculated result of the pose of each of the target object OBJ and the end effector 5 as a part of the fine movement processing. Then, the control apparatus 3 may move the end effector 5 so that the difference between the calculated result of the postural relationship between the target object OBJ and the end effector 5 and the postural relationship between the object model OBM and the end effector model EEM indicated by the model data MDL is equal to or smaller the allowable upper limit threshold value as a part of the fine movement processing. Then, the control apparatus 3 may repeat the fine movement processing as necessary until the difference between the calculated result of the postural relationship between the target object OBJ and the end effector 5 and the postural relationship between the object model OBM and the end effector model EEM indicated by the model data MDL is equal to or smaller the allowable upper limit threshold value.

Note that the predetermined allowable upper limit threshold value may be zero. In this case, a state in which "the difference between the postural relationship between the target object OBJ and the end effector 5 and the postural relationship between the object model OBM and the end effector model EEM is equal to or smaller than the predetermined allowable upper limit threshold value" may include a state where "the postural relationship between the target object OBJ and the end effector 5 is completely the same as the postural relationship between the object model OBM and the end effector model EEM". The predetermined allowable upper limit threshold value may be larger than zero. In this case, the state in which "the difference between the postural relationship between the target object OBJ and the end effector 5 and the postural relationship between the object model OBM and the end effector model EEM is equal to or smaller than the predetermined allowable upper limit threshold value" may include not only the state in which "the postural relationship between the target object OBJ and the end effector 5 is completely the same as the postural relationship between the object model OBM and the end effector model EEM" but also a state in which "the postural relationship between the target object OBJ and the end effector 5 is not completely the same as the postural relationship between the object model OBM and the end effector model EEM, but the difference between the postural relationship between the target object OBJ and the end effector 5 and the postural relationship between the object model OBM and the end effector model EEM is small enough to be equal to or smaller the predetermined allowable upper limit threshold value. In this case, the state in which "the difference between the postural relationship between the target object OBJ and the end effector 5 and the postural relationship between the object model OBM and the end effector model EEM is equal to or smaller than the predetermined allowable upper limit threshold value" may be considered to include a state in which "the difference between the postural relationship between the target object OBJ and the end effector 5 is substantially the same as the postural relationship between the object model OBM and the end effector model EEM".

In a case where the control apparatus 3 generates the control signal so that the difference between the postural relationship between the target object OBJ and the end effector 5 and the postural relationship between the object model OBM and the end effector model EEM, which are aligned with each other, is equal to or smaller than the allowable upper limit threshold value, the object model OBM and the end effector model EEM indicated by the model data MDL may be aligned with each other so that the postural relationship between the object model OBM and the end effector model EEM is the same as the target postural relationship described above. Namely, the object model OBM and the end effector model EEM indicated by the model data MDL may be aligned with each other so that the postural relationship between the object model OBM and the end effector model EEM is the same as the postural relationship between the target object OBJ and the end effector 5 that should be realized by the fine movement processing.

In a case where the imaging apparatus 21 images the plurality of target objects OBJ in a situation where the object model OBM and the end effector model EEM indicated by the model data MDL are aligned with each other, the control apparatus 3 may perform a processing for selecting, from the plurality of target objects OBJ, one target object OBJ (namely, the process performed object) on which the end effector 5 actually performs the predetermined process, based on the positional relationship between the object model OBM and the end effector model EEM that are aligned with each other, as at least a part of the fine movement processing. For example, in a case where ethe plurality of target objects OBJ are detected by the matching processing described above, the control apparatus 3 may select one target object OBJ (namely, the process performed object) satisfying a condition that "the positional relationship between the target object OBJ and the end effector 5 is closest to the positional relationship between the object model OBM and the end effector model EEM that are aligned with each other".

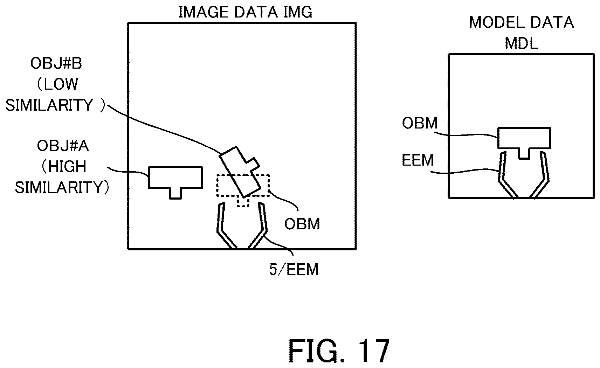

As an example, FIG. 17 illustrates an in a case where a target object OBJ#A and a target object OBJ#B are detected by the matching processing. As illustrated in FIG. 17, the target object OBJ#A, the target object OBJ#B, and the end effector 5 are captured in the image indicated by the image data IMG.

In the example illustrated in FIG. 17, it is assumed that both the matching similarity of the target object OBJ#A and the matching similarity of the target object OBJ#B are higher than the matching determination threshold value described above. Therefore, both the target objects OBJ#A and OBJ#B are detected by the matching processing. Furthermore, in the example illustrated in FIG. 17, the matching similarity of the target object OBJ#A is higher than the matching similarity of the target object OBJ#B. In this case, in a case where one target object OBJ whose matching similarity is the maximum is selected as the process performed object from the plurality of target objects OBJ, the control apparatus 3 selects the target object OBJ#A whose matching similarity is the maximum as the process performed object. However, in the example illustrated in FIG. 17, a distance between the target object OBJ#A and the end effector 5 is longer than a distance between the target object OBJ#B and the end effector 5. Therefore, a distance that the end effector 5 moves in a case where the target object OBJ#A is selected as the process performed object by the fine movement processing is longer than a distance that the end effector 5 moves in a case where the target object OBJ#B is selected as the process performed object by the fine movement processing. In this case, the control apparatus 3 may not select the target object OBJ#A as the process performed object from the viewpoint of efficiently moving the end effector 5 by reducing the movement distance of the end effector 5. Namely, it may be preferable for the control apparatus 3 to select the target object OBJ#B as the process performed object from the viewpoint of efficiently moving the end effector 5 by reducing the movement distance of the end effector 5.

Therefore, in the fourth modified example, the control apparatus 3 first calculates, at least one of the position and the pose of the target object OBJ#A, at least one of the position and the pose of the target object OBJ#B, and at least one of the position and the pose of the end effector 5 by matching processing. Then, the control apparatus 3 calculates the distance between the target object OBJ#A and the end effector 5 and the distance between the target object OBJ#B and the end effector 5 based on the calculated result of at least one of the positions and poses of each of the target object OBJ#A, the target object OBJ#B, and the end effector 5. In this case, the control apparatus 3 selects the target object OBJ whose calculated distance is shorter as the process performed object. In the example illustrated in FIG. 17, since the distance between the target object OBJ#B and the end effector 5 is shorter than the distance between the target object OBJ#A and the end effector 5, the control apparatus 3 selects the target object OBJ#B as the process performed object.

Note that the control apparatus 3 compares the positional relationship between the end effector 5 and each of the target objects OBJ#A and OBJ#B detected by the matching processing with the positional relationship between the object model OBM and the end effector model EEM that are aligned with each other. In the example illustrated in FIG. 17, the positional relationship between the target object OBJ#B and the end effector 5 is closer to the positional relationship between the object model OBM and the end effector model EEM that are aligned with each other than the positional relationship between target object OBJ#A and end effector 5 is. This is because a translational error (namely, a difference in a translational direction) between the position of the object model OBM, which is aligned with the end effector model EEM, and the position of the target object OBJ#B is smaller than a translational error between the position of the object model OBM and the position of the target object OBJ#A in a case where the end effector model EEM is overlapped with the end effector 5 in the image indicated by the image data IMG. Therefore, in the fourth modified example, the control apparatus 3 selects the target object OBJ#B as the process performed object. Therefore, the control apparatus 3 can generate the control signal for controlling the robot 1 to efficiently move the end effector 5 by reducing the movement distance of the end effector 5. Namely, the control apparatus 3 can efficiently move the end effector 5 by reducing the movement distance of the end effector 5.

Note that the control apparatus 3 may calculate at least one of the position and the pose of the end effector 5 even in a case where the robot control apparatus 4 does not perform the rough movement processing. Namely, in a case where the control apparatus 3 starts the fine movement processing while the robot control apparatus 4 does not perform the rough movement processing, the control apparatus 3 may calculate at least one of the position and the pose of the end effector 5. Furthermore, the control apparatus 3 may generate the control signal based on the calculated result of at least one of the position and the pose of the end effector 5.

Note that the control apparatus 3 calculates at least one of the position and pose of each of the target object OBJ and the end effector 5 in the above-described description. However, in a case where the end effector 5 is holding the object, the control apparatus 3 may calculate at least one of a position and a pose of the object being held by the end effector 5 in addition to or instead of at least one of the position and pose of the end effector 5. As one example, in the example illustrated in FIG. 4(b), the control apparatus 3 may calculate at least one of the position and the pose of the workpiece W being held by the end effector 5. As another example, in the example illustrated in FIG. 5(c), the control apparatus 3 may calculate at least one of the position and the pose of the workpiece W#1 being held by the end effector 5. As another example, in the example illustrated in FIG. 6(b), the control apparatus 3 may calculate at least one of the position and the pose of the workpiece W#2 being held by the end effector 5.

As described above, the robot 1 may perform the placing process in a case where the end effector 5 holds the object. For example, as described above, the robot 1 may hold the first target object OBJ by using the end effector 5, and then perform placing process for position the first target object OBJ held by end effector 5 at the desired position of the second target object OBJ, which is different from the first target object OBJ. In this case, the control apparatus 3 may calculate at least one of the position and the pose of the first target object OBJ being held by the end effector 5 and at least one of the position and the pose of the second target object OBJ at which the end effector 5 releases the first target object OBJ. Alternatively, not only in a case where the placing process is performed, but also in a case where the end effector 5 holding the first target object OBJ performs the predetermined process on the second target object OBJ, the control apparatus 3 may calculate at least one of the position and the pose of the first target object OBJ being held by the end effector 5 and at least one of the position and the pose of the second target object OBJ at which the end effector 5 release the first target object OBJ. In this case, in a case where at least one of the position and pose of each of the first target object OBJ and the second target object OBJ is calculated, the control apparatus 3 may generate the control signal for controlling the robot 1 so that the positional relationship between the first target object OBJ and the second target object OBJ becomes the predetermined target positional relationship. In a case where at least one of the position and pose of each of the first target object OBJ and the second target object OBJ is calculated, the control apparatus 3 may generate the control signal for controlling the robot 1 so that the postural relationship between the first target object OBJ and the second target object OBJ becomes the predetermined target postural relationship. The control apparatus 3 may repeat the fine movement processing until the positional relationship between the first target object OBJ and the second target object OBJ becomes the predetermined target positional relationship. In this case, the control apparatus 3 may repeat the fine movement processing until the postural relationship between the first target object OBJ and the second target object OBJ becomes the predetermined target postural relationship.

Note that an ideal positional relationship between the first target object OBJ and the second target object OBJ in a case where the end effector 5 holding the first target object OBJ is positioned at the target process position TPP, at which the end effector 5 holding the first target object OBJ performs the predetermined process on the second target object OBJ, may be used as the target positional relationship here. Moreover, an ideal postural relationship between the first target object OBJ and the second target object OBJ in a case where the end effector 5 holding the first target object OBJ is positioned at the target process position TPP, at which the end effector 5 holding the first target object OBJ performs the predetermined process on the second target object OBJ, may be used as the target postural relationship here.

### (4-5) Fifth Modified Example

### (4-5-1) Estimation (Prediction) of at least one of Position and Pose of Target Object OBJ

As described above, the control apparatus 3 may perform the fine movement processing as necessary at the step S34 in FIG. 9 even in the process period during which the end effector 5 performs the predetermined process on the target object OBJ. Especially, as described above, the control apparatus 3 may perform the fine movement processing even in the process period so that the end effector 5 follows the moving target object OBJ in a case where the target object OBJ moves in the process period. However, there is a possibility that the target object OBJ is not included in the imaging field of view of the imaging apparatus 21 in the process period.

As a first example, in a case where the end effector 5 releases the plurality of first workpieces W1 in sequence so that the plurality of first workpieces W1 are embedded (inserted) into the plurality of holes HL formed in the second workpiece W2 as described with reference to FIG. 5 and FIG. 6, there is a possibility that the first workpiece W1 released from the end effector 5 is positioned between the imaging apparatus 21 and the hole HL into which the first workpiece W1 should be embedded (namely, the target part in which the hole HL is formed, the same applies in the fifth modified example below). As a result, there is a possibility that the holes HL is hidden by the first workpieces W1, and as a result, the holes HL is not included in the imaging field of view of the imaging apparatus 21. Namely, there is a possibility that the imaging apparatus 21 cannot image the holes HL. As a result, there is a possibility that the control apparatus 3 cannot detect the hole HL by the matching processing. In this case, there is a possibility that the control apparatus 3 cannot calculate at least one of the position and the pose of the hole HL, and as a result, the control apparatus 3 cannot generate the control signal for controlling the robot 1 so that the end effector 5 follows the hole HL.

As a second example, in a case where the end effector 5 holds the workpiece W as described with reference to FIG. 3, there is a possibility that a part of the workpiece W is not included in the imaging field of view of the imaging apparatus 21 due to the end effector 5 approaching the workpiece W (as a result, the imaging apparatus 21 approaches the workpiece W). Namely, there is a possibility that the imaging apparatus 21 cannot image a part of the workpiece W. As a result, there is a possibility that the control apparatus 3 cannot detect the workpiece W by the matching processing. Even if the control apparatus 3 can detect the workpiece W by the matching processing, there is a possibility that the calculation accuracy of at least one of the position and the pose of the workpiece W deteriorates. In this case, there is a possibility that the control apparatus 3 cannot accurately calculate at least one of the position and the pose of the workpiece W, and as a result, the control apparatus 3 cannot generate the control signal for controlling the robot 1 so that the end effector 5 follows the workpiece W.

Note that there is a possibility that the target object OBJ is hidden by an obstacle, and thus a part of the workpiece W is not be included in the imaging field of view of the imaging apparatus 21 not only in the case where the end effector 5 holds the workpiece W, but also in the case where the end effector 5 performs any process on the target object OBJ. There is a possibility that a part of the workpiece W is not included in the imaging field of view of the imaging apparatus 21 due to the end effector 5 approaching the workpiece W (as a result, the imaging apparatus 21 approaches the workpiece W) not only in the case where the end effector 5 holds the workpiece W, but also in the case where the end effector 5 performs the predetermined process on the target object OBJ. As a result, there is a possibility that the control apparatus 3 cannot generate the control signal for controlling the robot 1 so that the end effector 5 follows the target object OBJ.

Therefore, in the fifth modified example, in a case where an imaging abnormal condition that at least a part of the target object OBJ is not included in the imaging field of view of the imaging apparatus 21 in the process period is satisfied, the control apparatus 3 may perform a processing for estimating at least one of the position and the pose of the target object OBJ as at least a part of the fine movement processing. Namely, in the fifth modified example, the fine movement processing may include the processing for estimating at least one of the position and the pose of the target object OBJ in a case where the imaging abnormal condition is satisfied.

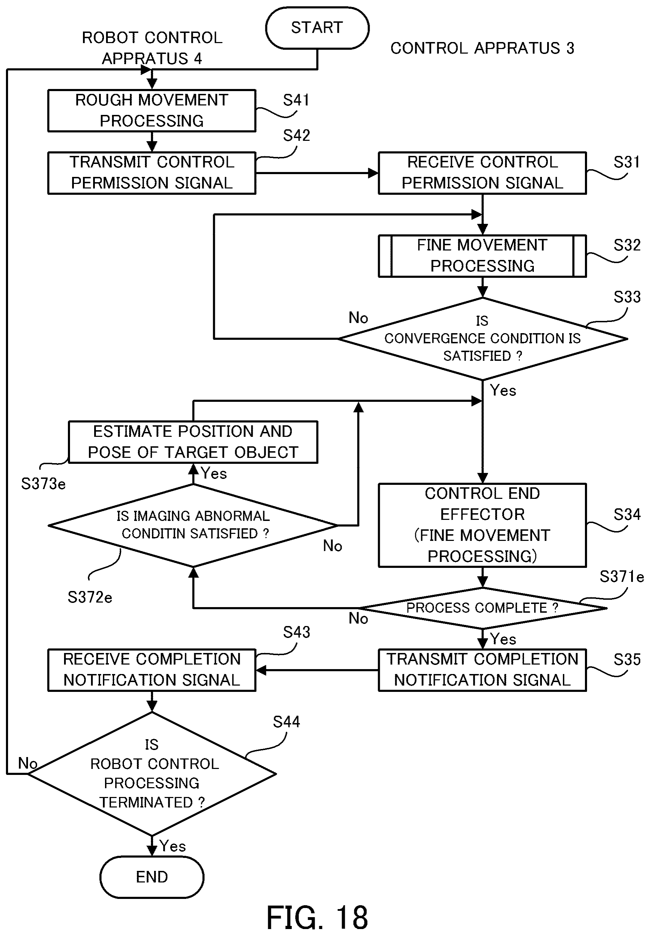

Next, with reference to FIG. 18, the robot control processing in the fifth modified example, which includes the processing for estimating at least one of the position and the pose of the target object OBJ in a case where the imaging abnormal condition is satisfied, will be described. FIG. 18 is a flowchart that illustrates a flow of the robot control processing in the fifth modified example.

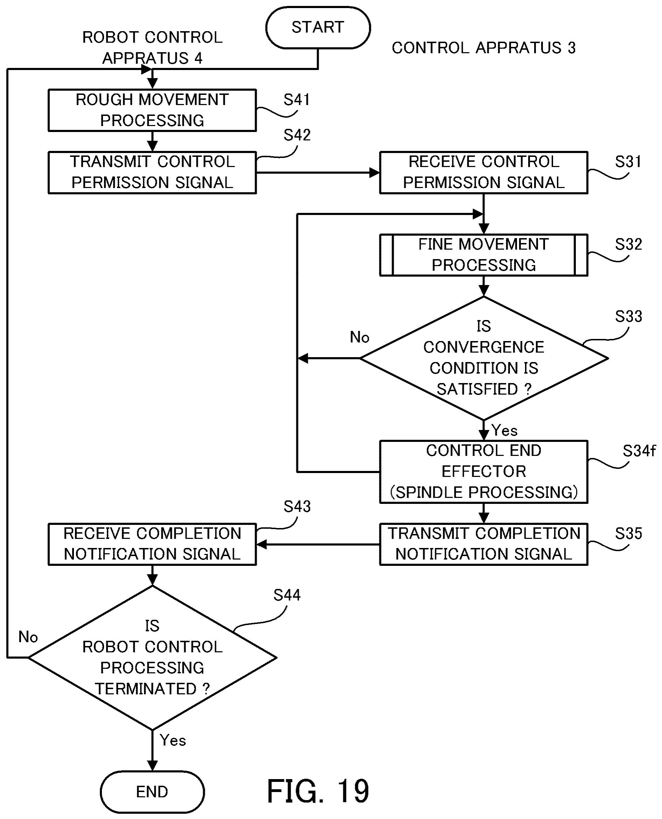

As illustrated in FIG. 18, the robot control processing in the fifth modified example is the same as the robot control processing illustrated in FIG. 9 described above, in that the robot control apparatus 4 first performs the rough movement processing (the step S41), then the robot control apparatus 4 transmits the control permission signal to the control apparatus 3 (the step S42) and the control apparatus 3 receives the control permission signal from the robot control apparatus 4 (the step S31), then the control apparatus 3 performs the fine movement processing until the convergence condition is satisfied (the step S32 to the step S33), and the control apparatus 3 controls the end effector 5 to perform the predetermined process on the target object OBJ after the convergence condition is satisfied (the step S34). Note that the control apparatus 3 performs the fine movement processing in the process period during which the predetermined process is performed on the target object OBJ (namely, the process period during which the control apparatus 3 controls the end effector 5) at the step S34 as illustrated in FIG. 19. Therefore, the process period may mean a period during which the end effector 5 performs the predetermined process on the target object OBJ and the control apparatus 3 performs the fine movement processing in the fifth modified example in a case where there is no specific notation.

In the fifth modified example, unless it is determined that the end effector 5 completes the predetermined process on the target object OBJ in the process period (a step S371e: No), the control apparatus 3 determines whether or not the imaging abnormal condition is satisfied (a step S372e).

For example, the control apparatus 3 may determine that the imaging abnormal condition is satisfied in a case where the target object OBJ is not captured in the image indicated by the image data IMG generated by the imaging apparatus 21 in the process period. Namely, the control apparatus 3 may determine that the imaging abnormal condition is satisfied in a case where the imaging apparatus 21 generates the image data IMG indicating the image in which the target object OBJ is not captured in the process period. On the other hand, for example, the control apparatus 3 may determine that the imaging abnormal condition is not satisfied in a case where the target object OBJ is captured the image indicated by the image data IMG generated by the imaging apparatus 21 in the process period. Namely, the control apparatus 3 may determine that the imaging abnormal condition is not satisfied in a case where the imaging apparatus 21 generates the image data IMG indicating the image in which the target object OBJ is captured in the process period. In this case, the imaging abnormal condition that the target object OBJ is not included in the imaging field of view of the imaging apparatus 21 in the process period may be considered to be equivalent to a condition that the target object OBJ is not captured in the image indicated by the image data IMG generated in the process period.

For example, the control apparatus 3 may determine that the imaging abnormal condition is satisfied in a case where at least a part of the target object OBJ is not captured in the image indicated by the image data IMG generated by the imaging apparatus 21 in the process period. Namely, the control apparatus 3 may determine that the imaging abnormal condition is satisfied in a case where the imaging apparatus 21 generates the image data IMG indicating the image in which at least a part of the target object OBJ is not captured in the process period. On the other hand, for example, the control apparatus 3 may determine that the imaging abnormal condition is not satisfied in a case where the entire target object OBJ is captured the image indicated by the image data IMG generated by the imaging apparatus 21 in the process period. Namely, the control apparatus 3 may determine that the imaging abnormal condition is not satisfied in a case where the imaging apparatus 21 generates the image data IMG indicating the image in which the entire target object OBJ is captured in the process period. In this case, the imaging abnormal condition that at least a part of the target object OBJ is not included in the imaging field of view of the imaging apparatus 21 in the process period may be considered to be equivalent to a condition that at least a part of the target object OBJ is not captured in the image indicated by the image data IMG generated in the process period.

For example, the control apparatus 3 may determine that the imaging abnormal condition is satisfied in a case where only a small part of the target object OBJ is captured in the image indicated by the image data IMG generated by the imaging apparatus 21 in the process period. In this case, the matching similarity calculated by the matching processing is considerably small, and therefore, the control apparatus 3 may determine that the imaging abnormal condition is satisfied in a case where the imaging apparatus 21 generates the image data IMG in which only an object whose matching similarity is lower than the predetermined threshold value is detected.

For example, the control apparatus 3 may determine that the imaging abnormal condition is satisfied in a case where the control apparatus 3 cannot detect the target object OBJ by performing the matching processing based on the image data IMG generated by the imaging apparatus 21 in the process period. Note that a state in which the target object OBJ cannot be detected by the matching processing may include a state in which any object that is the target object OBJ or that is different from the target object OBJ cannot be detected by the matching processing. The state in which the target object OBJ cannot be detected by the matching processing may include a state in which any object that is the target object OBJ or that is different from the target object OBJ cannot be detected by the matching processing, but the object (namely, the target object OBJ) whose matching similarity is higher the matching threshold value cannot be detected by the matching processing. On the other hand, for example, the control apparatus 3 may determine that the imaging abnormal condition is not satisfied in a case where the control apparatus 3 can detect the target object OBJ by performing the matching processing based on the image data IMG generated by the imaging apparatus 21 in the process period. Note that a state in which the target object OBJ can be detected by the matching processing may include a state in which the object (namely, the target object OBJ) whose matching similarity is higher than the matching threshold value can be detected by the matching processing. In this case, the imaging abnormal condition that the target object OBJ is not included in the imaging field of view of the imaging apparatus 21 in the process period may be considered to be equivalent to a condition that the target object OBJ cannot be detected by the matching processing performed based on the image data IMG in the process period.

In the case where it is determined as a result of the determination at the step S372e that the imaging abnormal condition is not satisfied (the step S372e: No), it is likely that the target object OBJ is captured in the image indicated by the latest image data IMG generated by the imaging apparatus 21. Therefore, the control apparatus 3 must be able to calculate at least one of the position and the pose of the target object OBJ based on the latest image data IMG generated by the imaging apparatus 21. Therefore, in this case, the control apparatus 3 may not perform the processing for estimating at least one of the position and the pose of the target object OBJ (a step S373e described later). Namely, the control apparatus 3 may perform, as at least a part of the fine movement processing, the processing for calculating at least one of the position and the pose of the target object OBJ based on the image data IMG as usual.

Then, the control apparatus 3 continues to control the end effector 5 to perform the predetermined process on the target object OBJ while performing the fine movement processing (the step S34). In this case, the control apparatus 3 performs the processing for calculating at least one of the position and the pose of the target object OBJ based on the latest image data IMG generated by the imaging apparatus 21, and generates the control signal based on the calculated result of at least one of the position and the pose of the target object OBJ at the step S373e as the fine movement processing.

On the other hand, in a case where it is determined as a result of the determination at the step S372e that the imaging abnormal condition is satisfied (the step S372e: Yes), there is a possibility that the target object OBJ is not captured in the image indicated by the latest image data IMG generated by the imaging apparatus 21. Alternatively, there is a possibility that only a small part of the target object OBJ is captured in the image indicated by the latest image data IMG generated by the imaging apparatus 21. Therefore, there is a possibility that the control apparatus 3 cannot calculate at least one of the position and the pose of the target object OBJ based on the latest image data IMG generated by the imaging apparatus 21. In this case, the control apparatus 3 performs the processing for estimating at least one of the position and the pose of the target object OBJ by using other method as at least a part of the fine movement processing, instead of directly calculating at least one of the position and the pose of the target object OBJ based on the latest image data IMG generated by the imaging apparatus 21 (a step S373e). Specifically, the control apparatus 3 estimates (namely, calculates) at least one of the position and the pose of the target object OBJ at a first time by using other method, instead of directly calculating at least one of the position and the pose of the target object OBJ at the first time based on the image data IMG generated by the imaging apparatus 21 at the first time in the process period. .In this case, the control apparatus 3 may estimate (namely, calculate) at least one of the position and the pose of the target object OBJ at the first time without using the image data IMG generated by the imaging apparatus 21 at the first time.

For example, the control apparatus 3 may estimate at least one of the position and the pose of the target object OBJ at the first time based on the calculated result of at least one of the position and the pose of the target object OBJ at a second time, which is calculated based on the image data IMG generated by the imaging apparatus 21 at the second time earlier than the first time. Note that the second time is a time in the process period described above and a time at which the imaging abnormal condition is not satisfied, for example.

As a first example, in a case where the target object OBJ does not move between the second time and the first time, at least one of the position and the pose of the target object OBJ at the second time should be the same as at least one of the position and the pose of the target object OBJ at the first time. Namely, at least one of the position and the pose of the target object OBJ at the second time should completely or substantially the same as at least one of the position and the pose of the target object OBJ at the first time. Therefore, in a case where the target object OBJ does not move between the second time and the first time, the control apparatus 3 may use at least one of the position and the pose of the target object OBJ at the second time as at least one of the position and the pose of the target object OBJ at the first time as is. Namely, the processing for estimating at least one of the position and the pose of the target object OBJ at the first time based on at least one of the position and the pose of the target object OBJ at the second time may include a processing for reusing at least one of the position and the pose of the target object OBJ at the second time as at least one of the position and the pose of the target object OBJ at the first time.

As a second example, in a case where the target object OBJ moves between the second time and the first time, it is likely that at least one of the position and the pose of the target object OBJ at the second time is different from at least one of the position and the pose of the target object OBJ at the first time. However, in a case where a movement aspect of the target object OBJ between the second time and the first time is known to the control apparatus 3, the control apparatus 3 may estimate at least one of the position and the pose of the target object OBJ at the first time based on the calculated result of at least one of the position and the pose of the target object OBJ at the second time and the movement aspect of the target object OBJ between the second time and the first time. Note that at least one of a movement speed of the target object OBJ, a movement direction of the target object OBJ, a movement time of the target object OBJ, and a movement distance of the target object OBJ is one example of the movement aspect of the target object OBJ.

For example, the control apparatus 3 may estimate at least one of the position and the pose of the target object OBJ at the first time by correcting the calculated result of at least one of the position and the pose of the target object OBJ at the second time based on the movement aspect of the target object OBJ between the second time and the first time. As one example, the control apparatus 3 may performing, as a processing for correcting the calculated result of at least one of the position and the pose of the target object OBJ at the second time, a processing for virtually moving the target object OBJ at the second time in the movement direction of the target object OBJ between the second time and the first time to estimate at least one of the position and the pose of the target object OBJ that has moved virtually as at least one of the position and the pose of the target object OBJ at the first time. As another example, the control apparatus 3 may performing, as the processing for correcting the calculated result of at least one of the position and the pose of the target object OBJ at the second time, a processing for virtually moving the target object OBJ at the second time by the movement distance of the target object OBJ between the second time and the first time to estimate at least one of the position and the pose of the target object OBJ that has moved virtually as at least one of the position and the pose of the target object OBJ at the first time. As another example, the control apparatus 3 may performing, as the processing for correcting the calculated result of at least one of the position and the pose of the target object OBJ at the second time, a processing for virtually moving the target object OBJ at the second time by the movement distance based on the movement speed of the target object OBJ between the second time and the first time to estimate at least one of the position and the pose of the target object OBJ that has moved virtually as at least one of the position and the pose of the target object OBJ at the first time.

As a third example, even in a case where the target object OBJ moves between the second time and the first time but the movement aspect of the target object OBJ between the second time and the first time is not known to the control apparatus 3, the control apparatus 3 may first estimate the movement aspect of the target object OBJ between the second time and the first time. For example, the control apparatus 3 may estimate the movement aspect of the target object OBJ in at least a part of a period, which is before the first time, based on the calculated result of at least one of the position and the pose of the target object OBJ at each of a plurality of different second times, which are before the first time. As one example, the control apparatus 3 may estimate a direction directed from the position of the target object OBJ at one time toward the position of the target object OBJ at another time as the movement direction of the target object OBJ in a period between the one time and the another time. As another example, the control apparatus 3 may estimate a difference between the position of the target object OBJ at the one time and the position of the target object OBJ at the another time as the movement distance of the target object OBJ in the period between the one time and the another time. As another example, the control apparatus 3 may estimate the movement speed of the target object OBJ in a period between the one time and the another time by dividing the difference between the position of the target object OBJ at the one time and the position of the target object OBJ at the another time by a time difference between the one time and the another time. Then, the control apparatus 3 may estimate the movement aspect of the target object OBJ between the second time and the first time based on an estimated result of the movement aspect of the target object OBJ in at least a part of the period before the first time, using the assumption that the movement aspect of the target object OBJ that moves due to the transportation by the transport apparatus does not change greatly over time. Then, in the third example, the control apparatus 3 may estimate at least one of the position and the pose of the target object OBJ at the first time based on the calculated result of at least one of the position and the pose of the target object OBJ at the second time and the estimated result of the movement aspect of the target object OBJ between the second time and the first time, as in the second example.

Then, the control apparatus 3 continues to control the end effector 5 to perform the predetermined process on the target object OBJ while performing the fine movement processing (the step S34). Especially in this case, the control apparatus 3 generates the control signal based on the estimated result of at least one of the position and the pose of the target object OBJ at the step S373e, without performing the processing for calculating at least one of the position and the pose of the target object OBJ based on the latest image data IMG generated by the imaging apparatus 21 as the fine movement processing.

As a result, even in a case where the imaging abnormal condition is satisfied, the control apparatus 3 can generate the control signal for controlling the robot 1 to move the end effector 5 properly. For example, the control apparatus 3 can generate the control signal for controlling the robot 1 so that the end effector 5 follows the target object OBJ. For example, the control apparatus 3 can generate the control signal for controlling the robot 1 so that the positional relationship between the end effector 5 and the target object OBJ is maintained at the predetermined target positional relationship. For example, the control apparatus 3 can generate a control signal for controlling the robot 1 so that the postural relationship between the end effector 5 and the target object OBJ is maintained at the predetermined target postural relationship.

Note that the control apparatus 3 estimates at least one of the position and the pose of the target object OBJ in a case where the imaging abnormal condition is satisfied in the process period during which the end effector 5 performs the predetermined process on the target object OBJ and the control apparatus 3 performs the fine movement processing in the above-described description. However, even in a case where the imaging abnormal condition is satisfied in a period during which the end effector 5 does not perform the predetermined process on the target object OBJ but the control apparatus 3 performs the fine movement processing, the control apparatus 3 may estimate at least one of the position and the pose of the target object OBJ. Specifically, the control apparatus 3 may determine whether or not the imaging abnormal condition is satisfied in a period during which the fine movement processing is performed at the step S32 in FIG. 18. Namely, the control apparatus 3 may determine whether or not an imaging abnormal condition is satisfied before it is determined that the convergence condition is satisfied at the step S33 in FIG. 18. The control apparatus 3 may determine whether or not the imaging abnormal condition is satisfied before the control apparatus 3 starts controlling the end effector 5 so that the end effector 5 performs the predetermined process on the target object OBJ at the step S34 in FIG. 18. Then, in a case where it is determined that the imaging abnormal condition is satisfied, the control apparatus 3 may estimate at least one of the position and the pose of the target object OBJ. For example, in a case where it is determined that the imaging abnormal condition is satisfied at the first time in a period during which the fine movement processing is performed at the step S32 in FIG. 18, the control apparatus 3 may estimate (namely, calculate) at least one of the position and the pose of the target object OBJ at the first time based on the calculated result of at least one of the position and the pose of the target object OBJ calculated based on the image data IMG generated by the imaging apparatus 21 imaging the target object OBJ at the second time that is before the first time.

Moreover, even in a case where the robot control apparatus 4 does not perform the rough movement processing, the control apparatus 3 may estimate at least one of the position and the pose of the target object OBJ in a case where the imaging abnormal condition is satisfied. Namely, in a case where the control apparatus 3 starts the fine movement processing while the robot control apparatus 4 does not perform the rough movement processing, the control apparatus 3 may estimate at least one of the position and the pose of the target object OBJ in a case where the imaging abnormal condition is satisfied.

### (4-5-2) Usage of Information Related To Contact Between End Effector 5 and Target Object OBJ

The control apparatus 3 may perform, as at least a part of the fine movement processing, a processing for generating the control signal based on information related to a contact between the end effector 5 and the target object OBJ in a case where the imaging abnormal condition is satisfied as described above.

In this case, the robot 1 (especially, the robot arm 12) may include a force sensor for detecting the contact between the end effector 5 and the target object OBJ. Alternatively, the force sensor for detecting the contact between the end effector 5 and the target object OBJ may be attached to the end effector 5, in addition to or instead of the robot 1.

The force sensor may include a sensor that directly detects the contact between the end effector 5 and the target object OBJ. The force sensor may include a sensor that indirectly detects the contact between the end effector 5 and the target object OBJ by detecting a stress applied to the end effector 5 due to the contact between the end effector 5 and the target object OBJ. The force sensor may include a sensor that indirectly detects contact between the end effector 5 and the target object OBJ by detecting a stress applied to the robot 1, to which the end effector 5 is attached, due to the contact between the end effector 5 and the target object OBJ. Note that the force sensor may be referred to as a contact sensor.

In this case, the control apparatus 3 may generate the control signal based on a detected result by the force sensor. For example, the control apparatus 3 may determine whether or not the end effector 5 contacts with the target object OBJ based on the detected result by the force sensor.

In a case where it is determined that the end effector 5 does not contact with the target object OBJ, it may be determined that the end effector 5 does not yet positioned at the target process position TPP at which the end effector 5 should be positioned when the end effector 5 performs the predetermined process on the target object OBJ. This is because it is likely that at least a part of the end effector 5 contacts with the target object OBJ when the end effector 5 performs the predetermined process on the target object OBJ. Therefore, in this case, the control apparatus 3 may generate the control signal for controlling the robot 1 so that the end effector 5 moves closer to the target object OBJ.

On the other hand, in a case where it is determined that the end effector 5 contacts with the target object OBJ, it may be determined that the end effector 5 is positioned at the target process position TPP. This is because it is likely that at least a part of the end effector 5 contacts with the target object OBJ when the end effector 5 performs the predetermined process on the target object OBJ as already described above. Therefore, in this case, the control apparatus 3 may generate the control signal for controlling the robot 1 so that the end effector 5 follows the target object OBJ.

As a result, the control apparatus 3 can generate the control signal for controlling the robot 1 to move the end effector 5 properly even in a case where the imaging abnormal condition is satisfied, as in a case where at least one of the position and the pose of the target object OBJ is estimated in a case where the imaging abnormal condition is satisfied as described above.

Note that the control apparatus 3 may not calculate (alternatively, estimate, the same applies in this paragraph) at least one of the position and the pose of the target object OBJ in a case where the control signal is generated based on the information related to the contact between the end effector 5 and the target object OBJ. However, the control apparatus 3 may calculate at least one of the position and the pose of the target object OBJ and generate the control signal based on the calculated result of at least one of the position and the pose of the target object OBJ even in a case where the control signal is generated based on the information related to the contact between the end effector 5 and the target object OBJ. For example, the control apparatus 3 may calculate at least one of the position and the pose of the target object OBJ based on the information related to the contact between the end effector 5 and the target object OBJ, and generate the control signal based on the calculated result of at least one of the position and the pose of the target object OBJ.

Moreover, even in a case where the robot control apparatus 4 does not perform the rough movement processing, the control apparatus 3 may generate the control signal based on the information related to the contact between the end effector 5 and the target object OBJ. Namely, in a case where the control apparatus 3 starts the fine movement processing while the robot control apparatus 4 does not perform the rough movement processing, the control apparatus 3 may generate the control signal based on the information related to the contact between the end effector 5 and the target object OBJ.

Moreover, in the above-described description, the control apparatus 3 performs the processing for generating the control signal based on the information related to the contact between the end effector 5 and the target object OBJ in a case where the imaging abnormal condition is satisfied as described above. However, the control apparatus 3 may perform a processing for generating a control signal based on information related to contact between the end effector 5 and the target object OBJ even in a case where the imaging abnormal condition is not satisfied. For example, in a case where the predetermined process performed by the end effector 5 on the target object OBJ is a process (for example, the holding process) involving the contact between the end effector 5 and the target object OBJ, the control apparatus 3 may calculate the positional relationship between the end effector 5 and the target object OBJ based on the information related to the contact between the end effector 5 and the target object OBJ.

### (4-6) Sixth Modified Example

In a sixth modified example, a tool that is configured to performing machining process for spindle-processing an object may be attached to the robot 1 as the end effector 5. In this case, the robot 1 may machine the target object OBJ by making the tool contact with the target object OBJ while rotating the tool. Note that the tool for performing a spindle-processing that is the end effector 5 may be a tool that is configured to machine the object. As one example, the tool that is configured to perform a machining may be a cutting tool or a grinding tool. In this case, it can be said that the machining of the object may be regarded as the predetermined process by the end effector 5.

In this case, as illustrated in FIG. 19 that is a flowchart illustrating a flow of the robot control processing in the sixth modified example, the control apparatus 3 may perform a processing for controlling the end effector 5 (the tool) to machine the target object OBJ (a step S34f) as the processing for controlling the end effector 5 to perform the predetermined process on the target object OBJ (the step S34 in FIG. 9), after determining that the convergence condition has been satisfied (the step S33: Yes).

In the sixth modified example, the control apparatus 3 may control a processing condition of the tool in the process period during which the end effector 5 performs the predetermined process on the target object OBJ (namely, the tool machines the target object OBJ). Specifically, the control apparatus 3 may calculate at least one of the position and the pose of the target object OBJ based on the image data IMG generated in the process period, and control the processing condition based on the calculated result of at least one of the position and the pose of the target object OBJ. Especially, the control apparatus 3 may calculate at least one of the position and pose of each of the target object OBJ and the tool (namely, the end effector 5) based on the image data IMG generated in the process period, and control the processing condition based on the calculated result of at least one of the position and pose of each of the target object OBJ and the tool. Note that an operation for calculating at least one of the position and the pose of the tool (namely, the end effector 5) has been described in the fourth modified example.

A number of rotation of the tool is one example of the processing condition of the tool. In this case, the control apparatus 3 may control the number of rotation of the tool based on the calculated result of at least one of the position and pose of each of the target object OBJ and the tool. For example, the control apparatus 3 may calculate a positional relationship between the tool and the target object OBJ based on the calculated result of at least one of the position and pose of each of the target object OBJ and the tool, and estimate a progress situation of the machining using the tool based on a calculated result of the positional relationship between the tool and the target object OBJ. Then, the control apparatus 3 may control the number of rotation of the tool based on an estimated result of the progress situation of the machining using the tool. For example, in a case where the machining using the tool has just started, the control apparatus 3 may control the number of rotation of the tool so that the number of rotation of the tool becomes a first number of rotation that is relatively small in order to prioritize an increase of a torque over a reduction of a time required for the machining. For example, in a case where a certain period of time has elapsed after the machining using the tool is started, the control apparatus 3 may control the number of rotation of the tool so that the number of rotation of the tool becomes a second number of rotation that is relatively large in order to prioritize the reduction of the time required for the machining over the increase of the torque. For example, the control apparatus 3 may control the number of rotation of the tool so that the number of rotation of the tool becomes larger as the elapsed time after the machining using the tool is started becomes longer, in order to prioritize the reduction of the time required for the machining over the increase of the torque.

Note that the control apparatus 3 may control the processing condition based on the detected result by the force sensor in a case where the force sensor described above is attached to at least one of the robot 1 (especially, the robot arm 12) and the end effector 5 (in this case, the tool). Namely, the control apparatus 3 may control the processing condition based on the information related to the contact between the tool and the target object OBJ. For example, in a case where the state of the tool changes from a state in which the tool does not contact with the target object OBJ to a state in which the tool contacts with the target object OBJ, the control apparatus 3 may determine that the machining using the tool has started, and control the number of rotation of the tool so that the number of rotation of the tool becomes the first number of rotation that is relatively small in order to prioritize the increase of the torque over the reduction of the time required for the machining. In a case where a certain period of time has elapsed after the state of the tool is changed to the state in which the tool contacts with the target object OBJ, the control apparatus 3 may control the number of rotation of the tool so that the number of rotation of the tool becomes the second number of rotation that is relatively large in order to prioritize the reduction of the time required for the machining over the increase of the torque. For example, the control apparatus 3 may control the number of rotation of the tool so that the number of rotation of the tool becomes larger as the elapsed time after the state of the tool is changed to the state in which the tool contacts with the target object OBJ becomes longer, in order to prioritize the reduction of the time required for the machining over the increase of the torque. As a result, the robot system SYS can efficiently perform the machining on the target object OBJ.

In a case where a sound sensor (for example, a microphone) that is configured to detect a sound is attached to the robot 1, the control apparatus 3 may control the processing condition based on a detected result by the sound sensor. For example, the sound generated in a case where the tool does not contact with the target object OBJ is different from the sound generated in a case where the tool contacts with the target object OBJ. Therefore, the control apparatus 3 may determine whether or not the tool contacts with the target object OBJ based on the detected result by the sound sensor. Then, the control apparatus 3 may control the processing condition based on a determined result whether or not the tool contacts with the target object OBJ. Note that a processing for controlling the processing condition based on the determined result whether or not the tool contacts with the target object OBJ may be the same as the processing for controlling the processing condition based on the detected result by the force sensor.

Note that the control apparatus 3 may control the processing condition even in a case where the robot control apparatus 4 does not perform the rough movement processing. Namely, in a case where the control apparatus 3 starts the fine movement processing while the robot control apparatus 4 does not perform the rough movement processing, the control apparatus 3 may control the processing condition.

### (4-7) Seventh Modified Example

In a seventh modified example, the control apparatus 3 may inspect the target object OBJ based on the image data IMG generated by the imaging apparatus 21. Especially, the control apparatus 3 may inspect the target object OBJ based on the image data IMG generated by the imaging apparatus 21 imaging the target object OBJ (namely, the image data IMG indicating the image in which the target object OBJ is captured).

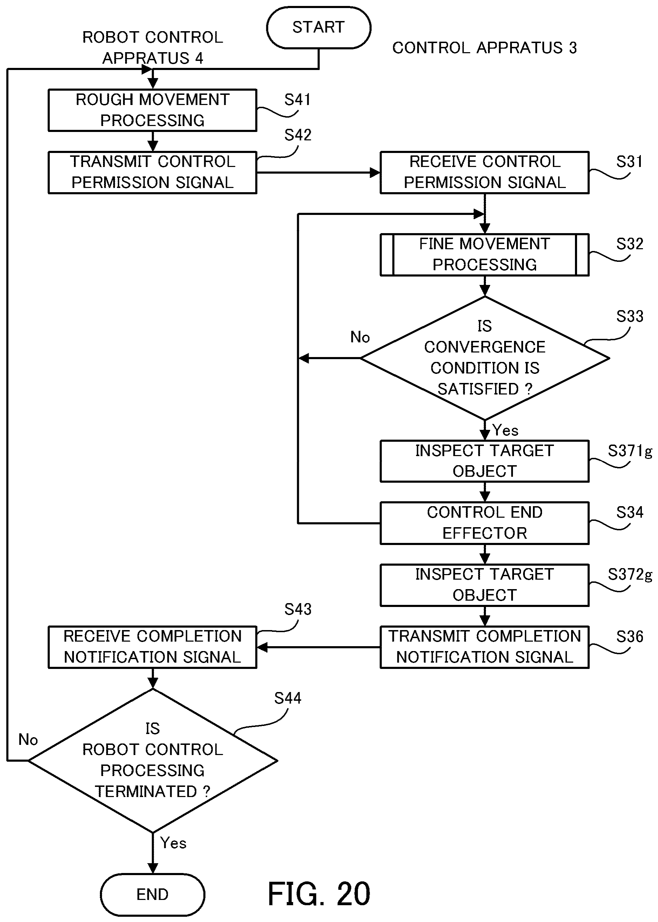

For example, as illustrated in FIG. 20 that is a flowchart illustrating a flow of robot control processing in an eighth modified example, the control apparatus 3 may inspect the target object OBJ after the convergence condition is satisfied (the step S33: Yes). Namely, the control apparatus 3 may inspect the target object OBJ after the fine movement processing is completed (the step S33: Yes). In this case, the control apparatus 3 may inspect the target object OBJ based on the image data IMG acquired for performing the fine movement processing. The control apparatus 3 may inspect the target object OBJ based on the image data IMG acquired separately from the image data IMG acquired for performing the fine movement processing. For example, the control apparatus 3 may inspect the target object OBJ based on the image data IMG acquired for inspecting the target object OBJ.

Note that the target object OBJ inspected by the control apparatus 3 may be the same as the target object OBJ that is a target for the fine movement processing (namely, the target object OBJ imaged by the imaging apparatus 21 for the fine movement processing). Alternatively, the target object OBJ inspected by the control apparatus 3 may be different from the target object OBJ that is the target for the fine movement processing. As one example, in a case where the embedding process illustrated in FIG. 5(a) to FIG. 6(b) is performed, the imaging apparatus 21 images the hole HL for the fine movement processing and the control apparatus 3 may inspect the workpiece W embedded into the hole HL after the convergence condition is satisfied.

As a first example, as illustrated in FIG. 20, the control apparatus 3 may inspect the target object OBJ before starting controlling the end effector 5 to perform the predetermined process on the target object OBJ at the step S34 (a step S371g). Namely, the control apparatus 3 may inspect the target object OBJ before the end effector 5 starts the predetermined process (the step S371g). In this case, the control apparatus 3 may be considered to perform a pre-inspection of the target object OBJ.

In a case where the end effector 5 performs the holding process for holding the target object OBJ as described above, the control apparatus 3 may inspect the target object OBJ that should be held by the end effector 5 at the step S371g. Namely, the control apparatus 3 may inspect the target object OBJ on which the holding process should be performed at the step S371g.

For example, the control apparatus 3 may inspect whether or not the target object OBJ that should be held by the end effector 5 is in a designed state (namely, an expected state). The designed state may include a state in which it can be held by the end effector 5. In this case, the control apparatus 3 may inspect whether or not the target object OBJ that should be held by the end effector 5 is in the state in which it can be held by the end effector 5.

The state of the target object OBJ may include a shape of the target object OBJ. In this case, the control apparatus 3 may inspect whether or not the target object OBJ that should be held by the end effector 5 has a designed shape (namely, an expected shape). The designed shape may include a shape that can be held by the end effector 5. In this case, the control apparatus 3 may inspect whether or not the target object OBJ that should be held by the end effector 5 has the shape that can be held by the end effector 5. For example, a state in which the target object OBJ does not have the designed shape may include a state in which a part of the target object OBJ is missing or deformed.

The state of the target object OBJ may include a size of the target object OBJ. In this case, the control apparatus 3 may inspect whether or not the target object OBJ that should be held by the end effector 5 has a designed size (namely, an expected size). The designed size may include a size that can be held by the end effector 5. In this case, the control apparatus 3 may inspect whether or not the target object OBJ that should be held by the end effector 5 has the size that can be held by the end effector 5.

The state of the target object OBJ may include the pose of the target object OBJ. In this case, the control apparatus 3 may inspect whether or not the target object OBJ that should be held by the end effector 5 takes a designed pose (namely, an expected pose). The designed pose may include a pose that can be held by the end effector 5. In this case, the control apparatus 3 may inspect whether or not the target object OBJ that should be held by the end effector 5 takes the pose that can be held by the end effector 5.

In a case where the end effector 5 holding the first target object OBJ performs the releasing process for releasing the first target object OBJ onto the second target object OBJ as described above, the control apparatus 3 may inspect the first target object OBJ held by the end effector 5 at the step S371g. Namely, the control apparatus 3 may inspect the first target object OBJ on which the releasing process is performed at the step S371g.

For example, the control apparatus 3 may inspect whether or not the first target object OBJ held by the end effector 5 is in the designed state (namely, the expected state). For example, the control apparatus 3 may inspect whether or not the first target object OBJ held by the end effector 5 has the designed shape (namely, the expected shape). For example, the control apparatus 3 may inspect whether or not the first target object OBJ held by the end effector 5 has the designed size (namely, the expected size). For example, the control apparatus 3 may inspect whether or not the first target object OBJ held by the end effector 5 has the designed pose (namely, the expected pose).

In a case where the end effector 5 holding the first target object OBJ performs the releasing process for releasing the first target object OBJ on the second target object OBJ ss described above, the control apparatus 3 may inspect the second target object OBJ on which the first target object OBJ held by the end effector 5 is released at the step S371g. Namely, the control apparatus 3 may inspect the second target object OBJ on which the releasing process is performed at the step S371g.

For example, the control apparatus 3 may inspect whether or not the second target object OBJ is in a designed state (namely, an expected state). The designed state may include a state in which the first target object OBJ can be released (for example, the first target object OBJ can be placed, embedded or inserted). In this case, the control apparatus 3 may inspect whether or not the second target object OBJ is in the state in which the first target object OBJ can be released (for example, the first target object OBJ can be placed, embedded or inserted).

The state of the second target object OBJ may include a shape of the second target object OBJ. In this case, the control apparatus 3 may inspect whether or not the second target object OBJ has a designed shape (namely, an expected shape). The designed shape may include a shape that allows the first target object OBJ to be released (for example, the first target object OBJ to be placed, embedded or inserted). In this case, the control apparatus 3 may inspect whether or not the second target object OBJ has the shape that allows the first target object OBJ to be released (for example, the first target object OBJ to be placed, embedded or inserted).

The state of the second target object OBJ may include a size of the second target object OBJ. In this case, the control apparatus 3 may inspect whether or not the second target object OBJ has a designed size (namely, an expected size). The designed size may include a size that allows the first target object OBJ to be released (for example, the first target object OBJ to be placed, embedded or inserted). In this case, the control apparatus 3 may inspect whether or not the second target object OBJ has the size that allows the first target object OBJ to be released (for example, the first target object OBJ to be placed, embedded or inserted).

The state of the second target object OBJ may include the pose of the second target object OBJ. In this case, the control apparatus 3 may inspect whether or not the second target object OBJ takes a designed pose (namely, an expected pose). The designed pose may include a pose that allows the first target object OBJ to be released (for example, the first target object OBJ to be placed, embedded or inserted). In this case, the control apparatus 3 may inspect whether or not the second target object OBJ takes the pose that allows the first target object OBJ to be released (for example, the first target object OBJ to be placed, embedded or inserted).

In a case where the end effector 5 performs the releasing process for releasing (for example, embedding or inserting) the plurality of first target objects OBJ on the plurality of target parts of the second target object OBJ, respectively, as described above, the control apparatus 3 may inspect the plurality of target parts of the second target object OBJ on which the end effector 5 releases the plurality of first target objects OBJ, respectively. Namely, an inspection of the target object OBJ may include an inspection of the target part of the target object OBJ. In other words, the inspection of the target object OBJ may include an inspection of a part of the target object OBJ.

As an example, in a case where the end effector 5 performs the releasing process for inserting the first workpiece W1, which is the first target object OBJ, into the hole HL formed in the second workpiece W2, which is the second target object OBJ, as illustrated in FIG. 5 and so on, the part in which the hole HL is formed is used as an example of the target part. In this case, the control apparatus 3 may inspect whether or not the hole HL is in a designed state (namely, an expected state). The designed state may include a state that allows the first workpiece W1 to be inserted thereto. In this case, the control apparatus 3 may inspect whether or not the hole HL is in the state that allows the first workpiece W1 to be inserted thereto. As one example, the control apparatus 3 may inspect whether or not the hole HL is present. For example, the control apparatus 3 may inspect whether or not the hole HL has a designed shape (namely, an expected shape). The designed shape may include a shape that allows the first workpiece W1 to be inserted thereto. In this case, the control apparatus 3 may inspect whether or not the hole HL has the shape that allows the first workpiece W1 to be inserted thereto. For example, the control apparatus 3 may inspect whether or not the hole HL has a designed size (namely, an expected size). The designed size may include a size that allows the first workpiece W1 to be inserted thereto. In this case, the control apparatus 3 may inspect whether or not the hole HL has the size that allows the first workpiece W1 to be inserted thereto. For example, the control apparatus 3 may inspect whether or not the hole HL has a designed pose (namely, an expected pose). The designed pose may include a pose that allows the first workpiece W1 to be inserted thereto. In this case, the control apparatus 3 may inspect whether or not the hole HL takes the pose that allows the first workpiece W1 to be inserted thereto.

The control apparatus 3 may determine whether or not an abnormality occurs in the target object OBJ by inspecting the target object OBJ. For example, it may be determined that the abnormality occurs in the target object OBJ in a case where the state of the target object OBJ is not the designed state. As one example, it may be determined that the abnormality occurs in the target object OBJ in a case where the target object OBJ does not have the designed shape. As one example, it may be determined that the abnormality occurs in the target object OBJ in a case where the target part of the target object OBJ does not have the designed shape. As one example, it may be determined that the abnormality occurs in the target object OBJ in a case where the target object OBJ does not have the designed size. As one example, it may be determined that the abnormality occurs in the target object OBJ in a case where the target part of the target object OBJ does not have the designed size. As one example, it may be determined that the abnormality occurs in the target object OBJ in a case where the target object OBJ does not take the designed pose. As one example, it may be determined that the abnormality occurs in the target object OBJ in a case where the target part of the target object OBJ does not take the designed pose.

In a case where it is determined as a result of the inspection at the step S371g that the abnormality does not occur in the target object OBJ, the control apparatus 3 may start the processing for controlling the end effector 5 to perform the predetermined process on the target object OBJ. On the other hand, in a case where it is determined as a result of the inspection at the step S371g that the abnormality occurs in the target object OBJ, the control apparatus 3 may not start the processing for controlling the end effector 5 to perform the predetermined process on the target object OBJ. In this case, the control apparatus 3 may notify the user that the abnormality occurs in the target object OBJ. However, in a case where it is determined as a result of the inspection at the step S371g that the abnormality occurs in the target object OBJ, the control apparatus 3 may start the processing for controlling the end effector 5 to perform the predetermined process on the target object OBJ.

As a second example, as illustrated in FIG. 20, the control apparatus 3 may inspect the target object OBJ after completing controlling the end effector 5 to perform the predetermined process on the target object OBJ at the step S34 (a step S372g). Namely, the control apparatus 3 may inspect the target object OBJ after the end effector 5 completes the predetermined process (the step S372g). In this case, the control apparatus 3 may be considered to perform a postinspection of the target object OBJ. In this case, the control apparatus 3 may inspect the target object OBJ based on the image data IMG that is acquired after the end effector 5 completes controlling the end effector 5 to perform the predetermined process on the target object OBJ at the step S34.

In a case where the end effector 5 performs the holding process for holding the target object OBJ as described above, the control apparatus 3 may inspect the target object OBJ being held by the end effector 5 at the step S371g. For example, the control apparatus 3 may inspect whether or not the target object OBJ is being held properly by the end effector 5. For example, the control apparatus 3 may inspect whether the target object OBJ being held by the end effector 5 has a designed pose (namely, an expected pose).

In a case where the end effector 5 holding the first target object OBJ performs the releasing process for releasing the first target object OBJ onto the second target object OBJ as described above, the control apparatus 3 may inspect at least one of the first target object OBJ released by the end effector 5 and the second target object OBJ on which the first target object OBJ has been released at the step S371g. For example, the control apparatus 3 may inspect whether or not the first target object OBJ has been properly released from the end effector 5. As one example, the control apparatus 3 may inspect whether or not the first target object OBJ is present on the second target object OBJ. Namely, the control apparatus 3 may inspect whether or not the released first target object OBJ is present on the second target object OBJ. For example, the control apparatus 3 may inspect whether or not the released first target object OBJ has been released at an designed position (namely, an expected position). For example, the control apparatus 3 may inspect whether or not the released first target object OBJ has been released at the designed position (namely, the expected position) of the second target object OBJ. For example, the control apparatus 3 may inspect whether or not the released first target object OBJ is embedded (inserted) into the expected position of the second target object OBJ. For example, the control apparatus 3 may inspect whether or not the released first target object OBJ has a designed pose (namely, an expected pose). For example, the control apparatus 3 may inspect whether or not the released first target object OBJ has the designed pose (namely, the expected pose) with respect to the second target object OBJ. For example, the control apparatus 3 may inspect whether or not a positional relationship between the released first target object OBJ and the second target object OBJ is a designed positional relationship (namely, an expected positional relationship). For example, the control apparatus 3 may inspect whether or not a postural relationship between the released first target object OBJ and the second target object OBJ is a designed postural relationship (namely, an expected postural relationship).

In a case where the end effector 5 machines the target object OBJ as described in the sixth modified example, the control apparatus 3 may inspect whether or not a shape of the machined target object OBJ (namely, a shape after the machining) is a designed shape (namely, an expected shape). The control apparatus 3 may inspect whether or not a size of the machined target object OBJ (namely, a size after the machining) is a designed size (namely, an expected size). The control apparatus 3 may inspect whether or not the target object OBJ has been machined in an expected machining aspect. Alternatively, even in a case where the end effector 5 processes the target object OBJ by irradiating the target object OBJ with processing light, the control apparatus 3 may perform the same inspection.

Note that the inspection at the step S372g may be considered to be equivalent to an inspection of a result of the predetermined process performed by the end effector 5. For example, in a case where the end effector 5 performs the holding process for holding the target object OBJ, each of the processing for inspecting whether or not the target object OBJ is being held properly by the end effector 5 and the processing for inspecting whether or not the pose of the target object OBJ being held by the end effector 5 is the designed pose (namely, the expected pose) may be considered to be equivalent to a processing for inspecting the result of the holding process. For example, in a case where the end effector 5 holding the first target object OBJ performs the releasing process for releasing the first target object OBJ on the second target object OBJ, ach of the processing for inspecting whether or not the first target object OBJ has been properly released from the end effector 5, the processing for inspecting whether or not the released first target object OBJ has been released at the designed position (namely, the expected position), the processing for inspecting whether or not the released first target object OBJ has been released at the designed position (namely, the expected position) of the second target object OBJ, the processing for inspecting whether or not the released first target object OBJ has been embedded (inserted) into the expected position of the second target object OBJ, the processing for inspecting whether or not the released first target object OBJ takes the designed pose (namely, the expected pose), the processing for inspecting whether or not the released first target object OBJ takes the designed pose (namely, the intended pose) with respect to the second target object OBJ, the processing for inspecting whether or not the positional relationship between the released first target object OBJ and the second target object OBJ on which the second target object OBJ has been released is the designed positional relationship (namely, the expected positional relationship), and the processing for inspecting whether or not the postural relationship between the released first target object OBJ and the second target object OBJ on which the second target object OBJ has been released is the designed postural relationship (for example, the expected postural relationship) may be considered to be equivalent to the processing for inspecting the result of the releasing process. For example, in a case where the end effector 5 machines the target object OBJ, the processing for inspecting whether or not the shape of the machined target object OBJ (namely, the shape after the machining) is the expected shape, the processing for inspecting whether or not the size of the machined target object OBJ (namely, the size after the machining) is the expected size, and the processing for inspecting whether or not the target object OBJ has been machined in the expected machining aspect may be considered to be equivalent to the processing for inspecting the result of the machining process. Similarly, even in a case where the end effector 5 processes the target object OBJ by using processing light, the inspection described above may be considered to be equivalent to the inspection of the result of the processing using the processing light.

The control apparatus 3 may determine whether or not the end effector 5 has normally completed the predetermined process by inspecting the target object OBJ. Namely, the control apparatus 3 may determine whether or not a result of the process performed by the end effector 5 is the same as an expected result by inspecting the target object OBJ. In a case where it is determined as a result of the inspection at the step S372g that the end effector 5 has not normally completed the predetermined process (namely, the result of the process performed by the end effector 5 is not the expected result), the control apparatus 3 may notify the user that the end effector 5 has not normally completed the predetermined process.

Note that the control apparatus 3 inspects the target object OBJ after the convergence condition is satisfied in the above-described description. Namely, the control apparatus 3 inspects the target object OBJ after the fine movement processing is completed. However, a period during which the control apparatus 3 inspects the target object OBJ is not limited to the above-described period. For example, the control apparatus 3 may inspect the target object OBJ in a period during which the fine movement processing is performed. For example, the control apparatus 3 may inspect the target object OBJ before the fine movement processing is started. For example, the control apparatus 3 may inspect the target object OBJ after the rough movement processing is completed and before the fine movement processing is started. For example, the control apparatus 3 may inspect the target object OBJ in a period during which the rough movement processing is performed. For example, the control apparatus 3 may inspect the target object OBJ before the rough movement processing is started.

Moreover, in the above-described description, the control apparatus 3 inspects the target object OBJ. However, an apparatus that is different from the control apparatus 3 may acquire the image data IMG from the imaging apparatus 21 and inspect the target object OBJ based on the acquired image data IMG. For example, the robot control apparatus 4 may acquire the image data IMG from the imaging apparatus 21 and inspect the target object OBJ based on the acquired image data IMG.

Moreover, in the above-described description, the control apparatus 3 inspects the target object OBJ based on the image data IMG generated by the imaging apparatus 21. However, the control apparatus 3 may inspect the target object OBJ by a method that is different from a method for inspecting the target object OBJ based on the image data IMG generated by the imaging apparatus 21. For example, the control apparatus 3 may inspect the target object OBJ based on a measured result of the target object OBJ by a measurement apparatus 24g that is configured to measure the target object OBJ. The measurement apparatus 24g may be a measurement apparatus of the robot system SYS, or may be a measurement apparatus independent of the robot system SYS.

The measurement apparatus 24g may be configured to measure a characteristic of the target object OBJ. At least one of a size of the target object OBJ, a position of the target object OBJ, a distance from the measurement apparatus 24g to the target object OBJ, a shape of the target object OBJ, an optical characteristic (for example, at least one of a reflectance and a transmittance) of the target object OBJ, an electrical characteristic (for example, at least one of an electrical resistance and an electrical conductivity) of the target object OBJ, and a thermal characteristic (for example, at least one of a temperature and a thermal conductivity) of the target object OBJ is one example of the characteristic of the target object OBJ.

The measurement apparatus 24g may be any measurement apparatus as long as it is configured to measure the target object OBJ. For example, the measurement apparatus 24g may be configured to measure the target object OBJ by contacting with the target object OBJ. As one example, the measurement apparatus 24g may be configured to measure the target object OBJ by using a probe that is configured to contact with the target object OBJ. For example, the measurement apparatus 24g may be configured to measure the target object OBJ by irradiating the target object OBJ with measurement light and detecting returned light (for example, at least one of reflected light, scattered light, diffracted light, and transmitted light) from the target object OBJ. The measurement apparatus 24g may be an imaging apparatus including a plurality of monocular cameras. As one example, the measurement apparatus 24g may be a stereo camera including two monocular cameras.

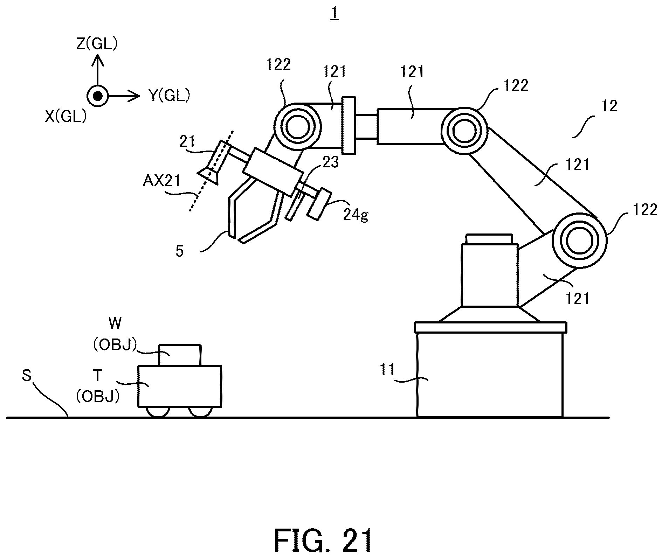

The measurement apparatus 24g may be attached to the robot 1 (especially, the robot arm 12) as illustrated in FIG. 21 that illustrates one example of a configuration of the robot system SYS in the eighth modified example. In this case, the robot 1 may move the measurement apparatus 24g. For example, the robot 1 may move the measurement apparatus 24g so that the measurement apparatus 24g moves to a position at which the measurement apparatus 24g can measure the target object OBJ. Alternatively, the measurement apparatus 24g may be attached to or placed on an apparatus that is different from the robot 1 and that is configured to move the measurement apparatus 24g (for example, an Automatic Guided Vehicle or a robot different from the robot 1). Alternatively, the measurement apparatus 24g may not be movable. For example, the measurement apparatus 24g may be attached to a fixed member that is different from the robot 1. As one example, the measurement apparatus 24g may be attached to a member that is fixed to a position from which it can view the target object OBJ from above.

Moreover, even in a case where the robot control apparatus 4 does not perform the rough movement processing, the control apparatus 3 may inspect the target object OBJ. Namely, in a case where the control apparatus 3 starts the fine movement processing while the robot control apparatus 4 does not perform the rough movement processing, the control apparatus 3 may inspect the target object OBJ. Alternatively, even in a case where the control apparatus 3 does not perform the fine movement processing, the control apparatus 3 may inspect the target object OBJ. Namely, in a case where the robot control apparatus 4 starts the rough movement processing while the control apparatus 3 does not perform the fine movement processing, the control apparatus 3 may inspect the target object OBJ. Alternatively, the control apparatus 3 may inspect the target object OBJ independently of the control of the robot 1. Namely, the control apparatus 3 may inspect the target object OBJ independently of the fine movement processing by the control apparatus 3 and the rough movement processing by the robot control apparatus 4.

### (4-8) Eighth Modified Example

As described above, the control apparatus 3 may perform the fine movement processing in a situation where the target object OBJ is moved (is transported) by the transport apparatus. In this case, in a case where the target object OBJ moved (transported) by the transport apparatus is positioned outside the imaging field of view of the imaging apparatus 21, the control apparatus 3 usually waits for a predetermined time until the target object OBJ moved (transported) by the transport apparatus moves from an outside of the imaging field of view of the imaging apparatus 21 into an inside of the imaging field of view of the imaging apparatus 21. Then, after the target object OBJ moved (transported) by the transport apparatus has moved into the imaging field of view of the imaging apparatus 21, the control apparatus 3 generates the control signal for controlling the robot 1 so that the end effector 5 follows the target object OBJ based on the image data IMG of the target object OBJ that has moved into the imaging field of view of the imaging apparatus 21.

Here, in a case where the transport apparatus for moving (transporting) the target object OBJ has stopped (for example, has stopped unintentionally or has stopped abnormally), there is a possibility that the target object OBJ, which would have been transported so as to move into the imaging field of view of the imaging apparatus 21 if the transport apparatus had not stopped, stops outside the imaging field of view of the imaging apparatus 21. As a result, there is a possibility that the target object OBJ, which would normally move into the imaging field of view of the imaging apparatus 21 within a certain time, does not move into the imaging field of view of the imaging apparatus 21 even after the certain time elapses. In this case, the control apparatus 3 cannot calculate at least one of the position and the pose of the target object OBJ as long as the transport apparatus continues to stop.

Therefore, in the eighth modified example, in a case where at least one of the position and the pose of the target object OBJ cannot be calculated, the control apparatus 3 may perform a processing for generating the control signal for controlling the robot 1 to move the imaging apparatus 21 relative to the target object OBJ that has stopped (namely, to move the imaging apparatus 21 together with the end effector 5) as at least a part of the fine movement processing. For example, the control apparatus 3 may perform the processing for moving the imaging apparatus 21 so that the target object OBJ that has stopped is positioned in the imaging field of view of the imaging apparatus 21 as at least a part of the fine movement processing. Namely, the control apparatus 3 may perform the processing for generating the control signal for controlling the robot 1 so that the target object OBJ that has stopped is positioned in the imaging field of view of the imaging apparatus 21 that moves, as at least a part of the fine movement processing.

However, in a case where the target object OBJ is stopped in a situation where the target object OBJ is positioned outside the imaging field of view of the imaging apparatus 21, the target object OBJ is not captured in the image indicated by the image data IMG generated by the imaging apparatus 21. Therefore, information related to a position at which the target object OBJ is stopped is unknown to the control apparatus 3. Therefore, there is a possibility that the control apparatus 3 cannot generate the control signal for controlling the robot 1 to move the imaging apparatus 21 relative to the target object OBJ that has stopped, based on the image data IMG. Especially, there is a possibility that the control apparatus 3 cannot generate the control signal for controlling the robot 1 so that the target object OBJ that has stopped is positioned in the imaging field of view of the imaging apparatus 21 by moving the imaging apparatus 21 relative to the target object OBJ that has stopped.

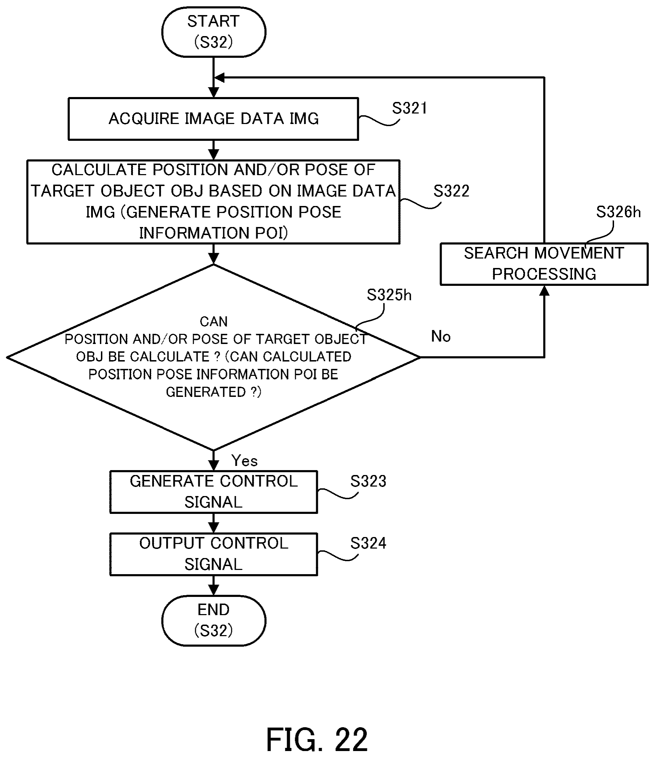

Therefore, in the eighth modified example, the control apparatus 3 may perform, as at least a part of the fine movement processing, a processing for generating the control signal for controlling the robot 1 to move the imaging apparatus 21 relative to the target object OBJ that has stopped based on a transport state of the target object OBJ by the transport apparatus instead of the image data IMG. Next, with reference to FIG. 22, the fine movement processing in the eighth modified example, which includes the processing for generating the control signal based on the transport state of the target object OBJ by the transport apparatus, will be described. FIG. 22 is a flowchart that illustrates a flow of the fine movement processing in the eighth modified example. Note that the transport state may be referred to as a movement state of the target object OBJ by the transport apparatus.

As illustrated in FIG. 22, in the eighth modified example, the control apparatus 3 (especially, the position pose calculation unit 311) acquires the image data IMG from the imaging apparatus 21 (the step S321) and calculates at least one of the position and the pose of the target object OBJ based on the image data IMG (the step S322).

Then, the control apparatus 3 (especially, the signal generation unit 312) determines whether at least one of the position and the pose of the target object OBJ could be calculated at the step S322 (a step S325h). Namely, the signal generation unit 312 determines whether or not the position pose information POI could be generated at the step S322 (the step S325h).

In a case where it is determined as a result of the determination at the step S325h that at least one of the position and the pose of the target object OBJ could be calculated (namely, the position pose information POI could be calculated) (the step S325h: Yes), it is unlikely that the target object OBJ is not captured in the image indicated by the image data IMG that is used to calculate at least one of the position and the pose of the target object OBJ. Namely, it is unlikely that the target object OBJ is positioned outside the imaging field of view of the imaging apparatus 21. Therefore, in this case, the control apparatus 3 may not perform the processing for generating the control signal for controlling the robot 1 to move the imaging apparatus 21 relative to the target object OBJ that has stopped based on the transport state of the target object OBJ by the transport apparatus. Therefore, the signal generation unit 312 may generate the control by signal using the position pose information POI generated at the step S322 (the step S323) and output the generated control signal (the step S324).

On the other hand, in a case where it is determined as a result of the determination at the step S325h that at least one of the position and the pose of the target object OBJ could not be calculated (namely, the position pose information POI could not be calculated) (the step S325h: No), it is likely that the target object OBJ is not captured in the image indicated by the image data IMG that is used to calculate at least one of the position and the pose of the target object OBJ. Namely, it is likely that the target object OBJ is positioned outside the imaging field of view of the imaging apparatus 21. Therefore, in this case, the control apparatus 3 performs the processing for generating the control signal for controlling the robot 1 to move the imaging apparatus 21 relative to the target object OBJ that has stopped, based on the transport state of the target object OBJ by the transport apparatus (a step S326h). More specifically, the control apparatus 3 performs the processing for generating the control signal for controlling the robot 1 to move the imaging apparatus 21 relative to the target object OBJ that has stopped, based on the transport state of the target object OBJ by the transport apparatus before the transport apparatus stops (namely, before it is determined that at least one of the position and the pose of the target object OBJ could not be calculated) (the step S326h). Furthermore, the control apparatus 3 outputs the generated control signal to the robot control apparatus 4 or the robot 1 (the step S326h). As a result, the robot 1 moves the imaging apparatus 21.

Specifically, as described above, the signal generation unit 312 performs the processing for generating the control signal for controlling the robot 1 so that the target object OBJ that has stopped is positioned in the imaging field of view of the imaging apparatus 21 that moves at the step S326h. Namely, the control apparatus 3 may be considered to perform the processing for generating the control signal for controlling the robot 1 so that the imaging apparatus 21 searches for the target object OBJ that has stopped at the step S312. Therefore, in the below-described description, the processing performed at the step S326h is referred to as a search movement processing. In this case, the fine movement processing may be considered to include the search movement processing. The control apparatus 3 may be considered to perform the search movement processing as a part of the fine movement processing.

In order to search for the target object OBJ that has stopped, the signal generation unit 312 may use a transport aspect of the target object OBJ by the transport apparatus as the transport state of the target object OBJ. In this case, the signal generation unit 312 may acquire transport information related to the transport aspect of the target object OBJ by the transport apparatus. For example, the signal generation unit 312 may acquire the transport information from the transport apparatus or from a control apparatus that controls the transport apparatus. Then, the signal generation unit 312 may generate the control signal for controlling the robot 1 so that the moving imaging apparatus 21 is positioned in the imaging field of view based on the acquired transport information.

The transport aspect of the target object OBJ by the transport apparatus may include a transport direction of the target object OBJ by the transport apparatus. In this case, the signal generation unit 312 may generate the control signal based on the transport direction of the target object OBJ by the transport apparatus. Specifically, the signal generation unit 312 may generate the control signal for controlling the robot 1 so that the imaging apparatus 21 moves toward a movement direction that is determined based on the transport direction of the target object OBJ. For example, the signal generation unit 312 may generate the control signal for controlling the robot 1 so that the imaging apparatus 21 moves toward the movement direction that is opposite to the transport direction of the target object OBJ. For example, in a case where the transport apparatus transports the target object OBJ toward the +X side along the X-axis direction, the control apparatus 3 may generate the control signal for controlling the robot 1 so that the imaging apparatus 21 moves toward the -X side along the X-axis direction. For example, in a case where the transport apparatus transports the target object OBJ toward the -X side along the X-axis direction, the control apparatus 3 may generate the control signal for controlling the robot 1 so that the imaging apparatus 21 moves toward the +X side along the X-axis direction. For example, in a case where the transport apparatus transports the target object OBJ toward the +Y side along the X-axis direction, the control apparatus 3 may generate the control signal for controlling the robot 1 so that the imaging apparatus 21 moves toward the -Y side along the X-axis direction. For example, in a case where the transport apparatus transports the target object OBJ toward the -Y side along the X-axis direction, the control apparatus 3 may generate the control signal for controlling the robot 1 so that the imaging apparatus 21 moves toward the +Y side along the X-axis direction. Note that the transport direction may be referred to as a movement direction of the target object OBJ. Namely, the transport aspect may include a movement direction.

As a result, the target object OBJ that has stopped is positioned in the imaging field of view of the imaging apparatus 21 at a certain timing in a period during which the robot 1 moves the imaging apparatus 21, by the robot 1 moving the imaging apparatus 21. As a result, the imaging apparatus 21 can generate the image data IMG indicating the image in which the target object OBJ is captured by imaging the target object OBJ (the step S321). As a result, the control apparatus 3 can calculate at least one of the position and the pose of the target object OBJ (the step S322) and generate the control signal based on the calculated result of at least one of the position and the pose of the target object OBJ (the step S323).

However, even in a case where the target object OBJ that has stopped is positioned in the imaging field of view of the imaging apparatus 21, there is a possibility that the robot 1 cannot perform the predetermined process by using the end effector 5 in a case where the transport apparatus continues to be stopped. This is because the robot 1 is configured to perform the predetermined process by using the end effector 5 in a situation where the target object OBJ moves. Therefore, the control apparatus 3 may generate the control signal after the target object OBJ that has stopped is positioned in the imaging field of view of the imaging apparatus 21 and after the transport apparatus that has stopped re-operates. Namely, the control apparatus 3 may start moving the end effector 5 after the target object OBJ that has stopped is positioned in the imaging field of view of the imaging apparatus 21 and after the transport apparatus that has stopped re-operates.

The transport aspect of the target object OBJ by the transport apparatus may include a transport distance of the target object OBJ by the transport apparatus in addition to or instead of the transport direction of the target object OBJ by the transport apparatus. The transport distance of the target object OBJ by the transport apparatus may mean a transport distance that is required for the transport apparatus to transport the target object OBJ so that the target object OBJ moves into the imaging field of view of the imaging apparatus 21 assuming that the transport apparatus is not stopped. Then, the control apparatus 3 may repeat the processing for generating the control signal for controlling the robot 1 to move the imaging apparatus 21 along a desired direction by a movement distance, which is equal to the transport distance of the target object OBJ, from a current position of the imaging apparatus 21 (specifically, the position of the imaging apparatus 21 at a timing at which it is determined that at least one of the position and the pose of the target object OBJ could not be calculated) while changing the desired direction. For example, the control apparatus 3 may perform: a processing for generating the control signal for controlling the robot 1 to move the imaging apparatus 21 toward the +X side along the X-axis by the movement distance that is equal to the transport distance of the target object OBJ from the current position of the imaging apparatus 21; a processing for generating the control signal for controlling the robot 1 to move the imaging apparatus 21 toward the - X side along the X-axis by the movement distance that is equal to the transport distance of the target object OBJ from the current position of the imaging apparatus 21; a processing for generating the control signal for controlling the robot 1 to move the imaging apparatus 21 toward the +Y side along the Y-axis by the movement distance that is equal to the transport distance of the target object OBJ from the current position of the imaging apparatus 21; and a processing for generating the control signal for controlling the robot 1 to move the imaging apparatus 21 toward the -Y side along the Y-axis by the movement distance that is equal to the transport distance of the target object OBJ from the current position of the imaging apparatus 21. Note that the transport distance may be referred to as a movement distance of the target object OBJ. Namely, the transport aspect may include the movement distance.

As a result, the target object OBJ that has stopped is positioned in the imaging field of view of the imaging apparatus 21 at a certain timing at which the imaging apparatus 21 moves along one movement direction of the plurality of movement directions for moving the imaging apparatus 21 (specifically, along a direction directed from the current position of the imaging apparatus 21 toward the target object OBJ that has stopped), by the robot 1 moving the imaging apparatus 21. As a result, the imaging apparatus 21 can generate the image data IMG indicating the image in which the target object OBJ is captured by imaging the target object OBJ (the step S321). As a result, the control apparatus 3 can calculate at least one of the position and the pose of the target object OBJ (the step S322) and generate the control signal based on the calculated result of at least one of the position and the pose of the target object OBJ (the step S323).

However, even in a case where the target object OBJ that has stopped is positioned in the imaging field of view of the imaging apparatus 21, there is a possibility that the robot 1 cannot perform the predetermined process by using the end effector 5 in a case where the transport apparatus continues to be stopped (the target object OBJ continues to be stopped) as already described above. This is because the robot 1 is configured to perform the predetermined process by using the end effector 5 in a situation where the target object OBJ moves. Therefore, the control apparatus 3 may generate the control signal after the target object OBJ that has stopped is positioned in the imaging field of view of the imaging apparatus 21 and after the transport apparatus that has stopped re-operates. Namely, the control apparatus 3 may start moving the end effector 5 after the target object OBJ that has stopped is positioned in the imaging field of view of the imaging apparatus 21 and after the transport apparatus that has stopped re-operates.

The transport aspect of the target object OBJ by the transport apparatus may include a transport speed of the target object OBJ by the transport apparatus in addition to or in place of at least one of the transport direction and the transport distance of the target object OBJ by the transport apparatus. In this case, the signal generation unit 312 may generate the control signal based on the transport speed of the target object OBJ by the transport apparatus. Specifically, the signal generation unit 312 may estimate the transport distance that is required for the transport apparatus to transport the target object OBJ so that the target object OBJ moves into the imaging field of view of the imaging apparatus 21 assuming that the transport apparatus is not stopped, based on the transport speed of the target object OBJ. Then, the control apparatus 3 may repeat the processing for generating the control signal for controlling the robot 1 to move the imaging apparatus 21 along a desired direction by a movement distance, which is equal to the estimated transport distance of the target object OBJ, from the current position of the imaging apparatus 21 while changing the desired direction. Note that the transport speed may be referred to as a movement speed of the target object OBJ. Namely, the transport aspect may include the movement speed.

The control apparatus 3 may generate the control signal based on both the transport direction of the target object OBJ by the transport apparatus and the transport distance (alternatively, the transport speed) of the target object OBJ by the transport apparatus. In this case, the control apparatus 3 may determine, based on the transport direction of the target object OBJ by the transport apparatus, the movement direction along which the imaging apparatus 21 should be moved so that the target object OBJ that has stopped is positioned in the imaging field of view of the imaging apparatus 21. Furthermore, it may determine, based on the transport distance (alternatively, the transport speed) of the target object OBJ by the transport apparatus, the movement distance by which the imaging apparatus 21 should be moved so that the target object OBJ that has stopped is positioned in the imaging field of view of the imaging apparatus 21. Therefore, in this case, the control apparatus 3 may perform the processing for generating the control signal for controlling the robot 1 to move the imaging apparatus 21 toward the movement direction, which is determined based on the transport distance of the target object OBJ, from the current position of the imaging apparatus 21 by the movement distance, which is determined based on the transport distance of the target object OBJ. For example, the control apparatus 3 may perform the processing for generating the control signal for controlling the robot 1 to move the imaging apparatus 21 toward the movement direction, which is opposite to the transport direction of the target object OBJ from the current position of the imaging apparatus 21 by the movement distance, which is the same as the transport distance of the target object OBJ. Namely, the control apparatus 3 may generate the control signal for controlling the robot 1 to move the imaging apparatus 21 in a pinpoint manner so that the target object OBJ that has stopped is positioned in the imaging field of view of the imaging apparatus 21. As a result, the time required for the stopped object OBJ to be positioned in the imaging field of view of the imaging apparatus 21 is reduced, compared to a case where the control signal is generated based on one of the transport direction of the target object OBJ by the transport apparatus and the transport distance (alternatively, the transport speed) of the target object OBJ by the transport apparatus.

Note that the signal generation unit 312 may determine (in this case, estimate) the transport state of the target object OBJ without acquiring the transport information from the transport apparatus or the control apparatus that controls the transport apparatus. For example, the signal generation unit 312 may determine a temporal changed amount of at least one of the position and the pose of the target object OBJ in the past based on the calculated result of at least one of the position and the pose of the target object OBJ calculated in the past. Then, the control apparatus 3 may determine the transport state of the target object OBJ in the past based on the temporal changed amount of at least one of the position and the pose of the target object OBJ in the past. For example, the control apparatus 3 may determine a direction directed from the position of the target object OBJ at one time in the past toward the position of the target object OBJ at another time in the past as the movement direction (namely, the transport direction) of the target object OBJ in a period between the one time and the another time. For example, the control apparatus 3 may determine a difference between the position of the target object OBJ at one time in the past and the position of the target object OBJ at another time in the past as the movement distance (namely, the transport distance) of the target object OBJ in the period between the one time and the another time. As another example, the control apparatus 3 may determine the movement speed (namely, the transport speed) of the target object OBJ in the period between one time and another time by dividing the difference between the position of the target object OBJ at the one time in the past and the position of the target object OBJ at the another time in the past by a time difference between the one time and the another time.

Moreover, even in a case where the robot control apparatus 4 does not perform the rough movement processing, the control apparatus 3 may inspect the target object OBJ. Namely, in a case where the control apparatus 3 starts the fine movement processing while the robot control apparatus 4 does not perform the rough movement processing, the control apparatus 3 may generate the control signal for controlling the robot 1 to move the imaging apparatus 21 relative the target object OBJ that has stopped, based on the transport state of the target object OBJ by the transport apparatus.

Note that the control apparatus 3 performs the search processing for generating the control signal for controlling the robot 1 to move the imaging apparatus 21 relative to the target object OBJ that has stopped, in a case where the target object OBJ does not move from the outside of the imaging field of view of the imaging apparatus 21 into the inside of the imaging field of view of the imaging apparatus 21 due to the stop of the transport apparatus in the above-described description. However, the control apparatus 3 may perform the search processing for generating the control signal for controlling the robot 1 to move the imaging apparatus 21 relative to the target object OBJ that has stopped, in a case where the target object OBJ, which has been positioned in the imaging field of view of the imaging apparatus 21, moves to the outside of the imaging field of view of the imaging apparatus 21 due to the stop of the transport apparatus. Specifically, the target object OBJ, which has been positioned in the imaging field of view of the imaging apparatus 21, does not move to the outside of the imaging field of view of the imaging apparatus 21 even in a case where the transport apparatus stops, as long as the robot 1 is controlled to stop the imaging apparatus 21 in accordance with the stop of the transport apparatus. However, depending on a braking distance of the robot 1 (specifically, a braking distance required to stop the imaging apparatus 21), there is a possibility that the imaging apparatus 21 moves after the transport apparatus stops. In this case, there is a possibility that the target object OBJ, which has been positioned in the imaging field of view of the imaging apparatus 21, moves to the outside of the imaging field of view of the imaging apparatus 21. Therefore, in this case, the control apparatus 3 may perform the search processing for controlling the robot 1 to move the imaging apparatus 21 so that the target object OBJ that has moved to the outside of the imaging field of view moves into the inside of the imaging field of view.

Alternatively, the control apparatus 3 may perform the search processing for generating the control signal for controlling the robot 1 to move the imaging apparatus 21 relative to the target object OBJ independently of the stop of the transport apparatus. The control apparatus 3 may perform the search processing for controlling the robot 1 to move the imaging apparatus 21 so that the target object OBJ moves into the inside of the imaging field of view of the imaging apparatus 21, independently of the stop of the transport apparatus. For example, in a case where the target object OBJ cannot be detected properly by the matching processing, there is a possibility that the target object OBJ is not included in the imaging field of view of the imaging apparatus 21. Therefore, in a case where the target object OBJ cannot be detected properly by the matching processing, the control apparatus 3 may perform the search processing. For example, in a case where an object different from the target object OBJ is mistakenly detected as the target object OBJ by the matching processing, there is a possibility that the target object OBJ is not included in the imaging field of view of the imaging apparatus 21. Therefore, in a case where the object different from the target object OBJ is mistakenly detected as the target object OBJ by the matching processing, the control apparatus 3 may perform the search processing.

### (4-9) Other Modified Example

### (4-9-1) Modified Example of Robot 1

In the above-described description, the end effector 5 (for example, the hand clipper or the vacuum clipper), which performs at least one of the holding process and the releasing process, is attached to the robot arm 12. However, the end effector 5 is not limited to an apparatus that performs at least one of the holding process and the releasing process, and may be an apparatus that performs another process on the target object OBJ.

As one example, a processing apparatus for processing the target object OBJ may be attached to the robot arm 12 as one example of the end effector 5. The processing apparatus may perform at least one of an additive manufacturing for adding a new build object to the target object OBJ, a subtractive manufacturing for removing a part of the target object OBJ, a welding processing for jointing two target objects OBJ, and a cutting processing for cutting the target object OBJ. The processing apparatus may process the target object OBJ by using a tool. In this case, the processing apparatus including the tool may be attached to the robot arm 12. Alternatively, the processing apparatus may process the target object OBJ by irradiating the target object OBJ with an energy beam (for example, light, electromagnetic wave, and charged particle beam). In this case, the processing apparatus including an irradiation apparatus that irradiates the target object OBJ with the energy beam may be attached to the robot arm 12.

The processing apparatus that is one example of the end effector 5 may perform soldering processing for soldering a component to the target object OBJ. The processing apparatus may solder the component to the target object OBJ by using a soldering copper. In this case, the processing apparatus including the soldering copper may be attached to the robot arm 12. Alternatively, the processing apparatus may solder the component to the target object OBJ by irradiating the solder with an energy beam (for example, light, electromagnetic wave, and charged particle beam). In this case, the processing apparatus including an irradiation apparatus that irradiates the target object OBJ with the energy beam may be attached to the robot arm 12.

As another example, a measurement apparatus for measuring the target object OBJ may be attached to the robot arm 12 as one example of the end effector 5. The measurement apparatus may be configured to measure a characteristic of the target object OBJ. At least one of a shape of the target object OBJ, a size of the target object OBJ, a distance from the measurement apparatus to the target object OBJ, a reflectance of the target object OBJ, a transmittance of the target object OBJ, and a temperature of the target object OBJ is one example of the characteristic of the target object OBJ. The measurement apparatus may measure the target object OBJ by using a touch probe. In this case, the measurement apparatus including the touch probe may be attached to the robot arm 12. Alternatively, the measurement apparatus may measure the target object OBJ by irradiating the target object OBJ with an energy beam (for example, light, electromagnetic wave, and charged particle beam). In this case, the measurement apparatus including an irradiation apparatus that irradiates the target object OBJ with the energy beam may be attached to the robot arm 12. Note that the measurement apparatus may be an imaging apparatus including one or more monocular cameras. As one example, the measurement apparatus may be a stereo camera including two monocular cameras.

In a case where at least one of the processing apparatus and the measurement apparatus is attached to the robot arm 12 as one example of the end effector 5, the control apparatus 3 may generate a control signal for controlling an operation of at least one of the processing apparatus and the measurement apparatus. For example, the control apparatus 3 may generate the control signal for controlling a rotation of the tool of the processing apparatus. For example, the control apparatus 3 may generate the control signal for controlling an ON / OFF of the energy beam by the irradiation apparatus of at least one of the processing apparatus and the measurement apparatus.

As another example, a discharging apparatus may be attached to the robot arm 12 as one example of the end effector 5. For example, the discharging apparatus may discharge at least one of an adhesive material, a seal material, a paint material, and a solder. The discharging apparatus may discharge at least one of the adhesive material, the seal material, the paint material, and the solder toward the target object OBJ. For example, the control apparatus 3 may generate a control signal for controlling at least one of ON / OFF of a discharge from the discharging apparatus and an discharged amount. Note that the discharging apparatus may be referred to as a processing apparatus, because it can be said that discharging at least one of the adhesive material, the seal material, the paint material, and the solder to the target object OBJ is processing the target object OBJ.

### (4-9-2) Modified Example of Imaging Unit 2

In the above-described description, the imaging unit 2 includes the illumination apparatus 23. In this case, the illumination apparatus 23 may be integrated with the imaging apparatus 21 or may be an apparatus separated from the imaging apparatus 21. In a case where the illumination apparatus 23 is the apparatus separated from the imaging apparatus 21, the robot 1 may include the illumination apparatus 23 instead of the imaging unit 2. Namely, the illumination apparatus 23 may be attached to the robot 1 independently of the imaging unit 2.

The imaging apparatus 21 of the imaging unit 2 described above is the monocular camera. However, the imaging apparatus 21 is not limited to the monocular camera. For example, the imaging apparatus 21 may be a stereo camera that is configured to image the target object OBJ by using two monocular cameras. Namely, the imaging apparatus 21 may include the two monocular cameras. For example, the imaging apparatus 21 may be a light field camera. For example, the imaging apparatus 21 may be a plenoptic camera. For example, the imaging apparatus 21 may be a multispectral camera. Note that the imaging apparatus 21 may include three or more monocular cameras.

In a case where the imaging apparatus 21 is the stereo camera, the control apparatus 3 may generate three-dimensional position data based on the image data IMG generated by the imaging apparatus 21. The three-dimensional position data may be data indicating a three-dimensional position of the target object OBJ captured in the image data IMG. Especially, the three-dimensional position data may be data indicating a three-dimensional position of each of a plurality of points of the target object OBJ. The three-dimensional position data may be data indicating a three-dimensional shape of the target object OBJ captured in the image data IMG. At least one of depth image data and point cloud data is one example of the three-dimensional position data. Then, the control apparatus 3 may calculate at least one of the position and the pose of the target object OBJ by performing the matching processing using the three-dimensional position data and three-dimensional model data, instead of the matching processing using the image data IMG and the model data MDL described above. Note that the three-dimensional model data is data indicating a three-dimensional model of the target object OBJ.

Alternatively, even in a case where the imaging apparatus 21 is the monocular camera, the control apparatus 3 may generate the three-dimensional position data based on the image data IMG generated by the imaging apparatus 21. Specifically, in order to generate the three-dimensional position data based on the image data IMG generated by imaging apparatus 21 that is the monocular camera, the illumination apparatus 23 may project a desired projection pattern on the target object OBJ by irradiating the target object OBJ with the illumination light. In this case, the illumination apparatus 23 and the illumination light may be referred to as a projection apparatus and projection light, respectively. The desired projection pattern may include a random pattern, for example. The random pattern may be a projection pattern having different patterns in unit irradiation areas, respectively. The random pattern may include a random dot pattern. The desired projection pattern may include a one-dimensional or two-dimensional grid pattern. The desired projection pattern may include another projection pattern. The imaging apparatus 21 may generate the image data IMG by imaging the target object OBJ on which the projection pattern from the illumination apparatus 23 is projected. In this case, the projection pattern captured in the image indicated by the image data IMG reflects at least a part of the three-dimensional shape of the surface of the target object OBJ on which the projection pattern is projected. Therefore, the control apparatus 3 may calculate the three-dimensional shape of at least a part of the surface of the target object OBJ based on the projection pattern captured in the image indicated by the image data IMG. The three-dimensional shape of at least a part of the surface of the target object OBJ substantially indicates the three-dimensional position of each of the plurality of points of the target object OBJ. This is because each of the plurality of points of the target object OBJ is included in the surface of the target object OBJ. Therefore, a processing for calculating the three-dimensional shape of at least a part of the surface of the target object OBJ may be considered to be substantially equivalent to a processing for calculating the three-dimensional position of each of the plurality of points of the target object OBJ. Therefore, the control apparatus 3 may generate the three-dimensional position data WSD based on the image data IMG generated by the imaging apparatus 21 that is the monocular camera. Then, the control apparatus 3 may calculate at least one of the position and the pose of the target object OBJ by performing the matching processing using the three-dimensional position data and the three-dimensional model data.

Note that even in a case where the imaging apparatus 21 is the stereo camera, the illumination apparatus 23 may project the desired projection pattern on the target object OBJ by irradiating the target object OBJ with the illumination light. Then, the control apparatus 3 may generate the three-dimensional position data WSD based on the image data IMG generated by the imaging apparatus 21 that is the stereo camera.

In the above-described description, the imaging unit 2 includes a single imaging apparatus 21. However, the imaging unit 2 may include a plurality of imaging apparatuses 21. For example, the imaging unit 2 may include a first imaging apparatus 21, which is a monocular camera, and a second imaging apparatus 21, which is a stereo camera. In this case, the control apparatus 3 may calculate at least one of the position and the pose of the target object OBJ by performing at least one of the matching processing using the image data IMG generated by the first imaging apparatus 21 and the matching processing using the three-dimensional position data generated based on the image data IMG generated by the second imaging apparatus 21.

As an example, the control apparatus 3 may calculate a first provisional value of at least one of the position and the pose of the target object OBJ by performing the matching processing using the image data IMG generated by the first imaging apparatus 21. Furthermore, the control apparatus 3 may calculate a second provisional value of at least one of the position and the pose of the target object OBJ by performing the matching processing using the three-dimensional position data generated based on the image data IMG generated by the second imaging apparatus 21. Then, the control apparatus 3 may calculate a definite value of at least one of the position and the pose of the target object OBJ by performing a calculation processing using the first provisional value and the second provisional value. In this case, the control apparatus 3 may generate the control signal based on the definite value of at least one of the position and the pose of the target object OBJ.

A calculation processing for calculating an average value of the first provisional value and the second provisional value as the definite value is one example of the calculation processing for calculating the definite value by using the first provisional value and the second provisional value. A calculation processing for selecting one provisional value, which corresponds to a higher matching similarity, of the first provisional value and the second provisional value as the definite value is one example of the calculation processing for calculating the definite value by using the first provisional value and the second provisional value. A calculation processing for selecting one provisional value, which corresponds to the matching similarity that is higher than the matching determination threshold value, of the first provisional value and the second provisional value as the definite value is one example of the calculation processing for calculating the definite value by using the first provisional value and the second provisional value.

Alternatively, even in a case where the imaging unit 2 includes a single imaging apparatus 21 that is the stereo camera, the control apparatus 3 may calculate at least one of the position and the pose of the target object OBJ by performing at least one of the matching processing using image data IMG generated by the imaging apparatus 21 and the matching processing using the three-dimensional position data generated based on the image data IMG generated by the imaging apparatus 21. Specifically, the control apparatus 3 may calculate at least one of the position and the pose of the target object OBJ by performing the matching processing using the image data IMG generated by one monocular camera of the imaging apparatus 21. Furthermore, the control apparatus 3 may generate the three-dimensional position data based on the image data IMG generated by the two monocular cameras of the imaging apparatus 21 and calculate at least one of the position and the pose of the target object OBJ by performing the matching processing using the three-dimensional position data.

### (4-9-3) Modified Example of Attachment of Imaging Apparatus 21 and End Effector 5 to Robot 1

In the above-described description, both the imaging unit 2 and the end effector 5 are attached to the same robot 1. However, the imaging unit 2 may be attached to a first robot 1, and the end effector 5 may be attached to a second robot 1 that is different from the first robot 1. For example, the imaging unit 2 may be attached to the robot arm 12 of the first robot 1, and the end effector 5 may be attached to the robot arm 12 of the second robot 1. Namely, the imaging unit 2 and the end effector 5 may be attached to two different robots 1, respectively.

In the above-described description, both the imaging unit 2 and the end effector 5 are attached to the same robot arm 12. Namely, the robot 1 includes the robot arm 12 to which both the imaging unit 2 and the end effector 5 are attached. However, the imaging unit 2 may be attached to a first robot arm 12, and the end effector 5 may be attached to a second robot arm 12 that is different from the first robot arm 12. Namely, the imaging unit 2 and the end effector 5 may be attached to two different robot arms 12, respectively. In this case, the robot 1 may include the first robot arm 12 to which the imaging unit 2 is attached and the second robot arm 12 to which the end effector 5 is attached.

Alternatively, the imaging unit 2 may not be attached to the robot 1. Specifically, at least one of the imaging apparatus 21 and the illumination apparatus 23 may not be attached to the robot 1. For example, the imaging apparatus 21 may be positioned at any position at which the imaging apparatus 21 can image the target object OBJ. For example, the illumination apparatus 23 may be positioned at any position at which the illumination apparatus 23 can illuminate the target object OBJ with the illumination light. As one example, at least one of the imaging apparatus 21 and the illumination apparatus 23 may be positioned on a ceiling of a building in which the robot system SYS is positioned. As one example, at least one of the imaging apparatus 21 and the illumination apparatus 23 may be attached to a support member that is different from the robot 1 and that is configured to support the imaging unit 2. The support member may be a member that is configured to suspend at least one of the imaging apparatus 21 and the illumination apparatus 23 from above the target object OBJ. The support member may include a plurality of leg members each of which extends upwardly from the support surface S and a beam member that connects the plurality of leg members through upper ends or vicinity parts of the plurality of leg members. Note that the robot 1 may be configured to move the support member in a case where the imaging unit 2 is attached to the support member.

### (7) Supplementary Note

Regarding the above-described example embodiment, below described Supplementary notes are further disclosed.

### [Supplementary Note A1]

A control system that generates a control signal for controlling a robot, wherein
a process apparatus, which performs a process on a target object, is attached to the robot,
the robot moves the process apparatus,
the control system includes a control apparatus that generates and outputs the control signal based on image data generated by an imaging apparatus imaging the target object,
the control apparatus performs a second movement processing after a first movement processing is started,
the first movement processing includes a processing for controlling the robot to move the process apparatus without using the image data, and
the second movement processing includes a processing for generating and outputting the control signal for controlling the robot to move the process apparatus based on a calculated result of at least one of a position and a pose of the target object, which is calculated based on the image data generated by the imaging apparatus imaging the target object after the first movement processing is started.

### [Supplementary Note A2]

The control system according to the Supplementary Note A1, wherein
the first movement processing includes a processing for controlling the robot to move the process apparatus in accordance with movement instruction information, without using the image data.

### [Supplementary Note A3]

A control system that generates a control signal for controlling a robot, wherein
a process apparatus, which performs a process on a target object, is attached to the robot,
the robot moves the process apparatus,
the control system includes a control apparatus that generates and outputs the control signal based on image data generated by an imaging apparatus imaging the target object,
the control apparatus performs a second movement processing after a first movement processing is started,
the first movement processing includes a processing for controlling the robot to move the process apparatus in accordance with movement instruction information, and
the second movement processing includes a processing for generating and outputting the control signal for controlling the robot to move the process apparatus based on a calculated result of at least one of a position and a pose of the target object, which is calculated based on the image data generated by the imaging apparatus imaging the target object after the first movement processing is started.

### [Supplementary Note A4]

The control system according to the Supplementary Note A3, wherein
the first movement processing includes a processing for controlling the robot to move the process apparatus in accordance with the movement instruction information, without using the image data.

### [Supplementary Note A5]

The control system according to any one of the Supplementary Notes A1 to A4, wherein
a part of the first movement processing is performed in a period during which the second movement processing is performed.

### [Supplementary Note A6]

The control system according to any one of the Supplementary Notes A1 to A5, wherein
the control apparatus performs a part of the second movement processing in a period during which the first movement processing is performed.

### [Supplementary Note A7]

The control system according to any one of the Supplementary Notes A1 to A6, wherein
the control apparatus performs the second movement processing after the first movement processing.

### [Supplementary Note A8]

The control system according to any one of the Supplementary Notes A1 to A7, wherein
the control apparatus starts the second movement processing after the first movement processing.

### [Supplementary Note A9]

The control system according to any one of the Supplementary Notes A1 to A8, wherein
the second movement processing includes a processing for acquiring the image data, which is generated by the imaging apparatus imaging the target object after the first movement processing is started.

### [Supplementary Note A10]

The control system according to any one of the Supplementary Notes A1 to A9, wherein
the second movement processing includes a processing for generating the image data by imaging the target object using the imaging apparatus after the first movement processing is started.

### [Supplementary Note A11]

The control system according to any one of the Supplementary Notes A1 to A10, wherein
the second movement processing includes a processing for calculating at least one of the position and the pose of the target object based on the image data, which is generated by the imaging apparatus imaging the target object after the first movement processing is started.

### [Supplementary Note A12]

The control system according to the Supplementary Note A11, wherein
the second movement processing includes a processing for generating and outputting the control signal for controlling the robot to move the process apparatus based on the calculated result of at least one of the position and the pose of the target object calculated by the second movement processing.

### [Supplementary Note A13]

The control system according to any one of the Supplementary Notes A1 to A12, wherein
the control apparatus performs the first movement processing, and performs the second movement processing after performing the first movement processing.

### [Supplementary Note A14]

The control system according to any one of the Supplementary Notes A1 to A13, wherein
the control apparatus is a second control apparatus, and
the first movement processing is performed by a first control apparatus that is different from the second control apparatus.

### [Supplementary Note A15]

The control system according to the Supplementary Note A14, wherein
the second control apparatus receives a permission signal, which permits the second control apparatus to control the robot to move the process apparatus by performing the second movement processing, from the first control apparatus after the first control apparatus completes the first movement processing, and
the second control apparatus starts at least a part of the second movement processing after receiving the permission signal from the first control apparatus.

### [Supplementary Note A16]

The control system according to the Supplementary Note A14 or A15, wherein
the second control apparatus receives a permission signal, which permits the second control apparatus to reflect the control signal generated by the second movement processing in the control of the robot, from the first control apparatus after the first control apparatus completes the first movement processing, and
the second control apparatus starts at least a part of the second movement processing after receiving the permission signal from the first control apparatus.

### [Supplementary Note A17]

The control system according to any one of the Supplementary Notes A14 to A16, wherein
the second control apparatus receives a permission signal, which permits the second control apparatus to control the robot to move the process apparatus by performing the second movement processing, from the first control apparatus after the first control apparatus completes the first movement processing,
the second control apparatus starts a processing for generating the control signal as a part of the second movement processing before receiving the permission signal from the first control apparatus, and
the second control apparatus starts a processing for outputting the control signal as a part of the second movement processing after receiving the permission signal from the first control apparatus.

### [Supplementary Note A18]

The control system according to any one of the Supplementary Notes A14 to A17, wherein
the second control apparatus receives a permission signal, which permits the second control apparatus to reflect the control signal generated by the second movement processing in the control of the robot, from the first control apparatus after the first control apparatus completes the first movement processing,
the second control apparatus starts a processing for generating the control signal as a part of the second movement processing before receiving the permission signal from the first control apparatus, and
the second control apparatus starts a processing for outputting the control signal as a part of the second movement processing after receiving the permission signal from the first control apparatus.

### [Supplementary Note A19]

The control system according to any one of the Supplementary Notes A15 to A18, wherein
the second control apparatus does not start at least a part of the second movement processing in a case where it does not receive the permission signal transmitted from the first control apparatus.

### [Supplementary Note A20]

The control system according to any one of the Supplementary Notes A15 to A19, wherein
the second control apparatus repeats at least a part of the second movement processing a plurality of times after the second control apparatus receives the permission signal.

### [Supplementary Note A21]

The control system according to any one of the Supplementary Notes A15 to A20, wherein
the second control apparatus controls the robot to move the process apparatus each time at least a part of the second movement processing is performed after the second control apparatus receives the permission signal.

### [Supplementary Note A22]

The control system according to any one of the Supplementary Notes A15 to A21, wherein
the second control apparatus repeats at least a part of the second movement processing a plurality of times in a period that is after the first control apparatus completes the first movement processing and that is before the first control apparatus newly performs the first movement processing.

### [Supplementary Note A23]

The control system according to any one of the Supplementary Notes A15 to A22, wherein
the second control apparatus repeats at least a part of the second movement processing a plurality of times after the second control apparatus receives the permission signal, even in a case where the second control apparatus does not receive a signal transmitted from the first control apparatus.

### [Supplementary Note A24]

The control system according to any one of the Supplementary Notes A15 to A23, wherein
the second control apparatus repeats at least a part of the second movement processing until a positional relationship between the process apparatus and the target object becomes a predetermined positional relationship in a period that is after the second control apparatus receives the permission signal and that is before the first control apparatus newly performs the first movement processing.

### [Supplementary Note A25]

The control system according to any one of the Supplementary Notes A15 to A24, wherein
the second control apparatus repeats at least a part of the second movement processing until a postural relationship between the process apparatus and the target object becomes a predetermined postural relationship in a period that is after the second control apparatus receives the permission signal and that is before the first control apparatus newly performs the first movement processing.

### [Supplementary Note A26]

The control system according to any one of the Supplementary Notes A15 to A25, wherein
the process apparatus is configured to hold an object, and
the second control apparatus repeats at least a part of the second movement processing until a positional relationship between the object held by the process apparatus and the target object becomes a predetermined positional relationship in a period that is after the second control apparatus receives the permission signal and that is before the first control apparatus newly performs the first movement processing.

### [Supplementary Note A27]

The control system according to any one of the Supplementary Notes A15 to A26, wherein
the process apparatus is configured to hold an object, and
the second control apparatus repeats at least a part of the second movement processing until a postural relationship between the object held by the process apparatus and the target object becomes a predetermined postural relationship in a period that is after the second control apparatus receives the permission signal and that is before the first control apparatus newly performs the first movement processing.

### [Supplementary Note A28]

The control system according to any one of the Supplementary Notes A14 to A27, wherein
the second control apparatus transmits a notification signal, which notifies the first control apparatus that the second control apparatus completes the second movement processing, to the first control apparatus after completing the second movement processing, and
the first control apparatus starts the first movement processing after receiving the notification signal transmitted from the second control apparatus.

### [Supplementary Note A29]

The control system according to the Supplementary Note A28, wherein
the second control apparatus transmits the notification signal to the first control apparatus after repeating at least a part of the second movement processing until a positional relationship between the process apparatus and the target object becomes a predetermined positional relationship, and
the first control apparatus starts the first movement processing after receiving the notification signal transmitted from the second control apparatus.

### [Supplementary Note A30]

The control system according to the Supplementary Note A28 or A29, wherein
the second control apparatus transmits the notification signal to the first control apparatus after repeating at least a part of the second movement processing until a postural relationship between the process apparatus and the target object becomes a predetermined postural relationship, and
the first control apparatus starts the first movement processing after receiving the notification signal transmitted from the second control apparatus.

### [Supplementary Note A31]

The control system according to any one of the Supplementary Notes A28 to A30, wherein
the first control apparatus does not start the first movement processing in a case where it does not receive the notification signal transmitted from the second control apparatus.

### [Supplementary Note A32]

The control system according to any one of the Supplementary Notes A1 to A30, wherein
the control apparatus generates and outputs a signal for controlling the process apparatus to perform the process on the target object after performing the second movement processing.

### [Supplementary Note A33]

The control system according to any one of the Supplementary Notes A1 to A32, wherein
the control apparatus generates and outputs a signal for controlling the process apparatus to perform the process on the target object after a positional relationship between the process apparatus and the target object becomes a predetermined positional relationship.

### [Supplementary Note A34]

The control system according to any one of the Supplementary Notes A1 to A33, wherein
the control apparatus generates and outputs a signal for controlling the process apparatus to perform the process on the target object after a postural relationship between the process apparatus and the target object becomes a predetermined postural relationship.

### [Supplementary Note A35]

The control system according to any one of the Supplementary Notes A1 to A34, wherein
the control apparatus performs, as at least a part of the second movement processing, a processing for generating the control signal for controlling the robot so that a positional relationship between the process apparatus and the target object becomes a predetermined positional relationship by the second movement processing moving the process apparatus.

### [Supplementary Note A36]

The control system according to the Supplementary Note A24, A29, A33 or A35, wherein
the predetermined positional relationship includes a positional relationship in which the process apparatus is positioned at a target process position at which the process apparatus should be positioned when the process apparatus performs the process on the target object.

### [Supplementary Note A37]

The control system according to any one of the Supplementary Notes A1 to A36, wherein
the control apparatus performs, as at least a part of the second movement processing, a processing for generating the control signal for controlling the robot so that a postural relationship between the process apparatus and the target object becomes a predetermined postural relationship.

### [Supplementary Note A38]

The control system according to the Supplementary Note A25, A30, A34 or A37, wherein
the predetermined postural relationship includes a postural relationship in which the process apparatus takes a target process pose that should be taken by the process apparatus when the process apparatus performs the process on the target object.

### [Supplementary Note A39]

The control system according to any one of the Supplementary Notes A1 to A38, wherein
the process apparatus is configured to hold an object, and
the second movement processing includes a processing for generating the control signal for controlling the robot so that a positional relationship between the object held by the process apparatus and the target object becomes a predetermined positional relationship by the second movement processing moving the process apparatus.

### [Supplementary Note A40]

The control system according to any one of the Supplementary Notes A1 to A39, wherein
the process apparatus is configured to hold an object, and
the second movement processing includes a processing for generating the control signal for controlling the robot so that a postural relationship between the object held by the process apparatus and the target object becomes a predetermined postural relationship by the second movement processing moving the process apparatus.

### [Supplementary Note A41]

The control system according to any one of the Supplementary Notes A1 to A40, wherein
the control apparatus performs the second movement processing so that a movement distance of the process apparatus by the second movement processing is shorter than a movement distance of the process apparatus by the first movement processing.

### [Supplementary Note A42]

The control system according to any one of the Supplementary Notes A1 to A41, wherein
the control apparatus performs the second movement processing so that a maximum movement speed of the process apparatus by the second movement processing is slower than a maximum movement speed of the process apparatus by the first movement processing.

### [Supplementary Note A43]

The control system according to any one of the Supplementary Notes A1 to A42, wherein
the control apparatus performs the second movement processing so that an average movement speed of the process apparatus by the second movement processing is slower than an average movement speed of the process apparatus by the first movement processing.

### [Supplementary Note A44]

The control system according to any one of the Supplementary Notes A1 to A43, wherein
the control apparatus performs, as at least a part of the second movement processing, a processing for generating the control signal for controlling the robot so that a difference between a position of the process apparatus at a timing at which the second movement processing is completed and a target process position at which the process apparatus should be positioned when the process apparatus performs the process on the target member is smaller than a difference between a position of the process apparatus at a timing at which the first movement processing is completed and the target process position by the second movement processing moving the process apparatus.

### [Supplementary Note A44]

The control system according to any one of the Supplementary Notes A1 to A43, wherein
the control apparatus performs, as at least a part of the second movement processing, a processing for generating the control signal for controlling the robot so that a difference between a pose of the process apparatus at a timing at which the second movement processing is completed and a target process pose that should be taken by the process apparatus when the process apparatus performs the process on the target member is smaller than a difference between a pose of the process apparatus at a timing at which the first movement processing is completed and the target process pose by the second movement processing moving the process apparatus.

### [Supplementary Note A45]

The control system according to any one of the Supplementary Notes A1 to A44, wherein
at least a part of the first movement processing is not performed in a period during which the second movement processing is performed.

### [Supplementary Note A46]

The control system according to any one of the Supplementary Notes A1 to A45, wherein
the target object includes a first part on which the process apparatus performs the process, and a second part, different from the first part, on which the process apparatus performs the process,
the first movement processing includes the first movement processing for the first part and the first movement processing for the second part,
the second movement processing includes the second movement processing for the first part and the second movement processing for the second part,
the first movement processing for the first part includes a processing for controlling the robot so that the process apparatus approaches the first part,
the second movement processing for the first part includes a processing for generating and outputting, as the control signal, a first control signal for controlling the robot to move the process apparatus, based on a calculated result of a position and a pose of the first part, which is calculated based on the image data generated by the imaging apparatus imaging the first part, after the first movement processing for the first part is started,
the first movement processing for the second part includes a processing for controlling the robot so that the process apparatus approaches the second part from the first part after the second movement processing for the first part, and
the second movement processing for the second part includes a processing for generating and outputting, as the control signal, a second control signal for controlling the robot to move the process apparatus, based on a calculated result of a position and a pose of the second part, which is calculated based on the image data generated by the imaging apparatus imaging the second part, after the first movement processing for the second part is started.

### [Supplementary Note A47]

The control system according to any one of the Supplementary Notes A1 to A46, wherein
the target object includes a first target object on which the process apparatus performs the process, and a second target object, different from the first target object, on which the process apparatus performs the process,
the first movement processing includes the first movement processing for the first target object and the first movement processing for the second target object,
the second movement processing includes the second movement processing for the first target object and the second movement processing for the second target object,
the first movement processing for the first target object includes a processing for controlling the robot so that the process apparatus approaches the first target object,
the second movement processing for the first target object includes a processing for generating and outputting, as the control signal, a third control signal for controlling the robot to move the process apparatus, based on a calculated result of a position and a pose of the first target object, which is calculated based on the image data generated by the imaging apparatus imaging the first target object, after the first movement processing for the first target object is started,
the first movement processing for the second target object includes a processing for controlling the robot so that the process apparatus approaches the second target object from the first target object after the second movement processing for the first target object, and
the second movement processing for the second target object includes a processing for generating and outputting, as the control signal, a fourth control signal for controlling the robot to move the process apparatus, based on a calculated result of a position and a pose of the second target object, which is calculated based on the image data generated by the imaging apparatus imaging the second target object, after the first movement processing for the second target object is started.

### [Supplementary Note A48]

The control system according to any one of the Supplementary Notes A1 to A47, wherein
the target object includes a first part on which the process apparatus performs the process, and a second part, different from the first part, on which the process apparatus performs the process,
the first movement processing includes the first movement processing for the first part and the first movement processing for the second part,
the control apparatus performs, as at least a part of the second movement processing, the second movement processing includes the second movement processing for the first part and the second movement processing for the second part,
the first movement processing for the first part includes a processing for controlling the robot so that the process apparatus approaches the first part,
the control apparatus performs, as at least a part of the second movement processing for the first part, a processing for generating and outputting, as the control signal, a first control signal for controlling the robot to move the process apparatus, based on a calculated result of a position and a pose of the first part, which is calculated based on the image data generated by the imaging apparatus imaging the first part, after the first movement processing for the first part is started,
the first movement processing for the second part includes a processing for controlling the robot so that the process apparatus approaches the second part from the first part after the second movement processing for the first part, and
the control apparatus performs, as at least a part of the second movement processing for the second part, a processing for generating and outputting, as the control signal, a second control signal for controlling the robot to move the process apparatus, based on a calculated result of a position and a pose of the second part, which is calculated based on the image data generated by the imaging apparatus imaging the second part, after the first movement processing for the second part is started.

### [Supplementary Note A49]

The control system according to the Supplementary Note A48, wherein
the control apparatus repeats the second movement processing for the first part until a positional relationship between the process apparatus and the first part becomes a first positional relationship in a period that is after the first movement processing for the first part is completed and that is before the first movement processing for the second part is started.

### [Supplementary Note A50]

The control system according to the Supplementary Note A49, wherein
the first positional relationship includes a positional relationship in which the process apparatus is positioned at a target process position at which the process apparatus should be positioned when the process apparatus performs the process on the first part.

### [Supplementary Note A51]

The control system according to any one of the Supplementary Notes A48 to A50, wherein
the control apparatus repeats the second movement processing for the first part until a postural relationship between the process apparatus and the first part becomes a first postural relationship in a period that is after the first movement processing for the first part is completed and that is before the first movement processing for the second part is started.

### [Supplementary Note A52]

The control system according to the Supplementary Note A51, wherein
the first postural relationship includes a postural relationship in which the process apparatus takes a target process pose that should be taken by the process apparatus when the process apparatus performs the process on the first part.

### [Supplementary Note A53]

The control system according to any one of the Supplementary Notes A48 to A52, wherein
the control apparatus repeats the second movement processing for the second part until a positional relationship between the process apparatus and the second part becomes a second positional relationship after the first movement processing for the second part is started.

### [Supplementary Note A54]

The control system according to the Supplementary Note A53, wherein
the second positional relationship includes a positional relationship in which the process apparatus is positioned at a target process position at which the process apparatus should be positioned when the process apparatus performs the process on the second part.

### [Supplementary Note A55]

The control system according to any one of the Supplementary Notes A48 to A54, wherein
the control apparatus repeats the second movement processing for the second part until a postural relationship between the process apparatus and the second part becomes a second postural relationship, after the first movement processing for the second part is started.

### [Supplementary Note A56]

The control system according to the Supplementary Note A55, wherein
the second postural relationship includes a postural relationship in which the process apparatus takes a target process pose that should be taken by the process apparatus when the process apparatus performs the process on the second part.

### [Supplementary Note A57]

The control system according to any one of the Supplementary Notes A48 to A56, wherein
the control apparatus generates the second control signal based on the first control signal.

### [Supplementary Note A58]

The control system according to any one of the Supplementary Notes A48 to A57, wherein
the control apparatus repeats the second movement processing for the first part until a positional relationship between the process apparatus and the first part becomes a first positional relationship in a first period that is after the first movement processing for the first part is completed and that is before the first movement processing for the second part is started,
the control apparatus repeats the second movement processing for the second part until a positional relationship between the process apparatus and the second part becomes a second positional relationship in a second period that is after the first movement processing for the second part is started, and
the control apparatus generates the second control signal in the second period based on the first control signal generated in the first period.

### [Supplementary Note A59]

The control system according to any one of the Supplementary Notes A48 to A58, wherein
the control apparatus repeats the second movement processing for the first part until a postural relationship between the process apparatus and the first part becomes a first postural relationship in a first period that is after the first movement processing for the first part is completed and that is before the first movement processing for the second part is started,
the control apparatus repeats the second movement processing for the second part until a postural relationship between the process apparatus and the second part becomes a second postural relationship in a second period that is after the first movement processing for the second part is started, and
the control apparatus generates the second control signal in the second period based on the first control signal generated in the first period.

### [Supplementary Note A60]

The control system according to the Supplementary Note A58 or A59, wherein
the control apparatus generates the second control signal generated first in the second period based on the first control signal generated last in the first period.

### [Supplementary Note A61]

The control system according to any one of the Supplementary Notes A48 to A60, wherein
the control apparatus generates the second control signal by using the first control signal as an initial signal for the second control signal.

### [Supplementary Note A62]

The control system according to any one of the Supplementary Notes A48 to A61, wherein
the control apparatus repeats the second movement processing for the first part until a positional relationship between the process apparatus and the first part becomes a first positional relationship in a first period that is after the first movement processing for the first part is completed and that is before the first movement processing for the second part is started,
the control apparatus repeats the second movement processing for the second part until a positional relationship between the process apparatus and the second part becomes a second positional relationship in a second period that is after the first movement processing for the second part is started, and
the control apparatus generates the second control signal in the second period by using the first control signal generated in the first period as an initial signal for the second control signal.

### [Supplementary Note A63]

The control system according to any one of the Supplementary Notes A48 to A62, wherein
the control apparatus repeats the second movement processing for the first part until a postural relationship between the process apparatus and the first part becomes a first postural relationship in a first period that is after the first movement processing for the first part is completed and that is before the first movement processing for the second part is started,
the control apparatus repeats the second movement processing for the second part until a postural relationship between the process apparatus and the second part becomes a second postural relationship in a second period that is after the first movement processing for the second part is started, and
the control apparatus generates the second control signal in the second period by using the first control signal generated in the first period as an initial signal for the second control signal.

### [Supplementary Note A64]

The control system according to the Supplementary Note A62 or A63, wherein
the control apparatus generates the second control signal generated first in the second period by using the first control signal generated last in the first period as the initial signal for the second control signal.

### [Supplementary Note A65]

The control system according to any one of the Supplementary Notes A1 to A64, wherein
the target object includes a first target object on which the process apparatus performs the process, and a second target object, different from the first target object, on which the process apparatus performs the process,
the first movement processing includes the first movement processing for the first target object and the first movement processing for the second target object,
the control apparatus performs, as at least a part of the second movement processing, the second movement processing for the first target object and the second movement processing for the second target object,
the first movement processing for the first target object includes a processing for controlling the robot so that the process apparatus approaches the first target object,
the control apparatus performs, as at least a part of the second movement processing for the first target object, a processing for generating and outputting, as the control signal, a third control signal for controlling the robot to move the process apparatus, based on a calculated result of a position and a pose of the first target object, which is calculated based on the image data generated by the imaging apparatus imaging the first target object, after the first movement processing for the first target object is started,
the first movement processing for the second target object includes a processing for controlling the robot so that the process apparatus approaches the second target object from the first target object after the second movement processing for the first target object, and
the control apparatus performs, as at least a part of the second movement processing for the second target object, a processing for generating and outputting, as the control signal, a fourth control signal for controlling the robot to move the process apparatus, based on a calculated result of a position and a pose of the second target object, which is calculated based on the image data generated by the imaging apparatus imaging the second target object, after the first movement processing for the second target object is started.

### [Supplementary Note A66]

The control system according to the Supplementary Note A65, wherein
the control apparatus repeats the second movement processing for the first target object until a positional relationship between the process apparatus and the first target object becomes a third positional relationship in a period that is after the first movement processing for the first target object is completed and that is before the first movement processing for the second target object is started.

### [Supplementary Note A67]

The control system according to the Supplementary Note A66, wherein
the third positional relationship includes a positional relationship in which the process apparatus is positioned at a target process position at which the process apparatus should be positioned when the process apparatus performs the process on the first target object.

### [Supplementary Note A68]

The control system according to any one of the Supplementary Notes A65 to A67, wherein
the control apparatus repeats the second movement processing for the first target object until a postural relationship between the process apparatus and the first target object becomes a third postural relationship in a period that is after the first movement processing for the first target object is completed and that is before the first movement processing for the second target object is started.

### [Supplementary Note A69]

The control system according to the Supplementary Note A68, wherein
the third postural relationship includes a postural relationship in which the process apparatus takes a target process pose that should be taken by the process apparatus when the process apparatus performs the process on the first target object.

### [Supplementary Note A70]

The control system according to any one of the Supplementary Notes A66 to A69, wherein
the control apparatus repeats the second movement processing for the second target object until a positional relationship between the process apparatus and the second target object becomes a fourth positional relationship after the first movement processing for the second target object is started.

### [Supplementary Note A71]

The control system according to the Supplementary Note A70, wherein
the fourth positional relationship includes a positional relationship in which the process apparatus is positioned at a target process position at which the process apparatus should be positioned when the process apparatus performs the process on the second target object.

### [Supplementary Note A72]

The control system according to any one of the Supplementary Notes A66 to A71, wherein
the control apparatus repeats the second movement processing for the second target object until a postural relationship between the process apparatus and the second target object becomes a fourth postural relationship after the first movement processing for the second target object is started.

### [Supplementary Note A73]

The control system according to the Supplementary Note A72, wherein
the fourth postural relationship includes a postural relationship in which the process apparatus takes a target process pose that should be taken by the process apparatus when the process apparatus performs the process on the second target object.

### [Supplementary Note A74]

The control system according to any one of the Supplementary Notes A65 to A73, wherein
the control apparatus generates the fourth control signal based on the third control signal.

### [Supplementary Note A75]

The control system according to any one of the Supplementary Notes A65 to A74, wherein
the control apparatus repeats the second movement processing for the first target object until a positional relationship between the process apparatus and the first target object becomes a third positional relationship in a third period that is after the first movement processing for the first target object is completed and that is before the first movement processing for the second target object is started,
the control apparatus repeats the second movement processing for the second target object until a positional relationship between the process apparatus and the second target object becomes a fourth positional relationship in a fourth period that is after the first movement processing for the second target object, and
the control apparatus generates the fourth control signal in the fourth period based on the third control signal generated in the third period.

### [Supplementary Note A76]

The control system according to any one of the Supplementary Notes A65 to A75, wherein
the control apparatus repeats the second movement processing for the first target object until a postural relationship between the process apparatus and the first target object becomes a third postural relationship in a third period that is after the first movement processing for the first target object is completed and that is before the first movement processing for the second target object is started,
the control apparatus repeats the second movement processing for the second target object until a postural relationship between the process apparatus and the second target object becomes a fourth postural relationship in a fourth period that is after the first movement processing for the second target object, and
the control apparatus generates the fourth control signal in the fourth period based on the third control signal generated in the third period.

### [Supplementary Note A77]

The control system according to the Supplementary Note A75 or A76, wherein
the control apparatus generates the fourth control signal generated first in the fourth period based on the third control signal generated last in the third period.

### [Supplementary Note A78]

The control system according to any one of the Supplementary Notes A65 to A77, wherein
the control apparatus generates the fourth control signal by using the third control signal as an initial signal for the fourth control signal.

### [Supplementary Note A79]

The control system according to any one of the Supplementary Notes A65 to A68, wherein
the control apparatus repeats the second movement processing for the first target object until a positional relationship between the process apparatus and the first target object becomes a third positional relationship in a third period that is after the first movement processing for the first target object is completed and that is before the first movement processing for the second target object is started,
the control apparatus repeats the second movement processing for the second target object until a positional relationship between the process apparatus and the second target object becomes a fourth positional relationship in a fourth period that is after the first movement processing for the second target object, and
the control apparatus generates the fourth control signal in the fourth period by using the third control signal generated in the third period as an initial signal for the fourth control signal.

### [Supplementary Note A80]

The control system according to any one of the Supplementary Notes A65 to A79, wherein
the control apparatus repeats the second movement processing for the first target object until a postural relationship between the process apparatus and the first target object becomes a third postural relationship in a third period that is after the first movement processing for the first target object is completed and that is before the first movement processing for the second target object is started,
the control apparatus repeats the second movement processing for the second target object until a postural relationship between the process apparatus and the second target object becomes a fourth postural relationship in a fourth period that is after the first movement processing for the second target object, and
the control apparatus generates the fourth control signal in the fourth period by using the third control signal generated in the third period as an initial signal for the fourth control signal.

### [Supplementary Note A81]

The control system according to the Supplementary Note A79 or A80, wherein
the control apparatus generates the fourth control signal generated first in the fourth period by using the third control signal generated last in the first period as an initial signal for the fourth control signal.

### [Supplementary Note A82]

The control system according to any one of the Supplementary Notes A1 to A81, wherein
the control apparatus is a second control apparatus,
the first movement processing is performed by a first control apparatus that is different from the second control apparatus,
the target object includes a first part on which the process apparatus performs the process, and a second part, different from the first part, on which the process apparatus performs the process,
the first control apparatus performs, as at least a part of the first movement processing, the first movement processing for the first part and the first movement processing for the second part,
the second control apparatus performs, as at least a part of the second movement processing, the second movement processing for the first part and the second movement processing for the second part,
the first control apparatus performs, as at least a part of the first movement processing for the first part, a processing for controlling the robot so that the process apparatus approaches the first part,
the second control apparatus performs, as at least a part of the second movement processing for the first part, a processing for generating and outputting, as the control signal, a first control signal for controlling the robot to move the process apparatus, based on a calculated result of a position and a pose of the first part, which is calculated based on the image data generated by the imaging apparatus imaging the first part, after the first movement processing for the first part is started,
the first control apparatus performs, as at least a part of the first movement processing for the second part, a processing for controlling the robot so that the process apparatus approaches the second part from the first part after the second movement processing for the first part, and
the second control apparatus performs, as at least a part of the second movement processing for the second part, a processing for generating and outputting, as the control signal, a second control signal for controlling the robot to move the process apparatus, based on a calculated result of a position and a pose of the second part, which is calculated based on the image data generated by the imaging apparatus imaging the second part, after the first movement processing for the second part is started.

### [Supplementary Note A83]

The control system according to the Supplementary Note A82, wherein
the second control apparatus performs the first movement processing for the second part instead of the first control apparatus.

### [Supplementary Note A84]

The control system according to the Supplementary Note A83, wherein
the second control apparatus performs, as at least a part of the first movement processing for the second part, a processing for controlling the robot so that the process apparatus approaches the second part from the first part even in a case where the second control apparatus does not receive a signal transmitted from the first control apparatus after the second movement processing for the first part.

### [Supplementary Note A85]

The control system according to any one of the Supplementary Notes A82 to A84, wherein
the second control apparatus repeats the second movement processing for the first part until a positional relationship between the process apparatus and the first part becomes a first positional relationship in a period that is after the first movement processing for the first part is completed and that is before the first movement processing for the second part is started.

### [Supplementary Note A86]

The control system according to the Supplementary Note A85, wherein
the first positional relationship includes a positional relationship in which the process apparatus is positioned at a target process position at which the process apparatus should be positioned when the process apparatus performs the process on the first part.

### [Supplementary Note A87]

The control system according to any one of the Supplementary Notes A82 to A86, wherein
the second control apparatus repeats the second movement processing for the first part until a postural relationship between the process apparatus and the first part becomes a first postural relationship in a period that is after the first movement processing for the first part is completed and that is before the first movement processing for the second part is started.

### [Supplementary Note A88]

The control system according to the Supplementary Note A87, wherein
the first postural relationship includes a postural relationship in which the process apparatus takes a target process pose that should be taken by the process apparatus when the process apparatus performs the process on the first part.

### [Supplementary Note A89]

The control system according to any one of the Supplementary Notes A82 to A88, wherein
the second control apparatus repeats the second movement processing for the second part until a positional relationship between the process apparatus and the second part becomes a second positional relationship after the first movement processing for the second part is started.

### [Supplementary Note A90]

The control system according to the Supplementary Note A89, wherein
the second positional relationship includes a positional relationship in which the process apparatus is positioned at a target process position at which the process apparatus should be positioned when the process apparatus performs the process on the second part.

### [Supplementary Note A91]

The control system according to any one of the Supplementary Notes A82 to A90, wherein
the second control apparatus repeats the second movement processing for the second part until a postural relationship between the process apparatus and the second part becomes a second postural relationship, after the first movement processing for the second part is started.

### [Supplementary Note A92]

The control system according to the Supplementary Note A91, wherein
the second postural relationship includes a postural relationship in which the process apparatus takes a target process pose that should be taken by the process apparatus when the process apparatus performs the process on the second part.

### [Supplementary Note A93]

The control system according to any one of the Supplementary Notes A82 to A92, wherein
the second control apparatus generates the second control signal based on the first control signal.

### [Supplementary Note A94]

The control system according to any one of the Supplementary Notes A82 to A93, wherein
the second control apparatus repeats the second movement processing for the first part until a positional relationship between the process apparatus and the first part becomes a first positional relationship in a first period that is after the first movement processing for the first part is completed and that is before the first movement processing for the second part is started,
the second control apparatus repeats the second movement processing for the second part until a positional relationship between the process apparatus and the second part becomes a second positional relationship in a second period that is after the first movement processing for the second part is started, and
the second control apparatus generates the second control signal in the second period based on the first control signal generated in the first period.

### [Supplementary Note A95]

The control system according to any one of the Supplementary Notes A82 to A94, wherein
the second control apparatus repeats the second movement processing for the first part until a postural relationship between the process apparatus and the first part becomes a first postural relationship in a first period that is after the first movement processing for the first part is completed and that is before the first movement processing for the second part is started,
the second control apparatus repeats the second movement processing for the second part until a postural relationship between the process apparatus and the second part becomes a second postural relationship in a second period that is after the first movement processing for the second part is started, and
the second control apparatus generates the second control signal in the second period based on the first control signal generated in the first period.

### [Supplementary Note A96]

The control system according to the Supplementary Note A94 or A95, wherein
the second control apparatus generates the second control signal generated first in the second period based on the first control signal generated last in the first period.

### [Supplementary Note A97]

The control system according to any one of the Supplementary Notes A82 to A96, wherein
the second control apparatus generates the second control signal by using the first control signal as an initial signal for the second control signal.

### [Supplementary Note A98]

The control system according to any one of the Supplementary Notes A82 to A97, wherein
the second control apparatus repeats the second movement processing for the first part until a positional relationship between the process apparatus and the first part becomes a first positional relationship in a first period that is after the first movement processing for the first part is completed and that is before the first movement processing for the second part is started,
the second control apparatus repeats the second movement processing for the second part until a positional relationship between the process apparatus and the second part becomes a second positional relationship in a second period that is after the first movement processing for the second part is started, and
the second control apparatus generates the second control signal in the second period by using the first control signal generated in the first period as an initial signal for the second control signal.

### [Supplementary Note A99]

The control system according to any one of the Supplementary Notes A82 to A98, wherein
the second control apparatus repeats the second movement processing for the first part until a postural relationship between the process apparatus and the first part becomes a first postural relationship in a first period that is after the first movement processing for the first part is completed and that is before the first movement processing for the second part is started,
the second control apparatus repeats the second movement processing for the second part until a postural relationship between the process apparatus and the second part becomes a second postural relationship in a second period that is after the first movement processing for the second part is started, and
the second control apparatus generates the second control signal in the second period by using the first control signal generated in the first period as an initial signal for the second control signal.

### [Supplementary Note A100]

The control system according to the Supplementary Note A98 or A99, wherein
the second control apparatus generates the second control signal generated first in the second period by using the first control signal generated last in the first period as the initial signal for the second control signal.

### [Supplementary Note A101]

The control system according to any one of the Supplementary Notes A1 to A100, wherein
the control apparatus is a second control apparatus,
the first movement processing is performed by a first control apparatus that is different from the second control apparatus,
the target object includes a first target object on which the process apparatus performs the process, and a second target object, different from the first target object, on which the process apparatus performs the process,
the first control apparatus performs, as at least a part of the first movement processing, the first movement processing for the first target object and the first movement processing for the second target object,
the second control apparatus performs, as at least a part of the second movement processing, the second movement processing for the first target object and the second movement processing for the second target object,
the first control apparatus performs, as at least a part of the first movement processing for the first target object, a processing for controlling the robot so that the process apparatus approaches the first target object,
the second control apparatus performs, as at least a part of the second movement processing for the first target object, a processing for generating and outputting, as the control signal, a third control signal for controlling the robot to move the process apparatus, based on a calculated result of a position and a pose of the first target object, which is calculated based on the image data generated by the imaging apparatus imaging the first target object, after the first movement processing for the first target object is started,
the first control apparatus performs, as at least a part of the first movement processing for the second target object, a processing for controlling the robot so that the process apparatus approaches the second target object from the first target object after the second movement processing for the first target object, and
the second control apparatus performs, as at least a part of the second movement processing for the second target object, a processing for generating and outputting, as the control signal, a fourth control signal for controlling the robot to move the process apparatus, based on a calculated result of a position and a pose of the second target object, which is calculated based on the image data generated by the imaging apparatus imaging the second target object, after the first movement processing for the second target object is started.

### [Supplementary Note A102]

The control system according to the Supplementary Note A101, wherein
the second control apparatus performs the first movement processing for the second target object instead of the first control apparatus.

### [Supplementary Note A103]

The control system according to the Supplementary Note A102, wherein
the second control apparatus performs, as at least a part of the first movement processing for the second target object, a processing for controlling the robot so that the process apparatus approaches the second target object from the first target object even in a case where the second control apparatus does not receive a signal transmitted from the first control apparatus after the second movement processing for the first target object.

### [Supplementary Note A104]

The control system according to any one of the Supplementary Notes A101 to A103, wherein
the second control apparatus repeats the second movement processing for the first target object until a positional relationship between the process apparatus and the first target object becomes a third positional relationship in a period that is after the first movement processing for the first target object is completed and that is before the first movement processing for the second target object is started.

### [Supplementary Note A105]

The control system according to the Supplementary Note A104, wherein
the third positional relationship includes a positional relationship in which the process apparatus is positioned at a target process position at which the process apparatus should be positioned when the process apparatus performs the process on the first target object.

### [Supplementary Note A106]

The control system according to any one of the Supplementary Notes A101 to A105, wherein
the second control apparatus repeats the second movement processing for the first target object until a postural relationship between the process apparatus and the first target object becomes a third postural relationship in a period that is after the first movement processing for the first target object is completed and that is before the first movement processing for the second target object is started.

### [Supplementary Note A107]

The control system according to the Supplementary Note A106, wherein
the third postural relationship includes a postural relationship in which the process apparatus takes a target process pose that should be taken by the process apparatus when the process apparatus performs the process on the first target object.

### [Supplementary Note A108]

The control system according to any one of the Supplementary Notes A104 to A107, wherein
the second control apparatus repeats the second movement processing for the second target object until a positional relationship between the process apparatus and the second target object becomes a fourth positional relationship after the first movement processing for the second target object is started.

### [Supplementary Note A109]

The control system according to the Supplementary Note A108, wherein
the fourth positional relationship includes a positional relationship in which the process apparatus is positioned at a target process position at which the process apparatus should be positioned when the process apparatus performs the process on the second target object.

### [Supplementary Note A110]

The control system according to any one of the Supplementary Notes A104 to A109, wherein
the second control apparatus repeats the second movement processing for the second target object until a postural relationship between the process apparatus and the second target object becomes a fourth postural relationship after the first movement processing for the second target object is started.

### [Supplementary Note A111]

The control system according to the Supplementary Note A110, wherein
the fourth postural relationship includes a postural relationship in which the process apparatus takes a target process pose that should be taken by the process apparatus when the process apparatus performs the process on the second target object.

### [Supplementary Note A112]

The control system according to any one of the Supplementary Notes A101 to A111, wherein
the second control apparatus generates the fourth control signal based on the third control signal.

### [Supplementary Note A103]

The control system according to any one of the Supplementary Notes A101 to A112, wherein
the second control apparatus repeats the second movement processing for the first target object until a positional relationship between the process apparatus and the first target object becomes a third positional relationship in a third period that is after the first movement processing for the first target object is completed and that is before the first movement processing for the second target object is started,
the second control apparatus repeats the second movement processing for the second target object until a positional relationship between the process apparatus and the second target object becomes a fourth positional relationship in a fourth period that is after the first movement processing for the second target object, and
the second control apparatus generates the fourth control signal in the fourth period based on the third control signal generated in the third period.

### [Supplementary Note A114]

The control system according to any one of the Supplementary Notes A101 to A113, wherein
the second control apparatus repeats the second movement processing for the first target object until a postural relationship between the process apparatus and the first target object becomes a third postural relationship in a third period that is after the first movement processing for the first target object is completed and that is before the first movement processing for the second target object is started,
the second control apparatus repeats the second movement processing for the second target object until a postural relationship between the process apparatus and the second target object becomes a fourth postural relationship in a fourth period that is after the first movement processing for the second target object, and
the second control apparatus generates the fourth control signal in the fourth period based on the third control signal generated in the third period.

### [Supplementary Note A115]

The control system according to the Supplementary Note A113 or 114, wherein
the second control apparatus generates the fourth control signal generated first in the fourth period based on the third control signal generated last in the third period.

### [Supplementary Note A116]

The control system according to any one of the Supplementary Notes A101 to A115, wherein
the second control apparatus generates the fourth control signal by using the third control signal as an initial signal for the fourth control signal.

### [Supplementary Note A117]

The control system according to any one of the Supplementary Notes A101 to A116, wherein
the second control apparatus repeats the second movement processing for the first target object until a positional relationship between the process apparatus and the first target object becomes a third positional relationship in a third period that is after the first movement processing for the first target object is completed and that is before the first movement processing for the second target object is started,
the second control apparatus repeats the second movement processing for the second target object until a positional relationship between the process apparatus and the second target object becomes a fourth positional relationship in a fourth period that is after the first movement processing for the second target object, and
the second control apparatus generates the fourth control signal in the fourth period by using the third control signal generated in the third period as an initial signal for the fourth control signal.

### [Supplementary Note A118]

The control system according to any one of the Supplementary Notes A101 to A117, wherein
the second control apparatus repeats the second movement processing for the first target object until a postural relationship between the process apparatus and the first target object becomes a third postural relationship in a third period that is after the first movement processing for the first target object is completed and that is before the first movement processing for the second target object is started,
the second control apparatus repeats the second movement processing for the second target object until a postural relationship between the process apparatus and the second target object becomes a fourth postural relationship in a fourth period that is after the first movement processing for the second target object, and
the second control apparatus generates the fourth control signal in the fourth period by using the third control signal generated in the third period as an initial signal for the fourth control signal.

### [Supplementary Note A119]

The control system according to the Supplementary Note A117 or A118, wherein
the second control apparatus generates the fourth control signal generated first in the fourth period by using the third control signal generated last in the first period as an initial signal for the fourth control signal.

### [Supplementary Note A120]

The control system according to any one of the Supplementary Notes A1 to A119, wherein
the first movement processing includes a processing for controlling the robot to move the process apparatus in accordance with movement instruction information.

### [Supplementary Note A121]

The control system according to the Supplementary Note A120, wherein
the movement instruction information is set by a user inputting the movement instruction information in advance.

### [Supplementary Note A122]

The control system according to the Supplementary Note A120 or A121, wherein
the movement instruction information includes at least one of a target movement position that instructs a position to which the process apparatus should move, a target movement distance that instructs a distance by which the process apparatus should move, and a target movement direction that instructs a direction toward which the process apparatus should move.

### [Supplementary Note A123]

The control system according to the Supplementary Note A122, wherein
the target movement position is fixed to a position, which is set in advance, in a period during which the first movement processing is performed, the target movement distance is fixed to a distance, which is set in advance, in a period during which the first movement processing is performed, and the target movement direction is fixed to a direction, which is set in advance, in a period during which the first movement processing is performed.

### [Supplementary Note A124]

The control system according to the Supplementary Note A122 or A123, wherein
the target object is moved by a transport apparatus capable of conveying the target object, and
at least one of the target movement position, the target movement distance, and the target movement direction is set in advance based on at least one of a transport speed of the target member by the transport apparatus and a transport direction of the target member by the transport apparatus.

### [Supplementary Note A125]

The control system according to any one of the Supplementary Notes A122 to A124, wherein
the target object includes a first part on which the process apparatus performs the process, and a second part, different from the first part, on which the process apparatus performs the process,
the process apparatus performs the process on the second part after performing the process on the first part, and
at least one of the target movement position, the target movement distance, and the target movement direction is set in advance based on a positional relationship between the first part and the second part.

### [Supplementary Note A126]

The control system according to any one of the Supplementary Notes A122 to A125, wherein
the target object includes a first target object on which the process apparatus performs the process, and a second target object, different from the first target object, on which the process apparatus performs the process,
the process apparatus performs the process on the second target object after performing the process on the first target object, and
at least one of the target movement position, the target movement distance, and the target movement direction is set in advance based on a positional relationship between the first target object and the second target object.

### [Supplementary Note A127]

The control system according to any one of the Supplementary Notes A1 to A126, wherein
the first movement processing is a processing based on an open loop control.

### [Supplementary Note A128]

The control system according to any one of the Supplementary Notes A1 to A127, wherein
the second movement processing is a processing based on a closed loop control.

### [Supplementary Note A129]

The control system according to the Supplementary Note A128, wherein
the closed loop control is at least one of a P (Proportional) control, PI (Proportional Integral) control, and PID (Proportional Integral Derivative) control.

### [Supplementary Note A130]

The control system according to any one of the Supplementary Notes A1 to A129, wherein
the target object is moved by a transport apparatus that is configured to transport the target object, and
the first movement processing and the second movement processing are performed on the target object that is being moved by the transport apparatus.

### [Supplementary Note A131]

The control system according to any one of the Supplementary Notes A1 to A130, wherein
the second movement processing includes a processing for calculating at least one of the position and the pose of the target object by performing a matching processing using the image data, which is generated by the imaging apparatus imaging the target object after the first movement processing is started, and model data, which indicates an object model that is a model of the target object.

### [Supplementary Note A132]

The control system according to the Supplementary Note A131, wherein
the object model is a model of an edge of at least a part of the target object.

### [Supplementary Note A133]

The control system according to the Supplementary Note A132, wherein
the model data is data indicating an edge of at least a part of the target object or a sample in an image acquired by imaging in advance the target object or the sample object whose shape is the same as that of the target object.

### [Supplementary Note A134]

The control system according to any one of the Supplementary Notes A1 to A133, wherein
the second movement processing includes a processing for generating and outputting the control signal for controlling the robot to move the process apparatus based on the calculated result of at least one of the position and the pose of the target object and a calculated result of at least one of a position and a pose of the process apparatus, which are calculated based on the image data generated by the imaging apparatus imaging the target object and the process apparatus after the first movement processing is started.

### [Supplementary Note A135]

The control system according to the Supplementary Note A134, wherein
the second movement processing includes a processing for calculating at least one of the position and the pose of the target object and at least one of the position and the pose of the process apparatus by performing a matching processing using the image data, which is generated by the imaging apparatus imaging the target object and the process apparatus after the first movement processing is started, and model data, which indicates an object model that is a model of the target object and an apparatus model that is a model of the process apparatus.

### [Supplementary Note A136]

The control system according to the Supplementary Note A135, wherein
the object model is a model of an edge of at least a part of the target object, and
the apparatus model is a model of an edge of at least a part of the process apparatus.

### [Supplementary Note A137]

The control system according to the Supplementary Note A135 or A136, wherein
the model data indicates the object model and the apparatus model that are aligned with each other, and
the second movement processing includes a processing for generating the control signal for controlling the robot, based on the calculated result of at least one of the position and the pose of the target object and the calculated result of at least one of the position and the pose of the process apparatus, so that a difference between a positional relationship of the target object and the process apparatus and a positional relationship of the object model and the apparatus model that are aligned with each other is equal to or smaller than a threshold value by moving the process apparatus.

### [Supplementary Note A138]

The control system according to any one of the Supplementary Notes A135 to A137, wherein
the model data indicates the object model and the apparatus model that are aligned with each other, and
the second movement processing includes a processing for generating the control signal for controlling the robot, based on the calculated result of at least one of the position and the pose of the target object and the calculated result of at least one of the position and the pose of the process apparatus, so that a difference between a postural relationship of the target object and the process apparatus and a postural relationship of the object model and the apparatus model that are aligned with each other is equal to or smaller than a threshold value by moving the process apparatus.

### [Supplementary Note A139]

The control system according to any one of the Supplementary Notes A135 to A138, wherein
the model data indicates the object model and the apparatus model that are aligned with each other, and
the second movement processing includes a processing for selecting, as a target object on which the process apparatus should perform the process, one target object satisfying a condition that a positional relationship between the target object and the process apparatus is closest to a positional relationship between the object model and the apparatus model that are aligned with each other, in a case where a plurality of target objects are detected by the matching processing.

### [Supplementary Note A140]

The control system according to any one of the Supplementary Notes A1 to A139, wherein
the control system performs a preparatory processing for performing the second movement processing in a period during which the first movement processing is performed and before the second movement processing is started.

### [Supplementary Note A141]

The control system according to any one of the Supplementary Notes A1 to A140, wherein
the control apparatus performs a preparatory processing for performing the second movement processing before the second movement processing is started.

### [Supplementary Note A142]

The control system according to the Supplementary Note A141, wherein
the control apparatus performs the preparatory processing for performing the second movement processing in a period during which the first movement processing is performed and before the second movement processing is started.

### [Supplementary Note A143]

The control system according to any one of the Supplementary Notes A140 to A142, wherein
the preparatory processing includes a processing for acquiring information that is used to perform the second movement processing.

### [Supplementary Note A144]

The control system according to the Supplementary Note A143, wherein
the information that is used to perform the second movement processing includes target object information related to the target object on which the process apparatus performs the predetermined process.

### [Supplementary Note A145]

The control system according to the Supplementary Note A144, wherein
the target object information includes information related to a type of the target object.

### [Supplementary Note A146]

The control system according to any one of the Supplementary Notes A143 to A145, wherein
the information that is used to perform the second movement processing includes surrounding object information related to a surrounding object that is positioned around the target object on which the process apparatus performs the predetermined process.

### [Supplementary Note A147]

The control system according to any one of the Supplementary Note A146, wherein
the surrounding object information includes information related to at least one of a position of the surrounding object, a pose of the surrounding object, a shape of the surrounding object, and a size of the surrounding object.

### [Supplementary Note A148]

The control system according to any one of the Supplementary Notes A143 to A147, wherein
the second movement processing includes a processing for calculating at least one of the position and the pose of the target object by performing a matching processing using the image data, which is generated by the imaging apparatus imaging the target object after the first movement processing is started, and model data, which indicates an object model that is a model of the target object, and
the information that is used to perform the second movement processing includes matching information that is information used for the matching processing.

### [Supplementary Note A149]

The control system according to the Supplementary Note A148, wherein
the matching information includes at least one of information for specifying the model data, information related to a matching determination threshold that is used for the matching processing, and information related to a convergence condition that should be satisfied to end the second movement processing.

### [Supplementary Note A150]

The control system according to any one of the Supplementary Notes A143 to A149, wherein
the information that is used to perform the second movement processing includes imaging condition information that is information related to an imaging condition of the imaging apparatus.

### [Supplementary Note A151]

The control system according to the Supplementary Note A150, wherein
the imaging condition information includes at least one of information related to an exposure time and information related to an intensity of illumination light.

### [Supplementary Note A152]

The control system according to any one of the Supplementary Notes A143 to A151, wherein
the information that is used to perform the second movement processing includes the image data generated by the imaging apparatus imaging the target object after the first movement processing is started.

### [Supplementary Note A153]

The control system according to any one of the Supplementary Notes A143 to A152, wherein
the information that is used to perform the second movement processing includes information related to the calculated result of at least one of the position and the pose of the target object, which is calculated based on the image data generated by the imaging apparatus imaging the target object after the first movement processing is started.

### [Supplementary Note A154]

The control system according to any one of the Supplementary Notes A140 to A153, wherein
the preparatory processing includes a processing for acquiring the image data generated by the imaging apparatus imaging the target object after the first movement processing is started.

### [Supplementary Note A155]

The control system according to any one of the Supplementary Notes A140 to A154, wherein
the preparatory processing includes a processing for generating the image data by imaging the target object using the imaging apparatus after the first movement processing is started.

### [Supplementary Note A156]

The control system according to any one of the Supplementary Notes A140 to A155, wherein
the preparatory processing includes a processing for calculating at least one of the position and the pose of the target object based on the image data, which is generated by the imaging apparatus imaging the target object after the first movement processing is started.

### [Supplementary Note A157]

The control system according to any one of the Supplementary Notes A140 to A156, wherein
the preparatory processing includes a processing for adjusting an exposure condition of the imaging apparatus.

### [Supplementary Note A158]

The control system according to any one of the Supplementary Notes A140 to A157, wherein
the imaging apparatus includes an illumination apparatus that is configured to illuminate the target object with illumination light, and
the preparatory processing includes a processing for allowing the illumination apparatus to start illuminating the target object with the illumination light.

### [Supplementary Note A159]

The control system according to any one of the Supplementary Notes A1 to A158, wherein
the second movement processing includes a processing for calculating at least one of a position and a pose of the target object at a first time based on at least one of a position and a pose of the target object, which are calculated based on the image data generated by the imaging apparatus imaging the target object at a second time that is before the first time, in a case where at least one of the position and the pose of the target object cannot be calculated based on the image data generated by an imaging of the imaging apparatus at the first time in a period during which the second movement processing is performed.

### [Supplementary Note A160]

The control system according to any one of the Supplementary Notes A1 to A159, wherein
the second movement processing includes a processing for generating and outputting the control signal for controlling the robot to move the process apparatus based on information related to a contact between the process apparatus and the target object, in a case where the position and the pose of the target object cannot be calculated based on the image data generated by an imaging of the imaging apparatus in a period during which the second movement processing is performed.

### [Supplementary Note A161]

The control system according to any one of the Supplementary Notes A1 to A160, wherein
the control system inspects the target object based on the image data.

### [Supplementary Note A162]

The control system according to any one of the Supplementary Notes A1 to A161, wherein
the control system inspects the target object based on a measured result of the target object by a measurement apparatus that is configured to measure the target object.

### [Supplementary Note A163]

The control system according to the Supplementary Note A161 or A162, wherein
the control system inspects the target object before the process apparatus performs the process on the target object.

### [Supplementary Note A164]

The control system according to any one of the Supplementary Notes A161 to A163, wherein
the control system inspects the target object after the process apparatus performs the process on the target object.

### [Supplementary Note A165]

The control system according to any one of the Supplementary Notes A1 to A164, wherein
the control system inspects a result of the process performed on the target object by the process apparatus, based on the image data or a measured result by a measurement apparatus.

### [Supplementary Note A166]

The control system according to any one of the Supplementary Notes A1 to A165, wherein
the control apparatus inspects the target object based on the image data.

### [Supplementary Note A167]

The control system according to any one of the Supplementary Notes A1 to A166, wherein
the control apparatus inspects the target object based on a measured result of the target object by a measurement apparatus that is configured to measure the target object.

### [Supplementary Note A168]

The control system according to the Supplementary Note A166 or A167, wherein
the control apparatus inspects the target object before the process apparatus performs the process on the target object.

### [Supplementary Note A169]

The control system according to any one of the Supplementary Notes A166 to A168, wherein
the control apparatus inspects the target object after the process apparatus performs the process on the target object.

### [Supplementary Note A170]

The control system according to any one of the Supplementary Notes A1 to A169, wherein
the control apparatus inspects a result of the process performed on the target object by the process apparatus, based on the image data or a measured result by a measurement apparatus.

### [Supplementary Note A171]

The control system according to any one of the Supplementary Notes A1 to A170, wherein
the target object is moved by a transport apparatus that is configured to transport the target object,
the control system performs the second movement processing in a period during which the transport apparatus moves the target object, and
the second movement processing includes a processing for generating the control signal for controlling the robot to move the process apparatus based on a transport state of the target object, in a case where at least one of the position and the pose of the target object cannot be calculated based on the image data generated by an imaging of the imaging apparatus at a first time in a period during which the second movement processing is performed.

### [Supplementary Note A172]

The control system according to any one of the Supplementary Notes A1 to A171, wherein
the target object is moved by a transport apparatus that is configured to transport the target object,
the control apparatus performs the second movement processing in a period during which the transport apparatus moves the target object, and
the second movement processing includes a processing for generating the control signal for controlling the robot to move the process apparatus based on a transport state of the target object, in a case where at least one of the position and the pose of the target object cannot be calculated based on the image data generated by an imaging of the imaging apparatus at a first time in a period during which the second movement processing is performed.

### [Supplementary Note A173]

The control system according to the Supplementary Note A171 or A172, wherein
the transport state of the target object includes at least one of a transport direction of the target object, a transport distance of the target object, and a transport speed of the target object.

### [Supplementary Note A174]

The control system according to any one of the Supplementary Notes A171 to A173, wherein
the transport state of the target object includes a transport direction of the target object, and
the second movement processing includes a processing for generating the control signal for controlling the robot to move the process apparatus toward a movement direction that is determined based on the transport direction of the target object.

### [Supplementary Note A175]

The control system according to any one of the Supplementary Notes A171 to A174, wherein
the transport state of the target object includes a transport distance of the target object, and
the second movement processing includes a processing for generating the control signal for controlling the robot to move the process apparatus by a movement distance that is determined based on the transport distance of the target object.

### [Supplementary Note A176]

The control system according to any one of the Supplementary Notes A171 to A175, wherein
the transport state of the target object includes a transport speed of the target object, and
the second movement processing includes a processing for estimating a transport distance of the target object based on the transport speed of the target object, and a processing for generating the control signal for controlling the robot to move the process apparatus by a movement distance that is determined based on an estimated result of the transport distance of the target object.

### [Supplementary Note A177]

The control system according to any one of the Supplementary Notes A171 to A176, wherein
the transport state of the target object includes a transport direction of the target object and a transport distance of the target object, and
the second movement processing includes a processing for generating the control signal for controlling the robot to move the process apparatus by a movement distance, which is determined based on the transport distance of the target object, toward a movement direction, which is determined based on the transport direction of the target object.

### [Supplementary Note A178]

The control system according to any one of the Supplementary Notes A171 to A177, wherein
the transport state of the target object includes a transport direction of the target object and a transport speed of the target object, and
the second movement processing includes a processing for estimating a transport distance of the target object based on the transport speed of the target object, and a processing for generating the control signal for controlling the robot to move the process apparatus by a movement distance, which is determined based on an estimated result of the transport distance of the target object, toward a movement direction, which is determined based on the transport direction of the target object.

### [Supplementary Note A179]

The control system according to any one of the Supplementary Notes A171 to A178, wherein
the second movement processing includes a processing for acquiring information related to the transport state of the target object from the transport apparatus or an apparatus that controls the transport apparatus, and a processing for generating the control signal for controlling the robot to move the process apparatus based on the acquired information.

### [Supplementary Note A180]

The control system according to any one of the Supplementary Notes A171 to A179, wherein
the second movement processing includes a processing for estimating the transport state of the target object based on the calculated result of at least one of the position and the pose of the target object, which is calculated based on the image data generated by the imaging apparatus imaging the target object in a period before the first time, and a processing for generating the control signal for controlling the robot to move the process apparatus based on an estimated result of the transport state of the target object.

### [Supplementary Note A181]

The control system according to any one of the Supplementary Notes A1 to A180 further including the imaging apparatus.

### [Supplementary Note A182]

The control system according to any one of the Supplementary Notes A1 to A181, wherein
the control apparatus is a second control apparatus,
the first movement processing is performed by a first control apparatus that is different from the second control apparatus, and
the control system further includes the first control apparatus.

### [Supplementary Note A183]

The control system according to any one of the Supplementary Notes A1 to A182, wherein
the imaging apparatus is attached to the robot.

### [Supplementary Note A184]

The control system according to any one of the Supplementary Notes A1 to A182, wherein
the robot is a first robot, and
the imaging apparatus is attached to a second robot that is different from the first robot.

### [Supplementary Note A185]

The control system according to any one of the Supplementary Notes A1 to A184, wherein
the imaging apparatus is attached to a support member that is different from the robot and that is configured to support the imaging apparatus.

### [Supplementary Note A186]

A robot system including:
the control system according to any one of the Supplementary Notes A1 to A185; and
the robot.

### [Supplementary Note A187]

The robot system according to the Supplementary Note A186 further including the process apparatus that performs the process on the target object.

### [Supplementary Note B1]

A control method that generates a control signal for controlling a robot, wherein
a process apparatus, which performs a process on a target object, is attached to the robot,
the robot moves the process apparatus,
the control method includes generating and outputting the control signal based on image data generated by an imaging apparatus imaging the target object,
the control method includes performing a second movement processing after a first movement processing is started,
the first movement processing includes a processing for controlling the robot to move the process apparatus without using the image data, and
the second movement processing includes a processing for generating and outputting the control signal for controlling the robot to move the process apparatus based on a calculated result of at least one of a position and a pose of the target object, which is calculated based on the image data generated by the imaging apparatus imaging the target object after the first movement processing is started.

### [Supplementary Note B2]

The control method according to the Supplementary Note B1, wherein
the first movement processing includes a processing for controlling the robot to move the process apparatus in accordance with movement instruction information, without using the image data.

### [Supplementary Note B3]

A control method for generating a control signal for controlling a robot, wherein
A control method that generates a control signal for controlling a robot, wherein
a process apparatus, which performs a process on a target object, is attached to the robot,
the robot moves the process apparatus,
the control method includes generating and outputting the control signal based on image data generated by an imaging apparatus imaging the target object,
the control method includes performing a second movement processing after a first movement processing is started,
the first movement processing includes a processing for controlling the robot to move the process apparatus in accordance with movement instruction information, and
the second movement processing includes a processing for generating and outputting the control signal for controlling the robot to move the process apparatus based on a calculated result of at least one of a position and a pose of the target object, which is calculated based on the image data generated by the imaging apparatus imaging the target object after the first movement processing is started.

### [Supplementary Note B4]

The control method according to the Supplementary Note B3, wherein
the first movement processing includes a processing for controlling the robot to move the process apparatus in accordance with the movement instruction information, without using the image data.

### [Supplementary Note B5]

The control method according to any one of the Supplementary Notes B1 to 4, wherein
a part of the first movement processing is performed in a period during which the second movement processing is performed.

### [Supplementary Note B6]

The control method according to any one of the Supplementary Notes B1 to 5, wherein
the control method includes performing a part of the second movement processing in a period during which the first movement processing is performed.

### [Supplementary Note B7]

The control method according to any one of the Supplementary Notes B1 to B6, wherein
the control method includes performing the second movement processing after the first movement processing.

### [Supplementary Note B8]

The control method according to any one of the Supplementary Notes B1 to B7, wherein
the control method includes starting the second movement processing after the first movement processing.

### [Supplementary Note B9]

The control method according to any one of the Supplementary Notes B1 to B8, wherein
the second movement processing includes a processing for acquiring the image data, which is generated by the imaging apparatus imaging the target object after the first movement processing is started.

### [Supplementary Note B 10]

The control method according to any one of the Supplementary Notes B1 to B9, wherein
the second movement processing includes a processing for generating the image data by imaging the target object using the imaging apparatus after the first movement processing is started.

### [Supplementary Note B11]

The control method according to any one of the Supplementary Notes B1 to B10, wherein
the second movement processing includes a processing for calculating at least one of the position and the pose of the target object based on the image data, which is generated by the imaging apparatus imaging the target object after the first movement processing is started.

### [Supplementary Note B12]

The control method according to the Supplementary Note B11, wherein
the second movement processing includes a processing for generating and outputting the control signal for controlling the robot to move the process apparatus based on the calculated result of at least one of the position and the pose of the target object calculated by the second movement processing.

### [Supplementary Note B13]

The control method according to any one of the Supplementary Notes B1 to B12, wherein
the control method includes performing the first movement processing by using a control apparatus, and performing the second movement processing after performing the first movement processing.

### [Supplementary Note B14]

The control method according to any one of the Supplementary Notes B1 to B13, wherein
the control method includes performing the second movement processing by using a second control apparatus, and
the first movement processing is performed by a first control apparatus that is different from the second control apparatus.

### [Supplementary Note B15]

The control method according to the Supplementary Note B14, wherein
the control method includes:
receiving, by using the second control apparatus, a permission signal, which permits the second control apparatus to control the robot to move the process apparatus by performing the second movement processing, from the first control apparatus after the first control apparatus completes the first movement processing; and
starting, by using the second control apparatus, at least a part of the second movement processing after receiving the permission signal from the first control apparatus.

### [Supplementary Note B16]

The control method according to the Supplementary Note B14 or B15, wherein
the control method includes:
receiving, by using the second control apparatus, a permission signal, which permits the second control apparatus to reflect the control signal generated by the second movement processing in the control of the robot, from the first control apparatus after the first control apparatus completes the first movement processing; and
starting, by using the second control apparatus, at least a part of the second movement processing after receiving the permission signal from the first control apparatus.

### [Supplementary Note B17]

The control method according to any one of the Supplementary Notes B14 to B16, wherein
the control method includes:
receiving, by using the second control apparatus, a permission signal, which permits the second control apparatus to control the robot to move the process apparatus by performing the second movement processing, from the first control apparatus after the first control apparatus completes the first movement processing;
starting, by using the second control apparatus, a processing for generating the control signal as a part of the second movement processing before receiving the permission signal from the first control apparatus, and
starting, by using the second control apparatus, a processing for outputting the control signal as a part of the second movement processing after receiving the permission signal from the first control apparatus.

### [Supplementary Note B18]

The control method according to any one of the Supplementary Notes B14 to B17, wherein
the control method includes:
receiving, by using the second control apparatus, a permission signal, which permits the second control apparatus to reflect the control signal generated by the second movement processing in the control of the robot, from the first control apparatus after the first control apparatus completes the first movement processing;
starting, by using the second control apparatus, a processing for generating the control signal as a part of the second movement processing before receiving the permission signal from the first control apparatus, and
starting, by using the second control apparatus, a processing for outputting the control signal as a part of the second movement processing after receiving the permission signal from the first control apparatus.

### [Supplementary Note B19]

The control method according to any one of the Supplementary Notes B15 to B18, wherein
the control method includes not starting, by using the second control apparatus, at least a part of the second movement processing in a case where the permission signal transmitted from the first control apparatus is not received.

### [Supplementary Note B20]

The control method according to any one of the Supplementary Notes B15 to B19, wherein
the control method includes repeating, by using the second control apparatus, at least a part of the second movement processing a plurality of times after the second control apparatus receives the permission signal.

### [Supplementary Note B21]

The control method according to any one of the Supplementary Notes B15 to B20, wherein
the control method includes controlling, by using the second control apparatus, the robot to move the process apparatus each time at least a part of the second movement processing is performed after the second control apparatus receives the permission signal.

### [Supplementary Note B22]

The control method according to any one of the Supplementary Notes B15 to B21, wherein
the control method includes repeating, by using the second control apparatus, at least a part of the second movement processing a plurality of times in a period that is after the first control apparatus completes the first movement processing and that is before the first control apparatus newly performs the first movement processing.

### [Supplementary Note B22]

The control method according to any one of the Supplementary Notes B15 to B22, wherein
the control method includes repeating, by using the second control apparatus, at least a part of the second movement processing a plurality of times after the second control apparatus receives the permission signal, even in a case where the second control apparatus does not receive a signal transmitted from the first control apparatus.

### [Supplementary Note B23]

The control method according to any one of the Supplementary Notes B15 to B22, wherein
the control method includes repeating, by using the second control apparatus, at least a part of the second movement processing until a positional relationship between the process apparatus and the target object becomes a predetermined positional relationship in a period that is after the second control apparatus receives the permission signal and that is before the first control apparatus newly performs the first movement processing.

### [Supplementary Note B25]

The control method according to any one of the Supplementary Notes B15 to B24, wherein
the control method includes repeating, by using the second control apparatus, at least a part of the second movement processing until a postural relationship between the process apparatus and the target object becomes a predetermined postural relationship in a period that is after the second control apparatus receives the permission signal and that is before the first control apparatus newly performs the first movement processing.

### [Supplementary Note B26]

The control method according to any one of the Supplementary Notes B15 to B25, wherein
the process apparatus is configured to hold an object, and
the control method includes repeating, by using the second control apparatus, at least a part of the second movement processing until a positional relationship between the object held by the process apparatus and the target object becomes a predetermined positional relationship in a period that is after the second control apparatus receives the permission signal and that is before the first control apparatus newly performs the first movement processing.

### [Supplementary Note B27]

The control method according to any one of the Supplementary Notes B15 to B26, wherein
the process apparatus is configured to hold an object, and
the control method includes repeating, by using the second control apparatus, at least a part of the second movement processing until a postural relationship between the object held by the process apparatus and the target object becomes a predetermined postural relationship in a period that is after the second control apparatus receives the permission signal and that is before the first control apparatus newly performs the first movement processing.

### [Supplementary Note B28]

The control method according to any one of the Supplementary Notes B14 to B27, wherein
the control method includes:
transmitting, by using the second control apparatus, a notification signal, which notifies the first control apparatus that the second control apparatus completes the second movement processing, to the first control apparatus after completing the second movement processing; and
starting, by using the first control apparatus, the first movement processing after receiving the notification signal transmitted from the second control apparatus.

### [Supplementary Note B29]

The control method according to the Supplementary Note B28, wherein
the control method includes:
transmitting, by using the second control apparatus, the notification signal to the first control apparatus after repeating at least a part of the second movement processing until a positional relationship between the process apparatus and the target object becomes a predetermined positional relationship, and
starting, by using the first control apparatus, the first movement processing after receiving the notification signal transmitted from the second control apparatus.

### [Supplementary Note B30]

The control method according to the Supplementary Note B28 or B29, wherein
the control method includes:
transmitting, by using the second control apparatus, the notification signal to the first control apparatus after repeating at least a part of the second movement processing until a postural relationship between the process apparatus and the target object becomes a predetermined postural relationship, and
starting, by using the first control apparatus, the first movement processing after receiving the notification signal transmitted from the second control apparatus.

### [Supplementary Note B31]

The control method according to any one of the Supplementary Notes B28 to B30, wherein
the control method includes not starting, by using the first control apparatus, the first movement processing in a case where the notification signal transmitted from the second control apparatus is not received.

### [Supplementary Note B32]

The control method according to any one of the Supplementary Notes B1 to B31, wherein
the control method includes generating and outputting a signal for controlling the process apparatus to perform the process on the target object after performing the second movement processing.

### [Supplementary Note B33]

The control method according to any one of the Supplementary Notes B1 to B32, wherein
the control method includes generating and outputting a signal for controlling the process apparatus to perform the process on the target object after a positional relationship between the process apparatus and the target object becomes a predetermined positional relationship.

### [Supplementary Note B34]

The control method according to any one of the Supplementary Notes B1 to B33, wherein
the control method includes generating and outputting a signal for controlling the process apparatus to perform the process on the target object, after a postural relationship between the process apparatus and the target object becomes a predetermined postural relationship.

### [Supplementary Note B35]

The control method according to any one of the Supplementary Notes B1 to B34, wherein
the control method includes performing, as at least a part of the second movement processing, a processing for generating the control signal for controlling the robot so that a positional relationship between the process apparatus and the target object becomes a predetermined positional relationship by the second movement processing moving the process apparatus.

### [Supplementary Note B36]

The control method according to the Supplementary Note B24, B29, B33 or B35, wherein
the predetermined positional relationship includes a positional relationship in which the process apparatus is positioned at a target process position at which the process apparatus should be positioned when the process apparatus performs the process on the target object..

### [Supplementary Note B37]

The control method according to any one of the Supplementary Notes B1 to B36, wherein
the control method includes performing, as at least a part of the second movement processing, a processing for generating the control signal for controlling the robot so that a postural relationship between the process apparatus and the target object becomes a predetermined postural relationship by the second movement processing moving the process apparatus.

### [Supplementary Note B38]

The control method according to the Supplementary Note B25, B30, B34 or B37, wherein
the predetermined postural relationship includes a postural relationship in which the process apparatus takes a target process pose that should be taken by the process apparatus when the process apparatus performs the process on the target object.

### [Supplementary Note B39]

The control method according to any one of the Supplementary Notes B1 to B38, wherein
the process apparatus is configured to hold an object, and
the second movement processing includes a processing for generating the control signal for controlling the robot so that a positional relationship between the object held by the process apparatus and the target object becomes a predetermined positional relationship by the second movement processing moving the process apparatus.

### [Supplementary Note B40]

The control method according to any one of the Supplementary Notes B1 to B39, wherein
the process apparatus is configured to hold an object, and
the second movement processing includes a processing for generating the control signal for controlling the robot so that a postural relationship between the object held by the process apparatus and the target object becomes a predetermined postural relationship by the second movement processing moving the process apparatus.

### [Supplementary Note B41]

The control method according to any one of the Supplementary Notes B1 to B40, wherein
the control method includes performing the second movement processing so that a movement distance of the process apparatus by the second movement processing is shorter than a movement distance of the process apparatus by the first movement processing.

### [Supplementary Note B42]

The control method according to any one of the Supplementary Notes B1 to B41, wherein
the control method includes performing the second movement processing so that a maximum movement speed of the process apparatus by the second movement processing is slower than a maximum movement speed of the process apparatus by the first movement processing.

### [Supplementary Note B43]

The control method according to any one of the Supplementary Notes B1 to B42, wherein
the control method includes performing the second movement processing so that an average movement speed of the process apparatus by the second movement processing is slower than an average movement speed of the process apparatus by the first movement processing.

### [Supplementary Note B44]

The control method according to any one of the Supplementary Notes B1 to B43, wherein
the control method includes performing, as at least a part of the second movement processing, a processing for generating the control signal for controlling the robot so that a difference between a position of the process apparatus at a timing at which the second movement processing is completed and a target process position at which the process apparatus should be positioned when the process apparatus performs the process on the target member is smaller than a difference between a position of the process apparatus at a timing at which the first movement processing is completed and the target process position by the second movement processing moving the process apparatus.

### [Supplementary Note B44]

The control method according to any one of the Supplementary Notes B1 to B43, wherein
the control method includes performing, as at least a part of the second movement processing, a processing for generating the control signal for controlling the robot so that a difference between a pose of the process apparatus at a timing at which the second movement processing is completed and a target process pose that should be taken by the process apparatus when the process apparatus performs the process on the target member is smaller than a difference between a pose of the process apparatus at a timing at which the first movement processing is completed and the target process pose by the second movement processing moving the process apparatus.

### [Supplementary Note B45]

The control method according to any one of the Supplementary Notes B1 to B44, wherein
at least a part of the first movement processing is not performed in a period during which the second movement processing is performed.

### [Supplementary Note B46]

The control method according to any one of the Supplementary Notes B1 to B45, wherein
the target object includes a first part on which the process apparatus performs the process, and a second part, different from the first part, on which the process apparatus performs the process,
the first movement processing includes the first movement processing for the first part and the first movement processing for the second part,
the second movement processing includes the second movement processing for the first part and the second movement processing for the second part,
the first movement processing for the first part includes a processing for controlling the robot so that the process apparatus approaches the first part,
the second movement processing for the first part includes a processing for generating and outputting, as the control signal, a first control signal for controlling the robot to move the process apparatus, based on a calculated result of a position and a pose of the first part, which is calculated based on the image data generated by the imaging apparatus imaging the first part, after the first movement processing for the first part is started,
the first movement processing for the second part includes a processing for controlling the robot so that the process apparatus approaches the second part from the first part after the second movement processing for the first part, and
the second movement processing for the second part includes a processing for generating and outputting, as the control signal, a second control signal for controlling the robot to move the process apparatus, based on a calculated result of a position and a pose of the second part, which is calculated based on the image data generated by the imaging apparatus imaging the second part, after the first movement processing for the second part is started.

### [Supplementary Note B47]

The control method according to any one of the Supplementary Notes B1 to B46, wherein
the target object includes a first target object on which the process apparatus performs the process, and a second target object, different from the first target object, on which the process apparatus performs the process,
the first movement processing includes the first movement processing for the first target object and the first movement processing for the second target object,
the second movement processing includes the second movement processing for the first target object and the second movement processing for the second target object,
the first movement processing for the first target object includes a processing for controlling the robot so that the process apparatus approaches the first target object,
the second movement processing for the first target object includes a processing for generating and outputting, as the control signal, a third control signal for controlling the robot to move the process apparatus, based on a calculated result of a position and a pose of the first target object, which is calculated based on the image data generated by the imaging apparatus imaging the first target object, after the first movement processing for the first target object is started,
the first movement processing for the second target object includes a processing for controlling the robot so that the process apparatus approaches the second target object from the first target object after the second movement processing for the first target object, and
the second movement processing for the second target object includes a processing for generating and outputting, as the control signal, a fourth control signal for controlling the robot to move the process apparatus, based on a calculated result of a position and a pose of the second target object, which is calculated based on the image data generated by the imaging apparatus imaging the second target object, after the first movement processing for the second target object is started.

### [Supplementary Note B48]

The control method according to any one of the Supplementary Notes B1 to B47, wherein
the target object includes a first part on which the process apparatus performs the process, and a second part, different from the first part, on which the process apparatus performs the process,
the first movement processing includes the first movement processing for the first part and the first movement processing for the second part,
the control method includes performing, as at least a part of the second movement processing, the second movement processing includes the second movement processing for the first part and the second movement processing for the second part,
the first movement processing for the first part includes a processing for controlling the robot so that the process apparatus approaches the first part,
the control method includes performing, as at least a part of the second movement processing for the first part, a processing for generating and outputting, as the control signal, a first control signal for controlling the robot to move the process apparatus, based on a calculated result of a position and a pose of the first part, which is calculated based on the image data generated by the imaging apparatus imaging the first part, after the first movement processing for the first part is started,
the first movement processing for the second part includes a processing for controlling the robot so that the process apparatus approaches the second part from the first part after the second movement processing for the first part, and
the control method includes performing, as at least a part of the second movement processing for the second part, a processing for generating and outputting, as the control signal, a second control signal for controlling the robot to move the process apparatus, based on a calculated result of a position and a pose of the second part, which is calculated based on the image data generated by the imaging apparatus imaging the second part, after the first movement processing for the second part is started.

### [Supplementary Note B49]

The control method according to the Supplementary Note B48, wherein
the control method includes repeating the second movement processing for the first part until a positional relationship between the process apparatus and the first part becomes a first positional relationship in a period that is after the first movement processing for the first part is completed and that is before the first movement processing for the second part is started.

### [Supplementary Note B50]

The control method according to the Supplementary Note B49, wherein
the first positional relationship includes a positional relationship in which the process apparatus is positioned at a target process position at which the process apparatus should be positioned when the process apparatus performs the process on the first part.

### [Supplementary Note B51]

The control method according to any one of the Supplementary Notes B48 to B50, wherein
the control method includes repeating the second movement processing for the first part until a postural relationship between the process apparatus and the first part becomes a first postural relationship in a period that is after the first movement processing for the first part is completed and that is before the first movement processing for the second part is started.

### [Supplementary Note B52]

The control method according to the Supplementary Note B51, wherein
the first postural relationship includes a postural relationship in which the process apparatus takes a target process pose that should be taken by the process apparatus when the process apparatus performs the process on the first part.

### [Supplementary Note B53]

The control method according to any one of the Supplementary Notes B48 to B52, wherein
the control method includes repeating the second movement processing for the second part until a positional relationship between the process apparatus and the second part becomes a second positional relationship after the first movement processing for the second part is started.

### [Supplementary Note B54]

The control method according to the Supplementary Note B53, wherein
the second positional relationship includes a positional relationship in which the process apparatus is positioned at a target process position at which the process apparatus should be positioned when the process apparatus performs the process on the second part.

### [Supplementary Note B55]

The control method according to any one of the Supplementary Notes B48 to B54, wherein
the control method includes repeating the second movement processing for the second part until a postural relationship between the process apparatus and the second part becomes a second postural relationship, after the first movement processing for the second part is started.

### [Supplementary Note B56]

The control method according to the Supplementary Note B55, wherein
the second postural relationship includes a postural relationship in which the process apparatus takes a target process pose that should be taken by the process apparatus when the process apparatus performs the process on the second part.

### [Supplementary Note B57]

The control method according to any one of the Supplementary Notes B48 to B56, wherein
the control method includes generating the second control signal based on the first control signal.

### [Supplementary Note B58]

The control method according to any one of the Supplementary Notes B48 to B57, wherein
the control method includes:
repeating the second movement processing for the first part until a positional relationship between the process apparatus and the first part becomes a first positional relationship in a first period that is after the first movement processing for the first part is completed and that is before the first movement processing for the second part is started;
repeating the second movement processing for the second part until a positional relationship between the process apparatus and the second part becomes a second positional relationship in a second period that is after the first movement processing for the second part is started; and
generating the second control signal in the second period based on the first control signal generated in the first period.

### [Supplementary Note B59]

The control method according to any one of the Supplementary Notes B48 to B58, wherein
the control method includes:
repeating the second movement processing for the first part until a postural relationship between the process apparatus and the first part becomes a first postural relationship in a first period that is after the first movement processing for the first part is completed and that is before the first movement processing for the second part is started;
repeating the second movement processing for the second part until a postural relationship between the process apparatus and the second part becomes a second postural relationship in a second period that is after the first movement processing for the second part is started; and
generating the second control signal in the second period based on the first control signal generated in the first period.

### [Supplementary Note B60]

The control method according to the Supplementary Note B58 or B59, wherein
the control method includes generating the second control signal generated first in the second period based on the first control signal generated last in the first period.

### [Supplementary Note B61]

The control method according to any one of the Supplementary Notes B48 to B60, wherein
the control method includes generating the second control signal by using the first control signal as an initial signal for the second control signal.

### [Supplementary Note B62]

The control method according to any one of the Supplementary Notes B48 to B61, wherein
the control method includes:
repeating the second movement processing for the first part until a positional relationship between the process apparatus and the first part becomes a first positional relationship in a first period that is after the first movement processing for the first part is completed and that is before the first movement processing for the second part is started;
repeating the second movement processing for the second part until a positional relationship between the process apparatus and the second part becomes a second positional relationship in a second period that is after the first movement processing for the second part is started; and
generating the second control signal in the second period by using the first control signal generated in the first period as an initial signal for the second control signal.

### [Supplementary Note B63]

The control method according to any one of the Supplementary Notes B48 to B62, wherein
repeating the second movement processing for the first part until a postural relationship between the process apparatus and the first part becomes a first postural relationship in a first period that is after the first movement processing for the first part is completed and that is before the first movement processing for the second part is started;
repeating the second movement processing for the second part until a postural relationship between the process apparatus and the second part becomes a second postural relationship in a second period that is after the first movement processing for the second part is started; and
generating the second control signal in the second period by using the first control signal generated in the first period as an initial signal for the second control signal.

### [Supplementary Note B64]

The control method according to the Supplementary Note B62 or B63, wherein
the control method includes generating the second control signal generated first in the second period by using the first control signal generated last in the first period as the initial signal for the second control signal.

### [Supplementary Note B65]

The control method according to any one of the Supplementary Notes B1 to B64, wherein
the target object includes a first target object on which the process apparatus performs the process, and a second target object, different from the first target object, on which the process apparatus performs the process,
the first movement processing includes the first movement processing for the first target object and the first movement processing for the second target object,
the control method includes performing, as at least a part of the second movement processing, the second movement processing for the first target object and the second movement processing for the second target object,
the first movement processing for the first target object includes a processing for controlling the robot so that the process apparatus approaches the first target object,
the control method includes performing, as at least a part of the second movement processing for the first target object, a processing for generating and outputting, as the control signal, a third control signal for controlling the robot to move the process apparatus, based on a calculated result of a position and a pose of the first target object, which is calculated based on the image data generated by the imaging apparatus imaging the first target object, after the first movement processing for the first target object is started,
the first movement processing for the second target object includes a processing for controlling the robot so that the process apparatus approaches the second target object from the first target object after the second movement processing for the first target object, and
the control method includes performing, as at least a part of the second movement processing for the second target object, a processing for generating and outputting, as the control signal, a fourth control signal for controlling the robot to move the process apparatus, based on a calculated result of a position and a pose of the second target object, which is calculated based on the image data generated by the imaging apparatus imaging the second target object, after the first movement processing for the second target object is started.

### [Supplementary Note B66]

The control method according to the Supplementary Note B65, wherein
the control method includes repeating the second movement processing for the first target object until a positional relationship between the process apparatus and the first target object becomes a third positional relationship in a period that is after the first movement processing for the first target object is completed and that is before the first movement processing for the second target object is started.

### [Supplementary Note B67]

The control method according to the Supplementary Note B66, wherein
the third positional relationship includes a positional relationship in which the process apparatus is positioned at a target process position at which the process apparatus should be positioned when the process apparatus performs the process on the first target object.

### [Supplementary Note B68]

The control method according to any one of the Supplementary Notes B65 to B67, wherein
the control method includes repeating the second movement processing for the first target object until a postural relationship between the process apparatus and the first target object becomes a third postural relationship in a period that is after the first movement processing for the first target object is completed and that is before the first movement processing for the second target object is started.

### [Supplementary Note B69]

The control method according to the Supplementary Note B68, wherein
the third postural relationship includes a postural relationship in which the process apparatus takes a target process pose that should be taken by the process apparatus when the process apparatus performs the process on the first target object.

### [Supplementary Note B70]

The control method according to any one of the Supplementary Notes B66 to B69, wherein
the control method includes repeating the second movement processing for the second target object until a positional relationship between the process apparatus and the second target object becomes a fourth positional relationship after the first movement processing for the second target object is started.

### [Supplementary Note B71]

The control method according to the Supplementary Note B70, wherein
the fourth positional relationship includes a positional relationship in which the process apparatus is positioned at a target process position at which the process apparatus should be positioned when the process apparatus performs the process on the second target object.

### [Supplementary Note B72]

The control method according to any one of the Supplementary Notes B66 to B71, wherein
the control method includes repeating the second movement processing for the second target object until a postural relationship between the process apparatus and the second target object becomes a fourth postural relationship after the first movement processing for the second target object is started.

### [Supplementary Note B73]

The control method according to the Supplementary Note B72, wherein
the fourth postural relationship includes a postural relationship in which the process apparatus takes a target process pose that should be taken by the process apparatus when the process apparatus performs the process on the second target object.

### [Supplementary Note B74]

The control method according to any one of the Supplementary Notes B65 to B73, wherein
the control method includes generating the fourth control signal based on the third control signal.

### [Supplementary Note B75]

The control method according to any one of the Supplementary Notes B65 to B74, wherein
the control method includes:
repeating the second movement processing for the first target object until a positional relationship between the process apparatus and the first target object becomes a third positional relationship in a third period that is after the first movement processing for the first target object is completed and that is before the first movement processing for the second target object is started;
repeating the second movement processing for the second target object until a positional relationship between the process apparatus and the second target object becomes a fourth positional relationship in a fourth period that is after the first movement processing for the second target object; and
generating the fourth control signal in the fourth period based on the third control signal generated in the third period.

### [Supplementary Note B76]

The control method according to any one of the Supplementary Notes B65 to B75, wherein
the control method includes:
repeating the second movement processing for the first target object until a postural relationship between the process apparatus and the first target object becomes a third postural relationship in a third period that is after the first movement processing for the first target object is completed and that is before the first movement processing for the second target object is started;
repeating the second movement processing for the second target object until a postural relationship between the process apparatus and the second target object becomes a fourth postural relationship in a fourth period that is after the first movement processing for the second target object; and
generating the fourth control signal in the fourth period based on the third control signal generated in the third period.

### [Supplementary Note B77]

The control method according to the Supplementary Note B75 or B76, wherein
the control method includes generating the fourth control signal generated first in the fourth period based on the third control signal generated last in the third period.

### [Supplementary Note B78]

The control method according to any one of the Supplementary Notes B65 to B77, wherein
the control method includes generating the fourth control signal by using the third control signal as an initial signal for the fourth control signal.

### [Supplementary Note B79]

The control method according to any one of the Supplementary Notes B65 to B78, wherein
the control method includes:
repeating the second movement processing for the first target object until a positional relationship between the process apparatus and the first target object becomes a third positional relationship in a third period that is after the first movement processing for the first target object is completed and that is before the first movement processing for the second target object is started;
repeating the second movement processing for the second target object until a positional relationship between the process apparatus and the second target object becomes a fourth positional relationship in a fourth period that is after the first movement processing for the second target object; and
generating the fourth control signal in the fourth period by using the third control signal generated in the third period as an initial signal for the fourth control signal.

### [Supplementary Note B80]

The control method according to any one of the Supplementary Notes B65 to B79, wherein
the control method includes:
repeating the second movement processing for the first target object until a postural relationship between the process apparatus and the first target object becomes a third postural relationship in a third period that is after the first movement processing for the first target object is completed and that is before the first movement processing for the second target object is started;
repeating the second movement processing for the second target object until a postural relationship between the process apparatus and the second target object becomes a fourth postural relationship in a fourth period that is after the first movement processing for the second target object; and
generating the fourth control signal in the fourth period by using the third control signal generated in the third period as an initial signal for the fourth control signal.

### [Supplementary Note B81]

The control method according to the Supplementary Note B79 or B80, wherein
the control method includes generating the fourth control signal generated first in the fourth period by using the third control signal generated last in the first period as an initial signal for the fourth control signal.

### [Supplementary Note B82]

The control method according to any one of the Supplementary Notes B1 to B81, wherein
the control method includes performing the second movement processing by using a second control apparatus, and performing the first movement processing by using a first control apparatus that is different from the second control apparatus,
the control apparatus is the second control apparatus,
the first movement processing is performed by the first control apparatus that is different from the second control apparatus,
the target object includes a first part on which the process apparatus performs the process, and a second part, different from the first part, on which the process apparatus performs the process,
the control method includes:
   performing, by using the first control apparatus as at least a part of the first movement processing, the first movement processing for the first part and the first movement processing for the second part;
   performing, by using the second control apparatus as at least a part of the second movement processing, the second movement processing for the first part and the second movement processing for the second part;
   performing, by using the first control apparatus as at least a part of the first movement processing for the first part, a processing for controlling the robot so that the process apparatus approaches the first part;
   performing, by using the second control apparatus as at least a part of the second movement processing for the first part, a processing for generating and outputting, as the control signal, a first control signal for controlling the robot to move the process apparatus, based on a calculated result of a position and a pose of the first part, which is calculated based on the image data generated by the imaging apparatus imaging the first part, after the first movement processing for the first part is started;
   performing, by using the first control apparatus as at least a part of the first movement processing for the second part, a processing for controlling the robot so that the process apparatus approaches the second part from the first part after the second movement processing for the first part; and
   performing, by using the second control apparatus as at least a part of the second movement processing for the second part, a processing for generating and outputting, as the control signal, a second control signal for controlling the robot to move the process apparatus, based on a calculated result of a position and a pose of the second part, which is calculated based on the image data generated by the imaging apparatus imaging the second part, after the first movement processing for the second part is started.

### [Supplementary Note B83]

The control method according to the Supplementary Note B82, wherein
the control method includes performing the first movement processing for the second part by using the second control apparatus instead of using the first control apparatus.

### [Supplementary Note B84]

The control method according to the Supplementary Note B83, wherein
the control method includes performing, by using the second control apparatus as at least a part of the first movement processing for the second part, a processing for controlling the robot so that the process apparatus approaches the second part from the first part even in a case where the second control apparatus does not receive a signal transmitted from the first control apparatus after the second movement processing for the first part.

### [Supplementary Note B85]

The control method according to any one of the Supplementary Notes B82 to B84, wherein
the control method includes repeating, by using the second control apparatus, the second movement processing for the first part until a positional relationship between the process apparatus and the first part becomes a first positional relationship in a period that is after the first movement processing for the first part is completed and that is before the first movement processing for the second part is started.

### [Supplementary Note B86]

The control method according to the Supplementary Note B85, wherein
the first positional relationship includes a positional relationship in which the process apparatus is positioned at a target process position at which the process apparatus should be positioned when the process apparatus performs the process on the first part.

### [Supplementary Note B87]

The control method according to any one of the Supplementary Notes B82 to B86, wherein
the control method includes repeating, by using the second control apparatus, the second movement processing for the first part until a postural relationship between the process apparatus and the first part becomes a first postural relationship in a period that is after the first movement processing for the first part is completed and that is before the first movement processing for the second part is started.

### [Supplementary Note B88]

The control method according to the Supplementary Note B87, wherein
the first postural relationship includes a postural relationship in which the process apparatus takes a target process pose that should be taken by the process apparatus when the process apparatus performs the process on the first part.

### [Supplementary Note B89]

The control method according to any one of the Supplementary Notes B82 to B88, wherein
the control method includes repeating, by using the second control apparatus, the second movement processing for the second part until a positional relationship between the process apparatus and the second part becomes a second positional relationship after the first movement processing for the second part is started.

### [Supplementary Note B90]

The control method according to the Supplementary Note B89, wherein
the second positional relationship includes a positional relationship in which the process apparatus is positioned at a target process position at which the process apparatus should be positioned when the process apparatus performs the process on the second part.

### [Supplementary Note B91]

The control method according to any one of the Supplementary Notes B82 to B90, wherein
the control method includes repeating, by using the second control apparatus, the second movement processing for the second part until a postural relationship between the process apparatus and the second part becomes a second postural relationship, after the first movement processing for the second part is started.

### [Supplementary Note B92]

The control method according to the Supplementary Note B91, wherein
the second postural relationship includes a postural relationship in which the process apparatus takes a target process pose that should be taken by the process apparatus when the process apparatus performs the process on the second part.

### [Supplementary Note B93]

The control method according to any one of the Supplementary Notes B82 to B92, wherein
the control method includes generating, by using the second control apparatus, the second control signal based on the first control signal.

### [Supplementary Note B94]

The control method according to any one of the Supplementary Notes B82 to B93, wherein
the control method includes:
repeating, by using the second control apparatus, the second movement processing for the first part until a positional relationship between the process apparatus and the first part becomes a first positional relationship in a first period that is after the first movement processing for the first part is completed and that is before the first movement processing for the second part is started;
repeating, by using the second control apparatus, the second movement processing for the second part until a positional relationship between the process apparatus and the second part becomes a second positional relationship in a second period that is after the first movement processing for the second part is started; and
generating the second control signal in the second period based on the first control signal generated in the first period.

### [Supplementary Note B95]

The control method according to any one of the Supplementary Notes B82 to B94, wherein
the control method includes:
repeating, by using the second control apparatus, the second movement processing for the first part until a postural relationship between the process apparatus and the first part becomes a first postural relationship in a first period that is after the first movement processing for the first part is completed and that is before the first movement processing for the second part is started;
repeating, by using the second control apparatus, the second movement processing for the second part until a postural relationship between the process apparatus and the second part becomes a second postural relationship in a second period that is after the first movement processing for the second part is started; and
generating the second control signal in the second period based on the first control signal generated in the first period.

### [Supplementary Note B96]

The control method according to the Supplementary Note B94 or B95, wherein
the control method includes generating, by using the second control apparatus, the second control signal generated first in the second period based on the first control signal generated last in the first period.

### [Supplementary Note B97]

The control method according to any one of the Supplementary Notes B82 to B96, wherein
the control method includes generating, by using the second control apparatus, the second control signal by using the first control signal as an initial signal for the second control signal.

### [Supplementary Note B98]

The control method according to any one of the Supplementary Notes B82 to B97, wherein
the control method includes:
repeating, by using the second control apparatus, the second movement processing for the first part until a positional relationship between the process apparatus and the first part becomes a first positional relationship in a first period that is after the first movement processing for the first part is completed and that is before the first movement processing for the second part is started;
repeating, by using the second control apparatus, the second movement processing for the second part until a positional relationship between the process apparatus and the second part becomes a second positional relationship in a second period that is after the first movement processing for the second part is started; and
generating, by using the second control apparatus, the second control signal in the second period by using the first control signal generated in the first period as an initial signal for the second control signal.

### [Supplementary Note B99]

The control method according to any one of the Supplementary Notes B82 to B98, wherein
the control method includes:
repeating, by using the second control apparatus, the second movement processing for the first part until a postural relationship between the process apparatus and the first part becomes a first postural relationship in a first period that is after the first movement processing for the first part is completed and that is before the first movement processing for the second part is started;
repeating, by using the second control apparatus, the second movement processing for the second part until a postural relationship between the process apparatus and the second part becomes a second postural relationship in a second period that is after the first movement processing for the second part is started; and
generating, by using the second control apparatus, the second control signal in the second period by using the first control signal generated in the first period as an initial signal for the second control signal.

### [Supplementary Note B 100]

The control method according to the Supplementary Note B98 or B99, wherein
the control method includes generating, by using the second control apparatus, the second control signal generated first in the second period by using the first control signal generated last in the first period as the initial signal for the second control signal.

### [Supplementary Note B101]

The control method according to any one of the Supplementary Notes B1 to B100, wherein
the control method includes performing the second movement processing by using a second control apparatus, and performing the first movement processing by using a first control apparatus that is different from the second control apparatus,
the target object includes a first target object on which the process apparatus performs the process, and a second target object, different from the first target object, on which the process apparatus performs the process,
the control method includes:
   performing, by using the first control apparatus as at least a part of the first movement processing, the first movement processing for the first target object and the first movement processing for the second target object;
   performing, by using the second control apparatus as at least a part of the second movement processing, the second movement processing for the first target object and the second movement processing for the second target object;
   performing, by using the first control apparatus as at least a part of the first movement processing for the first target object, a processing for controlling the robot so that the process apparatus approaches the first target object;
   performing, by using the second control apparatus as at least a part of the second movement processing for the first target object, a processing for generating and outputting, as the control signal, a third control signal for controlling the robot to move the process apparatus, based on a calculated result of a position and a pose of the first target object, which is calculated based on the image data generated by the imaging apparatus imaging the first target object, after the first movement processing for the first target object is started;
   performing, by using the first control apparatus as at least a part of the first movement processing for the second target object, a processing for controlling the robot so that the process apparatus approaches the second target object from the first target object after the second movement processing for the first target object and
   performing, by using the second control apparatus as at least a part of the second movement processing for the second target object, a processing for generating and outputting, as the control signal, a fourth control signal for controlling the robot to move the process apparatus, based on a calculated result of a position and a pose of the second target object, which is calculated based on the image data generated by the imaging apparatus imaging the second target object, after the first movement processing for the second target object is started.

### [Supplementary Note B102]

The control method according to the Supplementary Note B101, wherein
the control method includes performing the first movement processing for the second target object by using the second control apparatus instead of using the first control apparatus.

### [Supplementary Note B103]

The control method according to the Supplementary Note B102, wherein
the control method includes performing, by using the second control apparatus as at least a part of the first movement processing for the second target object, a processing for controlling the robot so that the process apparatus approaches the second target object from the first target object even in a case where the second control apparatus does not receive a signal transmitted from the first control apparatus after the second movement processing for the first target object.

### [Supplementary Note B104]

The control method according to any one of the Supplementary Notes B101 to B103, wherein
the control method includes repeating, by using the second control apparatus, the second movement processing for the first target object until a positional relationship between the process apparatus and the first target object becomes a third positional relationship in a period that is after the first movement processing for the first target object is completed and that is before the first movement processing for the second target object is started.

### [Supplementary Note B105]

The control method according to the Supplementary Note B104, wherein
the third positional relationship includes a positional relationship in which the process apparatus is positioned at a target process position at which the process apparatus should be positioned when the process apparatus performs the process on the first target object.

### [Supplementary Note B106]

The control method according to any one of the Supplementary Notes B101 to B105, wherein
the control method includes repeating, by using the second control apparatus, the second movement processing for the first target object until a postural relationship between the process apparatus and the first target object becomes a third postural relationship in a period that is after the first movement processing for the first target object is completed and that is before the first movement processing for the second target object is started.

### [Supplementary Note B107]

The control method according to the Supplementary Note B106, wherein
the third postural relationship includes a postural relationship in which the process apparatus takes a target process pose that should be taken by the process apparatus when the process apparatus performs the process on the first target object.

### [Supplementary Note B108]

The control method according to any one of the Supplementary Notes B104 to B107, wherein
the control method includes repeating, by using the second control apparatus, the second movement processing for the second target object until a positional relationship between the process apparatus and the second target object becomes a fourth positional relationship after the first movement processing for the second target object is started.

### [Supplementary Note B109]

The control method according to the Supplementary Note B108, wherein
the fourth positional relationship includes a positional relationship in which the process apparatus is positioned at a target process position at which the process apparatus should be positioned when the process apparatus performs the process on the second target object.

### [Supplementary Note B110]

The control method according to any one of the Supplementary Notes B104 to B109, wherein
the control method includes repeating, by using the second control apparatus, the second movement processing for the second target object until a postural relationship between the process apparatus and the second target object becomes a fourth postural relationship after the first movement processing for the second target object is started.

### [Supplementary Note B111]

The control method according to the Supplementary Note B110, wherein
the fourth postural relationship includes a postural relationship in which the process apparatus takes a target process pose that should be taken by the process apparatus when the process apparatus performs the process on the second target object.

### [Supplementary Note B112]

The control method according to any one of the Supplementary Notes B101 to B111, wherein
the control method includes generating, by using the second control apparatus, the fourth control signal based on the third control signal.

### [Supplementary Note B113]

The control method according to any one of the Supplementary Notes B101 to B112, wherein
the control method includes:
repeating, by using the second control apparatus, the second movement processing for the first target object until a positional relationship between the process apparatus and the first target object becomes a third positional relationship in a third period that is after the first movement processing for the first target object is completed and that is before the first movement processing for the second target object is started;
repeating, by using the second control apparatus, the second movement processing for the second target object until a positional relationship between the process apparatus and the second target object becomes a fourth positional relationship in a fourth period that is after the first movement processing for the second target object; and
generating, by using the second control apparatus, the fourth control signal in the fourth period based on the third control signal generated in the third period.

### [Supplementary Note B114]

The control method according to any one of the Supplementary Notes B101 to B113, wherein
the control method includes:
repeating, by using the second control apparatus, the second movement processing for the first target object until a postural relationship between the process apparatus and the first target object becomes a third postural relationship in a third period that is after the first movement processing for the first target object is completed and that is before the first movement processing for the second target object is started;
repeating, by using the second control apparatus, the second movement processing for the second target object until a postural relationship between the process apparatus and the second target object becomes a fourth postural relationship in a fourth period that is after the first movement processing for the second target object; and
generating, by using the second control apparatus, the fourth control signal in the fourth period based on the third control signal generated in the third period.

### [Supplementary Note B115]

The control method according to the Supplementary Note B113 or B114, wherein
the control method includes generating, by using the second control apparatus, the fourth control signal generated first in the fourth period based on the third control signal generated last in the third period.

### [Supplementary Note B116]

The control method according to any one of the Supplementary Notes B101 to B115, wherein
the control method includes generating, by using the second control apparatus, the fourth control signal by using the third control signal as an initial signal for the fourth control signal.

### [Supplementary Note B117]

The control method according to any one of the Supplementary Notes B101 to B116, wherein
the control method includes:
repeating, by using the second control apparatus, the second movement processing for the first target object until a positional relationship between the process apparatus and the first target object becomes a third positional relationship in a third period that is after the first movement processing for the first target object is completed and that is before the first movement processing for the second target object is started;
repeating, by using the second control apparatus, the second movement processing for the second target object until a positional relationship between the process apparatus and the second target object becomes a fourth positional relationship in a fourth period that is after the first movement processing for the second target object; and
generating, by using the second control apparatus, the fourth control signal in the fourth period by using the third control signal generated in the third period as an initial signal for the fourth control signal.

### [Supplementary Note B118]

The control method according to any one of the Supplementary Notes B101 to B117, wherein
the control method includes:
repeating, by using the second control apparatus, the second movement processing for the first target object until a postural relationship between the process apparatus and the first target object becomes a third postural relationship in a third period that is after the first movement processing for the first target object is completed and that is before the first movement processing for the second target object is started;
repeating, by using the second control apparatus, the second movement processing for the second target object until a postural relationship between the process apparatus and the second target object becomes a fourth postural relationship in a fourth period that is after the first movement processing for the second target object; and
generating, by using the second control apparatus, the fourth control signal in the fourth period by using the third control signal generated in the third period as an initial signal for the fourth control signal.

### [Supplementary Note B119]

The control method according to the Supplementary Note B117 or B118, wherein
the control method includes generating, by using the second control apparatus, the fourth control signal generated first in the fourth period by using the third control signal generated last in the first period as an initial signal for the fourth control signal.

### [Supplementary Note B120]

The control method according to any one of the Supplementary Notes B1 to B119, wherein
the first movement processing includes a processing for controlling the robot to move the process apparatus in accordance with movement instruction information.

### [Supplementary Note B121]

The control method according to the Supplementary Note B120, wherein
the movement instruction information is set by a user inputting the movement instruction information in advance.

### [Supplementary Note B122]

The control method according to the Supplementary Note B120 or B121, wherein
the movement instruction information includes at least one of a target movement position that instructs a position to which the process apparatus should move, a target movement distance that instructs a distance by which the process apparatus should move, and a target movement direction that instructs a direction toward which the process apparatus should move.

### [Supplementary Note B123]

The control method according to the Supplementary Note B122, wherein
the target movement position is fixed to a position, which is set in advance, in a period during which the first movement processing is performed, the target movement distance is fixed to a distance, which is set in advance, in a period during which the first movement processing is performed, and the target movement direction is fixed to a direction, which is set in advance, in a period during which the first movement processing is performed.

### [Supplementary Note B124]

The control method according to the Supplementary Note B122 or B123, wherein
the target object is moved by a transport apparatus capable of conveying the target object, and
at least one of the target movement position, the target movement distance, and the target movement direction is set in advance based on at least one of a transport speed of the target member by the transport apparatus and a transport direction of the target member by the transport apparatus.

### [Supplementary Note B125]

The control method according to any one of the Supplementary Notes B122 to B124, wherein
the target object includes a first part on which the process apparatus performs the process, and a second part, different from the first part, on which the process apparatus performs the process,
the process apparatus performs the process on the second part after performing the process on the first part, and
at least one of the target movement position, the target movement distance, and the target movement direction is set in advance based on a positional relationship between the first part and the second part.

### [Supplementary Note B 126]

The control method according to any one of the Supplementary Notes B122 to B125, wherein
the target object includes a first target object on which the process apparatus performs the process, and a second target object, different from the first target object, on which the process apparatus performs the process,
the process apparatus performs the process on the second target object after performing the process on the first target object, and
at least one of the target movement position, the target movement distance, and the target movement direction is set in advance based on a positional relationship between the first target object and the second target object.

### [Supplementary Note B 127]

The control method according to any one of the Supplementary Notes B1 to B126, wherein
the first movement processing is a processing based on an open loop control.

### [Supplementary Note B 128]

The control method according to any one of the Supplementary Notes B1 to B127, wherein
the second movement processing is a processing based on a closed loop control.

### [Supplementary Note B 129]

The control method according to the Supplementary Note B128, wherein
the closed loop control is at least one of a P (Proportional) control, PI (Proportional Integral) control, and PID (Proportional Integral Derivative) control.

### [Supplementary Note B 130]

The control method according to any one of the Supplementary Notes B1 to B129, wherein
the target object is moved by a transport apparatus that is configured to transport the target object, and
the first movement processing and the second movement processing are performed on the target object that is being moved by the transport apparatus.

### [Supplementary Note B131]

The control method according to any one of the Supplementary Notes B1 to B130, wherein
the second movement processing includes a processing for calculating at least one of the position and the pose of the target object by performing a matching processing using the image data, which is generated by the imaging apparatus imaging the target object after the first movement processing is started, and model data, which indicates an object model that is a model of the target object.

### [Supplementary Note B132]

The control method according to the Supplementary Note B131, wherein
the object model is a model of an edge of at least a part of the target object.

### [Supplementary Note B133]

The control method according to the Supplementary Note B132, wherein
the model data is data indicating an edge of at least a part of the target object or a sample in an image acquired by imaging in advance the target object or the sample object whose shape is the same as that of the target object.

### [Supplementary Note B134]

The control method according to any one of the Supplementary Notes B1 to B133, wherein
the second movement processing includes a processing for generating and outputting the control signal for controlling the robot to move the process apparatus based on the calculated result of at least one of the position and the pose of the target object and a calculated result of at least one of a position and a pose of the process apparatus, which are calculated based on the image data generated by the imaging apparatus imaging the target object and the process apparatus after the first movement processing is started.

### [Supplementary Note B135]

The control method according to the Supplementary Note B134, wherein
the second movement processing includes a processing for calculating at least one of the position and the pose of the target object and at least one of the position and the pose of the process apparatus by performing a matching processing using the image data, which is generated by the imaging apparatus imaging the target object and the process apparatus after the first movement processing is started, and model data, which indicates an object model that is a model of the target object and an apparatus model that is a model of the process apparatus.

### [Supplementary Note B 136]

The control method according to the Supplementary Note B135, wherein
the object model is a model of an edge of at least a part of the target object, and
the apparatus model is a model of an edge of at least a part of the process apparatus.

### [Supplementary Note B 137]

The control method according to the Supplementary Note B135 or B136, wherein
the model data indicates the object model and the apparatus model that are aligned with each other, and
the second movement processing includes a processing for generating the control signal for controlling the robot, based on the calculated result of at least one of the position and the pose of the target object and the calculated result of at least one of the position and the pose of the process apparatus, so that a difference between a positional relationship of the target object and the process apparatus and a positional relationship of the object model and the apparatus model that are aligned with each other is equal to or smaller than a threshold value by moving the process apparatus.

### [Supplementary Note B138]

The control method according to any one of the Supplementary Notes B135 to B137, wherein
the model data indicates the object model and the apparatus model that are aligned with each other, and
the second movement processing includes a processing for generating the control signal for controlling the robot, based on the calculated result of at least one of the position and the pose of the target object and the calculated result of at least one of the position and the pose of the process apparatus, so that a difference between a postural relationship of the target object and the process apparatus and a postural relationship of the object model and the apparatus model that are aligned with each other is equal to or smaller than a threshold value by moving the process apparatus.

### [Supplementary Note B139]

The control method according to any one of the Supplementary Notes B135 to B138, wherein
the model data indicates the object model and the apparatus model that are aligned with each other, and
the second movement processing includes a processing for selecting, as a target object on which the process apparatus should perform the process, one target object satisfying a condition that a positional relationship between the target object and the process apparatus is closest to a positional relationship between the object model and the apparatus model that are aligned with each other, in a case where a plurality of target objects are detected by the matching processing.

### [Supplementary Note B140]

The control method according to any one of the Supplementary Notes B1 to B139, wherein
the control method includes performing a preparatory processing for performing the second movement processing in a period during which the first movement processing is performed and before the second movement processing is started.

### [Supplementary Note B141]

The control method according to any one of the Supplementary Notes B1 to B140, wherein
the control method includes performing, by using a control apparatus, a preparatory processing for performing the second movement processing before the second movement processing is started.

### [Supplementary Note B142]

The control method according to the Supplementary Note B141, wherein
the control method includes performing, by using the control apparatus, the preparatory processing for performing the second movement processing in a period during which the first movement processing is performed and before the second movement processing is started.

### [Supplementary Note B143]

The control method according to any one of the Supplementary Notes B140 to B142, wherein
the preparatory processing includes a processing for acquiring information that is used to perform the second movement processing.

### [Supplementary Note B144]

The control method according to the Supplementary Note B143, wherein
the information that is used to perform the second movement processing includes target object information related to the target object on which the process apparatus performs the predetermined process.

### [Supplementary Note B145]

The control method according to the Supplementary Note B144, wherein
the target object information includes information related to a type of the target object.

### [Supplementary Note B146]

The control method according to any one of the Supplementary Notes B143 to B145, wherein
the information that is used to perform the second movement processing includes surrounding object information related to a surrounding object that is positioned around the target object on which the process apparatus performs the predetermined process.

### [Supplementary Note B147]

The control method according to any one of the Supplementary Note B 146, wherein
the surrounding object information includes information related to at least one of a position of the surrounding object, a pose of the surrounding object, a shape of the surrounding object, and a size of the surrounding object.

### [Supplementary Note B148]

The control method according to any one of the Supplementary Notes B143 to B147, wherein
the second movement processing includes a processing for calculating at least one of the position and the pose of the target object by performing a matching processing using the image data, which is generated by the imaging apparatus imaging the target object after the first movement processing is started, and model data, which indicates an object model that is a model of the target object, and
the information that is used to perform the second movement processing includes matching information that is information used for the matching processing.

### [Supplementary Note B149]

The control method according to the Supplementary Note B148, wherein
the matching information includes at least one of information for specifying the model data, information related to a matching determination threshold that is used for the matching processing, and information related to a convergence condition that should be satisfied to end the second movement processing.

### [Supplementary Note B150]

The control method according to any one of the Supplementary Notes B143 to B149, wherein
the information that is used to perform the second movement processing includes imaging condition information that is information related to an imaging condition of the imaging apparatus.

### [Supplementary Note B151]

The control method according to the Supplementary Note B150, wherein
the imaging condition information includes at least one of information related to an exposure time and information related to an intensity of illumination light.

### [Supplementary Note B152]

The control method according to any one of the Supplementary Notes B143 to B151, wherein
the information that is used to perform the second movement processing includes the image data generated by the imaging apparatus imaging the target object after the first movement processing is started.

### [Supplementary Note B153]

The control method according to any one of the Supplementary Notes B143 to B152, wherein
the information that is used to perform the second movement processing includes information related to the calculated result of at least one of the position and the pose of the target object, which is calculated based on the image data generated by the imaging apparatus imaging the target object after the first movement processing is started.

### [Supplementary Note B154]

The control method according to any one of the Supplementary Notes B140 to B153, wherein
the preparatory processing includes a processing for acquiring the image data generated by the imaging apparatus imaging the target object after the first movement processing is started.

### [Supplementary Note B155]

The control method according to any one of the Supplementary Notes B140 to B154, wherein
the preparatory processing includes a processing for generating the image data by imaging the target object using the imaging apparatus after the first movement processing is started.

### [Supplementary Note B156]

The control method according to any one of the Supplementary Notes B140 to B155, wherein
the preparatory processing includes a processing for calculating at least one of the position and the pose of the target object based on the image data, which is generated by the imaging apparatus imaging the target object after the first movement processing is started.

### [Supplementary Note B157]

The control method according to any one of the Supplementary Notes B140 to B156, wherein
the preparatory processing includes a processing for adjusting an exposure condition of the imaging apparatus.

### [Supplementary Note B158]

The control method according to any one of the Supplementary Notes B140 to B157, wherein
the imaging apparatus includes an illumination apparatus that is configured to illuminate the target object with illumination light, and
the preparatory processing includes a processing for allowing the illumination apparatus to start illuminating the target object with the illumination light.

### [Supplementary Note B159]

The control method according to any one of the Supplementary Notes B1 to B158, wherein
the second movement processing includes a processing for calculating at least one of a position and a pose of the target object at a first time based on at least one of a position and a pose of the target object, which are calculated based on the image data generated by the imaging apparatus imaging the target object at a second time that is before the first time, in a case where at least one of the position and the pose of the target object cannot be calculated based on the image data generated by an imaging of the imaging apparatus at the first time in a period during which the second movement processing is performed.

### [Supplementary Note B160]

The control method according to any one of the Supplementary Notes B1 to B159, wherein
the second movement processing includes a processing for generating and outputting the control signal for controlling the robot to move the process apparatus based on information related to a contact between the process apparatus and the target object, in a case where the position and the pose of the target object cannot be calculated based on the image data generated by an imaging of the imaging apparatus in a period during which the second movement processing is performed.

### [Supplementary Note B161]

The control method according to any one of the Supplementary Notes B1 to B160, wherein
the control method includes inspecting the target object based on the image data.

### [Supplementary Note B162]

The control method according to any one of the Supplementary Notes B1 to B161, wherein
the control method includes inspecting the target object based on a measured result of the target object by a measurement apparatus that is configured to measure the target object.

### [Supplementary Note B 163]

The control method according to the Supplementary Note B161 or B162, wherein
the control method includes inspecting the target object before the process apparatus performs the process on the target object.

### [Supplementary Note B 164]

The control method according to any one of the Supplementary Notes B1 to B163, wherein
the control method includes inspecting the target object after the process apparatus performs the process on the target object.

### [Supplementary Note B 165]

The control method according to any one of the Supplementary Notes B1 to B164, wherein
the control method includes inspecting a result of the process performed on the target object by the process apparatus, based on the image data or a measured result of a measurement apparatus.

### [Supplementary Note B 166]

The control method according to any one of the Supplementary Notes B1 to B165, wherein
the control method includes inspecting, by using a control apparatus, the target object based on the image data.

### [Supplementary Note B167]

The control method according to any one of the Supplementary Notes B1 to B166, wherein
the control method includes inspecting, by using a control apparatus, the target object based on a measured result of the target object by a measurement apparatus that is configured to measure the target object.

### [Supplementary Note B168]

The control method according to the Supplementary Note B166 or B167, wherein
the control method includes inspecting, by using the control apparatus, the target object before the process apparatus performs the process on the target object.

### [Supplementary Note B169]

The control method according to any one of the Supplementary Notes B166 to B168, wherein
the control method includes inspecting, by using the control apparatus, the target object after the process apparatus performs the process on the target object.

### [Supplementary Note B170]

The control method according to any one of the Supplementary Notes B1 to B169, wherein
the control method includes inspecting, by using a control apparatus, a result of the process performed on the target object by the process apparatus, based on the image data or a measured result by a measurement apparatus.

### [Supplementary Note B171]

The control method according to any one of the Supplementary Notes B1 to B170, wherein
the target object is moved by a transport apparatus that is configured to transport the target object,
the control method includes performing the second movement processing in a period during which the transport apparatus moves the target object, and
the second movement processing includes a processing for generating the control signal for controlling the robot to move the process apparatus based on a transport state of the target object, in a case where at least one of the position and the pose of the target object cannot be calculated based on the image data generated by an imaging of the imaging apparatus at a first time in a period during which the second movement processing is performed.

### [Supplementary Note B 172]

The control method according to any one of the Supplementary Notes B1 to B171, wherein
the target object is moved by a transport apparatus that is configured to transport the target object,
the control method includes performing the second movement processing in a period during which the transport apparatus moves the target object, and
the second movement processing includes a processing for generating the control signal for controlling the robot to move the process apparatus based on a transport state of the target object, in a case where at least one of the position and the pose of the target object cannot be calculated based on the image data generated by an imaging of the imaging apparatus at a first time in a period during which the second movement processing is performed.

### [Supplementary Note B173]

The control method according to the Supplementary Note B171 or B172, wherein
the transport state of the target object includes at least one of a transport direction of the target object, a transport distance of the target object, and a transport speed of the target object.

### [Supplementary Note B 174]

The control method according to any one of the Supplementary Notes B171 to B173, wherein
the transport state of the target object includes a transport direction of the target object, and
the second movement processing includes a processing for generating the control signal for controlling the robot to move the process apparatus toward a movement direction that is determined based on the transport direction of the target object.

### [Supplementary Note B 175]

The control method according to any one of the Supplementary Notes B171 to B174, wherein
the transport state of the target object includes a transport distance of the target object, and
the second movement processing includes a processing for generating the control signal for controlling the robot to move the process apparatus by a movement distance that is determined based on the transport distance of the target object.

### [Supplementary Note B 176]

The control method according to any one of the Supplementary Notes B171 to B175, wherein
the transport state of the target object includes a transport speed of the target object, and
the second movement processing includes a processing for estimating a transport distance of the target object based on the transport speed of the target object, and a processing for generating the control signal for controlling the robot to move the process apparatus by a movement distance that is determined based on an estimated result of the transport distance of the target object.

### [Supplementary Note B 177]

The control method according to any one of the Supplementary Notes B171 to B176, wherein
the transport state of the target object includes a transport direction of the target object and a transport distance of the target object, and
the second movement processing includes a processing for generating the control signal for controlling the robot to move the process apparatus by a movement distance, which is determined based on the transport distance of the target object, toward a movement direction, which is determined based on the transport direction of the target object.

### [Supplementary Note B 178]

The control method according to any one of the Supplementary Notes B171 to B177, wherein
the transport state of the target object includes a transport direction of the target object and a transport speed of the target object, and
the second movement processing includes a processing for estimating a transport distance of the target object based on the transport speed of the target object, and a processing for generating the control signal for controlling the robot to move the process apparatus by a movement distance, which is determined based on an estimated result of the transport distance of the target object, toward a movement direction, which is determined based on the transport direction of the target object.

### [Supplementary Note B 179]

The control method according to any one of the Supplementary Notes B171 to B178, wherein
the second movement processing includes a processing for acquiring information related to the transport state of the target object from the transport apparatus or an apparatus that controls the transport apparatus, and a processing for generating the control signal for controlling the robot to move the process apparatus based on the acquired information.

### [Supplementary Note B180]

The control method according to any one of the Supplementary Notes B171 to B179, wherein
the second movement processing includes a processing for estimating the transport state of the target object based on the calculated result of at least one of the position and the pose of the target object, which is calculated based on the image data generated by the imaging apparatus imaging the target object in a period before the first time, and a processing for generating the control signal for controlling the robot to move the process apparatus based on an estimated result of the transport state of the target object.

### [Supplementary Note B181]

The control method according to any one of the Supplementary Notes B1 to B180, wherein
the control method is performed by a control system, and
the control system includes the imaging apparatus.

### [Supplementary Note B182]

The control method according to any one of the Supplementary Notes B1 to B181, wherein
the control method includes:
performing the second movement processing by using a second control apparatus of a control system; and
performing the first movement processing by using a first control apparatus of the control system that is different from the second control apparatus.

### [Supplementary Note B183]

The control method according to any one of the Supplementary Notes B1 to B182, wherein
the imaging apparatus is attached to the robot.

### [Supplementary Note B184]

The control method according to any one of the Supplementary Notes B1 to B182, wherein
the robot is a first robot, and
the imaging apparatus is attached to a second robot that is different from the first robot.

### [Supplementary Note B185]

The control method according to any one of the Supplementary Notes B1 to B184, wherein
the imaging apparatus is attached to a support member that is different from the robot and that is configured to supporting the imaging apparatus.

### [Supplementary Note B186]

A robot system including:
a control apparatus that performs the control method according to any one of the Supplementary Notes B1 to B185; and
the robot.

### [Supplementary Note B187]

The robot system according to the Supplementary Note B186 further including the process apparatus that performs the process on the target object.

### [Supplementary Note B188]

A computer program that allows a computer to execute the setting method according to any one of the Supplementary Notes B1 to B185.

### [Supplementary Note B189]

A recording medium on which the computer program according to the Supplementary Note B188 is recorded.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a control system, a robot system, a control method, and a computer program, which involve such changes, are also intended to be within the technical scope of the present invention.

### Description of Reference Codes

- SYS: robot system
- 1: robot
- 12: robot arm
- 2: imaging unit
- 21: imaging apparatus
- 3: control apparatus
- 31: computing apparatus
- 311: coordinate transformation unit
- 312: signal generation unit
- 33: communication apparatus
- 4: robot control apparatus
- 5: end effector
- OBJ: object
- IMG: image data

## Claims

1. A control system that generates a control signal for controlling a robot, wherein
a process apparatus, which performs a process on a target object, and an imaging apparatus, which generates image data of at least the target object by imaging the target object, are attached to the robot,
the robot moves the process apparatus and the imaging apparatus,
the control system comprises a control apparatus that generates and outputs the control signal,
the control apparatus performs a second movement processing after a first movement processing,
the first movement processing includes a processing for controlling the robot to move the process apparatus without using the image data, and
the second movement processing includes a processing for generating and outputting the control signal for controlling the robot to move the process apparatus based on a calculated result of a position and a pose of the target object, which is calculated based on the image data generated by the imaging apparatus imaging the target object after the first movement processing.

2. The control system according to claim 1, wherein
the control apparatus is a second control apparatus, and
the first movement processing is performed by a first control apparatus that is different from the second control apparatus.

3. The control system according to claim 1, wherein
the control apparatus performs the first movement processing, and performs the second movement processing after performing the first movement processing.

4. The control system according to any one of claims 1 to 3, wherein
the first movement processing includes a processing for controlling the robot to move the process apparatus in accordance with movement instruction information, without using the image data.

5. A control system that generates the control signal for controlling a robot, wherein
a process apparatus, which performs a process on a target object, and an imaging apparatus, which generates image data of at least the target object by imaging the target object, are attached to the robot,
the robot moves the process apparatus and the imaging apparatus,
the control system comprises a second control apparatus that performs a second movement processing for generating and outputting the control signal for controlling the robot to move the process apparatus based on a calculated result of a position and a pose of the target object, which is calculated based on the image data generated by the imaging apparatus imaging the target object after a first control apparatus performs a first movement processing for controlling the robot to move the process apparatus in accordance with movement instruction information, and
the second control apparatus is a control apparatus that is different from the first control apparatus.

6. The control system according to claim 2 or 5, wherein
the second control apparatus receives a permission signal, which permits the second control apparatus to control the robot to move the process apparatus by performing the second movement processing, from the first control apparatus after the first control apparatus completes the first movement processing, and
the second control apparatus starts the second movement processing after receiving the permission signal from the first control apparatus.

7. The control system according to claim 6, wherein
the second control apparatus does not start the second movement processing in a case where it does not receive the permission signal transmitted from the first control apparatus.

8. The control system according to claim 6 or 7, wherein
the second control apparatus repeats the second movement processing a plurality of times after the second control apparatus receives the permission signal.

9. The control system according to claim 8, wherein
the second control apparatus controls the robot to move the process apparatus each time the second movement processing is performed after the second control apparatus receives the permission signal.

10. The control system according to any one of claims 6 to 9, wherein
the second control apparatus repeats the second movement processing a plurality of times in a period that is after the first control apparatus completes the first movement processing and that is before the first control apparatus newly performs the first movement processing.

11. The control system according to any one of claims 6 to 10, wherein
the second control apparatus repeats the second movement processing a plurality of times after the second control apparatus receives the permission signal, even in a case where the second control apparatus does not receive a signal transmitted from the first control apparatus.

12. The control system according to any one of claims 6 to 11, wherein
the second control apparatus repeats the second movement processing until a positional relationship between the process apparatus and the target object becomes a predetermined positional relationship and / or a postural relationship between the process apparatus and the target object becomes a predetermined postural relationship, in a period that is after the second control apparatus receives the permission signal and that is before the first control apparatus newly performs the first movement processing.

13. The control system according to claim 12, wherein
the predetermined positional relationship includes a positional relationship in which the process apparatus is positioned at a target process position at which the process apparatus should be positioned when the process apparatus performs the process on the target object, and
the predetermined postural relationship includes a postural relationship in which the process apparatus takes a target process pose that should be taken by the process apparatus when the process apparatus performs the process on the target object.

14. The control system according to any one of claims 6 to 13, wherein
the process apparatus is configured to hold an object, and
the second control apparatus repeats the second movement processing until a positional relationship between the object held by the process apparatus and the target object becomes a predetermined positional relationship and / or a postural relationship between the object held by the process apparatus and the target object becomes a predetermined postural relationship, in a period that is after the second control apparatus receives the permission signal and that is before the first control apparatus newly performs the first movement processing,

15. The control system according to any one of claims 2 and 5 to 14, wherein
the second control apparatus transmits a notification signal, which notifies the first control apparatus that the second control apparatus completes the second movement processing, to the first control apparatus after completing the second movement processing, and
the first control apparatus starts the first movement processing after receiving the notification signal transmitted from the second control apparatus.

16. The control system according to claim 15, wherein
the second control apparatus transmits the notification signal to the first control apparatus after repeating the second movement processing until a positional relationship between the process apparatus and the target object becomes a predetermined positional relationship and / or a postural relationship between the process apparatus and the target object becomes a predetermined postural relationship, and
the first control apparatus starts the first movement processing after receiving the notification signal transmitted from the second control apparatus.

17. The control system according to claim 16, wherein
the predetermined positional relationship includes a positional relationship in which the process apparatus is positioned at a target process position at which the process apparatus should be positioned when the process apparatus performs the process on the target object, and
the predetermined postural relationship includes a postural relationship in which the process apparatus takes a target process pose that should be taken by the process apparatus when the process apparatus performs the process on the target object.

18. The control system according to any one of claims 15 to 17, wherein
the first control apparatus does not start the first movement processing in a case where it does not receive the notification signal transmitted from the second control apparatus.

19. The control system according to any one of claims 2 and 5 to 18, wherein
the second control apparatus generates and outputs a signal for controlling the process apparatus to perform the process on the target object after performing the second movement processing.

20. The control system according to any one of claims 1 to 19, wherein
the second movement processing includes a processing for generating the control signal for controlling the robot so that a positional relationship between the process apparatus and the target object becomes a predetermined positional relationship and / or a postural relationship between the process apparatus and the target object becomes a predetermined postural relationship by the second movement processing moving the process apparatus.

21. The control system according to claim 20, wherein
the predetermined positional relationship includes a positional relationship in which the process apparatus is positioned at a target process position at which the process apparatus should be positioned when the process apparatus performs the process on the target object, and
the predetermined postural relationship includes a postural relationship in which the process apparatus takes a target process pose that should be taken by the process apparatus when the process apparatus performs the process on the target object.

22. The control system according to any one of claims 1 to 21, wherein
the process apparatus is configured to hold an object, and
the second movement processing includes a processing for generating the control signal for controlling the robot so that a positional relationship between the object held by the process apparatus and the target object becomes a predetermined positional relationship and / or a postural relationship between the object held by the process apparatus and the target object becomes a predetermined postural relationship by the second movement processing moving the process apparatus.

23. The control system according to any one of claims 1 to 22, wherein
a movement distance of the process apparatus by the second movement processing is shorter than a movement distance of the process apparatus by the first movement processing.

24. The control system according to any one of claims 1 to 23, wherein
a maximum movement speed of the process apparatus by the second movement processing is slower than a maximum movement speed of the process apparatus by the first movement processing, or
an average movement speed of the process apparatus by the second movement processing is slower than an average movement speed of the process apparatus by the first movement processing.

25. The control system according to any one of claims 1 to 24, wherein
the second movement processing includes a processing for generating the control signal for controlling the robot so that a difference between a position of the process apparatus at a timing at which the second movement processing is completed and a target process position at which the process apparatus should be positioned when the process apparatus performs the process on the target member is smaller than a difference between a position of the process apparatus at a timing at which the first movement processing is completed and the target process position by the second movement processing moving the process apparatus.

26. The control system according to any one of claims 1 to 25, wherein
the second movement processing includes a processing for generating the control signal for controlling the robot so that a difference between a pose of the process apparatus at a timing at which the second movement processing is completed and a target process pose that should be taken by the process apparatus when the process apparatus performs the process on the target member is smaller than a difference between a pose of the process apparatus at a timing at which the first movement processing is completed and the target process pose by the second movement processing moving the process apparatus.

27. The control system according to any one of claims 1 to 26, wherein
at least a part of the first movement processing is not performed in a period during which the second movement processing is performed.

28. The control system according to any one of claims 1 to 27, wherein
the target object includes a first part on which the process apparatus performs the process, and a second part, different from the first part, on which the process apparatus performs the process,
the first movement processing includes the first movement processing for the first part and the first movement processing for the second part,
the second movement processing includes the second movement processing for the first part and the second movement processing for the second part,
the first movement processing for the first part includes a processing for controlling the robot so that the process apparatus approaches the first part,
the second movement processing for the first part includes a processing for generating and outputting, as the control signal, a first control signal for controlling the robot to move the process apparatus, based on a calculated result of a position and a pose of the first part, which is calculated based on the image data generated by the imaging apparatus imaging the first part, after the first movement processing for the first part,
the first movement processing for the second part includes a processing for controlling the robot so that the process apparatus approaches the second part from the first part after the second movement processing for the first part, and
the second movement processing for the second part includes a processing for generating and outputting, as the control signal, a second control signal for controlling the robot to move the process apparatus, based on a calculated result of a position and a pose of the second part, which is calculated based on the image data generated by the imaging apparatus imaging the second part, after the first movement processing for the second part.

29. The control system according to claim 28, wherein
the second movement processing for the first part is repeated until a positional relationship between the process apparatus and the first part becomes a first positional relationship and / or a postural relationship between the process apparatus and the first part becomes a first postural relationship, in a period that is after the first movement processing for the first part is completed and that is before the first movement processing for the second part is started.

30. The control system according to claim 29, wherein
the first positional relationship includes a positional relationship in which the process apparatus is positioned at a target process position at which the process apparatus should be positioned when the process apparatus performs the process on the first part, and
the first postural relationship includes a postural relationship in which the process apparatus takes a target process pose that should be taken by the process apparatus when the process apparatus performs the process on the first part.

31. The control system according to any one of claims 28 to 30, wherein
the second movement processing for the second part is repeated until a positional relationship between the process apparatus and the second part becomes a second positional relationship and / or a postural relationship between the process apparatus and the second part becomes a second postural relationship, after the first movement processing for the second part.

32. The control system according to claim 31, wherein
the second positional relationship includes a positional relationship in which the process apparatus is positioned at a target process position at which the process apparatus should be positioned when the process apparatus performs the process on the second part, and
the second postural relationship includes a postural relationship in which the process apparatus takes a target process pose that should be taken by the process apparatus when the process apparatus performs the process on the second part.

33. The control system according to any one of claims 28 to 32, wherein
the second control signal is generated based on the first control signal.

34. The control system according to any one of claims 28 to 33, wherein
the second movement processing for the first part is repeated until a positional relationship between the process apparatus and the first part becomes a first positional relationship and / or a postural relationship between the process apparatus and the first part becomes a first postural relationship, in a first period that is after the first movement processing for the first part is completed and that is before the first movement processing for the second part is started,
the second movement processing for the second part is repeated until a positional relationship between the process apparatus and the second part becomes a second positional relationship and / or a postural relationship between the process apparatus and the second part becomes a second postural relationship, in a second period that is after the first movement processing for the second part, and
the second control signal generated in the second period is generated based on the first control signal generated in the first period.

35. The control system according to claim 34, wherein
the second control signal generated first in the second period is generated based on the first control signal generated last in the first period.

36. The control system according to any one of claims 1 to 35, wherein
the target object includes a first target object on which the process apparatus performs the process, and a second target object, different from the first target object, on which the process apparatus performs the process,
the first movement processing includes the first movement processing for the first target object and the first movement processing for the second target object,
the second movement processing includes the second movement processing for the first target object and the second movement processing for the second target object,
the first movement processing for the first target object includes a processing for controlling the robot so that the process apparatus approaches the first target object,
the second movement processing for the first target object includes a processing for generating and outputting, as the control signal, a third control signal for controlling the robot to move the process apparatus, based on a calculated result of a position and a pose of the first target object, which is calculated based on the image data generated by the imaging apparatus imaging the first target object, after the first movement processing for the first target object,
the first movement processing for the second target object includes a processing for controlling the robot so that the process apparatus approaches the second target object from the first target object after the second movement processing for the first target object, and
the second movement processing for the second target object includes a processing for generating and outputting, as the control signal, a fourth control signal for controlling the robot to move the process apparatus, based on a calculated result of a position and a pose of the second target object, which is calculated based on the image data generated by the imaging apparatus imaging the second target object, after the first movement processing for the second target object.

37. The control system according to claim 36, wherein
the second movement processing for the first target object is repeated until a positional relationship between the process apparatus and the first target object becomes a third positional relationship and / or a postural relationship between the process apparatus and the first target object becomes a third postural relationship, in a period that is after the first movement processing for the first target object is completed and that is before the first movement processing for the second target object is started.

38. The control system according to claim 37, wherein
the third positional relationship includes a positional relationship in which the process apparatus is positioned at a target process position at which the process apparatus should be positioned when the process apparatus performs the process on the first target object, and
the third postural relationship includes a postural relationship in which the process apparatus takes a target process pose that should be taken by the process apparatus when the process apparatus performs the process on the first target object.

39. The control system according to claim 37 or 38, wherein
the second movement processing for the second target object is repeated until a positional relationship between the process apparatus and the second target object becomes a fourth positional relationship and / or a postural relationship between the process apparatus and the second target object becomes a fourth postural relationship, after the first movement processing for the second target object.

40. The control system according to claim 39, wherein
the fourth positional relationship includes a positional relationship in which the process apparatus is positioned at a target process position at which the process apparatus should be positioned when the process apparatus performs the process on the second target object, and
the fourth postural relationship includes a postural relationship in which the process apparatus takes a target process pose that should be taken by the process apparatus when the process apparatus performs the process on the second target object.

41. The control system according to any one of claims 36 to 40, wherein
the fourth control signal is generated based on the third control signal.

42. The control system according to any one of claims 36 to 41, wherein
the second movement processing for the first target object is repeated until a positional relationship between the process apparatus and the first target object becomes a third positional relationship and / or a postural relationship between the process apparatus and the first target object becomes a third postural relationship, in a third period that is after the first movement processing for the first target object is completed and that is before the first movement processing for the second target object is started,
the second movement processing for the second target object is repeated until a positional relationship between the process apparatus and the second target object becomes a fourth positional relationship and / or a postural relationship between the process apparatus and the second target object becomes a fourth postural relationship, in a fourth period that is after the first movement processing for the second target object, and
the fourth control signal generated in the fourth period is generated based on the third control signal generated in the third period.

43. The control system according to claim 42, wherein
the fourth control signal generated first in the fourth period is generated based on the third control signal generated last in the third period.

44. The control system according to claim 4 or 5, wherein
the movement instruction information is set by a user inputting the movement instruction information in advance.

45. The control system according to claim 4, 5, or 44, wherein
the movement instruction information includes at least one of a target movement position that instructs a position to which the process apparatus should move, a target movement distance that instructs a distance by which the process apparatus should move, and a target movement direction that instructs a direction toward which the process apparatus should move.

46. The control system according to claim 45, wherein
the target movement position is fixed to a position, which is set in advance, in a period during which the first movement processing is performed, the target movement distance is fixed to a distance, which is set in advance, in a period during which the first movement processing is performed, and the target movement direction is fixed to a direction, which is set in advance, in a period during which the first movement processing is performed.

47. The control system according to claim 45 or 46, wherein
the target object is moved by a transport apparatus that is configured to transport the target object, and
at least one of the target movement position, the target movement distance, and the target movement direction is set in advance based on at least one of a transport speed of the target member by the transport apparatus and a transport direction of the target member by the transport apparatus.

48. The control system according to any one of claims 45 to 47, wherein
the target object includes a first part on which the process apparatus performs the process, and a second part, different from the first part, on which the process apparatus performs the process,
the process apparatus performs the process on the second part after performing the process on the first part, and
at least one of the target movement position, the target movement distance, and the target movement direction is set in advance based on a positional relationship between the first part and the second part.

49. The control system according to any one of claims 45 to 48, wherein
the target object includes a first target object on which the process apparatus performs the process, and a second target object, different from the first target object, on which the process apparatus performs the process,
the process apparatus performs the process on the second target object after performing the process on the first target object, and
at least one of the target movement position, the target movement distance, and the target movement direction is set in advance based on a positional relationship between the first target object and the second target object.

50. The control system according to any one of claims 1 to 49, wherein
the target object is moved by a transport apparatus that is configured to transport the target object, and
the first movement processing and the second movement processing are performed on the target object that is being moved by the transport apparatus.

51. The control system according to any one of claims 1 to 50, wherein
the second movement processing includes a processing for calculating the position and the pose of the target object by performing a matching processing using the image data, which is generated by the imaging apparatus imaging the target object after the first movement processing, and model data, which indicates an object model that is a model of the target object.

52. The control system according to claim 51, wherein
the object model is a model of an edge of at least a part of the target object.

53. The control system according to claim 52, wherein
the model data is data indicating an edge of at least a part of the target object or a sample in an image acquired by imaging in advance the target object or the sample object whose shape is the same as that of the target object.

54. The control system according to any one of claims 1 to 53, wherein
the second movement processing includes a processing for generating and outputting the control signal for controlling the robot to move the process apparatus based on the calculated result of the position and the pose of the target object and a calculated result of a position and a pose of the process apparatus, which are calculated based on the image data generated by the imaging apparatus imaging the target object and the process apparatus after the first movement processing.

55. The control system according to claim 54, wherein
the second movement processing includes a processing for calculating the position and the pose of the target object and the position and the pose of the process apparatus by performing a matching processing using the image data, which is generated by the imaging apparatus imaging the target object and the process apparatus after the first movement processing, and model data, which indicates an object model that is a model of the target object and an apparatus model that is a model of the process apparatus.

56. The control system according to claim 55, wherein
the object model is a model of an edge of at least a part of the target object, and
the apparatus model is a model of an edge of at least a part of the process apparatus.

57. The control system according to claim 55 or 56, wherein
the model data indicates the object model and the apparatus model that are aligned with each other, and
the second movement processing includes a processing for generating the control signal for controlling the robot, based on the calculated result of the position and the pose of the target object and the calculated result of the position and the pose of the process apparatus, so that a difference between a positional relationship of the target object and the process apparatus and a positional relationship of the object model and the apparatus model that are aligned with each other is equal to or smaller than a threshold value by moving the process apparatus.

58. The control system according to any one of claim 55 to 57, wherein
the model data indicates the object model and the apparatus model that are aligned with each other, and
the second movement processing includes a processing for generating the control signal for controlling the robot, based on the calculated result of the position and the pose of the target object and the calculated result of the position and the pose of the process apparatus, so that a difference between a postural relationship of the target object and the process apparatus and a postural relationship of the object model and the apparatus model that are aligned with each other is equal to or smaller than a threshold value by moving the process apparatus.

59. The control system according to any one of claims 55 to 58, wherein
the model data indicates the object model and the apparatus model that are aligned with each other, and
the second movement processing includes a processing for selecting, as a target object on which the process apparatus should perform the process, one target object satisfying a condition that a positional relationship between the target object and the process apparatus is closest to a positional relationship between the object model and the apparatus model that are aligned with each other, in a case where a plurality of target objects are detected by the matching processing.

60. The control system according to any one of claims 1 to 58, wherein
the control system performs a preparatory processing for performing the second movement processing in a period during which the first movement processing is performed and before the second movement processing is started.

61. The control system according to any one of claims 2 and 5 to 19, wherein
the second control apparatus performs a preparatory processing for performing the second movement processing before the second movement processing is started.

62. The control system according to claim 61, wherein
the second control apparatus performs the preparatory processing for performing the second movement processing in a period during which the first movement processing is performed and before the second movement processing is started.

63. The control system according to any one of claims 60 to 62, wherein
the preparatory processing includes a processing for acquiring information that is used to perform the second movement processing.

64. The control system according to any one of claims 60 to 63, wherein
the preparatory processing includes a processing for adjusting an exposure condition of the imaging apparatus.

65. The control system according to any one of claims 60 to 64, wherein
the imaging apparatus includes an illumination apparatus that is configured to illuminate the target object with illumination light, and
the preparatory processing includes a processing for allowing the illumination apparatus to start illuminating the target object with the illumination light.

66. The control system according to any one of claims 1 to 65, wherein
the second movement processing includes a processing for calculating a position and a pose of the target object at a first time based on a position and a pose of the target object, which are calculated based on the image data generated by the imaging apparatus imaging the target object at a second time that is before the first time, in a case where the position and the pose of the target object cannot be calculated based on the image data generated by an imaging of the imaging apparatus at the first time in a period during which the second movement processing is performed.

67. The control system according to any one of claims 1 to 66, wherein
the second movement processing includes a processing for generating and outputting the control signal for controlling the robot to move the process apparatus based on information related to a contact between the process apparatus and the target object, in a case where the position and the pose of the target object cannot be calculated based on the image data generated by an imaging of the imaging apparatus in a period during which the second movement processing is performed.

68. The control system according to any one of claims 1 to 67, wherein
the control system inspects the target object based on the image data.

69. The control system according to any one of claims 1 to 68, wherein
the control system inspects the target object based on a measured result of the target object by a measurement apparatus that is configured to measure the target object.

70. The control system according to claim 68 or 69, wherein
the control system inspects the target object before the process apparatus performs the process on the target object.

71. The control system according to any one of claims 68 to 70, wherein
the control system inspects the target object after the process apparatus performs the process on the target object.

72. The control system according to any one of claims 1 to 71, wherein
the control system inspects a result of the process performed on the target object by the process apparatus, based on the image data or a measured result by a measurement apparatus.

73. The control system according to any one of claims 1 to 72, wherein
the target object is moved by a transport apparatus that is configured to transport the target object,
the control system performs the second movement processing in a period during which the transport apparatus moves the target object, and
the second movement processing includes a processing for generating the control signal for controlling the robot to move the process apparatus based on a transport state of the target object, in a case where the position and the pose of the target object cannot be calculated based on the image data generated by an imaging of the imaging apparatus at a first time in a period during which the second movement processing is performed.

74. The control system according to any one of claims 1 to 73 further comprising the imaging apparatus.

75. The control system according to any one of claims 2, 5 to 19, 61 and 62 further comprising: the first control apparatus.

76. A robot system comprising:
the control system according to any one of claims 1 to 75; and
the robot.

77. The robot system according to claim 76 further comprising the process apparatus that performs the process on the target object.

78. A control method that generates a control signal for controlling a robot, wherein
a process apparatus, which performs a process on a target object, and an imaging apparatus, which outputs image data of at least the target object by imaging the target object, are attached to the robot,
the robot moves the process apparatus and the imaging apparatus,
the control method comprises performing a second movement processing after a first movement processing,
the first movement processing includes a processing for controlling the robot to move the process apparatus without using the image data, and
the second movement processing includes a processing for generating and outputting the control signal for controlling the robot to move the process apparatus based on a calculated result of a position and a pose of the target object, which is calculated based on the image data generated by the imaging apparatus imaging the target object after the first movement processing.

79. A control method that generates the control signal for controlling a robot, wherein
a process apparatus, which performs a process on a target object, and an imaging apparatus, which outputs image data of at least the target object by imaging the target object, are attached to the robot,
the robot moves the process apparatus and the imaging apparatus,
the control method comprises performing, by using a second control apparatus that is different from a first control apparatus, a second movement processing for generating and outputting the control signal for controlling the robot to move the process apparatus based on a calculated result of a position and a pose of the target object, which is calculated based on the image data generated by the imaging apparatus imaging the target object after the first control apparatus performs a first movement processing for controlling the robot to move the process apparatus in accordance with movement instruction information.

80. A computer program that allows a computer to execute the control method according to claim 78 or 79.
